# EUROPEAN PATENT APPLICATION

(11) **EP 3 951 737 A1**
(43) Date of publication of application: **09.02.2022**
(21) Application number: 20784636.1
(22) Date of filing: 26.02.2020
(51) Int. Cl.: G08C 15/00, G06Q 10/08, G06Q 50/06

(54) **INFORMATION SYSTEM, INFORMATION PROCESSING DEVICE, INFORMATION PROCESSING METHOD, AND PROGRAM**

(30) Priority: 29.03.2019 JP 2019065424
(71) Applicant: Nippon Gas Co., Ltd., Tokyo 151-8582 (JP)
(72) Inventor: WADA Shinji, Tokyo 151-8582 (JP)
(74) Representative: Betten & Resch
(86) International application number: PCT/JP2020/007672
(87) International publication number: WO 2020/202911

(57) **Abstract**

Conventionally, it has been impossible to collect and use gas information that includes gas use information regarding the use of LPG cylinders. It is possible to collect and use gas information that includes gas use information regarding the use of LPG cylinders, from a gas information transmission apparatus that includes: a gas information storage unit that stores two or more pieces of gas information in association with time information that specifies time, and with a cylinder identifier; a terminal acquisition unit that acquires gas information that is information that includes gas use information regarding a LPG cylinder and corresponds to a cylinder identifier; and a terminal transmission unit that transmits the gas information acquired by the terminal acquisition unit, to an information processing apparatus, using an information processing apparatus that includes: a gas information reception unit that receives gas information that is associated with a cylinder identifier; a gas information accumulation unit that accumulates the gas information received by the gas information reception unit, in a gas information storage unit, in association with time information and a cylinder identifier; and a processing unit that performs predetermined processing, using two or more pieces of gas information stored in the gas information storage unit.

## Description

### Technical field

The present invention relates to, for example, an information processing apparatus that receives, stores, and uses gas information that includes information regarding the use of gas in one or more LPG cylinders.

### Background Art

There is a conventional technique for efficiently supporting maintenance management of propane gas meters at LPG dealers, aggregation of meter reading data, sales operations, and so on, to contribute to reducing the labor and costs required for these operations (see Patent Document 1).

Such a technique includes: a first step of wirelessly collecting a meter reading value of a gas meter of a consumer, to a mobile terminal owned by a meter reader; a second step of transmitting the collected meter reading value to an aggregation center via a network; a third step of aggregating respective meter reading values of customers for each store at the aggregation center, creating sales data, and sending the sales data to the store via the network, a communication line, or mail; and a fourth step of performing processing related to charge collection such as issuing an invoice and a receipt for each customer at the aggregation center, and sending sales performance data to the store.

### Citation List

### Patent Document

Patent Document 1: JP 2004-310645A

### Summary of Invention

### Technical Problem

However, with the conventional technique, it is not possible to easily collect and use gas information that includes appropriate information regarding the use of LPG cylinders.

### Solution to Problem

An information system according to a first aspect of the present invention is an information system that includes one or more gas information transmission apparatuses and an information processing apparatus, each of the gas information transmission apparatuses including: a terminal acquisition unit that acquires gas information that is information that includes gas use information regarding use of gas in an LPG cylinder and corresponds to a customer identifier that identifies a customer; and a terminal transmission unit that transmits the gas information acquired by the terminal acquisition unit to the information processing apparatus in association with the customer identifier, the information processing apparatus including: a gas information storage unit that stores two or more pieces of gas information each in association with time information that specifies time, and with a customer identifier; gas information reception unit that receives gas information that is associated with a customer identifier, from the gas information transmission apparatus; a gas information accumulation unit that accumulates the gas information received by the gas information reception unit, in the gas information storage unit, in association with time information, and with a customer identifier; and a processing unit that performs predetermined processing, using the two or more pieces of gas information stored in the gas information storage unit.

With such a configuration, it is possible to collect and use gas information that includes gas use information regarding the use of the LPG cylinders.

An information system according to a second aspect of the present invention is the information system according to the first aspect of the invention, wherein each of the gas information transmission apparatuses further includes: a terminal storage unit that stores pieces of gas information as of two or more points in time; and a terminal accumulation unit that accumulates the gas information acquired by the terminal acquisition unit, in the terminal storage unit, and when a predetermined condition is satisfied, the terminal transmission unit transmits pieces of gas information as of two or more points in time in the terminal storage unit, to the information processing apparatus, in association with a customer identifier.

With such a configuration, it is possible to suppress the power consumption of the power source of the gas information transmission apparatus by efficiently transmitting gas information.

An information system according to a third aspect of the present invention is the information system according to the second aspect of the invention wherein the terminal acquisition unit acquires gas information every unit time, n times a day (n is no less than 2), and the terminal transmission unit transmits two or more pieces of gas information in the terminal storage unit to the information processing apparatus a number of times less than n times a day.

With such a configuration, it is possible to suppress the power consumption of the power source of the gas information transmission apparatus by efficiently transmitting gas information.

An information system according to a fourth aspect of the present invention is the information system according to the third aspect of the invention, wherein the terminal acquisition unit acquires gas information every one hour, and the terminal transmission unit transmits gas information to the information processing apparatus once a day.

With such a configuration, it is possible to suppress the power consumption of the power source of the gas information transmission apparatus by efficiently transmitting gas information.

An information system according to a fifth aspect of the present invention is the information system according to any one of the first to fourth aspects of the invention, wherein the gas information is information that is associated with a customer identifier that identifies a customer, and date information that indicates a date, and contains gas use information that specifies an amount of gas used per unit time.

With such a configuration, it is possible to collect and use gas information that includes gas use information regarding the use of LPG cylinders.

An information system according to a sixth aspect of the present invention is the information system according to any one of the first to fifth aspects of the invention, further including: a delivery cylinder information storage unit that stores one or more pieces of delivery cylinder information that is information regarding a cylinder that is to be delivered, and corresponds to a customer identifier; a delivery cylinder information reception unit that receives delivery cylinder information in association with a customer identifier; and a delivery cylinder information accumulation unit that accumulates the delivery cylinder information received by the delivery cylinder information reception unit, in the delivery cylinder information storage unit, in association with the customer identifier, and the processing unit performs predetermined processing, using the delivery cylinder information stored in the delivery cylinder information storage unit as well.

With such a configuration, it is possible to collect and use delivery cylinder information regarding cylinders that are to be delivered, as well.

An information system according to a seventh aspect of the present invention is the sixth aspect of the invention, wherein the delivery cylinder information contains cylinder type information that specifies a type of a cylinder.

With such a configuration, it is possible to collect and use delivery cylinder information that contains cylinder type information, as well.

An information system according to an eighth aspect of the present invention is the information system according to any one of the first to seventh aspects of the invention, further including: a delivery vehicle position information storage unit that stores, in association with a delivery vehicle identifier that identifies a delivery vehicle for a cylinder, delivery vehicle position information that specifies a position of the delivery vehicle; a delivery vehicle position information reception unit that receives delivery vehicle position information from a delivery vehicle terminal that is a terminal of a delivery vehicle, in association with a delivery vehicle identifier that identifies the delivery vehicle; and a delivery vehicle position information accumulation unit that accumulates the delivery vehicle position information received by the delivery vehicle position information reception unit, in the delivery vehicle position information storage unit, in association with the delivery vehicle identifier, wherein the processing unit performs predetermined processing, using the delivery vehicle position information stored in the delivery vehicle position information storage unit.

With such a configuration, it is possible to collect and use position information regarding a delivery vehicle as well.

An information system according to a ninth aspect of the present invention is the information system according to any one of the first to eighth aspects of the invention, further including: a climate information storage unit that stores climate information regarding a climate, in association with date information; a climate information acceptance unit that accepts climate information; and a climate information accumulation unit that accumulates the climate information in the climate information storage unit, in association with date information, wherein the processing unit performs predetermined processing, using the climate information stored in the climate information storage unit.

With such a configuration, it is possible to acquire and use climate information as well.

An information system according to a tenth aspect of the present invention is the information system according to any one of the first to ninth aspects of the invention, wherein the gas information in the gas information storage unit is associated with a customer identifier and contains gas remaining amount information regarding an amount of gas remaining, and the information system further includes: a cylinder replacement information reception unit that receives cylinder replacement information that is information indicating that a cylinder has been replaced, and is paired with a customer identifier; and a cylinder replacement information accumulation unit that, when the cylinder replacement information reception unit receives cylinder replacement information, updates the gas remaining amount information contained in the gas information paired with the customer identifier, to information that specifies that the amount of gas remaining is full.

With such a configuration, it is possible to receive and use cylinder replacement information when a cylinder is replaced.

An information processing apparatus according to an eleventh aspect of the present invention is an information processing apparatus including: a gas information storage unit that stores two or more pieces of gas information in association with time information that specifies time, and with a customer identifier; a gas information reception unit that receives gas information that is associated with a customer identifier, from a gas information transmission apparatus that includes a terminal acquisition unit that acquires gas information that is information that contains gas use information regarding use of gas in an LPG gas cylinder, and is information that corresponds to a customer identifier, and a terminal transmission unit that transmits the gas information acquired by the terminal acquisition unit, to the information processing apparatus; a gas information accumulation unit that accumulates the gas information received by the gas information reception unit, in the gas information storage unit, in association with time information and a customer identifier; and a processing unit that performs predetermined processing, using the two or more pieces of gas information stored in the gas information storage unit.

With such a configuration, it is possible to collect and use gas information that includes gas use information regarding the use of LPG cylinders.

An information processing apparatus according to a twelfth aspect of the present invention is the information processing apparatus according to the eleventh aspect of the invention, wherein the gas information storage unit stores two or more pieces of gas information that contain gas use information as of two or more points in time, regarding use of gas in an LPG cylinder, in association with a customer identifier, the information system further includes a customer identifier acceptance unit that accepts a customer identifier, the processing unit includes: a gas use information acquisition unit that acquires pieces of gas use information as of two or more points in time, paired with the customer identifier accepted by the customer identifier acceptance unit, from the gas information storage unit; a scheduled date prediction unit that acquires scheduled date information regarding a scheduled delivery date that is a date on which an amount of gas in the cylinder is small enough to satisfy a predetermined condition, using the pieces of gas use information as of two or more points in time acquired by the gas use information acquisition unit; and a scheduled date output unit that outputs the scheduled date information acquired by the scheduled date prediction unit.

With such a configuration, it is possible to perform delivery date prediction processing by collecting gas use information regarding the use of LPG cylinders.

An information processing apparatus according to a thirteenth aspect of the present invention is the information processing apparatus according to the twelfth aspect of the invention, further including: a customer information storage unit that stores one or more pieces of customer information that contain LPG cylinder information that contain cylinder capacity information regarding a capacity of an LPG cylinder of a customer identified by a customer identifier, in association with the customer identifier, wherein the scheduled date prediction unit includes: a use amount value calculation formula acquisition part that acquires a use amount value calculation formula that is a calculation formula for calculating information regarding an amount of gas used, using the pieces of gas use information as of two or more points in time acquired by the gas use information acquisition unit; and a scheduled date prediction unit that acquires LPG cylinder information that is paired with the customer identifier accepted by the customer identifier acceptance unit, from the customer information storage unit, and acquires scheduled date information, using LPG cylinder information and the use amount value calculation formula acquired by the use amount value calculation formula acquisition part.

With such a configuration, it is possible to precisely predict the delivery date of gas to a customer.

An information processing apparatus according to a fourteenth aspect of the present invention is the information processing apparatus according to the twelfth or the thirteenth aspect of the invention, further including: a climate information acceptance unit that accepts climate information regarding climate, wherein the scheduled date prediction unit acquires scheduled date information, using the pieces of gas use information as of two or more points in time acquired by the gas use information acquisition unit, and the climate information accepted by the climate information acceptance unit.

With such a configuration, it is possible to predict the delivery date of gas to a customer, using climate information as well.

An information processing apparatus according to a fifteenth aspect of the present invention is the information processing apparatus according to the fourteenth aspect of the invention, wherein the scheduled date prediction unit acquires scheduled date information regarding a scheduled delivery date that is a date on which an amount of gas in a cylinder is small enough to satisfy a predetermined condition, using the pieces of gas use information as of two or more points in time acquired by the gas use information acquisition unit, and if the climate information accepted by the climate information acceptance unit is information that indicates that a temperature is high enough to satisfy a predetermined condition, or low enough to satisfy a predetermined condition, the scheduled date prediction unit corrects the scheduled date information so that the scheduled delivery date specified by the scheduled date information is set to be a later date or an earlier date, and acquires the scheduled date information to be output.

With such a configuration, it is possible to precisely predict the delivery date of gas to a customer, using climate information as well.

An information processing apparatus according to a sixteenth aspect of the present invention is the information processing apparatus according to the eleventh aspect of the invention, further including: a customer information storage unit that stores one or more pieces of customer information that contain a customer identifier and customer position information that specifies a position of a customer identified by the customer identifier; a delivery cylinder information storage unit that stores one or more pieces of delivery cylinder information that is information regarding a cylinder that is to be delivered, in association with a delivery vehicle identifier that identifies a delivery vehicle; a delivery vehicle position information storage unit that stores, in association with a delivery vehicle identifier, delivery vehicle position information that specifies a position of the delivery vehicle; and a customer identifier acceptance unit that accepts a customer identifier that identifies a customer whose remaining amount of gas is small enough to satisfy a predetermined condition, wherein the processing unit includes: a customer information position information acquisition unit that acquires customer position information that is paired with the customer identifier accepted by the customer identifier acceptance unit, from the customer information storage unit; a delivery vehicle determination unit that determines a delivery vehicle that is to deliver a cylinder, using the customer position information acquired by the customer information position information acquisition unit and a set of pieces of information composed of delivery vehicle position information and delivery cylinder information, the set being paired with the same delivery vehicle identifier; and a customer information transmission unit that transmits customer information that is paired with a customer identifier, to a delivery vehicle terminal of the delivery vehicle determined by the delivery vehicle determination unit.

With such a configuration, it is possible to perform delivery control processing by collecting gas information that includes gas use information regarding the use of LPG cylinders.

An information processing apparatus according to a seventeenth aspect of the present invention is the information processing apparatus according to the sixteenth aspect of the invention, wherein the delivery cylinder information contains cylinder type information that specifies a type of a cylinder, the customer information contains cylinder type information that specifies a type of a cylinder that is used by a customer, and the delivery vehicle determination unit determines a delivery vehicle that is to deliver a cylinder, using cylinder number information that specifies the number of cylinders acquired using delivery cylinder information that is paired with a delivery vehicle identifier, cylinder type information, cylinder type information contained in customer information, customer position information, and delivery vehicle position information that is paired with a delivery vehicle identifier.

With such a configuration, it is possible to more efficiently deliver LPG cylinders to customers in the case of gas shortage or the like.

An information processing apparatus according to an eighteenth aspect of the present invention is the information processing apparatus according to the seventeenth aspect of the invention, wherein the delivery vehicle determination unit determines a delivery vehicle for which cylinder number information and cylinder type information that are acquired using delivery cylinder information that is paired with a delivery vehicle identifier satisfies a cylinder condition that is a condition regarding cylinder number information and cylinder type information contained in customer information, and that corresponds to delivery vehicle position information that satisfies a position condition regarding a distance between a position that is specified by customer position information and a position that is specified by delivery vehicle position information.

With such a configuration, it is possible to more efficiently deliver LPG cylinders to customers in the case of gas shortage or the like.

An information processing apparatus according to a nineteenth aspect of the present invention is the information processing apparatus according to the eighteenth aspect of the invention, wherein the delivery vehicle determination unit determines a delivery vehicle that satisfies the cylinder condition and corresponds to delivery vehicle position information that satisfies a position condition that a distance between a position that is specified by customer position information and a position that is specified by delivery vehicle position information is the shortest.

With such a configuration, it is possible to more efficiently deliver LPG cylinders to customers in the case of gas shortage or the like.

An information processing apparatus according to a twentieth aspect of the present invention is the information processing apparatus according to any one of the sixteenth to nineteenth aspect of the invention, further including: a delivery list storage unit that stores a delivery list that is two or more pieces of delivery destination information regarding a delivery destination of a gas cylinder, in association with a delivery vehicle identifier; and a delivery list update unit that acquires a delivery list that corresponds to the delivery vehicle determined by the delivery vehicle determination unit, and acquires an updated delivery list by adding at least part of the customer information paired with the customer identifier, to the delivery list, and the customer information transmission unit transmits the delivery list updated by the delivery list update unit, to a delivery vehicle terminal of the delivery vehicle determined by the delivery vehicle determination unit.

With such a configuration, it is possible to more efficiently deliver LPG cylinders to customers in the case of gas shortage or the like.

An information processing apparatus according to a twenty-first aspect of the present invention is the information processing apparatus according to the eleventh aspect of the invention, further including: a gas information storage unit that stores two or more pieces of gas information that contain gas use information regarding two or more households; and a climate information acceptance unit that accepts climate information that is associated with time information that specifies time, wherein the processing unit includes: a price information acquisition unit that acquires price information that specifies a price of LPG per unit amount at a time specified by time information, using gas use information regarding two or more households and climate information; and price information that outputs the price information acquired by the price information acquisition unit.

With such a configuration, it is possible to determine the price of LPG, using gas use information and climate information.

An information processing apparatus according to a twenty-second aspect of the present invention is the information processing apparatus according to the twenty-first aspect of the invention, wherein the price information acquisition unit includes: a demand prediction part that acquires a predicted demand amount that is an amount of future demand for LPG, using gas use information regarding two or more households; and a price information acquisition part that acquires price information regarding each of one or more days, using the predicted demand amount acquired by the demand prediction part and climate information.

With such a configuration, it is possible to determine the price of LPG, using gas use information and climate information.

An information processing apparatus according to a twenty-third aspect of the present invention is the information processing apparatus according to the twenty-first or the twenty-second aspect of the invention, further including: a related information storage unit that stores one or more pieces of related information of: gas price information regarding a gas price; exchange information regarding ab exchange rate; and operation status information regarding an operation status of a gas tanker, and the price information acquisition unit acquires price information regarding one or more days that are ahead by a predetermined period, using gas use information regarding two or more households, climate information, and one or more pieces of related information.

With such a configuration, it is possible to determine the price of LPG, using related information.

An information processing apparatus according to a twenty-fourth aspect of the present invention is the information processing apparatus according to the twenty-third aspect of the invention, wherein the price information acquisition unit acquires price information that indicates a higher price as a price that is specified by gas price information increases, or acquires price information that indicates a higher price when exchange information indicates a higher yen compared to when exchange information indicates a lower yen, or acquires price information that indicates a lower price when operation status information is information that indicates absence of a problem compared to when operation status information is information that indicates presence of any problem.

With such a configuration, it is possible to appropriately determine the price of LPG, using related information.

A server apparatus according to a twenty-fifth aspect of the present invention is a server apparatus according to any one of the twenty-first to twenty-fourth aspects of the invention, further including: a server storage unit that stores the price information output by the information processing apparatus; a server output unit that outputs the price information stored in the server storage unit; a server reception unit that receives a purchase instruction that is a purchase instruction that corresponds to the price information output by the server output unit, and contains a user identifier and amount information that specifies a number; and a server processing unit that performs futures trading processing through which a purchase reservation for the amount of LPG specified by the amount information at a price specified by the price information, according to the purchase instruction.

With such a configuration, it is possible to provide a server that performs futures trading processing.

A server apparatus according to a twenty-sixth aspect of the present invention is a server apparatus according to the twenty-fifth aspect of the invention, wherein the server processing unit includes: a futures trading part that performs futures trading processing through which a purchase reservation for the amount of LPG specified by the amount information is made at a price specified by the price information stored in the server storage unit, according to a purchase instruction; and a price changing part that, upon receiving a purchase instruction, acquires price information obtained by changing the price information stored in the server storage unit, and accumulates the price information in the server storage unit, and the server output unit outputs the price information changed by the price information acquisition part.

With such a configuration, it is possible to provide a server that performs appropriate futures trading processing.

An information processing apparatus according to a twenty-seventh aspect of the present invention is the information processing apparatus according to the eleventh aspect of the invention, further including: a gas information storage unit that stores two or more pieces of gas information that include gas use information that is gas use information for two or more days and is associated with time information that specifies a time, in association with a customer identifier that identifies a customer; and a customer identifier acceptance unit that accepts a customer identifier, wherein the processing unit includes: a gas use information acquisition unit that acquires pieces of gas use information as of two or more points in time, paired with the customer identifier accepted by the customer identifier acceptance unit, from the gas information storage unit; a presence-in-residence information acquisition unit that acquires presence-in-residence information regarding whether or not an inhabitant in a household that is identified by the customer identifier accepted by the customer identifier acceptance unit is present in the residence, using the pieces of gas use information as of two or more points in time acquired by the gas use information acquisition unit; and a presence-in-residence information output unit that outputs the presence-in-residence information acquired by the presence-in-residence information acquisition unit.

With such a configuration, it is possible to grasp the inhabitant's stay status based on a gas use status.

An information processing apparatus according to a twenty-eighth aspect of the present invention is the information processing apparatus according to the twenty-seventh aspect of the invention, wherein the presence-in-residence information acquisition unit acquires presence-in-residence information that is a presence-in-residence score regarding the degree of presence in a residence, using the pieces of gas use information as of two or more points in time acquired by the gas use information acquisition unit, according to an amount of gas used indicated by gas use information per unit time for two or more days.

With such a configuration, it is possible to grasp the inhabitant's stay status based on a gas use status.

An information processing apparatus according to a twenty-nineth aspect of the present invention is the information processing apparatus according to the twenty-eighth aspect of the invention, wherein the gas use information acquisition unit acquires, from the gas information storage unit, target gas use information that is gas use information that is paired with the customer identifier accepted by the customer identifier acceptance unit, and is gas use information for each target period that is a day of the week, or a time zone, or a day of the week and a time zone for which presence-in-residence information is to be output, and the presence-in-residence information acquisition unit acquires presence-in-residence information that indicates a stay probability of an inhabitant for each target period, using the target gas use information acquired by the gas use information acquisition unit.

With such a configuration, it is possible to grasp the inhabitant's stay status in details, based on an LPG use status.

An information processing apparatus according to a thirtieth aspect of the present invention is the information processing apparatus according to the twenty-seventh aspect of the invention, wherein, using the pieces of gas use information as of two or more points in time acquired by the gas use information acquisition unit, the presence-in-residence information acquisition unit determines that the inhabitant is present in the residence in a time zone in which the amount of gas used indicated by the pieces of gas use information regarding each of the two or more days is large enough to satisfy a predetermined condition, determines that the inhabitant is not present in the residence in a time zone in which the amount of gas used indicated by the pieces of gas use information regarding each of the two or more days is small enough to satisfy a predetermined condition, and acquires presence-in-residence information that is a stay determination result that is the result of determination.

With such a configuration, it is possible to precisely grasp the inhabitant's stay status in details, based on an LPG use status.

An information processing apparatus according to a thirty-first aspect of the present invention is the information processing apparatus according to any one of the twenty-seventh to thirtieth aspects of the invention, wherein the gas information storage unit stores two or more pieces of gas information that contain gas use information for each day of the week and each time zone, for two or more weeks, the presence-in-residence information acquires presence-in-residence information for each day of the week and each time zone, using gas use information for each day of the week and each time zone, and the presence-in-residence information output unit outputs presence-in-residence information for each day of the week and each time zone.

With such a configuration, it is possible to precisely grasp the inhabitant's stay status in details, based on an LPG use status.

An information processing apparatus according to a thirty-second aspect of the present invention is the information processing apparatus according to the eleventh aspect of the invention, further including: a gas information storage unit that stores two or more pieces of gas information that contain time-series gas use information regarding use of gas; and an electricity information storage unit that stores two or more pieces of electricity information that contain time-series electricity use information regarding use of electricity, wherein the processing unit includes: an energy proposal information acquisition unit that acquires energy proposal information that indicates a proposal regarding energy that is to be used, using the time-series gas use information and the time-series electricity use information; and an energy proposal information output unit that outputs the energy proposal information acquired by the energy proposal information acquisition unit.

With such a configuration, it is possible to propose an energy consumption plan, using the use status of gas such as LPG and the use status of electricity.

An information processing apparatus according to a thirty-third aspect of the present invention is the information processing apparatus according to the thirty-second aspect of the invention, further including: a climate information acquisition unit that acquires climate information regarding climate, wherein the energy proposal information acquisition unit acquires energy proposal information that indicates a proposal regarding energy, using the climate information acquired by the climate information acquisition unit, the time-series gas use information, and the time-series electricity use information.

With such a configuration, it is possible to propose an energy consumption plan, using the use status of gas such as LPG, the use status of electricity, and climate information.

An information processing apparatus according to a thirty-fourth aspect of the present invention is the information processing apparatus according to the thirty-second or the thirty-third aspect of the invention, further including: a unit charge information storage unit that stores two or more pieces of unit charge information that specify a charge per unit amount of two or more kinds of energy, including unit gas charge information that specifies a gas charge per unit amount, and unit electricity charge information that specifies an electricity charge per unit amount, wherein the energy proposal information acquisition unit includes: a gas charge information acquisition part that acquires gas charge information that specifies a charge for use of gas, using time-series gas use information and unit gas charge information; an electricity charge information acquisition part that acquires electricity charge information that specifies a charge for use of electricity, using time-series electricity use information and unit electricity charge information; and a medium identifier acquisition part that acquires a medium identifier that specifies the cheapest energy of two or more kinds of energy, using gas use information and electricity use information, and the energy proposal information output unit outputs the medium identifier acquired by the medium identifier acquisition part.

With such a configuration, it is possible to propose a selection of an energy medium, using the use status of gas such as LPG and the use status of electricity.

An information processing apparatus according to a thirty-fifth aspect of the present invention is the information processing apparatus according to the thirty-fourth aspect of the invention, wherein the unit charge information storage unit stores unit charge information for each time zone from which a unit charge for each time zone can be obtained regarding two or more kinds of energy that include gas and electricity, the gas charge information acquisition part acquires gas charge information for each time zone, using gas use information for each time zone and unit gas charge information for each time zone, the electricity charge information acquisition part acquires electricity charge information for each time zone, using electricity use information for each time zone and unit electricity charge information for each time zone, the medium identifier acquisition part acquires, for each time zone, a medium identifier that specifies the cheapest energy of two or more kinds of energy, using gas charge information for the time zone corresponding thereto and electricity charge information for the time zone corresponding thereto, and the energy proposal information output unit outputs the medium identifier for each time zone acquired by the medium identifier acquisition part.

With such a configuration, it is possible to propose a selection of an energy medium for each time zone, using the use status of gas such as LPG and the use status of electricity.

An information processing apparatus according to a thirty-sixth aspect of the present invention is the information processing apparatus according to the thirty-fifth aspect of the invention, further including: a control unit that performs processing to use energy that corresponds to the accepted medium identifier, of two or more kinds of energy that include gas and electricity, wherein, when a medium identifier for one time zone acquired by the medium identifier acquisition part is different from a medium identifier for the previous time zone, the energy proposal information output unit passes the medium identifier for the one time zone to the control unit upon the one time zone being reached, and the control unit performs processing to use energy that corresponds to the medium identifier accepted from the energy proposal information output unit.

With such a configuration, it is possible to control an energy medium for each time zone, using the use status of gas such as LPG and the use status of electricity.

An information processing apparatus according to a thirty-seventh aspect of the present invention is the information processing apparatus according to the thirty-second or the thirty-third aspect of the invention, further including: a unit charge information storage unit that stores two or more pieces of unit charge information that specify a charge per unit amount of two or more kinds of energy, including unit gas charge information that specifies a gas charge per unit amount, and unit electricity charge information that specifies an electricity charge per unit amount; and an appliance information storage unit that stores two or more pieces of appliance information that contain an appliance identifier that specifies an appliance and performance information that specifies performance of an appliance, wherein the energy proposal information acquisition unit includes an appliance identifier acquisition part that acquires an appliance identifier that corresponds to the cheapest energy, using time-series gas use information, time-series electricity use information, and performance information contained in appliance information, and the energy proposal information output unit outputs the appliance identifier acquired by the appliance identifier acquisition part.

With such a configuration, it is possible to propose a selection of an energy appliance, using the use status of gas such as LPG and the use status of electricity.

An information processing apparatus according to a thirty-eighth aspect of the present invention is the information processing apparatus according to the thirty-seventh aspect of the invention, wherein the unit charge information storage unit stores unit charge information for each time zone from which a unit charge for each time zone can be obtained regarding two or more kinds of energy that include gas and electricity, and the energy proposal information acquisition unit includes an appliance identifier acquisition part that acquires an appliance identifier that corresponds to the cheapest energy for each time zone, using gas use information for each time zone, electricity use information for each time zone, unit charge information for each time zone, and performance information that is contained in appliance information.

With such a configuration, it is possible to propose a selection of an energy appliance for each time zone, using the use status of gas such as LPG and the use status of electricity.

An information processing apparatus according to a thirty-nineth aspect of the present invention is the information processing apparatus according to the thirty-eighth aspect of the invention, further including a control unit that performs processing to use an energy appliance that corresponds to the accepted appliance identifier, of two or more kinds of energy that include gas and electricity, wherein, when an appliance identifier for one time zone acquired by the energy proposal information acquisition unit is different from an appliance identifier for the previous time zone, the energy proposal information output unit passes the appliance identifier for the one time zone to the control unit upon the one time zone being reached, and the control unit performs processing to use the appliance identifier accepted from the energy proposal information output unit.

With such a configuration, it is possible to control an energy appliance for each time zone, using the use status of gas such as LPG and the use status of electricity.

An information processing apparatus according to a fortieth aspect of the present invention is the information processing apparatus according to the thirty-second or the thirty-third aspect of the invention, further including: a company information storage unit that stores two or more pieces of company information that contain a company identifier that identifies a company that supplies energy, and a medium identifier that specifies a kind of energy supplied by the company; and a unit charge information storage unit that stores two or more pieces of unit charge information that are associated with a company identifier, wherein the energy proposal information acquisition unit includes a company identifier acquisition part that acquires a company identifier of a company that supplies the cheapest energy of companies that supply energy, using time-series gas use information, time-series electricity use information, company information, and unit charge information, and the energy proposal information output unit outputs the company identifier acquired by the company identifier acquisition part.

With such a configuration, it is possible to propose a selection of an energy company, using the use status of gas such as LPG and the use status of electricity.

An information processing apparatus according to a forty-first aspect of the present invention is the information processing apparatus according to the forty aspect of the invention, wherein the unit charge information storage unit stores unit charge information for each time zone from which a unit charge for each time zone can be obtained, in association with two or more company identifiers, and the energy proposal information acquisition unit includes a company identifier acquisition part that acquires a company identifier that corresponds to the cheapest company, using gas use information for each time zone, electricity use information for each time zone, and unit charge information for each time zone.

With such a configuration, it is possible to propose a selection of an energy company for each time zone, using the use status of gas such as LPG and the use status of electricity.

An information processing apparatus according to a forty-second aspect of the present invention is the information processing apparatus according to the forty-first aspect of the invention, further including: a control unit that performs processing to use energy that corresponds to the accepted company identifier, wherein, when a company identifier for one time zone acquired by the company identifier acquisition part is different from a company identifier for the previous time zone, the energy proposal information output unit passes the company identifier for the one time zone to the control unit upon the one time zone being reached, and the control unit performs processing to use energy that corresponds to the company identifier accepted from the energy proposal information output unit.

With such a configuration, it is possible to control an energy company for each time zone, using the use status of gas such as LPG and the use status of electricity.

An information processing apparatus according to a forty-third aspect of the present invention is the information processing apparatus according to claim 11, further including: an acceptance unit that accepts a customer identifier that identifies a customer, the processing unit includes: a gas information acquisition unit that acquires gas information that contains gas use information regarding use of gas, and that is associated with the same customer identifier as the customer identifier accepted by the acceptance unit; a credit rating information acquisition unit that acquires credit rating information that specifies a credit rating of a household that is identified by the customer identifier accepted by the acceptance unit, using the gas information acquired by the gas information acquisition unit; and a credit rating information output unit that outputs the credit rating information acquired by the credit rating information acquisition unit.

With such a configuration, it is possible to acquire a credit rating of a household, using information regarding the use of gas.

An information processing apparatus according to a forty-fourth aspect of the present invention is the information processing apparatus according to the forty-third aspect of the invention, the gas use information includes gas use fee category information that specifies how high a gas use fee is, and the gas information contains, in addition to the gas use fee category information, one or more pieces of information of: gas supply category information that specifies a type of gas that is supplied; gas payment category information that specifies a means for payment of a gas fee; and housing category information that specifies a type of housing of a customer.

With such a configuration, it is possible to acquire a credit rating of a household, using appropriate information regarding the use of gas.

An information processing apparatus according to a forty-fifth aspect of the present invention is the information processing apparatus according to the forty-third or forty-fourth aspect of the invention, wherein the processing unit further includes an electricity customer information acquisition unit that acquires electricity customer information regarding use of electricity that is associated with the same customer identifier as the customer identifier accepted by the acceptance unit, and the credit rating information acquisition unit acquires credit rating information, using the electricity customer information as well.

With such a configuration, it is possible to acquire a credit rating of a household, using information regarding the use of electricity as well.

An information processing apparatus according to a forty-sixth aspect of the present invention is the information processing apparatus according to the forty-fifth aspect of the invention, wherein the electricity customer information contains one or more pieces of information of: electricity supply category information that specifies a type of electricity supplied; electricity payment category information that specifies a means for payment of an electricity fee; housing category information that specifies a type of housing of a customer; and electricity use fee category information that specifies how high an electricity use fee is.

With such a configuration, it is possible to acquire a credit rating of a household, using information regarding the use of electricity as well.

An information processing apparatus according to a forty-seventh aspect of the present invention is the information processing apparatus according to any one of the forty-third to forty-sixth aspect of the invention, wherein the processing unit further includes a water service customer information acquisition unit that acquires water service customer information regarding use of water service that is associated with the same customer identifier as the customer identifier accepted by the acceptance unit, and the credit rating information acquisition unit acquires credit rating information, using the water service customer information as well.

With such a configuration, it is possible to acquire a credit rating of a household, using information regarding the use of water service as well.

An information processing apparatus according to a forty-eighth aspect of the present invention is the information processing apparatus according to the forty-seventh aspect of the invention, wherein the water service customer information contains one or more pieces of information of: water service supply category information that specifies a type of water service supplied; water service payment category information that specifies a means for payment of water service fee; housing category information that specifies a type of housing of a customer; and water service use fee category information that specifies how high a water service use fee is.

With such a configuration, it is possible to acquire a credit rating of a household, using appropriate information regarding the use of water service as well.

An information processing apparatus according to a forty-ninth aspect of the present invention is the information processing apparatus according to any one of the forty-third to forty-eighth aspect of the invention, wherein the processing unit further includes a bank customer information acquisition unit that acquires bank customer information regarding a bank account, associated with the same customer identifier as the customer identifier accepted by the acceptance unit, and the credit rating information acquisition unit acquires credit rating information, using the bank customer information as well.

With such a configuration, it is possible to acquire a credit rating of a household, using information regarding a bank account as well.

An information processing apparatus according to a fiftieth aspect of the present invention is the information processing apparatus according to the forty-ninth aspect of the invention, wherein the bank customer information acquisition unit acquires two or more pieces of bank customer information that are associated with two or more personal identifiers that are paired with the same customer identifier as the customer identifier accepted by the acceptance unit, and the credit rating information acquisition unit acquires credit rating information, using the two or more pieces of bank customer information as well.

With such a configuration, it is possible to acquire a credit rating of a household, using information regarding a plurality of family members related to a bank account as well.

An information processing apparatus according to a fifty-first aspect of the present invention is the information processing apparatus according to the forty-ninth or fiftieth aspect of the invention, wherein the bank customer information contains one or more pieces of information of: an amount of bank account activity; a deposit balance; a housing category; presence or absence of a credit card; and presence or absence of a safe deposit box.

With such a configuration, it is possible to acquire a credit rating of a household, using appropriate information regarding a bank account as well.

An information processing apparatus according to a fifty-second aspect of the present invention is the information processing apparatus according to any one of the forty-third to fifty-first aspect of the invention, the processing unit further includes a mobile customer information acquisition unit that acquires mobile customer information regarding use of a mobile, associated with a personal identifier that is paired with the same customer identifier as the customer identifier accepted by the acceptance unit, and the credit rating information acquisition unit acquires credit rating information, using the mobile customer information as well.

With such a configuration, it is possible to acquire a credit rating of a household, using information regarding the use of a mobile as well.

An information processing apparatus according to a fifty-third aspect of the present invention is the information processing apparatus according to any one of the fifty-second aspect of the invention, wherein the mobile customer information acquisition unit acquires two or more pieces of mobile customer information that are associated with two or more personal identifiers that are paired with the same customer identifier as the customer identifier accepted by the acceptance unit, and the credit rating information acquisition unit acquires credit rating information, using the two or more pieces of mobile customer information as well.

With such a configuration, it is possible to acquire a credit rating of a household, using information regarding a plurality of family members related to the use of a mobile as well.

An information processing apparatus according to a fifty-fourth aspect of the present invention is the information processing apparatus according to the fifty-second or fifty-third aspect of the invention, wherein the mobile customer information contains one or more pieces of information of: a mobile bill payment history; and mobile use status information.

With such a configuration, it is possible to acquire a credit rating of a household, using appropriate information regarding the use of a mobile as well.

### Advantageous Effects of Invention

With the information system according to the present invention, it is possible to collect and use gas information that includes gas use information regarding the use of the LPG cylinders.

### Brief Description of Drawings

FIG. 1 is a conceptual diagram for an information system A according to Embodiment 1.
FIG. 2 is a block diagram for the information system A according to the same.
FIG. 3 is a block diagram for an information processing apparatus A2 according to the same.
FIG. 4 is a flowchart illustrating examples of operations that are performed by a gas information transmission apparatus A1 according to the same.
FIG. 5 is a flowchart illustrating examples of operations that are performed by an information processing apparatus A2 according to the same.
FIG. 6 is a flowchart illustrating examples of operations that are performed by a next deliverer terminal A3 according to the same.
FIG. 7 is a flowchart illustrating examples of operations that are performed by a facility terminal A4 according to the same.
FIG. 8 is a conceptual diagram for the information system A according to the same.
FIG. 9 is a conceptual diagram for an information system B according to Embodiment 2.
FIG. 10 is a block diagram for the information system B according to the same.
FIG. 11 is a flowchart illustrating an example of delivery date prediction processing that is performed by an information processing apparatus B2 according to the same.
FIG. 12 is a flowchart illustrating use amount value calculation formula acquisition processing according to the same.
FIG. 13 is a flowchart illustrating scheduled date prediction processing according to the same.
FIG. 14 is a conceptual diagram for an information system C according to Embodiment 3.
FIG. 15 is a block diagram for the information system C according to the same.
FIG. 16 is a block diagram for an information processing system C2 that is included in the information system C according to the same.
FIG. 17 is a flowchart illustrating operations that are performed by the information processing apparatus C2 according to the same.
FIG. 18 is a flowchart illustrating a first example of delivery vehicle determination processing according to the same.
FIG. 19 is a flowchart illustrating a second example of delivery vehicle determination processing according to the same.
FIG. 20 is a flowchart illustrating a third example of delivery vehicle determination processing according to the same.
FIG. 21 is a flowchart illustrating an example of delivery list update processing according to the same.
FIG. 22 is a flowchart illustrating examples of operations that are performed by a deliverer terminal C3 according to the same.
FIG. 23 is a diagram showing a concept of processing through which the information processing apparatus C2 according to the same determines a delivery vehicle.
FIG. 24 is a diagram showing an example of an old delivery list according to the same.
FIG. 25 is a diagram showing an example of a new delivery list that has been updated according to the same.
FIG. 26 is a conceptual diagram for an information system D according to Embodiment 4.
FIG. 27 is a block diagram for the information system D according to the same.
FIG. 28 is a block diagram for an information processing apparatus D2 according to the same.
FIG. 29 is a flowchart illustrating examples of operations that are performed by a terminal apparatus D1 according to the same.
FIG. 30 is a flowchart illustrating an example of processing through which the information processing apparatus D2 according to the same determines price information.
FIG. 31 is a flowchart illustrating an example of price information acquisition processing according to the same.
FIG. 32 is a flowchart illustrating demand prediction processing according to the same.
FIG. 33 is a flowchart illustrating examples of operations that are performed by a server apparatus D3 according to the same.
FIG. 34 is a conceptual diagram for an information system E according to Embodiment 5.
FIG. 35 is a block diagram for the information system E according to the same.
FIG. 36 is a diagram illustrating a concept of an example of presence-in-residence information acquisition processing according to the same.
FIG. 37 is a flowchart illustrating an example of presence-in-residence information acquisition processing that is performed by an information processing apparatus E2 according to the same.
FIG. 38 is a flowchart illustrating a first example of presence-in-residence information acquisition processing according to the same.
FIG. 39 is a flowchart illustrating a second example of presence-in-residence information acquisition processing according to the same.
FIG. 40 is a conceptual diagram for an information system F according to Embodiment 6.
FIG. 41 is a block diagram for the information system F according to the same.
FIG. 42 is a flowchart illustrating examples of operations that are performed by an information processing apparatus F2 according to the same.
FIG. 43 is a flowchart illustrating an example of medium proposal processing according to the same.
FIG. 44 is a flowchart illustrating an example of appliance proposal processing according to the same.
FIG. 45 is a flowchart illustrating an example of company proposal processing according to the same.
FIG. 46 is a conceptual diagram for an information system G according to Embodiment 7.
FIG. 47 is a block diagram for the information system G according to the same.
FIG. 48 is a flowchart illustrating an example of household credit rating acquisition processing that is performed by an information processing apparatus G2 according to the same.
FIG. 49 is a flowchart illustrating an example of gas score acquisition processing according to the same.
FIG. 50 is a flowchart illustrating an example of electricity charge score acquisition processing according to the same.
FIG. 51 is a flowchart illustrating an example of water charge score acquisition processing according to the same.
FIG. 52 is a flowchart illustrating an example of bank score acquisition processing according to the same.
FIG. 53 is a flowchart illustrating an example of mobile score acquisition processing according to the same.
FIG. 54 is a conceptual diagram showing a concept of processing that is performed by the information system G according to the same.
FIG. 55 is an overview diagram for a computer system according to the above embodiments.
FIG. 56 is a block diagram for the computer system according to the same.

### Description of Embodiments

The following describes embodiments of information system and so on with reference to the drawings. Note that the components with the same reference numerals in the embodiments perform the same operations, and therefore redundant descriptions thereof may be omitted.

### Embodiment 1

The present embodiment describes an information system that includes one or more gas information transmission apparatuses that acquire and transmit gas information that includes information regarding the use of gas in one or more LPG cylinders, and information processing apparatus.

In addition, the present embodiment describes an information system that includes a gas information transmission apparatus that transmits two or more pieces of gas information all at once. Note that the gas information transmission apparatus acquires gas use information described later, once an hour, and transmits the gas use information for one day, to the information processing apparatus, once a day, for example. Note that the gas information transmission apparatus may acquires the gas use information described later once an hour, and separately transmits the gas use information for one day, to the information processing apparatus, twice a day or more, for example.

Furthermore, the present embodiment describes an information system that includes an information processing apparatus that also receives delivery cylinder information described later, delivery vehicle position information described later, climate information described later, and cylinder replacement information described later.

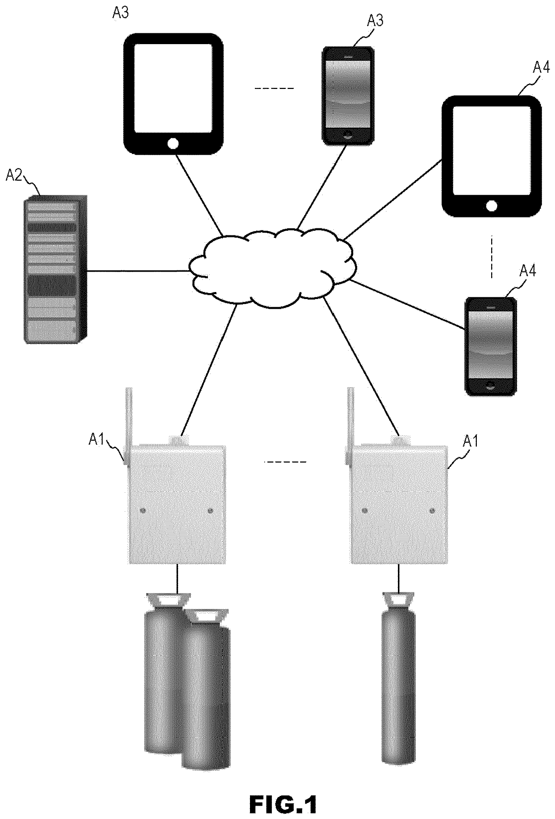

FIG. 1 is a conceptual diagram for an information system A according to the present embodiment. The information system A includes one or more gas information transmission apparatuses A1, an information processing apparatus A2, one or more deliverer terminals A3, and one or more facility terminals A4.

Gas information transmission apparatuses A1 are apparatuses that acquire gas information that includes gas use information, and transmit the gas information to the information processing apparatus A2. The gas information transmission apparatus A1 need only have a communication function, and the type thereof is not limited.

The information processing apparatus A2 is a server apparatus that receives and accumulates information such as gas information. "Information such as gas information" may be gas information alone, or one or more pieces of information of: delivery cylinder information described later; delivery vehicle position information described later; cylinder replacement information described later; and climate information may be used in addition to gas information. The information processing apparatus A2 can be realized using a so-called cloud server or an ASP server, but there is no limitation on the type thereof.

The deliverer terminals A3 are terminals that are used by deliverers. However, the deliverer terminals A3 may be terminals that are mounted on delivery vehicles. The deliverer terminals A3 are, for example, smartphones, tablet terminals, so-called personal computers, or the like, but there is no limitation on the type thereof. The deliverer terminals A3 have a communication function.

The facility terminals A4 are terminals that are present in the facility. The facility terminals A4 are, for example, smartphones, tablet terminals, so-called personal computers, or the like, but there is no limitation on the type thereof. The facility terminals A4 have a communication function. The facility is, for example, a factory or a depot station. A factory is a facility for filling gas cylinders with gas. A depot station is a facility where gas cylinders are placed.

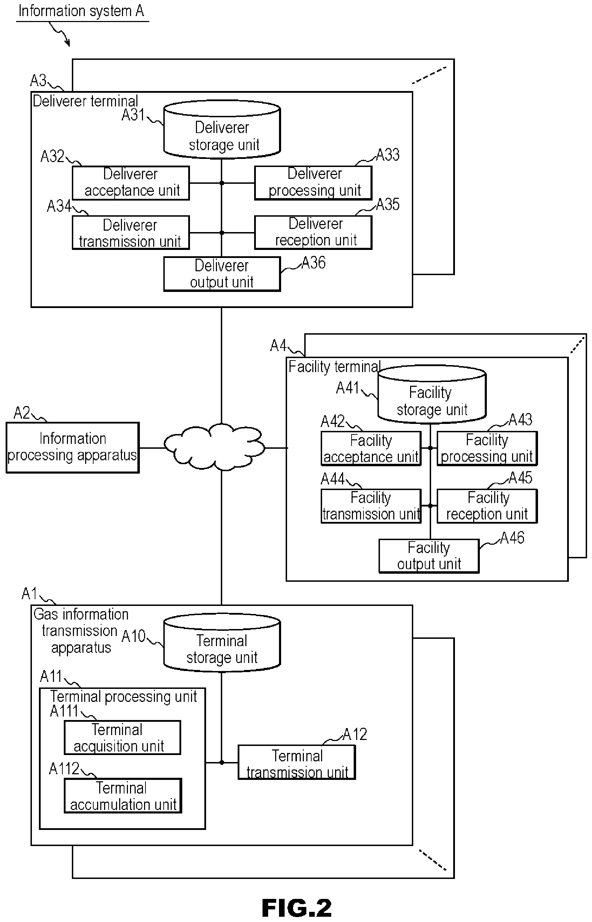

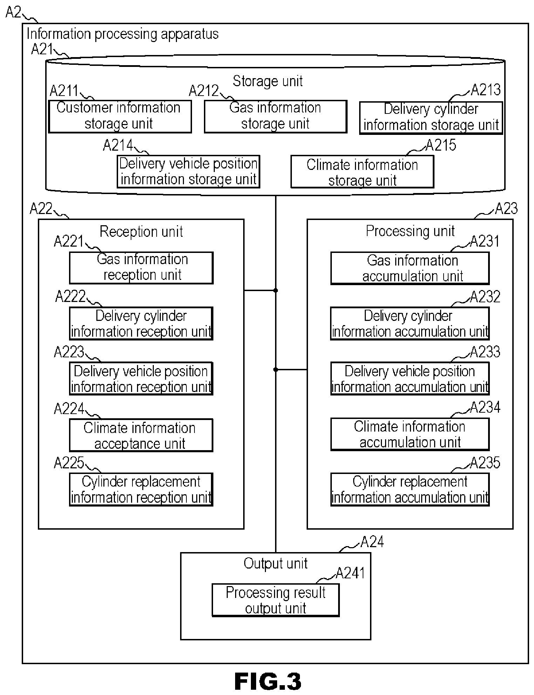

FIG. 2 is a block diagram for the information system A according to the present embodiment. FIG. 3 is a block diagram for the information processing apparatus A2 that is included in the information system A.

The gas information transmission apparatuses A1 includes a terminal storage unit A10, a terminal processing unit A11, and a terminal transmission unit A12. The terminal processing unit A11 includes a terminal acquisition unit A111 and a terminal accumulation unit A112.

The information processing apparatus A2 includes a storage unit A21, a reception unit A22, a processing unit A23, and an output unit A24. The storage unit A21 includes a customer information storage unit A211, a gas information storage unit A212, a delivery cylinder information storage unit A213, a delivery vehicle position information storage unit A214, and a climate information storage unit A215. The reception unit A22 includes a gas information reception unit A221, a delivery cylinder information reception unit A222, a delivery vehicle position information reception unit A223, a climate information acceptance unit A224, and a cylinder replacement information reception unit A225. The processing unit A23 includes a gas information accumulation unit A231, a delivery cylinder information accumulation unit A232, a delivery vehicle position information accumulation unit A233, a climate information accumulation unit A234, and a cylinder replacement information accumulation unit A235. The output unit A24 includes a processing result output unit A241.

Each deliverer terminal A3 includes a deliverer storage unit A31, a deliverer acceptance unit A32, a deliverer processing unit A33, a deliverer transmission unit A34, a deliverer reception unit A35, and a deliverer output unit A36.

Each facility terminal A4 includes a facility storage unit A41, a facility acceptance unit A42, a facility processing unit A43, a facility transmission unit A44, a facility reception unit A45, and a facility output unit A46.

The terminal storage unit A10 included in each gas information transmission apparatus A1 stores various kinds of information. Examples of the various kinds of information include gas information, a customer identifier that identifies a customer, a cylinder identifier that identifies a cylinder, and time information that specifies a time. Time information is, for example, date information that specifies a date, time point information that specifies a date and time, and time zone information that specifies a time zone. When time information is time point information, the time information may be regarded as including date information.

The terminal storage unit A10 stores pieces of gas information as of two or more points in time. Gas information is, for example, information associated with a cylinder identifier, a customer identifier that identifies a customer, and date information that indicates a date. Gas information is associated with time information, for example. Gas information contains, for example, gas use information. Gas use information is information regarding the gas used. Gas information contains, for example, one or more pieces of information of: unit time gas use information; and gas meter reading value information. Unit time gas use information is information that specifies the amount of gas used per unit time. Unit time gas use information is, for example, information that specifies the amount of gas used every one hour. Gas meter reading value information is, for example, information that specifies a gas meter reading value. Gas meter reading value information is, for example, information that specifies gas meter reading values acquired every one hour.

The gas information in the terminal storage unit A10 typically is information accumulated by the terminal accumulation unit A112.

The terminal processing unit A11 performs various kinds of processing. Examples of the various kinds of processing include processing that is performed by the terminal acquisition unit A111 and the terminal accumulation unit A112. Examples of the various kinds of processing include processing that is performed to delete gas information that has been transmitted, from the terminal storage unit A10.

The terminal acquisition unit A111 acquires gas information that is information that includes gas use information regarding the use of gas in an LPG cylinder and corresponds to a cylinder identifier that identifies an LPG cylinder. The terminal acquisition unit A111 acquires, for example, information from a gas meter. The terminal acquisition unit A111 acquires, for example, a meter reading value acquired from a gas meter, and calculates a gas use information that is the difference between the previous meter reading value and the current meter reading value and specifies the amount of gas used per unit time.

It is preferable that the terminal acquisition unit A111 acquires gas use information n times a day (n is 2 or more) every unit time. It is also preferable that the terminal acquisition unit A111 acquires gas use information every one hour.

It is preferable that the terminal acquisition unit A111 acquires time information from a clock (not shown) and associates the time information with the acquired gas use information. Note that the clock (not shown) may be present in the gas information transmission apparatuses A1 or may be a clock of an external apparatus such as an NTP server.

The terminal accumulation unit A112 accumulates the gas information acquired by the terminal acquisition unit A111, in the terminal storage unit A10. It is preferable that the terminal accumulation unit A112 accumulates the gas information acquired by the terminal acquisition unit A111, in the terminal storage unit A10 every unit time. Note that the unit time is, for example, on hour, thirty minutes, two hours, or the like. It is also preferable that the terminal accumulation unit A112 accumulates the gas information acquired by the terminal acquisition unit A111, in the terminal storage unit A10 in association with one or more pieces of information of: a customer identifier, a cylinder identifier, and time information.

The terminal transmission unit A12 transmits the gas information acquired by the terminal acquisition unit A111 to the information processing apparatus A2. The gas information acquired by the terminal acquisition unit A111 may be the gas information stored in the terminal storage unit A10.

The terminal transmission unit A12 transmits, for example, the gas information acquired by the terminal acquisition unit A111 to the information processing apparatus A2 in association with one or more identifiers. The one or more identifiers are, for example, one or more identifiers of: a cylinder identifier; and a cylinder identifier.

It is preferable that the terminal transmission unit A12 transmits gas information as of two or more time points stored in the terminal storage unit A10 to the information processing apparatus A2 when a predetermined condition is satisfied. The predetermined condition is, for example, that a predetermined time is reached, a predetermined number of pieces of gas information are stored in the terminal storage unit A10, or the like. In addition, transmitting gas information in association with a cylinder identifier or the like is, for example, transmitting gas information together with a cylinder identifier or the like, but there is no limitation on the method of associating pieces of information with each other. Note that the cylinder identifier is normally stored in the terminal storage unit A10. It is also preferable that, when the cylinder to be used is changed to another cylinder, the cylinder identifier of the other cylinder is automatically stored in the terminal storage unit A10.

Here, the transmission of gas information as of two or more time points may mean the transmission of two or more information sets that each consists of a piece of gas information and a piece of time information, or the transmission of two or more pieces of gas information arranged in chronological order.

In addition, the transmission of gas information for one day may mean the transmission of twenty-four information sets that each consists of gas information and time information, or the transmission of twenty-four pieces of gas information arranged in chronological.

Note that one piece of gas information is information that contains one piece of gas use information, but one piece of gas information may be information that contains a plurality of pieces of gas use information.

It is preferable that the terminal transmission unit A12 transmits two or more pieces of gas information in the terminal storage unit A10 to the information processing apparatus A2 less than n times a day.

It is preferable that the terminal transmission unit A12 transmits gas information to the information processing apparatus A2 once a day. Note that there is no limitation on the time at which the terminal transmission unit A12 transmits gas information.

The terminal transmission unit A12 may transmit gas information at different time points depending on a condition. That is, for example, the terminal transmission unit A12 may normally transmit a plurality of pieces of gas information to the information processing apparatus A2 at a low frequency (a first frequency), and when a predetermined condition is satisfied, the terminal transmission unit A12 may transmit gas information to the information processing apparatus A2 at a higher frequency (a second frequency) than the frequency in the normal case. The predetermined condition here is, for example, that the terminal processing unit A11 determines that the amount of gas that has been used is large enough to satisfy the predetermined condition (for example, an amount of gas no less than or greater than a threshold value has been used). Alternatively, the predetermined condition is, for example, that the terminal processing unit A11 determines that a small amount of gas has been used for a period that is long enough to satisfy the predetermined condition (for example, an amount of gas no greater than or less than a threshold value has been used for a period no less than a first threshold value).

It is also preferable that, after the terminal transmission unit A12 has transmitted gas information to the information processing apparatus A2, the terminal processing unit A11 deletes the transmitted gas information from the terminal storage unit A10.

The storage unit A21 included in the information processing apparatus A2 stores various kinds of information. Examples of the various kinds of information include customer information described later, gas information, delivery cylinder information described later, delivery vehicle position information described later, and climate information described later.

The customer information storage unit A211 stores one or more pieces of customer information each in association with a customer identifier. Customer information is information regarding a customer. Customer information contains, for example, a name, customer position information, and contact information. Customer position information is information that specifies the position of a customer. Customer position information is, for example, (latitude,longitude), address, or the like. Contact information is information that specifies a point of contact, and is, for example, an e-mail address or a telephone number. date information contains, for example, date information that specifies the date on which the gas cylinder was replaced. The customer information contains, for example, cylinder type information, cylinder number information, and gas remaining amount information. Cylinder type information is information that specifies the type of the cylinder used by the customer. The cylinder number information is information that specifies the number of cylinders installed in the customer's home. Gas remaining amount information is information that specifies the amount of gas remaining in the customer's gas cylinders. Customer information contains, for example, one or more medium identifiers that identify the medium used by the customer (for example, "LPG" and "electricity"), one or more appliance identifiers of energy appliances owned by the customer (for example, "gas appliance A", "electric appliance B", and "appliance C"), and one or more company identifiers that identify the energy companies with which the customer has a contract (for example, "company A"). Customer information may contain, for example, LPG cylinder information that contains cylinder capacity information regarding the capacity of the LPG cylinder used by the customer. Note that LPG cylinder information may be cylinder type information.

The gas information storage unit A212 stores one or more pieces of gas information. The gas information storage unit A212 normally stores two or more pieces of gas information associated with customer identifiers. It is preferable that the pieces of gas information are associated with one or more pieces of information of: time information that specifies a time; and a cylinder identifier. In addition, here, the association with time information and cylinder identifier may be realized by storing gas information so that time information and a cylinder identifier can be known.

The delivery cylinder information storage unit A213 stores one or more pieces of delivery cylinder information. Delivery cylinder information is information regarding a cylinder that is to be delivered. Delivery cylinder information contains, for example, cylinder type information and cylinder state information. Delivery cylinder information typically is information from which the number of cylinders can be known. That is to say, delivery cylinder information may contain number information that specifies the number of cylinders, or the number of pieces of delivery cylinder information that have been received may indicate the number of cylinders. Cylinder type information is information that specifies the type of the cylinder, and indicates, for example, 20 Kg, 30 Kg, or 50 Kg. Cylinder state information is information that indicates whether or not the cylinder is full. Delivery cylinder information corresponds to, for example, one or more pieces of information of: a cylinder identifier; a delivery vehicle identifier; a deliverer identifier; and time information that specifies entry/exit date and time. Note that the entry/exit date and time is an entry date and time or an exit date and time to/from a factory where the cylinder is to be filled with gas, or entry date and time or an exit date and time to/from a depot station where cylinders are stored. Alternatively, time point information may be information that only specifies a date.

The delivery vehicle position information storage unit A214 stores one or more pieces of delivery vehicle position information. Delivery vehicle position information is information that specifies the position of a delivery vehicle. Delivery vehicle position information is, for example, (latitude,longitude), but may be, for example, a facility identifier that identifies the nearest facility. The facility is, for example, a factory or a depot station. Delivery vehicle position information is associated with, for example, a delivery vehicle identifier that identifies the delivery vehicle for the cylinder, or a deliverer identifier.

The climate information storage unit A215 stores one or more pieces of climate information. Climate information is information regarding weather. Climate information is, for example, one or more pieces of information of: weather; temperature; humidity; and so on. It is preferable that climate information is associated with time information. Time information is, for example, date information and time point information.

The reception unit A22 receives various kinds of information. Examples of the various kinds of information include gas information, delivery cylinder information, delivery vehicle position information, climate information, and cylinder replacement information.

The gas information reception unit A221 receives one or more pieces of gas information from the gas information transmission apparatuses A1. The gas information reception unit A221 receives, for example, gas information associated with one or more identifiers of: a customer identifier; and a cylinder identifier, from the gas information transmission apparatuses A1.

The delivery cylinder information reception unit A222 receives one or more pieces of delivery cylinder information. The delivery cylinder information reception unit A222 receives delivery cylinder information in association with one or more pieces of information of: a cylinder identifier; a delivery vehicle identifier; and a deliverer identifier, for example. The delivery cylinder information reception unit A222 receives delivery cylinder information in association with a loading platform identifier, for example. The loading platform identifier is information that specifies a loading platform loading platform on which the cylinder is placed. The delivery cylinder information reception unit A222 receives delivery cylinder information in association with time point information that identifies entry/exit date and time, for example. The entry/exit date and time is the date and time of entry/exit to/from a facility. The delivery cylinder information reception unit A222 receive delivery cylinder information from the facility terminals A4, for example. The delivery cylinder information reception unit A222 receive delivery cylinder information from the deliverer terminals A3, for example. Note that there is no limitation on the source of delivery cylinder information. The cylinder identifier is, for example, information stored in a communication means (for example, an RFID tag) installed in a cylinder that is to be delivered, and indirectly or directly received from such a communication means. The cylinder identifier may be, for example, information input to a facility terminal A4 by a user and transmitted from the facility terminal A4. The delivery vehicle identifier is, for example, information stored in a communication means (for example, an RFID tag) installed in a delivery vehicle itself (for example, a trailer head), and indirectly or directly received from such a communication means. Note that, in such a case, the delivery vehicle identifier may be referred to as a trailer head identifier. In addition, the delivery vehicle identifier and the trailer head identifier may be different pieces of information, and in such a case, the delivery cylinder information reception unit A222 may receive delivery cylinder information in association with the trailer head identifier. In addition, the deliverer identifier is, for example, information indirectly or directly received from a deliverer terminal A3 held by a deliverer. The deliverer identifier may be, for example, information stored in a communication means installed in a delivery vehicle itself (for example, a trailer head), and indirectly or directly received from such a communication means. Furthermore, the loading platform identifier is, for example, information stored in a communication means (for example, an RFID tag) installed in a loading platform of a delivery vehicle, and indirectly or directly received from such a communication means.

The delivery vehicle position information reception unit A223 receives one or more pieces of delivery vehicle position information. The delivery vehicle position information reception unit A223 normally receives delivery vehicle position information from the deliverer terminals A3 that are terminals on delivery vehicles, but there is no limitation on the source of delivery vehicle position information. Note that the deliverer terminals A3 may be terminals that are different from the terminals held by deliverers, and may be terminals mounted on delivery vehicles.

The delivery vehicle position information reception unit A223 normally receives delivery vehicle position information in association with a delivery vehicle identifier that identifies a delivery vehicle. However, the delivery vehicle position information reception unit A223 may receive delivery vehicle position information in association with a deliverer identifier. Also, delivery vehicle identifier and deliverer identifier may be the same information.

The climate information acceptance unit A224 receives one or more pieces of climate information. Here, "acceptance" means, for example, reception from a server apparatus (not shown), but may be regarded as a concept that includes acceptance of information input from an input device such as a keyboard, a mouse, or a touch panel, or acceptance of information read from a recording medium such as an optical disk, a magnetic disk, or a semiconductor memory. Note that the server apparatus (not shown) is an apparatus that stores climate information.

The cylinder replacement information reception unit A225 receives one or more pieces of cylinder replacement information. Cylinder replacement information is information that indicates that a cylinder has been replaced. The cylinder replacement information reception unit A225 receives cylinder replacement information that is paired with one or more pieces of information of: a customer identifier; and a cylinder identifier, for example. The cylinder replacement information reception unit A225 receives, for example, cylinder replacement information from a deliverer terminal A. Note that there is no limitation on the transmission source of cylinder replacement information.

The processing unit A23 performs predetermined processing, using two or more pieces of gas information stored in the gas information storage unit A212. Examples of the predetermined processing include delivery date prediction processing described later, delivery control processing described later, futures trading processing described later, residence stay processing described later, energy optimum plan presentation processing described later, household credit rating acquisition processing described later, statistical processing, and so on. statistical processing is statistical processing to be performed on a plurality of pieces of gas information. Examples of statistical processing includes processing that is performed to calculate the average amount of gas used by a household for a certain period from a plurality of pieces of gas information, processing that is performed to calculate the cumulative value of the amount of gas used for a certain period, and processing that is performed to acquire a graph showing changes in the amount of gas used. Note that delivery date prediction processing, delivery control processing, futures trading processing, residence stay processing, energy optimum plan presentation processing, and household credit rating acquisition processing will be described in Embodiment 2 and the subsequent embodiments. Note that delivery date prediction processing is processing that is performed to predict the delivery date on which a gas cylinder is to be delivered to household. Delivery control processing is processing that is performed to deliver a gas cylinder to a household that has run out of gas, for example. Futures trading processing is processing that is performed to determine the price of gas and supporting futures trading. Residence stay processing is processing that is performed to output information regarding whether or not an inhabitant is present in a residence. Energy optimum plan presentation processing is processing that is performed to present an appropriate energy plan. Household credit rating acquisition processing is processing that is performed to acquire and output a credit rating of a household.

The processing unit A23 performs predetermined processing, also using one or more pieces of delivery cylinder information stored in the delivery cylinder information storage unit A213, for example. The predetermined processing is, for example, delivery control processing.

The processing unit A23 performs the predetermined processing, using one or more pieces of delivery vehicle position information stored in the delivery vehicle position information storage unit A214, for example. The predetermined processing is, for example, delivery control processing.

The processing unit A23 performs the predetermined processing, using one or more pieces of climate information stored in the climate information storage unit A215. Examples of the predetermined processing include delivery date prediction processing, futures trading processing, and energy optimum plan presentation processing.

The gas information accumulation unit A231 accumulates the one or more pieces of gas information received by the gas information reception unit A221, in the gas information storage unit A212. The gas information accumulation unit A231 accumulates each piece of gas information received by the gas information reception unit A221, in the gas information storage unit A212, in association with one or more pieces of information of: time information; a customer identifier; and a cylinder identifier. Note that such time information may be information received from the gas information transmission apparatuses A1, or information acquired from a clock (not shown).

The delivery cylinder information accumulation unit A232 accumulates the one or more pieces of delivery cylinder information received by the delivery cylinder information reception unit A222, in the delivery cylinder information storage unit A213. The delivery cylinder information accumulation unit A232 accumulates each piece of delivery cylinder information in the delivery cylinder information storage unit A213 in association with one or more pieces of information of: a cylinder identifier; a delivery vehicle identifier; and a deliverer identifier, for example.

The delivery vehicle position information accumulation unit A233 accumulates the one or more pieces of delivery vehicle position information received by the delivery vehicle position information reception unit A223, in the delivery vehicle position information storage unit A214. The delivery vehicle position information accumulation unit A233 accumulates each piece of delivery vehicle position information in the delivery vehicle position information storage unit A214 in association with a delivery vehicle identifier or a deliverer identifier.

The climate information accumulation unit A234 accumulates one or more pieces of climate information, in the climate information storage unit A215. The climate information accumulation unit A234 normally each piece of climate information in the climate information storage unit A215 in association with time information. Note that time information may be information received by the reception unit A22 or may be acquired from a clock (not shown). In addition, time information may be date information or time point information.

When the cylinder replacement information reception unit A225 receives cylinder replacement information, the cylinder replacement information accumulation unit A235 updates the gas remaining amount information contained in the gas information paired with one or more pieces of information of: a customer identifier; and a cylinder identifier, to information that specifies that the amount of gas remaining is full.

The deliverer storage unit A31 included in each deliverer terminal A3 stores various kinds of information. Examples of the various kinds of information include a deliverer identifier that identifies a deliverer. Examples of the various kinds of information include a delivery vehicle identifier that identifies a delivery vehicle. The deliverer identifier and the delivery vehicle identifier may be the same information. Examples of the various kinds of information include cylinder replacement information. Cylinder replacement information is information that indicates that a cylinder has been replaced. Cylinder replacement information is associated with one or more identifiers of: a customer identifier; and a cylinder identifier.

The deliverer acceptance unit A32 accepts various instructions and various kinds of information. Examples of the various instructions and various kinds of information include cylinder replacement information. Examples of the various instructions and various kinds of information include cylinder replacement information and one or more identifiers of: a customer identifier; and a cylinder identifier. When a cylinder of a certain household is to be replaced or has been replaced, the deliverer inputs cylinder exchange information to the deliverer terminal A3. In addition, cylinder replacement information may be input by pressing a button, or may be input by inputting information in a field, for example.

It is preferable that the deliverer inputs one or more identifiers of: a customer identifier; and a cylinder identifier together with cylinder replacement information. In such a case, the deliverer acceptance unit A32 accepts cylinder replacement information, and one or more identifiers of: a customer identifier; and a cylinder identifier.

Any input means may be employed to input cylinder replacement information, such as a touch panel, a keyboard, a mouse, a menu screen, or the like. The deliverer acceptance unit A32 can be realized using a device driver for the input means such as a touch panel or a keyboard, or control software or the like for controlling the menu screen.

The deliverer processing unit A33 performs various kinds of processing. Examples of the various kinds of information include processing that is performed to convert the information accepted by the deliverer acceptance unit A32 so as to have a data structure of information to be transmitted. Examples of the various kinds of processing include processing that is performed when the deliverer acceptance unit A32 accepts cylinder replacement information, to form information in which the cylinder replacement information, the deliverer identifier in the deliverer storage unit A31, and one or more identifiers of: the customer identifier; and the cylinder identifier, which have been input, are associated with each other. Examples of the various kinds of information include processing that is performed to convert the information received by the deliverer reception unit A35 so as to have a data structure of information that is to be output.

The deliverer transmission unit A34 transmits cylinder replacement information to the information processing apparatus A2. The deliverer transmission unit A34 normally transmits cylinder replacement information that is associated with one or more identifiers of: a customer identifier; and a cylinder identifier, to the information processing apparatus A2. It is preferable that the deliverer transmission unit A34 transmits a deliverer identifier as well as cylinder replacement information.

The deliverer reception unit A35 receives various kinds of information. The deliverer reception unit A35 receives various kinds of information from the information processing apparatus A2, for example. The deliverer reception unit A35 receives customer information described later, from the information processing apparatus A2, for example. Note that customer information is information regarding a customer, and is information paired with a customer identifier. The customer information received by the deliverer reception unit A35 is information regarding the customer to which a gas cylinder is to be delivered, for example. Note that the customer identifier may be contained in customer information.

The deliverer output unit A36 outputs various kinds of information. Examples of the various kinds of information include information formed by the deliverer processing unit A33. Examples of the various kinds of information include customer information. Customer information is information regarding the customer to which a gas cylinder is to be delivered. It is preferable that customer information contains one or more pieces of information of: a customer identifier; customer position information; and information regarding the gas cylinder to be delivered. Customer position information is information that specifies the position of a customer. Customer position information is, for example, (latitude,longitude), address, or the like. Information regarding the gas cylinder to be delivered is, for example, cylinder type information that specifies the type of a gas cylinder, the number of gas cylinders, and so on.

Here, "output" typically means displaying on a display device, but may be regarded as a concept that includes projection with a projector, printing with a printer, sound output, transmission to an external apparatus, accumulation on a recording medium, delivery of processing results to another processing apparatus or another program, and so on.

The facility storage unit A41 included in each facility terminal A4 stores various kinds of information. Examples of the various kinds of information include a facility identifier that identifies a facility. It is preferable that the facility storage unit A41 stores delivery cylinder information that is information received by a terminal in a delivery vehicle, (for example, an RFID) and is information regarding a cylinder mounted on the delivery vehicle. Delivery cylinder information is associated with a cylinder identifier. It is preferable that delivery cylinder information is associated with a loading platform identifier and entry/exit date and time, for example. Delivery cylinder information contains, for example, cylinder type information and cylinder state information. It is preferable that delivery cylinder information contains information that specifies the number of cylinders to be delivered.

The facility acceptance unit A42 accepts various instructions and various kinds of information.

The facility processing unit A43 performs various kinds of processing. Examples of the various kinds of processing include processing that is performed to accumulate information received by the facility reception unit A45. The facility processing unit A43 at least temporarily accumulates the delivery cylinder information and identifiers received by the facility reception unit A45, in the facility storage unit A41. Note that examples of the identifiers include one or more identifiers of: a cylinder identifier; a loading platform identifier; a delivery vehicle identifier; and a deliverer identifier.

The facility transmission unit A44 transmits various kinds of information. The facility transmission unit A44 transmits, for example, various kinds of information to the information processing apparatus A2. The facility transmission unit A44 transmits delivery cylinder information in association with identifiers, for example. Examples of the identifiers include one or more identifiers of: a cylinder identifier; a loading platform identifier; a delivery vehicle identifier; and a deliverer identifier.

The facility reception unit A45 receives various kinds of information. The facility reception unit A45 receives, for example, various kinds of information from a terminal of a delivery vehicle (for example, an RFID). The facility reception unit A45 receives delivery cylinder information in association with identifiers, for example. Examples of the identifiers include one or more identifiers of: a cylinder identifier; a loading platform identifier; a delivery vehicle identifier; and a deliverer identifier.

The facility output unit A46 outputs various kinds of information.

It is preferable that the terminal storage unit A10, the storage unit A21, the customer information storage unit A211, the gas information storage unit A212, the delivery cylinder information storage unit A213, the delivery vehicle position information storage unit A214, the climate information storage unit A215, the deliverer storage unit A31, and the facility storage unit A41 are realized using a non-volatile recording medium, but they can be realized using a volatile recording medium.

There is no limitation on the process in which information is stored in the terminal storage unit A10 and so on. For example, information may be stored in the terminal storage unit A10 or the like via a recording medium, or information transmitted via a communication line or the like may be stored in the terminal storage unit A10 or the like, or information input via an input device may be stored in the terminal storage unit A10 or the like.

The terminal processing unit A11, the terminal acquisition unit A111, the terminal accumulation unit A112, the processing unit A23, the gas information accumulation unit A231, the delivery cylinder information accumulation unit A232, the delivery vehicle position information accumulation unit A233, the climate information accumulation unit A234, the cylinder replacement information accumulation unit A235, the deliverer processing unit A33, and the facility processing unit A43 can typically be realized using an MPU, a memory, or the like. The processing procedures performed by the terminal processing unit A11 and so on typically are realized using software, and the software is recorded on a recording medium such as a ROM. However, such processing procedures may be realized using hardware (a dedicated circuit). Needless to say, a CPU or a GPU may be used instead of the MPU.

The terminal transmission unit A12, the output unit A24, processing result output unit A241, the deliverer transmission unit A34, and the facility transmission unit A44 typically are realized using a wireless or wired communication means, but may be realized using a broadcast means.

The reception unit A22, the gas information reception unit A221, the delivery cylinder information reception unit A222, the delivery vehicle position information reception unit A223, the climate information acceptance unit A224, the cylinder replacement information reception unit A225, the deliverer reception unit A35, and the facility reception unit A45 typically are realized using a wireless or wired communication means, but may be realized using a means for receiving broadcast.

The deliverer acceptance unit A32 and the facility acceptance unit A42 can be realized using a touch panel, a keyboard, a mouse, a menu screen, or the like.

The deliverer output unit A36 and the facility output unit A46 may be regarded as including or not including an output device such as a display or a speaker. The deliverer output unit A36 and so on can be realized using the driver software of the output device, the driver software of the output device and the output device, or the like.

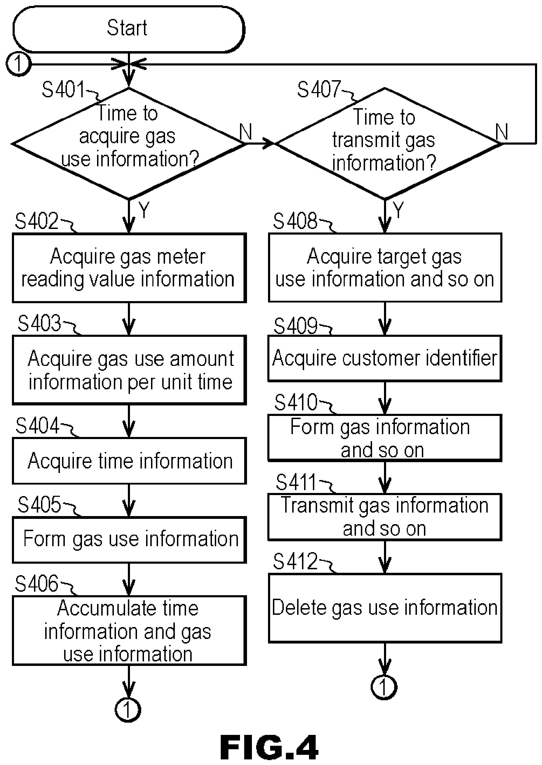

Next, operations that are performed by the information system A will be described. First, examples of operations that are performed by the gas information transmission apparatus A1 will be described with reference to the flowchart shown in FIG. 4.

(Step S401) The terminal processing unit A11 determines whether or not it is the time to acquire gas use information. If it is the time to acquire gas use information, processing proceeds to step S402, and if it is not the time to acquire gas use information, processing proceeds to step S407. For example, when acquiring gas use information every one hour, the terminal processing unit A11 acquires time information from a clock (not shown), and if the time indicated by the time information matches "X hour 00 minutes" (X is a natural number in the range of 1 to 24), the terminal processing unit A11 determines that it is the time to acquire gas use information.

(Step S402) The terminal acquisition unit A111 acquires gas meter reading value information from a gas meter (not shown). Noted that such a technique is a well-known technique. Note that the gas meter typically is an LP gas meter, and is a device that holds the gas meter reading value that indicates the flow rate integration measured from the installation of the device.

(Step S403) The terminal acquisition unit A111 calculates information indicating gas use amount per unit time, which is the difference between the previously acquired gas meter reading value information and the gas meter reading value information currently acquired in step S402. Note that the terminal acquisition unit A111 acquires the information indicating the gas use amount per unit time by calculating, for example, "information indicating the gas use amount per unit time = the previously acquired gas meter reading value information - the gas meter reading value information acquired in step S402".

(Step S404) The terminal acquisition unit A111 acquires time information that indicates the current time from a clock (not shown).

(Step S405) The terminal acquisition unit A111 forms gas use information to be accumulated, using the information indicating the gas use amount per unit time, acquired in step S403.

(Step S406) The terminal accumulation unit A112 accumulates the time information acquired in step S404 and the gas use information formed in step S405 in association with each other. Processing returns to step S401. Note that the location where the gas use information or the like is to be accumulated typically is the terminal storage unit A10. Note that the terminal accumulation unit A112 may accumulate gas use information in association with a cylinder identifier. In such a case, the terminal acquisition unit A111 acquires the cylinder identifier as well.

(Step S407) The terminal processing unit A11 determines whether or not it is the time to transmit gas information. If it is the time to transmit gas information, processing proceeds to step S408, and if it is not the time to transmit gas information, processing returns to step S401. For example, when transmitting gas information once a day, the terminal processing unit A11 acquires time information from a clock (not shown), and upon determining that the time indicated by the time information has passed a predetermined time (for example, "24:01"), the terminal processing unit A11 determines that it is the time to transmit gas information. Note that even if it is determined that the predetermined time has passed, the gas information that has already been transmitted is usually not transmitted again. Also, even if the terminal processing unit A11 determines that the predetermined time has passed, the terminal processing unit A11 usually does not determine that it is the time to transmit gas information until a predetermined period (for example, one day) elapses.

(Step S408) The terminal processing unit A11 acquires gas use information and so on to be transmitted, from the terminal storage unit A10. The gas use information and so on are, for example, a set of pieces of information composed of gas use information and time information, gas use information alone, gas use information and a cylinder identifier, or a set of pieces of information composed of gas use information, a cylinder identifier, and time information.

(Step S409) The terminal processing unit A11 acquires a customer identifier from the terminal storage unit A10.

(Step S410) The terminal processing unit A11 forms gas information and so on to be transmitted. Gas information contains, for example, a plurality of pieces of gas use information and so on and one or more identifiers. The one or more identifiers are, for example, one or more pieces of information of: a customer identifier; and a cylinder identifier.

(Step S411) The terminal transmission unit A12 transmits the gas information and so on formed in step S410 to the information processing apparatus A2.

(Step S412) The terminal processing unit A11 deletes the transmitted gas use information and so on. Here, a flag indicating that the information has been transmitted may be accumulated in association with the transmitted gas use information and so on. Such addition of a flag may be regarded as the same as the deletion. Processing returns to step S401.

In the flowchart shown in FIG. 4, the number of times gas use information is accumulated is larger than the number of times gas information is transmitted. That is to say, in the flowchart shown in FIG. 4, a plurality of pieces of gas use information are transmitted to the information processing apparatus A2 all at once. As a result, the power consumption of the gas information transmission apparatus A1 can be reduced, and the frequency of battery replacement of the gas information transmission apparatus A1 can be reduced. However, in the flowchart shown in FIG. 4, gas information may be transmitted each time gas use information is acquired.

Also, in the flowchart shown in FIG. 4, the terminal transmission unit A12 may transmit gas information to the information processing apparatus A2 at different frequencies in a case where a predetermined condition is satisfied and in a case where the predetermined condition is not satisfied. Here, the predetermined condition is, for example, that the terminal processing unit A11 determines that the amount of gas that has been used is large enough to satisfy the predetermined condition.

In the flowchart shown in FIG. 4, processing is terminated when power is turned off or an interruption is made to terminate the processing.

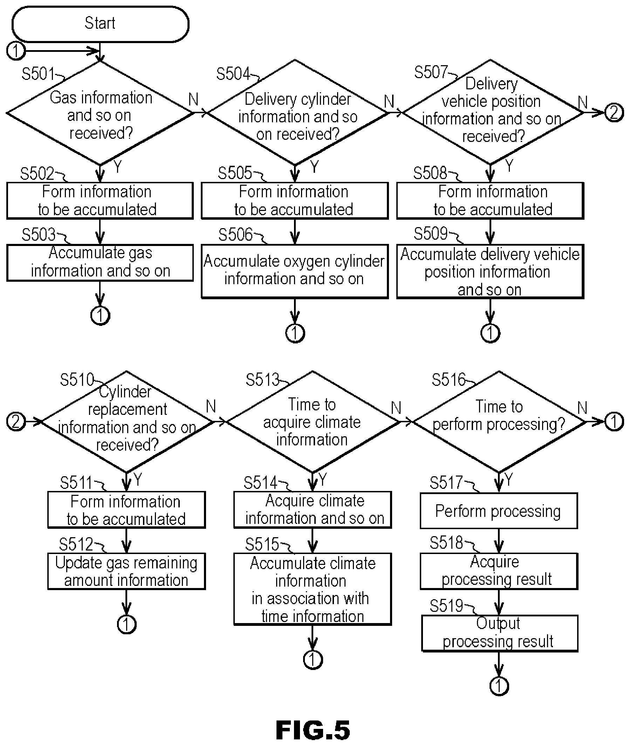

Next, examples of operations that are performed by the information processing apparatus A2 will be described with reference to the flowchart shown in FIG. 5.

(Step S501) The gas information reception unit A221 determines whether or not gas information and so on transmitted from the gas information transmission apparatuses A1 have been received. If gas information and so on have been received, processing proceeds to step S502, and if gas information and so on have not been received, processing proceeds to step S504. Gas information and so on are, for example, gas information and one or more identifiers. The one or more identifiers are, for example, one or more pieces of information of: a customer identifier; and a cylinder identifier.

(Step S502) The gas information accumulation unit A231 forms gas information and so on to be accumulated, using the gas information and so on received in step S501.

(Step S503) The gas information accumulation unit A231 accumulates the gas information and so on formed in step S502 in the gas information storage unit A212. Processing returns to step S501.

(Step S504) The delivery cylinder information reception unit A222 determines whether or not delivery cylinder information and so on have been received. If delivery cylinder information and so on have been received, processing proceeds to step S505, and if delivery cylinder information and so on have not been received, processing proceeds to step S507. Delivery cylinder information and so on are, for example, delivery cylinder information and one or more identifiers. The one or more identifiers are, for example, one or more pieces of information of: a cylinder identifier; a deliverer identifier; and a delivery vehicle identifier.

(Step S505) The delivery cylinder information accumulation unit A232 forms delivery cylinder information and so on to be accumulated, using the delivery cylinder information and so on received in step S504.

(Step S506) The delivery cylinder information accumulation unit A232 accumulates the delivery cylinder information and so on formed in step S505, in the delivery cylinder information storage unit A213. Processing returns to step S501.

(Step S507) The delivery vehicle position information reception unit A223 determines whether or not delivery vehicle position information and so on have been received. If delivery vehicle position information and so on have been received, processing proceeds to step S508, and if delivery vehicle position information and so on have not been received, processing proceeds to step S510. Delivery vehicle position information and so on are, for example, delivery vehicle position information and one or more identifiers. The one or more identifiers are, for example, one or more pieces of information of: a deliverer identifier; and a delivery vehicle identifier.

(Step S508) The delivery vehicle position information accumulation unit A233 forms delivery vehicle position information and so on to be accumulated, using the delivery vehicle position information and so on received in step S507.

(Step S509) The delivery vehicle position information accumulation unit A233 accumulates the delivery vehicle position information and so on formed in step S508, in the delivery vehicle position information storage unit A214. Processing returns to step S501.

(Step S510) Cylinder replacement information reception unit A225 determines whether or not cylinder replacement information and so on have been received. If cylinder replacement information and so on have been received, processing proceeds to step S511, and if cylinder replacement information and so on have not been received, processing proceeds to step S513. Cylinder replacement information and so on are, for example, cylinder replacement information and one or more identifiers. The one or more identifiers are, for example, one or more pieces of information of: a customer identifier; and a cylinder identifier.

(Step S511) The cylinder replacement information accumulation unit A235 forms cylinder replacement information and so on to be accumulated, using the cylinder replacement information and so on received in step S510.

(Step S512) The cylinder replacement information accumulation unit A235 updates the gas remaining amount information regarding the customer information storage unit A211, using the cylinder replacement information and so on formed in step S511. Processing returns to step S501.

(Step S513) The processing unit A23 determines whether or not it is the time to acquire climate information. If it is the time to acquire climate information, processing proceeds to step S514, and if it is not the time to acquire climate information, processing proceeds to step S516. Note that the time to acquire climate information is, for example, every one hour, every one day, or the like.

(Step S514) The climate information acceptance unit A224 acquires climate information and so on from a server (not shown). Here, the climate information acceptance unit A224 may acquire climate information and so on regarding two or more regions, for example.

(Step S515) The climate information accumulation unit A234 accumulates the climate information and so on acquired in step S514 in association with time information, in the climate information storage unit A215. Processing returns to step S501. Climate information and so on are, for example, climate information and time information. The climate information accumulation unit A234 may accumulate climate information and so on in association with time information and a region identifier that identifies a region, in the climate information storage unit A215.

(Step S516) The processing unit A23 determines whether or not it is the time to perform processing, using gas information. If it is the time to perform processing, processing proceeds to step S517, and if it is not the time to perform processing, processing returns to step S501.

(Step S517) The processing unit A23 preforms predetermined processing. Examples of predetermined processing include delivery date prediction processing, delivery control processing, futures trading processing, residence stay processing, energy optimum plan presentation processing, household credit rating acquisition processing, and statistical processing.

(Step S518) The processing unit A23 acquires a processing result that is information that specifies the result of processing performed in step S517.

(Step S519) The processing result output unit A241 outputs the processing result acquired in step S518. Processing returns to step S501.

In the flowchart shown in FIG. 5, processing is terminated when power is turned off or an interruption is made to terminate the processing.

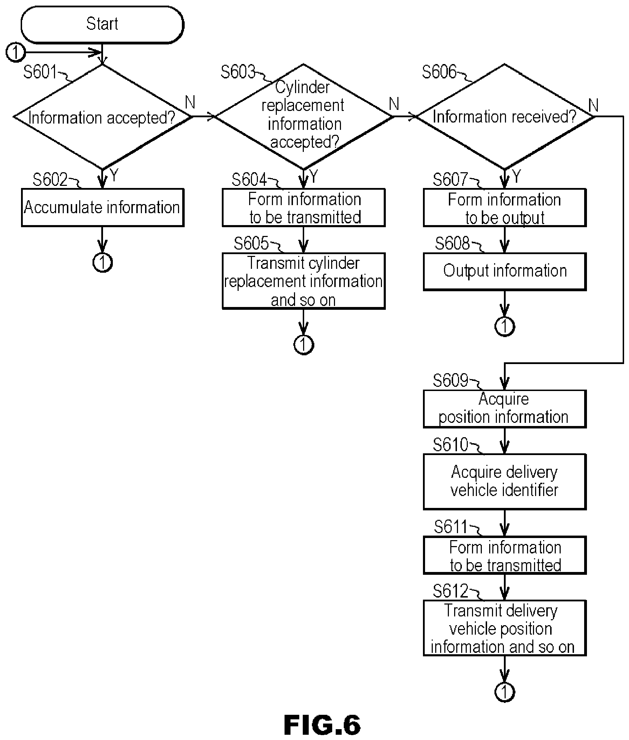

Next, examples of operations that are performed by each deliverer terminal A3 will be described with reference to the flowchart shown in FIG. 6.

(Step S601) The deliverer acceptance unit A32 determines whether or not information has been accepted. If information has been accepted, processing proceeds to step S602, and if information has not been accepted, processing proceeds to step S603. Examples of information include a customer identifier and a cylinder identifier.

(Step S602) The deliverer processing unit A33 at least temporarily accumulate the information accepted in step S601, in the deliverer storage unit A31. Processing returns to step S601.

(Step S603) The deliverer acceptance unit A32 determines whether or not cylinder replacement information has been accepted. If cylinder replacement information has been accepted, processing proceeds to step S604, and if cylinder replacement information has not been accepted, processing proceeds to step S606.

(Step S604) The deliverer processing unit A33 forms cylinder replacement information and so on to be transmitted. Cylinder replacement information and so on contain, for example, a customer identifier and a cylinder identifier.

(Step S605) The deliverer transmission unit A34 transmits the cylinder replacement information and so on formed in step S604 to the information processing apparatus A2. Processing returns to step S601.

(Step S606) The deliverer reception unit A35 determines whether or not information has been received. If information has been received, processing proceeds to step S607, and if information has not been received, processing proceeds to step S609. Note that examples of information include customer information and a delivery list. The delivery list is information regarding a list of customers to which the deliverer delivers gas cylinders.

(Step S607) The deliverer processing unit A33 forms information that is to be output, using the information received in step S606. Examples of information that is to be output include customer information, a delivery list, a map that explicitly shows the position specified by the customer position information contained in the customer information, and route information that is the result of a search for a route from the position specified by delivery vehicle position information to the position specified by the customer position information. Note that the deliverer processing unit A33 may have the function of acquiring delivery vehicle position information (for example, the function of a GPS receiver) and a route search function.

(Step S608) The deliverer output unit A36 outputs the information formed in step S607. Processing returns to step S601.

(Step S609) The deliverer processing unit A33 acquires position information regarding the delivery vehicle. Note that when the deliverer processing unit A33 acquires position information, the deliverer processing unit A33 typically has a GPS receiver, but may use another means to acquire position information. The other means uses, for example, the strength of radio waves transmitted from three or more radio base stations, to perform processing, for example.

(Step S610) The deliverer processing unit A33 acquires a delivery vehicle identifier from the deliverer storage unit A31.

(Step S611) The deliverer processing unit A33 forms delivery vehicle position information and so on to be transmitted, using the delivery vehicle position information acquired in step S609 and the delivery vehicle identifier acquired in step S610.

(Step S612) The deliverer transmission unit A34 transmits the delivery vehicle position information and so on formed in step S611 to the information processing apparatus A2. Processing returns to step S601.

Note that there is no limitation on the time at which the delivery vehicle position information is transmitted in the flowchart shown in FIG. 6.

In the flowchart shown in FIG. 6, processing is terminated when power is turned off or an interruption is made to terminate the processing.

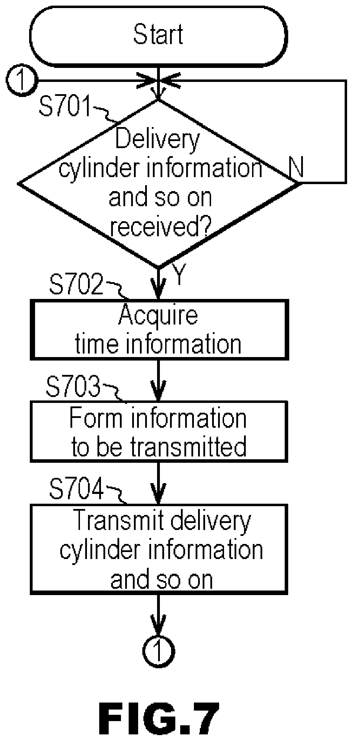

Next, examples of operations that are performed by each facility terminal A4 will be described with reference to the flowchart shown in FIG. 7.

(Step S701) The facility reception unit A45 determines whether or not delivery cylinder information and so on have been received. If delivery cylinder information and so on have been received, processing proceeds to step S702, and if delivery cylinder information and so on have not been received, processing returns to step S701.

(Step S702) The facility processing unit A43 acquires time information from a clock (not shown).

(Step S703) The facility processing unit A43 forms delivery cylinder information and so on to be transmitted, using the delivery cylinder information and so on received in step S701 and the time information acquired in step S702.

(Step S704) The facility transmission unit A44 transmits the delivery cylinder information and so on formed in step S703 to the information processing apparatus A2. Processing returns to step S701.

In the flowchart shown in FIG. 7, processing is terminated when power is turned off or an interruption is made to terminate the processing.

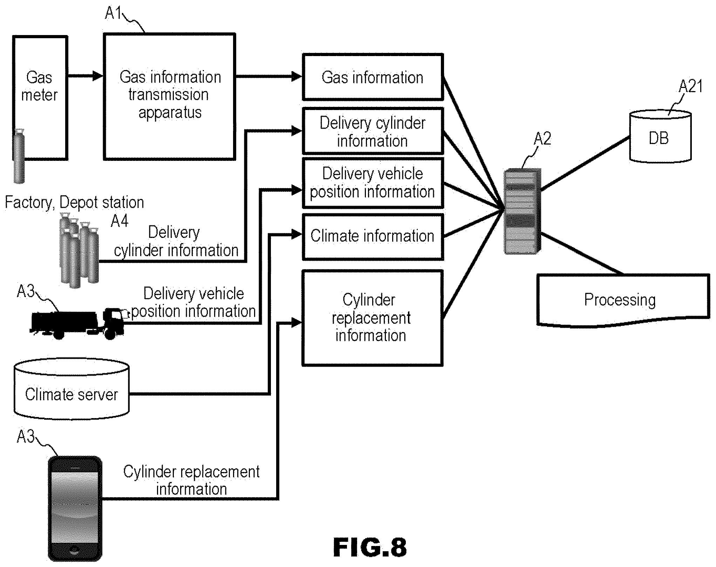

The following describes specific examples of operations that are performed by the information system A according to the present embodiment with reference to a conceptual diagram (FIG. 8) for processing that is performed by the information system A. Note that the conceptual diagram for the system structure of the information system A is FIG. 1.

In the information system A, as described above, pieces of gas information are transmitted from the gas information transmission apparatuses A1 to the information processing apparatus A2 at appropriate points in time, and are accumulated in the information processing apparatus A2. Also, pieces of delivery vehicle position information are transmitted from the deliverer terminals A3 to the information processing apparatus A2, and are accumulated in the information processing apparatus A2. Also, pieces of delivery cylinder information are transmitted from the facility terminals A4 to the information processing apparatus A2, and are accumulated in the information processing apparatus A2. Also, pieces of cylinder replacement information are transmitted from the deliverer terminals A3 to the information processing apparatus A2, and are accumulated in the information processing apparatus A2. Also, the information processing apparatus A2 receives and accumulates climate information from a climate server (not shown). Note that the climate server is a server that stores climate information.

The deliverer terminals A3 that transmit delivery vehicle position information and the deliverer terminals A3 that transmit the deliverer terminals A3 are terminals used by deliverers, and, needless to say, they may be different terminals.

In the information processing apparatus A2, the processing unit A23 performs various kinds of processing, using various kinds of information accumulated in the DB (A21). Examples of the various kinds of processing include delivery date prediction processing, delivery control processing, futures trading processing, residence stay processing, energy optimum plan presentation processing, and household credit rating acquisition processing. Examples of the various kinds of processing may also include processing performed to simply output the results of the above-described statistical processing and various kinds of accumulated information.

As described above, according to the present embodiment, the gas information and so on that contain gas use information regarding the use of LPG cylinders can be collected and used.

In addition, according to the present embodiment, the power consumption of the power source of the gas information transmission apparatuses A1 can be reduced by efficiently transmitting gas information.

In addition, according to the present embodiment, delivery cylinder information that is information regarding the cylinders to be delivered can also be collected and used.

In addition, according to the present embodiment, delivery cylinder information that is information that contains cylinder type information can also be collected and used.

In addition, according to the present embodiment, climate information can also be acquired and used.

Furthermore, according to the present embodiment, cylinder replacement information can be received and used when a cylinder is replaced.

Note that the processing in the present embodiment may be realized using software. This software may be distributed through software downloading or the like. Also, this software may be recorded on a recording medium such as a CD-ROM and distributed. Note that the same applies to the other embodiments in the present description. The software that realizes the gas information transmission apparatuses A1 in the present embodiment is the program described below. That is to say, this program is a program that enables a computer that can access a terminal storage unit that stores pieces of gas information as of two or more points in time to function as: a terminal acquisition unit that acquires gas information that is information that includes gas use information regarding use of gas in an LPG cylinder and corresponds to a cylinder identifier that identifies an LPG cylinder; a terminal accumulation unit that accumulates the gas information acquired by the terminal acquisition unit, in the terminal storage unit; a terminal transmission unit that, when a predetermined condition is satisfied, transmits the pieces gas information as of the two or more pints in time stored in the terminal storage unit to the information processing apparatus in association with a customer identifier.

The software that realizes the information processing apparatus A2 in the present embodiment is the program described below. That is to say, this program is a program that enables a computer that can access a gas storage unit that stores two or more pieces of gas information in association with time information that specifies time, and with a customer identifier, to function as: a gas information reception unit that receives gas information that is associated with a customer identifier, from a gas information transmission apparatus that includes a terminal acquisition unit that acquires gas information that is information that includes gas use information regarding use of gas in an LPG cylinder and corresponds to a customer identifier, and a terminal transmission unit that transmits the gas information acquired by the terminal acquisition unit to the information processing apparatus; a gas information accumulation unit that accumulates the gas information received by the gas information reception unit, in the gas information storage unit in association with time information, and with a customer identifier; and a processing unit that performs predetermined processing, using two or more pieces of gas information stored in the gas information storage unit.

### Embodiment 2

The present embodiment describes an information system B that includes an information processing apparatus that predicts a delivery date of a gas cylinder for each household, using gas use information regarding the use of gas in the past. In the present embodiment, information accumulated by the information system A according to Embodiment 1 can be used as gas use information and so on used to predict the delivery date of the gas cylinder.

The present embodiment also describes an information system B that includes an information processing apparatus that predicts the delivery date of a gas cylinder, using climate information as well.

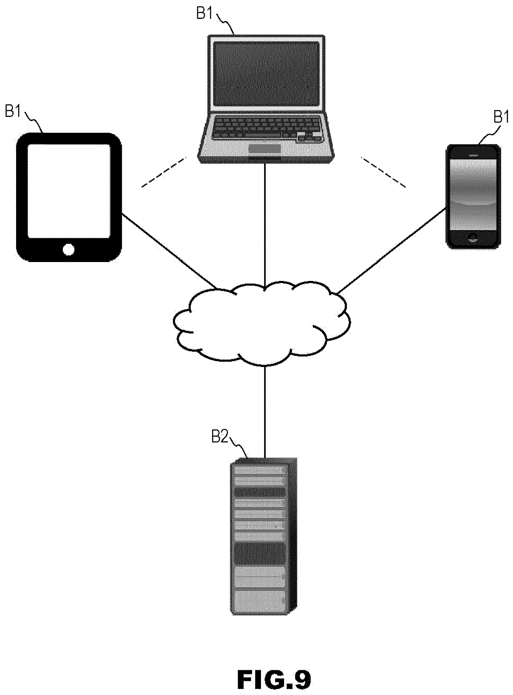

FIG. 9 is a conceptual diagram for the information system B according to the present embodiment. The information system B includes one or more terminal apparatuses B1 and an information processing apparatus B2.

The terminal apparatuses B1 are terminals that are used by a person who wants to obtain information regarding the scheduled delivery date. The terminal apparatuses B1 are, for example, smartphones, tablet terminals, so-called personal computers, or the like, but there is no limitation on the type thereof.

The information processing apparatus B2 is an apparatus for acquiring the scheduled delivery date. The information processing apparatus B2 can be realized using a so-called cloud server or an ASP server, but there is no limitation on the type thereof. The information processing apparatus B2 may have some or all of the functions of the information processing apparatus A2.

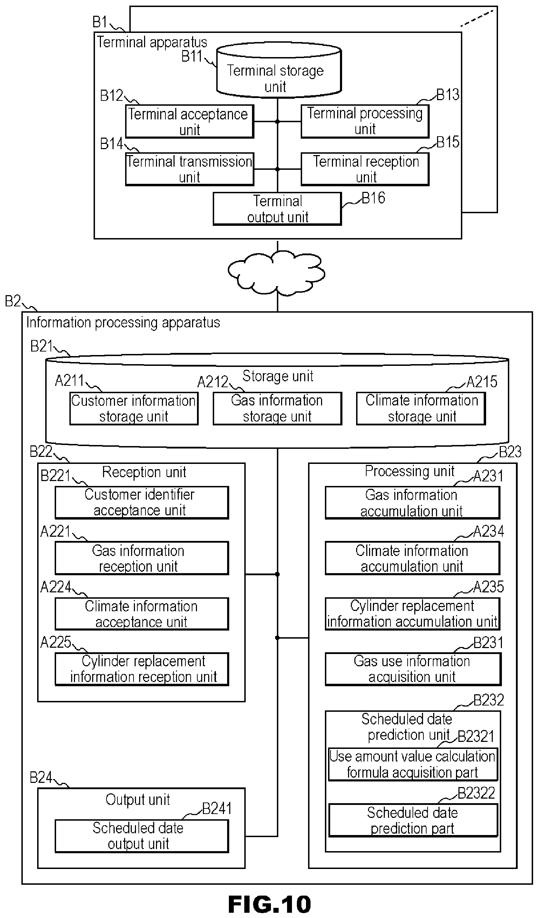

FIG. 10 is a block diagram for the information system B according to the present embodiment.

Each terminal apparatus B1 includes a terminal storage unit B11, a terminal acceptance unit B12, a terminal processing unit B13, a terminal transmission unit B14, a terminal reception unit B15, and a terminal output unit B16.

The information processing apparatus B2 includes a storage unit B21, a reception unit B22, a processing unit B23, and an output unit B24. The storage unit B21 includes the customer information storage unit A211, the gas information storage unit A212, and the climate information storage unit A215. The reception unit B22 includes a customer identifier acceptance unit B221, the gas information reception unit A221, the climate information acceptance unit A224, and the cylinder replacement information reception unit A225. The processing unit B23 includes the gas information accumulation unit A231, the climate information accumulation unit A234, the cylinder replacement information accumulation unit A235, a gas use information acquisition unit B231, and a scheduled date prediction unit B232. The scheduled date prediction unit B232 includes a use amount value calculation formula acquisition part B2321 and a scheduled date prediction part B2322. The output unit B24 includes a scheduled date output unit B241.

The terminal storage unit B11 included in each terminal apparatus B1 stores various kinds of information. Examples of the various kinds of information include a customer identifier.

The terminal acceptance unit B12 accepts instructions, information, and so on. Examples of instructions, information, and so on include a customer identifier and a delivery date prediction instruction. The delivery date prediction instruction is an instruction to carry out delivery date prediction processing. The delivery date prediction instruction may contain a customer identifier that specifies a household for which a prediction date is to be acquired, or may contain no customer identifier. Any input means may be employed to input an instruction, information, and so on, such as a touch panel, a keyboard, a mouse, a menu screen, or the like. The terminal acceptance unit B12 can be realized using a device driver for the input means such as a touch panel or a keyboard, or control software or the like for controlling the menu screen.

The terminal processing unit B13 performs various kinds of processing. Examples of the various kinds of information include processing that is performed to convert the instruction, information, and so on accepted by the terminal acceptance unit B12 to an instruction, information, and so on that have a data structure to be transmitted. Examples of the various kinds of processing also include processing that is performed to convert the information received by the terminal transmission unit B14 so as to have a data structure that is to be output.

The terminal transmission unit B14 transmits various kinds of instructions, information, and so on to the information processing apparatus B2. Examples of the various kinds of instructions, information, and so on include a customer identifier and a delivery date prediction instruction.

The terminal reception unit B15 receives various kinds of information, and so on from the information processing apparatus B2. Examples of the various kinds of information and so on include a set of pieces of information composed of a customer identifier and scheduled date information. Scheduled date information is information that specifies a scheduled delivery date.

The terminal output unit B16 outputs various kinds of information and so on. Examples of the various kinds of information and so on include a set of pieces of information composed of a customer identifier and scheduled date information. Here, "output" typically means displaying on a display device, but may be regarded as a concept that includes projection with a projector, printing with a printer, sound output, transmission to an external apparatus, accumulation on a recording medium, delivery of processing results to another processing apparatus or another program, and so on.

The storage unit B21 included in the information processing apparatus B2 stores various kinds of information. Examples of the various kinds of information include customer information, gas information, and climate information.

The reception unit B22 receives various kinds of information. Examples of the various kinds of information include a customer identifier, gas information, climate information, and cylinder replacement information.

The customer identifier acceptance unit B221 accepts a customer identifier. Here, "acceptance" means reception from the terminal apparatuses B1 and so on, for example. However, "acceptance" may be regarded as a concept that includes acceptance of information input from an input device such as a keyboard, a mouse, or a touch panel, or acceptance of information read from a recording medium such as an optical disk, a magnetic disk, or a semiconductor memory.

The processing unit B23 performs various kinds of processing. Examples of the various kinds of processing include processing that is performed by the gas information accumulation unit A231, processing that is performed by the climate information accumulation unit A234, processing that is performed by the cylinder replacement information accumulation unit A235, processing that is performed by the gas use information acquisition unit B231, and processing that is performed by the scheduled date prediction unit B232.

The gas use information acquisition unit B231 acquires pieces of gas use information as of two or more points in time, paired with the customer identifier accepted by the customer identifier acceptance unit B221, from the gas information storage unit A212. The customer identifier accepted by the customer identifier acceptance unit B221 may be the customer identifier acquired by the customer identifier acceptance unit B221.

The scheduled date prediction unit B232 acquires scheduled date information, using the pieces of gas use information as of two or more points in time acquired by the gas use information acquisition unit B231. Scheduled date information is information regarding a scheduled delivery date. Scheduled date information typically is information that specifies a scheduled delivery date. The scheduled delivery date is a date on which the amount of gas in the cylinder is small enough to satisfy a predetermined condition. Examples of the predetermined condition include that the amount of gas in the cylinder is 0, the amount of gas in the cylinder is no greater than a threshold value (for example, 10%) relative to the entire capacity, or less than the threshold value, and so on. The scheduled date information may indicate the scheduled delivery date itself, or the estimated number of days to the next delivery from the current delivery.

The scheduled date prediction unit B232 acquires scheduled date information, using the pieces of gas use information as of two or more points in time acquired by the gas use information acquisition unit B231, and the climate information accepted by the climate information acceptance unit A224.

The scheduled date prediction unit B232 acquires scheduled date information regarding the scheduled delivery date that is a date on which the amount of gas in the cylinder is small enough to satisfy a predetermined condition, using the pieces of gas use information as of two or more points in time acquired by the gas use information acquisition unit B231, and if the climate information accepted by the climate information acceptance unit A224 is information that indicates a temperature that is high enough to satisfy a predetermined condition, the scheduled date prediction unit B232 corrects the scheduled date information so that the scheduled delivery date specified by the scheduled date information is set to be a later date, and acquires the scheduled date information to be output.

In addition, the scheduled date prediction unit B232 acquires scheduled date information regarding the scheduled delivery date that is a date on which the amount of gas in the cylinder is small enough to satisfy a predetermined condition, using the pieces of gas use information as of two or more points in time acquired by the gas use information acquisition unit B231, and if the climate information accepted by the climate information acceptance unit A224 is information that indicates that the temperature is low enough to satisfy a predetermined condition, the scheduled date prediction unit B232 corrects the scheduled date information so that the scheduled delivery date specified by the scheduled date information is set to be an earlier date, and acquires the scheduled date information to be output.

The following describes three specific examples of processing that are performed by the scheduled date prediction unit B232 to acquire scheduled date information.

(1) When the use amount value calculation formula acquisition part B2321 and the scheduled date prediction part B2322 acquire scheduled date information, and climate information is not used.

The scheduled date prediction unit B232 may use the use amount value calculation formula acquisition part B2321 and the scheduled date prediction part B2322 to acquire scheduled date information.

The use amount value calculation formula acquisition part B2321 acquires a use amount value calculation formula that is a use amount value calculation formula that is a calculation formula for calculating information regarding the amount of gas used, using the pieces of gas use information as of two or more points in time acquired by the gas use information acquisition unit B231. Here, information regarding the amount of gas used may be the amount of gas used per unit time, or a cumulative amount of gas used. The use amount value calculation formula may include two or more calculation formulas. The use amount value calculation formula includes, for example, two or more calculation formulas for specific time zones. Examples of the use amount value calculation formulas include a linear unit-time calculation formula associated with an identifier that identifies the time.

The use amount value calculation formula acquisition part B2321 acquires a use amount value calculation formula for each customer identifier, for example. The use amount value calculation formula acquisition part B2321 acquires, from the gas information storage unit A212, gas use amount information that is the amount of gas used per unit time, contained in the gas use information paired with a customer identifier, and that is gas use amount information regarding a processing-target period (for example, the month of interest in the last year (for example, March 2018)), for example. Next, the use amount value calculation formula acquisition part B2321 calculates the average value of gas use amount information for each time zone in the processing-target period (average amount of gas used in each time zone), using a plurality of pieces of gas use amount information per unit time for each time zone (for example, 0:00 to 1:00, ..., 6:00 to 7:00, 7:00 to 8:00, ..., 12:00 to 13:00, ..., 17:00 to 18:00, 18:00 to 19:00, ..., 23:00 to 24:00), for example.

Thereafter, the use amount value calculation formula acquisition part B2321 acquires a calculation formula that expresses a graph that has the time zone as the horizontal axis and the average value of gas use information as the vertical axis, and is composed of a set of linear expressions with the average value of each time zone as the passing coordinates. Note that the use amount value calculation formula in such a case is a calculation formula that expresses a so-called bathtub curve.

Note that the use amount value calculation formula acquisition part B2321 may acquire, for example, one approximate calculation formula that passes through the average value, using the average value in each time zone.

Also, the usage value calculation formula acquisition part B2321 may calculate, for example, the cumulative value in each time zone of the average value in each time zone, and acquires a calculation formula that expresses a graph that has the time zone as the horizontal axis and the cumulative value as the vertical axis. That is to say, the use amount value calculation formula acquisition part B2321 need only acquire a calculation formula for calculating the amount of gas to be used in the future, using the gas use amount information in the past.

It is preferable that the use amount value calculation formula acquisition part B2321 acquire a calculation formula for each customer identifier, each day, each week, each month, and each year.

The scheduled date prediction unit B2322 acquires scheduled date information, using the use amount value calculation formula acquired by the use amount value calculation formula acquisition part B2321. The scheduled date prediction part B2322 calculates the number of days from when the gas cylinder is full to when the amount of gas in the gas cylinder is small enough to satisfy a predetermined condition, using the use amount value calculation formula, and acquires a scheduled delivery date by adding the number of days to the date on which a gas cylinder was replaced, for example. Note that the date on which a gas cylinder was replaced is date information that is included in cylinder replacement information, or date information paired with cylinder replacement information, and is information acquired from the customer information storage unit A211. In addition, such scheduled date information is information that specifies the scheduled delivery date at the initial prediction.

The scheduled date prediction part B2322 acquires LPG cylinder information that is paired with the customer identifier accepted by the customer identifier acceptance unit B221, from the customer information storage unit A211, and acquires scheduled date information, using the LPG cylinder information and the use amount value calculation formula acquired by the use amount value calculation formula acquisition part B2321, for example. The scheduled date prediction part B2322 acquires the difference between the cumulative value (actual value) of the amount of gas used, specified by cylinder amount information contained in LPG cylinder information paired with the customer identifier received by the customer identifier acceptance unit B221, and the cumulative value (predicted value) of the amount of gas used, acquired using the use amount value calculation formula acquired by the use amount value calculation formula acquisition part B2321, and if the difference is greater than a threshold value and the actual value excesses the predicted value, the scheduled date prediction part B2322 acquires scheduled date information that indicates a scheduled delivery date set to be earlier than the originally predicted scheduled delivery date according to the amount of excess, for example. The scheduled date prediction part B2322 acquires the difference between the cumulative value (actual value) of the amount of gas used, specified by cylinder amount information contained in LPG cylinder information paired with the customer identifier received by the customer identifier acceptance unit B221, and the cumulative value (predicted value) of the amount of gas used, acquired using the use amount value calculation formula acquired by the use amount value calculation formula acquisition part B2321, and if the difference is greater than a threshold value and the predicted value excesses the actual value, the scheduled date prediction part B2322 acquires scheduled date information that indicates a scheduled delivery date set to be later than the originally predicted scheduled delivery date according to the amount of excess, for example. Note that the use amount value calculation formula acquired by the use amount value calculation formula acquisition part B2321 is a use amount value calculation formula that is paired with the customer identifier accepted by the customer identifier acceptance unit B221.

(2) When the use amount value calculation formula acquisition part B2321 and the scheduled date prediction part B2322 acquire scheduled date information, and climate information is used.

The scheduled date prediction part B2322 acquires scheduled date information in which climate information is not considered, according to the algorithm in (1).

Next, the scheduled date prediction part B2322 acquires one or more pieces of climate information (for example, temperature information) paired with the time information corresponding to the use amount information from which the use amount value calculation formula was acquired, from the climate information storage unit A215. Note that such climate information is referred to as a past climate information group.

Thereafter, the scheduled date prediction part B2322 acquires one or more pieces of climate information (for example, temperature information) regarding the future, which is information regarding future weather forecast, from the climate information storage unit A215. Note that future climate information is, for example, climate information up to the date specified by the scheduled date information acquired according to the algorithm in (1). Note that such climate information is referred to as a future climate information group.

Next, the scheduled date prediction part B2322 compares the past climate information group and the future climate information group, and if it is determined that the difference therebetween is large or small enough to satisfy a predetermined condition, the scheduled date prediction part B2322 acquires corrected scheduled date information so as to set the scheduled date information acquired according to the algorithm in (1) to be later or earlier.

More specifically, the scheduled date prediction part B2322 acquires a past average temperature, which is the average temperature, from the past climate information group. Also, the scheduled date prediction part B2322 acquires a future average temperature, which is the average temperature, from the future climate information group. If "future average temperature - past average temperature" is no less than a first threshold value or greater than the first threshold value, the scheduled date prediction part B2322 acquires scheduled date information updated so as to set the date specified by the scheduled date information acquired according to the algorithm in (1) to be a later date, based on the difference therebetween. If "past average temperature - future average temperature" is no less than a second threshold value or greater than the second threshold value, the scheduled date prediction part B2322 acquires scheduled date information updated so as to set the date specified by the scheduled date information acquired according to the algorithm in (1) to be an earlier date, based on the difference therebetween.

(3) When scheduled date information is acquired using a machine learning algorithm, and climate information is not used.

The scheduled date prediction unit B232 may acquire scheduled date information using a machine learning algorithm, using the pieces of gas use information as of two or more points in time acquired by the gas use information acquisition unit B231.

That is to say, the scheduled date prediction unit B232 performs processing to form a learner device, and processing to predict the scheduled date, as described below.

### (3-1) Processing that is Performed to Form Leaner

The scheduled date prediction unit B232 acquires past gas use information for a certain period from the time when the gas cylinder is full, from gas use information that is past gas use information acquired from when the gas cylinder is full to when the gas cylinder is empty, and a period from when the gas cylinder is full to when the gas cylinder is empty (also referred to as a "redelivery period" when appropriate), using past gas information that is paired with the customer identifier, for example. Thereafter, the scheduled date prediction unit B232 forms a learner device to which gas use information acquired in a certain period in the past from when the gas cylinder is full is input, and that outputs a redelivery period, according to the machine learning algorithm. That is to say, the scheduled date prediction unit B232 acquires two or more sets of pieces of information composed of gas use information for a certain period in the past from when the gas cylinder is full and a redelivery period, provides the two or more sets of pieces of information thus acquired, to a module for forming a learner for machine learning to form a learner, and accumulates it in the storage unit B21, for example. Note that there is no limitation on the machine learning algorithm, which may be, for example, deep learning, random forest, SVR, or the like. In addition, the machine learning module may be any module, such as a TensorFlow module, fastText, TinySvm, any kind of RandomForest function, or the like. The learner may be referred to as a classifier.

### (3-2) Scheduled Date Prediction Processing

Next, the scheduled date prediction unit B232 performs scheduled date prediction processing, using the learner formed in (3-1).

That is to say, the scheduled date prediction unit B232 forms a vector, using the pieces of gas use information as of the latest two or more points in time acquired by the gas use information acquisition unit B231, provides the vector and the learner in the storage unit B21 to a module for performing prediction in machine learning, and acquires a redelivery period, using a machine learning algorithm. Note that there is no limitation on the machine learning algorithm in the case of such prediction as well, which may be, for example, deep learning, random forest, SVR, or the like. In addition, the machine learning module for prediction may be any module, such as a TensorFlow module, fastText, TinySvm, any kind of RandomForest function, or the like.

Next, the scheduled date prediction unit B232 acquires scheduled date information that includes the scheduled delivery date obtained by adding the acquired period to the latest date on which the gas cylinder was replaced. The latest date on which the gas cylinder was replaced is date information included in cylinder replacement information or date information paired with cylinder replacement information, and is information acquired from the customer information storage unit A211. (4) When scheduled date information is acquired using a machine learning algorithm, and climate information is used.

The case in which climate information is used according to a machine learning algorithm can be classified into the following two cases depending on how climate information is used.

### (4-1) Correction is made using climate information.

The scheduled date prediction unit B232 may use the pieces of gas use information as of two or more points in time acquired by the gas use information acquisition unit B231, and the climate information acquired by the climate information acceptance unit A224, to acquire scheduled date information.

That is to say, the scheduled date prediction unit B232 acquires scheduled date information by performing prediction processing based on the machine learning described in (3-2) above, for example. Next, the scheduled date prediction unit B232 acquires climate information that includes future weather forecast (for example, a set of pieces of temperature information). Thereafter, the scheduled date prediction unit B232 acquires climate information (for example, a set of pieces of temperature information) paired with the date information paired with the gas use information from which the learner was formed, from the climate information storage unit A215. If the climate indicated by the climate information in the weather forecast is in formation that indicates climate that is colder enough to satisfy a predetermined condition in comparison with the climate indicated by the climate information corresponding to the gas use information from which the learner was formed, the amount of gas used increases, and therefore the scheduled date prediction unit B232 acquires scheduled date information in which the scheduled data indicated by the scheduled date information acquired through the above-described machine learning is set to be an earlier date. If the climate indicated by the climate information in the weather forecast is in formation that indicates climate that is warmer enough to satisfy a predetermined condition in comparison with the climate indicated by the climate information corresponding to the gas use information from which the learner was formed, the amount of gas used is expected to decrease, and therefore the scheduled date prediction unit B232 acquires scheduled date information in which the scheduled data indicated by the scheduled date information acquired through the above-described machine learning is set to be a later date. It is preferable that the number of dates to be reduced or added increases depending on the difference between the temperatures indicated by the two pieces of climate information.

### (4-2) When climate information is used as well to form a learner.

The scheduled date prediction unit B232 may acquire scheduled date information, using a machine learning algorithm, and using the pieces of gas use information as of two or more points in time acquired by the gas use information acquisition unit B231, and climate information (for example, one or more of the weather and the temperature).

That is to say, the scheduled date prediction unit B232 The scheduled date prediction unit B232 acquires gas use information for a certain period in the past from the time when the gas cylinder is full, from gas use information that is past gas use information acquired from when the gas cylinder is full to when the gas cylinder is empty, and a redelivery period, using past gas information that is paired with the customer identifier, for example. Also, the scheduled date prediction unit B232 acquires climate information paired with the date information corresponding to gas use information for a certain period in the past from when the gas cylinder was full, for example.

Thereafter, the scheduled date prediction unit B232 forms a learner device to which gas use information acquired in a certain period in the past from when the gas cylinder is full, and climate information are input, and that outputs a redelivery period, according to the machine learning algorithm. Note that weather information contained in climate information is converted into a value such as "1" for "fine", "2" for "cloudy", and "3" for "rain", and constitutes a vector element. Climate information is the temperature, for example, and constitutes a vector element.

Thereafter, the scheduled date prediction unit B232 acquires two or more sets of pieces of information composed of gas use information and climate information for a certain period in the past from when the gas cylinder is full and a redelivery period, provides the two or more sets of pieces of information thus acquired, to a module for forming a learning device for machine learning to form a learning device, and accumulates it in the storage unit B21, for example. Note that information given to the module typically is a multidimensional vector. In addition, the scheduled date prediction unit B232 forms a learner to which a vector of a set of (gas use information,temperature,weather information) for each time zone in a certain period is input, and that outputs a redelivery period, using a machine learning algorithm, for example.

That is to say, the scheduled date prediction unit B232 forms vector, using the pieces of gas use information as of the latest two or more points in time acquired by the gas use information acquisition unit B231, and climate information, provides the vector and the learner in the storage unit B21 to a module for performing prediction in machine learning, and acquires a redelivery period, using a machine learning algorithm.

The output unit B24 outputs various kinds of information. Examples of the various kinds of information include scheduled date information. In addition, "output" here means accumulation in the customer information storage unit A211, for example. In addition, "output" means display or transmission, for example. When "output" means display, the output unit B24 may be regarded as including or not including an output device such as a display or a speaker. The output unit B24 can be realized using the driver software of the output device, the driver software of the output device and the output device, or the like.

The scheduled date output unit B241 outputs the scheduled date information acquired by the scheduled date prediction unit B232. The scheduled date output unit B241 typically outputs the scheduled date information in association with customer identifiers.

It is preferable that the terminal storage unit B11, the storage unit B21, the customer information storage unit A211, the gas information storage unit A212, and the climate information storage unit A215 are realized using a non-volatile recording medium, but they may be realized using a volatile recording medium.

There is no limitation on the process in which information is stored in the terminal storage unit B11 and so on. For example, information may be stored in the terminal storage unit B11 or the like via a recording medium, or information transmitted via a communication line or the like may be stored in the terminal storage unit B11 or the like, or information input via an input device may be stored in the terminal storage unit B11 or the like.

The terminal processing unit B13, the processing unit B23, the gas use information acquisition unit B231, the scheduled date prediction unit B232, the use amount value calculation formula acquisition part B2321, and the scheduled date prediction part B2322 can typically be realized using an MPU, a memory, or the like. The processing procedures performed by the terminal processing unit B13 and so on typically are realized using software, and the software is recorded on a recording medium such as a ROM. However, such processing procedures may be realized using hardware (a dedicated circuit).

The terminal transmission unit B14, the output unit B24, and the scheduled date output unit B241 typically are realized using a wireless or wired communication means, but may be realized using a broadcast means.

The terminal reception unit B15, the reception unit B22, and the customer identifier acceptance unit B221 typically are realized using a wireless or wired communication means, but may be realized using a means for receiving broadcast.

The terminal output unit B16 may be regarded as including or not including an output device such as a display or a speaker. The terminal output unit B16 can be realized using the driver software of the output device, the driver software of the output device and the output device, or the like.

Next, operations that are performed by the information system B will be described. First, operations that are performed by the terminal apparatuses B1 will be described.

The terminal acceptance unit B12 of the terminal apparatuses B1 accepts a delivery date prediction instruction. Next, the terminal processing unit B13 forms a delivery date prediction instruction that is to be transmitted. Next, the terminal transmission unit B14 transmits the formed delivery date prediction instruction to the information processing apparatus B2. Next, the terminal reception unit B15 receives scheduled date information for each customer corresponding to the delivery date prediction instruction. Thereafter, the terminal processing unit B13 forms information that is to be output, using the scheduled date information for each customer thus received. Next, the terminal output unit B16 outputs scheduled date information for each customer.

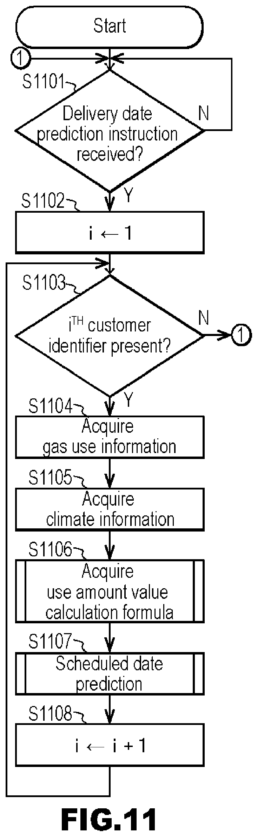

Next, an example of delivery date prediction processing that is performed by the information processing apparatus B2 will be described with reference to the flowchart shown in FIG. 11.

(Step S1101) The reception unit B22 determines whether or not a delivery date prediction instruction has been received from the terminal apparatuses B1. If a delivery date prediction instruction has been received, processing proceeds to step S1102, and if a delivery date prediction instruction has not been received, processing returns to step S1101. Note that the delivery date prediction instruction here is an instruction to acquire delivery date prediction date for every customer.

(Step S1102) The processing unit B23 substitutes 1 for a counter i.

(Step S1103) The processing unit B23 determines whether or not the i^{th} customer identifier is present in the storage unit B21. If the i^{th} customer identifier is present, processing proceeds to step S1104, and if the i^{th} customer identifier is not present, processing returns to step S1101. The determination regarding whether or not the i^{th} customer identifier is present is determination regarding whether or not the i^{th} customer is present.

(Step S1104) The gas use information acquisition unit B231 acquires the gas use information paired with the i^{th} customer identifier from the gas information storage unit A212.

(Step S1105) The gas use information acquisition unit B231 acquires climate information for the target period from the climate information storage unit A215.

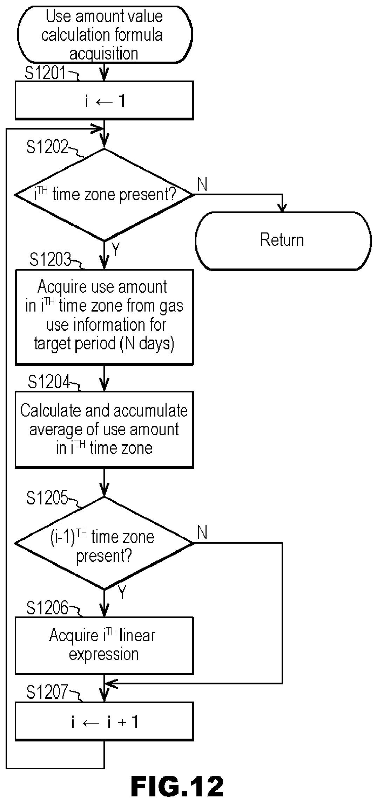

(Step S1106) The use amount value calculation formula acquisition part B2321 performs use amount value calculation formula acquisition processing. Use amount value calculation formula acquisition processing will be described with reference to the flowchart shown in FIG. 12.

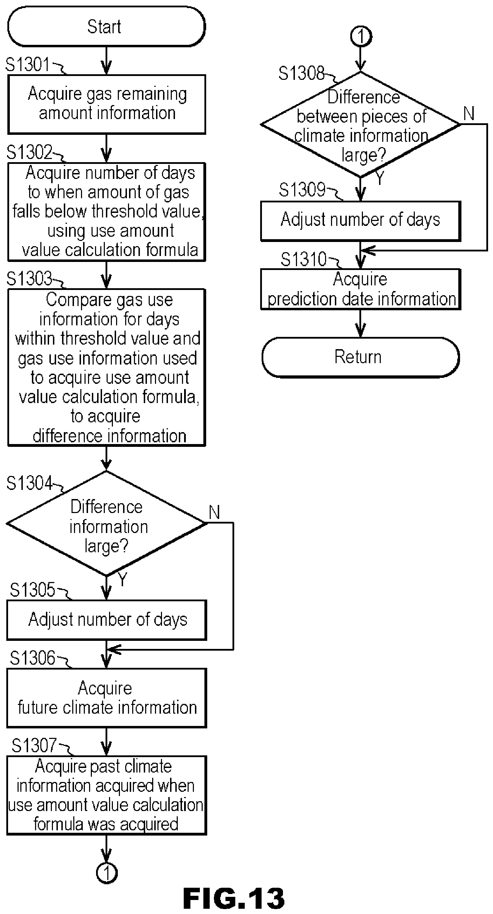

(Step S1107) The scheduled date prediction part B2322 performs scheduled date prediction processing. Scheduled date prediction processing will be described with reference to the flowchart shown in FIG. 13.

(Step S1108) The processing unit B23 increments the counter i by 1. Processing returns to step S1103.

In the flowchart shown in FIG. 11, processing is terminated when power is turned off or an interruption is made to terminate the processing.

Next, the use amount value calculation formula acquisition processing in step S1106 will be described with reference to the flowchart shown in FIG. 12.

(Step S1201) The use amount value calculation formula acquisition part B2321 substitutes 1 for the counter i.

(Step S1202) The use amount value calculation formula acquisition part B2321 determines whether or not the i^{th} time zone is present. If the i^{th} time zone is present, processing proceeds to step S1203, and if the i^{th} time zone is not present, processing returns to higher level processing. Note that, if each time zone is 1 hour, i from 1 to 24 can be taken.

(Step S1203) The use amount value calculation formula acquisition part B2321 acquires all pieces of unit time gas use information regarding the i^{th} time zone from the gas use amount information for the target period (for example, for N days) corresponding to the i^{th} time zone. Note that unit time gas use information is information that indicates the amount of gas used per unit time.

(Step S1204) The use amount value calculation formula acquisition part B2321 calculates the average value of the pieces of unit time gas use information acquired in step S1203, and temporarily accumulate it in the storage unit B21.

(Step S1205) The use amount value calculation formula acquisition part B2321 determines whether or not the (i-1)^{th} time zone is present. If the (i-1)^{th} time zone is present, processing proceeds to step S1206, and the (i-1)^{th} time zone is not present, processing proceeds to step S1207.

(Step S1206) The use amount value calculation formula acquisition part B2321 acquires the i^{th} linear expression, using the average value of the pieces of unit time gas use information regarding the (i-1)^{th} time zone and the average value of the pieces of unit time gas use information regarding the i^{th} time zone. Note that this linear expression is a straight line that connects the average value of the pieces of unit time gas use information regarding the (i-1)^{th} time zone and the average value of the pieces of unit time gas use information regarding the i^{th} time zone. Note that this linear expression is paired with the customer identifiers and is stored in the customer information storage unit A211.

(Step S1207) The use amount value calculation formula acquisition part B2321 increments the counter i by 1. Processing returns to step S1202.

Next, the scheduled date prediction processing in step S1107 will be described with reference to the flowchart shown in FIG. 13.

(Step S1301) The scheduled date prediction part B2322 acquires remaining gas amount information paired with the target customer identifier. Note that remaining gas amount information is stored in the customer information storage unit A211, for example. Also, the cumulative use amount of gas is acquired using gas use information paired with the customer identifier, and for the dates after the date corresponding to cylinder replacement information (the date when the gas cylinder was replaced), the gas cumulative use amount is subtracted from capacity information corresponding to the cylinder type information paired with the customer identifier, and thus remaining gas amount information is acquired by the scheduled date prediction part B2322.

(Step S1302) The scheduled date prediction part B2322 acquires the use amount value calculation formula paired with the target customer identifier from the customer information storage unit A211. Thereafter, the scheduled date prediction part B2322 acquires the number of days from when the cylinder was full to when the amount of gas falls below a threshold value, using the use amount value calculation formula.

(Step S1303) The scheduled date prediction part B2322 acquires pieces of gas use information that are paired with the target customer identifiers and are for days within a threshold value (a first gas use information group) from the gas information storage unit A212. Also, the scheduled date prediction part B2322 acquires pieces of gas use information that are paired with the target customer identifiers and were used when the use amount value calculation formula was acquired (a second gas use information group) from the gas information storage unit A212. Next, the scheduled date prediction part B2322 compares the first gas use information group and the second gas use information group with each other to acquire difference information regarding the difference therebetween. For example, the scheduled date prediction part B2322 calculates the average daily gas use amount (a first average use amount) from the first gas use information group. Also, the scheduled date prediction part B2322 calculates the average daily gas use amount (a second average use amount) from the second gas use information group. Thereafter, the scheduled date prediction part B2322 acquires the difference between the first average use amount and the second average use amount as difference information, for example. Note that difference information typically is information that specifies the difference between the representative value of the first gas use information group and the representative value of the second gas use information group. A representative value may be a median value, a maximum value, or the like instead of the average value.

(Step S1304) The scheduled date prediction part B2322 determines whether or not the difference information acquired in step S1303 is large enough to satisfy a predetermined condition. If it is large, processing proceeds to step S1305, and if it is not large, processing proceeds to step S1306.

(Step S1305) The scheduled date prediction part B2322 adjusts the number of days acquired in step S1302. Note that, if "the first average use amount - the second average use amount" is positive and the difference information is large, the scheduled date prediction part B2322 reduces the number of days acquired in strep S1302 according to the difference information. If "the second average use amount - the first average use amount" is positive and the difference information is large, the scheduled date prediction part B2322 increases the number of days acquired in strep S1302 according to the difference information. The scheduled date prediction part B2322 adjusts the number of days to be subtracted or added such that the larger the absolute value of the difference information is, the larger the number of days is. The scheduled date prediction part B2322 calculates the number of days to be subtracted or added, using an increasing function in which the absolute value of the difference information is used as a parameter.

(Step S1306) The scheduled date prediction part B2322 acquires a feature climate information group that is information regarding a future weather forecast, from the climate information storage unit A215.

(Step S1307) The scheduled date prediction part B2322 acquires a past climate information group acquired when the use amount value calculation formula was acquired, from the climate information storage unit A215.

(Step S1308) The scheduled date prediction part B2322 determines whether or not the difference between the future climate information group and the past climate information group is large enough to satisfy a predetermined condition. If the difference is large enough to satisfy the predetermined condition, processing proceeds to step S1309, and if the difference is not large enough to satisfy the predetermined condition, processing proceeds to step S1310. Note that the predetermined condition is that "the difference between the average temperatures is no less than a threshold value" or "the difference between the average temperatures is greater than a threshold value".

(Step S1309) The scheduled date prediction part B2322 performs day number adjustment according to the difference between the future climate information group and the past climate information group. An example of the day number adjustment using climate information is described above, and therefore the details thereof will be omitted here. The scheduled date prediction part B2322 acquires the number of days to be adjusted by, for example, an increase function using the difference between the future climate information group and the past climate information group as a parameter.

(Step S1310) The scheduled date prediction part B2322 acquires prediction date information by adding the number of days thus acquired to the current date. Processing returns to higher level processing.

As described above, according to the present embodiment, the next delivery date of a gas cylinder to a customer can be predicted using gas use information.

Also, according to the present embodiment, the next delivery date of a gas cylinder can be more accurately predicted using climate information as well.

In addition, in the present embodiment, the delivery date ahead of the next time may be predicted. In such a case, the information processing apparatus B2 can predict the next, next delivery date by performing the same processing as the processing described above, based on the predicted next delivery date. That is to say, the information processing apparatus B2 can predict the (n+1)^{th} delivery date by performing the same processing as the processing described above, based on the n^{th} delivery date in the future.

The processing in the present embodiment may be realized using software. This software may be distributed through software downloading or the like. Also, this software may be recorded on a recording medium such as a CD-ROM and distributed. Note that the same applies to the other embodiments in the present description. The software that realizes the information processing apparatus B2 in the present embodiment is the program described below. That is to say, this program is a program that enables a computer that can access a gas information terminal storage unit that stores two or more pieces of gas information that include pieces of gas use information regarding use of gas in an LPG cylinder as of two or more points in time, in association with a customer identifier that identifies a customer, to function as: a customer identifier acceptance unit that accepts a customer identifier; a gas use information acquisition unit that acquires pieces of gas use information as of two or more points in time, paired with the customer identifier accepted by the customer identifier acceptance unit, from the gas information storage unit; a scheduled date prediction unit that acquires scheduled date information regarding a scheduled delivery date that is a date on which the amount of gas in a cylinder is small enough to satisfy a predetermined condition, using the pieces of gas use information as of two or more points in time acquired by the gas use information acquisition unit; and a scheduled date output unit that outputs the scheduled date information acquired by the scheduled date prediction unit.

### Embodiment 3

The present embodiment describes an information system that realizes efficient delivery of gas cylinders to customers in the event of gas shortage or the like.

The present embodiment also describes an information system that includes information processing apparatus that determines a delivery vehicle that is to deliver a gas cylinder to a customer in the case of gas shortage or the like, and transmits information regarding the customer to a deliverer terminal, and a deliverer terminal that receives information regarding the customer. Note that the information regarding a customer to be transmitted is an updated delivery list, for example.

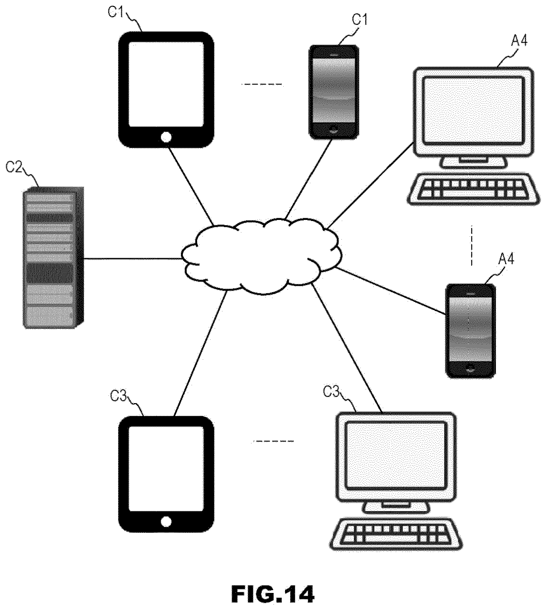

FIG. 14 is a conceptual diagram for an information system C according to the present embodiment. The information system C includes one or more terminal apparatuses C1, an information processing apparatus C2, one or more deliverer terminals C3, and one or more facility terminals A4.

Terminal apparatuses C1 are, for example, terminals that are used by administrators of the information system C. The terminal apparatuses C1 are, for example, smartphones, tablet terminals, so-called personal computers, or the like, but there is no limitation on the type thereof.

The information processing apparatus C2 is a server apparatus that performs delivery control processing. That is to say, the information processing apparatus C2 is an apparatus that determines a delivery vehicle that delivers a gas cylinder in the case of customer emergency such as gas shortage. The information processing apparatus C2 can be realized using a so-called cloud server or an ASP server, but there is no limitation on the type thereof. Note that the information processing apparatus C2 may have some or all of the functions of the information processing apparatus A2. That is to say, the information processing apparatus C2 may be an information processing apparatus A2 that performs delivery control processing.

The deliverer terminals C3 are terminals that are used by deliverers. The deliverer terminals C3 are, for example, smartphones, tablet terminals, so-called personal computers, or the like, but there is no limitation on the type thereof. The deliverer terminals C3 have a communication function. Note that the deliverer terminals C3 may be terminals carried by deliverers, or may be terminals mounted on delivery vehicles (for example, on-board navigation apparatuses). In addition, some functions of the deliverer terminals C3, which will be described later, may be performed by the terminals carried by the deliverers, and other functions may be performed by the terminals mounted on the delivery vehicles. That is to say, as a matter of course, the apparatuses such as the deliverer terminals C3 may be realized using two or more apparatuses. Furthermore, the deliverer terminals C3 may be able to realize some or all of the functions of the deliverer terminals A3.

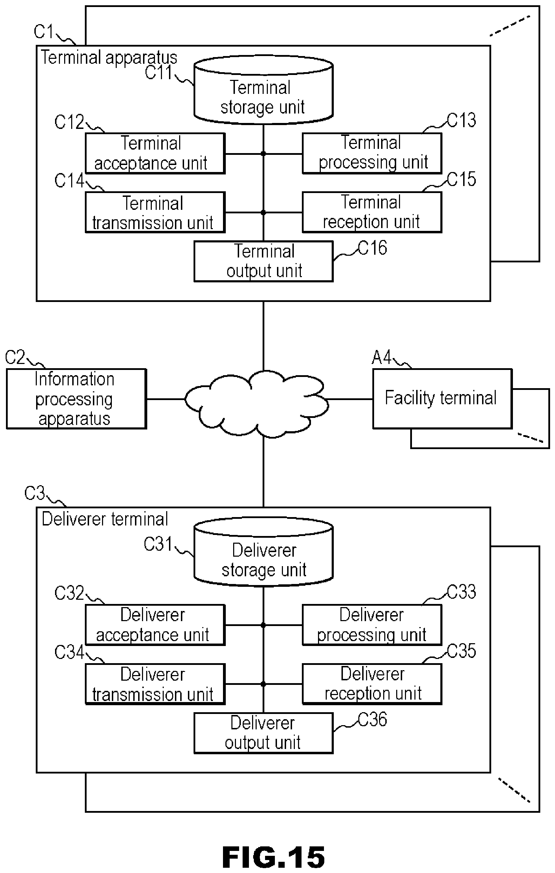

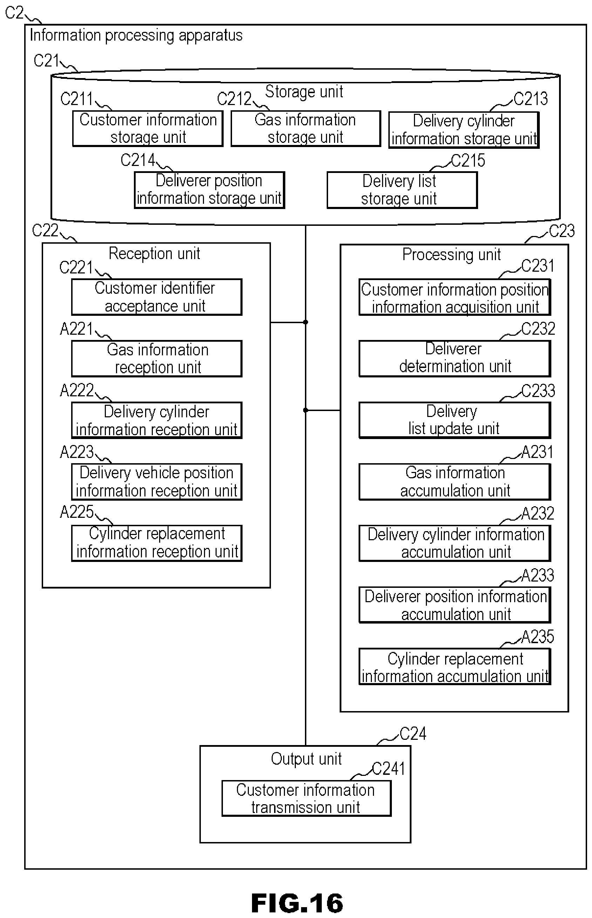

FIG. 15 is a block diagram for the information system C according to the present embodiment. FIG. 16 is a block diagram for the information processing apparatus C2 that is included in the information system C.

Each terminal apparatus C1 includes a terminal storage unit C11, a terminal acceptance unit C12, a terminal processing unit C13, a terminal transmission unit C14, a terminal reception unit C15, and a terminal output unit C16.

The information processing apparatus C2 includes a storage unit C21, a reception unit C22, a processing unit C23, and a transmission unit C24. The storage unit C21 includes the customer information storage unit A211, the gas information storage unit A212, the delivery cylinder information storage unit A213, the delivery vehicle position information storage unit A214, and a delivery list storage unit C211. The reception unit C22 includes a customer identifier acceptance unit C221, the gas information reception unit A221, the delivery cylinder information reception unit A222, the delivery vehicle position information reception unit A223, and the cylinder replacement information reception unit A225. The processing unit C23 includes a customer information position information acquisition unit C231, a delivery vehicle determination unit C232, a delivery list update unit C233, the gas information accumulation unit A231, the delivery cylinder information accumulation unit A232, the delivery vehicle position information accumulation unit A233, and the cylinder replacement information accumulation unit A235. The transmission unit C24 includes a customer information transmission unit C241.

Each deliverer terminal C3 includes a deliverer storage unit C31, a deliverer acceptance unit C32, a deliverer processing unit C33, a deliverer transmission unit C34, a deliverer reception unit C35, and a deliverer output unit C36.

Each facility terminal A4 includes a facility storage unit A41, a facility acceptance unit A42, a facility processing unit A43, a facility transmission unit A44, a facility reception unit A45, and a facility output unit A46.

The terminal storage unit C11 included in each terminal apparatus C1 stores various kinds of information. Examples of the various kinds of information include a customer identifier and a terminal identifier that identifies the terminal apparatus C1. Note that this customer identifier is the identifier of a customer to which a gas cylinder is to be delivered immediately due to gas shortage or the like.

The terminal acceptance unit C12 accepts various kinds of information, instructions, and so on. Examples of the various kinds of information, instructions, and so on include a customer identifier. A customer identifier is information that identifies a customer.

Any input means may be employed to input various kinds of information, instructions, and so on, such as a touch panel, a keyboard, a mouse, a menu screen, or the like. The terminal acceptance unit C12 can be realized using a device driver for the input means such as a touch panel or a keyboard, or control software or the like for controlling the menu screen.

The terminal processing unit C13 performs various kinds of processing. Examples of the various kinds of processing include processing that is performed by the terminal acceptance unit C12 to convert the various kinds of information, instructions, and so on accepted thereby into a data structure that contains the various kinds of information, instructions, and so on to be transmitted. Examples of the various kinds of processing also include processing that is performed to convert the information received by the terminal reception unit C15 so as to have a data structure that is to be output.

The terminal transmission unit C14 transmits various kinds of information. Examples of the various kinds of information include a customer identifier.

The terminal reception unit C15 receives various kinds of information. Examples of the various kinds of information include information regarding a deliver, or a delivery list. Note that deliverer person information is information regarding the deliverer that delivers a gas cylinder to a customer who has run out of gas, for example, and is a name, a deliverer identifier, or the like, for example.

The terminal output unit C16 outputs various kinds of information. Examples of the various kinds of information include information formed by the terminal processing unit C13. Examples of the various kinds of information include information regarding a deliver, or a delivery list.

Here, "output" is a concept that includes means displaying on a display device, projection with a projector, printing with a printer, sound output, transmission to an external apparatus, accumulation on a recording medium, delivery of processing results to another processing apparatus or another program, and so on.

The storage unit C21 included in the information processing apparatus C2 stores various kinds of information. Examples of the various kinds of information include customer information, gas information, delivery cylinder information, and delivery vehicle position information. Examples of the various kinds of information may also include one or more pieces of information that indicate correspondence between a delivery vehicle identifier and a deliverer identifier. Information that indicates correspondence between a delivery vehicle identifier and a deliverer identifier is, for example, information that contains a delivery vehicle identifier and a deliverer identifier, or information regarding a link between a delivery vehicle identifier and a deliverer identifier. Examples of the various kinds of information include unique information that is associated with a deliverer identifier. Examples of unique information include "whether or not to permit addition or change of a delivery destination", "information that specifies whether or not to permit overtime", "the final time available for work", and "information that specifies whether or not to permit a change in the delivery route on a short notice". Unique information can be changed upon a declaration by a deliverer, for example.

The customer information storage unit A211 stores one or more pieces of customer information that each contain a customer identifier and customer position information. Customer position information is information that specifies the position of a customer identified by a customer identifier. Customer position information is, for example, and address, or (latitude,longitude). It is preferable that customer information includes cylinder type information that specifies the type of the cylinder used by the customer. It is also preferable that customer information contains cylinder number information that specifies the number of cylinders installed in the customer's home. Note that customer information may contain two or more sets each consisting of cylinder type information and cylinder number information. Cylinder type information is information that specifies the weight of the cylinder, for example, and indicates, "50 Kg", "30 Kg", or "20 Kg", for example.

The delivery cylinder information storage unit A213 stores one or more pieces of delivery cylinder information in association with a delivery vehicle identifier that identifiers a delivery vehicle. Delivery cylinder information is information regarding a cylinder that is to be delivered by a delivery vehicle. It is preferable that delivery cylinder information is associated with a cylinder identifier. It is preferable that delivery cylinder information includes cylinder type information. It is preferable that delivery cylinder information contains cylinder number information that specifies the number of cylinders that are being delivered. Cylinder number information is information that specifies the number of cylinders remaining in the delivery vehicle corresponding thereto. Cylinder number information is information that specifies the number of cylinders that can be delivered by the delivery vehicle corresponding thereto. The cylinder number information may be acquired based on the number of pieces of delivery cylinder information, for example. In such a case, delivery cylinder information is information that corresponds to one cylinder.

The delivery vehicle position information storage unit A214 stores one or more pieces of delivery vehicle position information associated with a delivery vehicle identifier. Delivery vehicle position information is information that specifies the position of a delivery vehicle. Delivery vehicle position information is (latitude,longitude), for example, but may be any information that can specify a position or an area such as an identifier of the nearest facility, other than (latitude,longitude).

The delivery list storage unit C211 stores one or more delivery lists in association with a delivery vehicle identifier. The delivery list may be associated with a deliverer identifier. The delivery vehicle identifier may be the same as the deliverer identifier. The delivery list typically contains two or more pieces of delivery destination information regarding the delivery destination of a gas cylinder. The delivery destination information here contains, for example, the name of a customer, a zip code, an address, and cylinder type information that specifies the type of a gas cylinder to be used. Delivery destination information may contain part or the entirety of the customer information. Delivery destination information may only contain a customer identifier.

The reception unit C22 receives various kinds of information.

Examples of the various kinds of information include a customer identifier, customer information, delivery completion information, gas information, delivery cylinder information, and delivery vehicle position information. The reception unit C22 receives a customer identifier from a terminal apparatus C1, for example. The reception unit C22 receives delivery completion information from the terminal apparatuses C3, for example. Note that delivery completion information contains, for example, a customer identifier, cylinder type information that specifies the type of the delivered cylinder, and cylinder number information that specifies the number of delivered cylinders. Note that, for example, if delivery completion information contains a customer identifier and does not contain cylinder type information or cylinder number information, the cylinder type information and cylinder number information corresponding to the customer identifier are acquired from the customer information storage unit A211, for example.

The customer identifier acceptance unit C221 accepts a customer identifier that identifies a customer whose remaining amount of gas is small enough to satisfy a predetermined condition. The fact that "the amount of gas remaining is small enough to satisfy a predetermined condition" means, for example, that the gas has run out, the amount of gas remaining is no greater than or less than a threshold value, the cumulative amount of gas used is no less than or greater than a threshold value, or the like.

Here, "acceptance" means reception of information transmitted via a wired or wireless communication line, but, for example, may be regarded as a concept that includes acceptance of information input from an input device such as a keyboard, a mouse, or a touch panel, or acceptance of information read from a recording medium such as an optical disk, a magnetic disk, or a semiconductor memory.

The processing unit C23 performs various kinds of processing. Examples of the various kinds of processing include the processing that is performed by the customer information position information acquisition unit C231, the delivery vehicle determination unit C232, the delivery list update unit C233, the gas information accumulation unit A231, the delivery cylinder information accumulation unit A232, the delivery vehicle position information accumulation unit A233, and the cylinder replacement information accumulation unit A235.

The processing unit C23 performs processing on the deliverer identifier that is included in the received delivery completion information or customer information in the delivery list paired with the delivery vehicle identifier, and is customer information corresponding to the customer identifier included in the received delivery completion information, so that the completion of delivery to the customer can be discerned. Note that such processing is, for example, the deletion of customer information corresponding to the customer identifier included in the received delivery completion information, the addition of delivery completion information, or the like.

The processing unit C23 subtracts the number of cylinders indicated by cylinder number information that specifies the number of cylinders that have been delivered, from cylinder number information contained in the delivery cylinder information paired with the delivery vehicle identifier, and accumulates the updated cylinder number information in the delivery cylinder information storage unit A213. Such a delivery vehicle identifier is information that is included in the received delivery completion information, or information that is paired with the deliverer identifier included in the received delivery completion information.

The processing unit C23 acquires, for example, cylinder number information that is contained in the customer information that is in the delivery list and is customer information corresponding to the customer identifier included in the received delivery completion information, as cylinder number information that specifies the number of cylinders that have been delivered. Also, the processing unit C23 acquires, for example, cylinder number information that is included in the received delivery completion information, as cylinder number information that specifies the number of cylinders that have been delivered.

The customer information position information acquisition unit C231 acquires the customer position information paired with the customer identifier accepted by the customer identifier acceptance unit C221, from the customer information storage unit A211.

The delivery vehicle determination unit C232 determines the delivery vehicle that is to deliver a cylinder, using the customer position information acquired by the customer information position information acquisition unit C231 and the set of pieces of information composed of delivery vehicle position information and delivery cylinder information. Note that the delivery vehicle position information and the delivery cylinder information included in one set are pieces of information each paired with the same delivery vehicle identifier. The determination of a delivery vehicle is, for example, the acquisition of a delivery vehicle identifier, or the acquisition of information regarding the deliverer to be transmitted (for example, contact information or the like).

If cylinder-related information regarding customer information and delivery cylinder information paired with the delivery vehicle identifier satisfy a predetermined condition, the delivery vehicle determination unit C232 determines the delivery vehicle identified by the delivery vehicle identifier, as a delivery vehicle that is to deliver a cylinder.

Note that cylinder-related information and delivery cylinder information are one or more pieces of information of: cylinder number information; and cylinder type information.

The delivery vehicle determination unit C232 determines a delivery vehicle that corresponds to delivery vehicle position information that satisfies a cylinder condition and a position condition.

The cylinder condition is a condition regarding a cylinder. The cylinder condition is a condition related to a relationship between the cylinder number information acquired using the delivery cylinder information paired with the delivery vehicle identifier, and cylinder type information, and a relationship between the cylinder number information contained in the customer information, and cylinder type information. The cylinder condition is, for example, that "the cylinder type information included in the delivery cylinder information paired with the delivery vehicle identifier matches the cylinder type information contained in customer information", and "information on the number of cylinders acquired using the delivery cylinder information paired with the delivery vehicle identifier >= the total number of cylinders contained in customer information regarding the customer to which a cylinder is scheduled to be delivered + cylinder number information contained in the customer information". The cylinder condition is, for example, that "the cylinder number information contained in the cylinder-related information regarding customer information <= the cylinder number information contained in delivery cylinder information" is satisfied.

The position condition is a condition related to position information that includes customer position information. The position condition is, for example, a condition regarding the distance between the position specified by customer position information and the position specified by delivery vehicle position information. The position condition is, for example, that the distance between the position specified by customer position information and the position specified by delivery vehicle position information is no greater than or less than a threshold value. The position condition indicates, for example, the delivery vehicle that corresponds to the delivery vehicle position information for which the distance between the position specified by customer position information and the position specified by delivery vehicle position information is the smallest among the delivery vehicles that satisfy the cylinder condition.

The delivery vehicle determination unit C232 determines the delivery vehicle that is to deliver a cylinder, using the cylinder number information and cylinder type information acquired using the delivery cylinder information paired with the delivery vehicle identifier, the cylinder type information contained in the customer information, customer position information, and the delivery vehicle position information paired with the delivery vehicle identifier, for example. That is to say, for example, the delivery vehicle determination unit C232 selects a delivery vehicle on which the required number of gas cylinders for the customer of the required type for the customer are loaded, and that is closes to the position of the customer.

For example, if the cylinder number information acquired using the delivery cylinder information paired with a delivery vehicle identifier satisfies the condition regarding the cylinder number information contained in the customer information, the delivery vehicle determination unit C232 determines the delivery vehicle identified by the delivery vehicle identifier, as a delivery vehicle that is to deliver the cylinders. The cylinder number information acquired using delivery cylinder information is, for example, the cylinder number information contained in cylinder number information, and cylinder number information that indicates the number of pieces of delivery cylinder information. That is to say, for example, the delivery vehicle determination unit C232 selects a delivery vehicle on which the required number of gas cylinders for the customer are loaded.

For example, if the cylinder type information contained in the delivery cylinder information paired with a delivery vehicle identifier satisfies the condition regarding the cylinder type information contained in the customer information, the delivery vehicle determination unit C232 determines the delivery vehicle identified by the delivery vehicle identifier, as a delivery vehicle that is to deliver the cylinders. That is to say, for example, the delivery vehicle determination unit C232 selects a delivery vehicle on which the required type of gas cylinders for the customer are loaded.

For example, cylinder number information and the cylinder type information acquired using the delivery cylinder information paired with a delivery vehicle identifier satisfies a condition regarding the cylinder number information and cylinder type information contained in customer information, the delivery vehicle determination unit C232 determines the delivery vehicle identified by the delivery vehicle identifier, as the delivery vehicle that is to deliver cylinders. That is to say, for example, the delivery vehicle determination unit C232 selects a delivery vehicle on which the required type of gas cylinders for the customer are loaded.

The delivery vehicle determination unit C232 references a deliverer identifier or a delivery list that is paired with a delivery vehicle identifier, and selects a deliverer or a delivery vehicle that has a low load and on which a gas cylinder required by the customer is loaded, for example. The fact that the load is low means that the number of customers scheduled for delivery in the future included in the delivery list is the smallest, the number of customers scheduled for delivery in the future in the delivery list is no greater than a threshold value, or the like. That is to say, the delivery vehicle determination unit C232 references a deliverer identifier or a delivery list that is paired with a delivery vehicle identifier, and selects a delivery vehicle that is specified by the deliverer identifier of a delivery whose load can be determined as being low enough to satisfy a predetermined condition.

The delivery vehicle determination unit C232 acquires unique information regarding the deliverer paired with the delivery vehicle identifier, from the storage unit C21, for example. Thereafter, the delivery vehicle determination unit C232 determines whether or not the unique information satisfies the condition (for example, whether or not the addition or change of the delivery destination is permitted), and if the unique information satisfies the condition (for example, the addition or change of the delivery destination is permitted), the delivery vehicle determination unit C232 does not select the deliverer as a deliverer that delivers gas cylinders to a new customer.

The delivery list update unit C233 acquires the delivery list corresponding to the delivery vehicle determined by the delivery vehicle determination unit C232, and acquires an updated delivery list by adding at least part of the customer information paired with the customer identifier, to the delivery list. Note that there is no limitation on the method for updating the delivery list. The delivery list is updated through, for example, "the addition of at least part of the customer information paired with the customer identifier, to the end of the list", "the insertion of at least part of the customer information paired with the customer identifier", or "the addition of insertion of at least part of the customer information paired with the customer identifier, and the deletion of one or more scheduled delivery destinations".

It is preferable that, when updating a delivery list, the delivery list update unit C233 inserts at least part of the customer information paired with the customer identifier, into the delivery list, so that the delivery cost is low enough to satisfy a predetermined condition (for example, the delivery cost is the lowest), using the customer position information contained in the customer information paired with the customer identifier. That is to say, it is preferable that the delivery list update unit C233 inserts at least part of the customer information paired with the customer identifier, between two consecutive pieces of customer position information that correspond to the delivery destination in the delivery list for the scheduled delivery in the future, and that are closest to each other, for example. Also, the delivery list update unit C233 may determine the movement order of two or more points so as to minimize the delivery cost, and form the delivery list according to the movement order, using one or more pieces of customer position information in the delivery list for the scheduled delivery in the future, and the customer position information contained in the customer information paired with the customer identifier. Note that the processing through which the movement order that minimizes the delivery cost is determined when passing through a plurality of points is a well-known technique as a traveling salesman problem, and therefore the detailed description thereof will be omitted. The delivery cost is a load or cost at the time of delivery, and is, for example, information proportional to a physical distance or a time distance.

The transmission unit C24 transmits various kinds of information. Examples of the various kinds of information include customer information. Customer information may be a delivery list.

The customer information transmission unit C241 transmits customer information that is paired with a customer identifier, to the deliverer terminal C3 of the delivery vehicle determined by the delivery vehicle determination unit C232.

The customer information transmission unit C241 transmits the delivery list updated by the delivery list update unit C233, to the deliverer terminal C3 of the delivery vehicle determined by the delivery vehicle determination unit C232, for example. That is to say, customer information may be regarded as information with which a delivery list is formed.

The deliverer storage unit C31 included in each deliverer terminal C3 stores various kinds of information. Examples of the various kinds of information include a deliverer identifier or a delivery vehicle identifier.

The deliverer acceptance unit C32 accepts various kinds of information, instructions, and so on. Examples of the various kinds of information, instructions, and so on include delivery completion information indicating that delivery has been completed. Delivery completion information typically contains a customer identifier that identifies a customer to which a cylinder has been delivered.

Any input means may be employed to input various kinds of information, such as a touch panel, a keyboard, a mouse, a menu screen, or the like. The deliverer acceptance unit C32 can be realized using a device driver for the input means such as a touch panel or a keyboard, or control software or the like for controlling the menu screen.

The deliverer processing unit C33 performs various kinds of processing. Examples of the various kinds of processing include processing through which information and so on accepted by the deliverer acceptance unit C32 is converted into information and so on that has a structure to be transmitted, processing through which information received by the deliverer reception unit C35 is converted into information that has a structure to be output, and so on.

The deliverer transmission unit C34 transmits various kinds of information to the information processing apparatus C2. Examples of the various kinds of information include delivery completion information.

The deliverer reception unit C35 receives various kinds of information from the information processing apparatus C2. Examples of the various kinds of information include customer information, a delivery list, and so on.

The deliverer output unit C36 outputs various kinds of information. Examples of the various kinds of information include customer information and a delivery list. Here, "output" typically means displaying on a display device.

It is preferable that the terminal storage unit C11, the storage unit C21, the customer information storage unit A211, the gas information storage unit A212, the delivery cylinder information storage unit A213, the delivery vehicle position information storage unit A214, the delivery list storage unit C211, and the deliverer storage unit C31 are realized using a non-volatile recording medium, but they can be realized using a volatile recording medium.

There is no limitation on the process in which information is stored in the terminal storage unit C11 and so on. For example, information may be stored in the terminal storage unit C11 or the like via a recording medium, or information transmitted via a communication line or the like may be stored in the terminal storage unit C11 or the like, or information input via an input device may be stored in the terminal storage unit C11 or the like.

The terminal processing unit C13, the processing unit C23, the customer information position information acquisition unit C231, the delivery vehicle determination unit C232, the delivery list update unit C233, and the deliverer processing unit C33 can typically be realized using an MPU, a memory, or the like. The processing procedures performed by the terminal processing unit C13 typically are realized using software, and the software is recorded on a recording medium such as a ROM. However, such processing procedures may be realized using hardware (a dedicated circuit).

The terminal transmission unit C14, the transmission unit C24, the customer information transmission unit C241, and the deliverer transmission unit C34 typically are realized using a wireless or wired communication means, but may be realized using a broadcast means.

The terminal reception unit C15, the reception unit C22, the customer identifier acceptance unit C221, and the deliverer reception unit C35 typically are realized using a wireless or wired communication means, but may be realized using a means for receiving broadcast.

The terminal output unit C16 and the deliverer output unit C36 may be regarded as including or not including an output device such as a display or a speaker. The terminal output unit C16 can be realized using the driver software of the output device, the driver software of the output device and the output device, or the like.

Next, operations that are performed by the information system C will be described. First, operations that are performed by the terminal apparatuses C1 will be described.

The terminal acceptance unit C12 of each terminal apparatus C1 accepts a customer identifier. Next, the terminal processing unit C13 forms a customer identifier that is to be transmitted. Next, the terminal transmission unit C14 transmits the formed customer identifier to the information processing apparatus C2. Next, the terminal reception unit C15 receives information regarding the deliverer that delivers a gas cylinder to a customer, in response to the transmission of the customer identifier, for example. Thereafter, the terminal processing unit C13 forms information that is to be output, using the received information. Next, the terminal output unit C16 outputs information regarding the deliverer that delivers a gas cylinder to a customer.

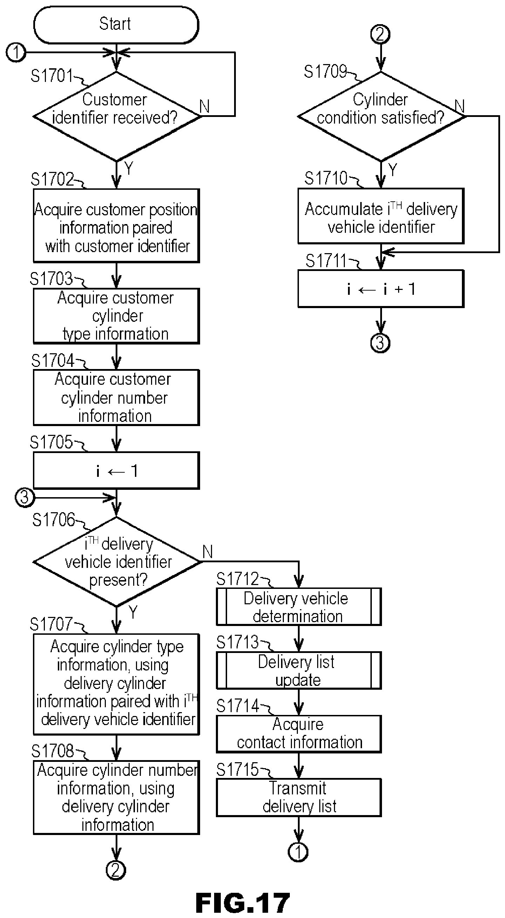

Next, examples of operations that are performed by the information processing apparatus C2 will be described with reference to the flowchart shown in FIG. 17.

(Step 1701) The customer identifier acceptance unit C221 determines whether or not a customer identifier that identifies a customer whose amount of remaining gas is small enough to satisfy a predetermined condition has been accepted. If a customer identifier has been accepted, processing proceeds to step 1702, and if a customer identifier has not been accepted, processing returns to step 1701. Note that a customer whose amount of remaining gas is small enough to satisfy a predetermined condition is a customer who has run out of gas, for example.

(Step 1702) The customer information position information acquisition unit C231 acquires the customer position information paired with the customer identifier accepted in step 1701, from the customer information storage unit A211.

(Step 1703) The delivery vehicle determination unit C232 acquires the cylinder type information contained in the customer information paired with the customer identifier accepted in step 1701. Note that such cylinder type information is information that specifies the type of the cylinder used by the customer.

(Step 1704) The delivery vehicle determination unit C232 acquires the cylinder number information contained in the customer information paired with the customer identifier accepted in step 1701. Note that such cylinder number information is information that specifies the number of cylinders that are to be delivered to a customer all at once.

(Step 1705) The delivery vehicle determination unit C232 substitutes 1 for the counter i.

(Step 1706) The delivery vehicle determination unit C232 determines whether or not the i^{th} delivery vehicle identifier is present in the delivery cylinder information storage unit A213. If the i^{th} delivery vehicle identifier is present, processing proceeds to step 1707, and if the i^{th} delivery vehicle identifier is not present, processing proceeds to step 1712. Note that the delivery cylinder information in the delivery cylinder information storage unit A213 is associated with the delivery vehicle identifier.

(Step 1707) The delivery vehicle determination unit C232 acquires the cylinder type information contained in the delivery cylinder information paired with the i^{th} delivery vehicle identifier in the delivery cylinder information storage unit A213. Note that such cylinder type information is cylinder type information regarding a delivery vehicle.

(Step 1708) The delivery vehicle determination unit C232 acquires the cylinder number information contained in the delivery cylinder information paired with the i^{th} delivery vehicle identifier in the delivery cylinder information storage unit A213. Note that such cylinder number information is cylinder number information regarding a delivery vehicle.

(Step 1709) The delivery vehicle determination unit C232 determines whether or not the cylinder condition is satisfied, using the cylinder type information regarding the customer acquired in step 1703, the cylinder number information regarding the customer required in step 1704, the cylinder type information regarding the delivery vehicle acquired in step 1707, and the cylinder number information regarding the delivery vehicle acquired in step 1708. If the cylinder condition is satisfied, processing proceeds to step 1710, and if the cylinder condition is not satisfied, processing proceeds to step 1711.

(Step 1710) The delivery vehicle determination unit C232 temporarily accumulates the i^{th} delivery vehicle identifier in a buffer.

(Step 1711) The delivery vehicle determination unit C232 increments the counter i by 1. Processing returns to step 1706.

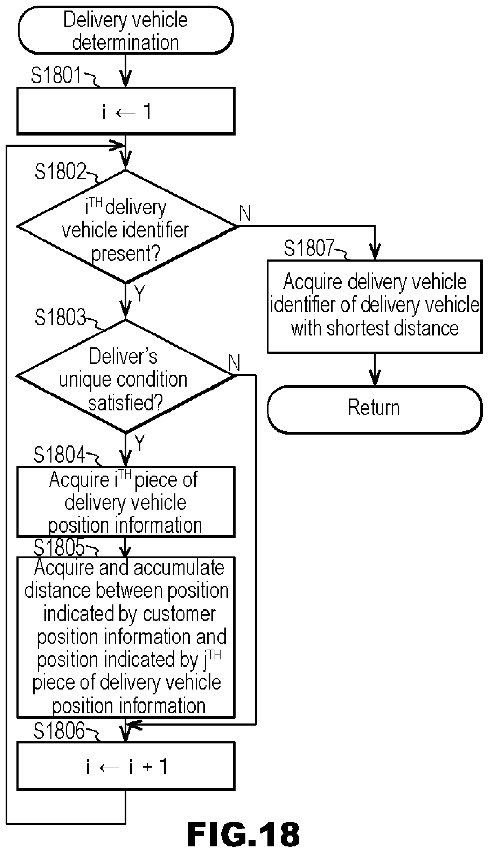

(Step 1712) The delivery vehicle determination unit C232 performs delivery vehicle determination processing. An example of delivery vehicle determination processing will be described with reference to the flowcharts shown in FIGS. 18 to 20.

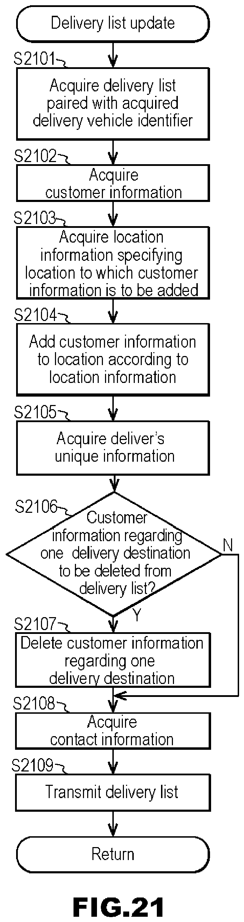

(Step 1713) The delivery list update unit C233 performs delivery list update processing. An example of delivery list update processing will be described with reference to the flowchart shown in FIG. 21.

(Step 1714) The customer information transmission unit C241 acquires contact information that is paired with the customer identifier received in step 1701, from the customer information storage unit A211.

(Step 1715) The customer information transmission unit C241 transmits the delivery list updated in step 1713, to the contact destination specified by the contact information. Processing returns to step 1701.

In the flowchart shown in FIG. 17, processing is terminated when power is turned off or an interruption is made to terminate the processing.

Next, a first example of the delivery vehicle determination processing in step 1712 will be described with reference to the flowchart shown in FIG. 18.

(Step 1801) The delivery vehicle determination unit C232 substitutes 1 for the counter i.

(Step 1802) The delivery vehicle determination unit C232 determines whether or not the i^{th} delivery vehicle identifier is present in the delivery vehicle identifiers temporarily accumulated in the buffer in step 1710. If the i^{th} delivery vehicle identifier is present, processing proceeds to step 1803, and if the i^{th} delivery vehicle identifier is not present, processing proceeds to step 1807.

(Step 1803) The delivery vehicle determination unit C232 acquires unique information regarding the deliverer paired with the i^{th} delivery vehicle identifier, from the storage unit C21. Thereafter, the delivery vehicle determination unit C232 determines whether or not the unique information satisfies the condition (for example, whether or not the addition or change of the delivery destination is permitted). If the condition is satisfied, processing proceeds to step 1804, and if the condition is not satisfied, processing proceeds to step 1806. Note that the condition is satisfied when the unique information indicates that "change in the delivery destination is permitted", when "overtime is permitted", when "a change in the delivery route on a short notice is permitted", when "the final time available for work" is not exceeded even if a delivery destination is added, and so on, for example. Note that "the final time available for work" is paired with the delivery vehicle identifier or the deliverer identifier and is stored in the storage unit C21.

(Step 1804) The delivery vehicle determination unit C232 acquires deliverer position information paired with the i^{th} delivery vehicle identifier, from the delivery vehicle position information storage unit A214.

(Step 1805) The delivery vehicle determination unit C232 acquires the distance between the position specified by the customer position information and the position specified by the deliverer position information acquired in step 1804, and accumulates the distance in a buffer (not shown) in pair with the i^{th} delivery vehicle identifier.

Note that such a distance may be a physical distance (spatial distance) when the vehicle moves along a road, a linear distance, or a time (temporal distance) when the vehicle moves. The method for obtaining the physical distance, the linear distance, and the time when moving is a well-known technique, and therefore the detailed description thereof will be omitted.

(Step 1806) The delivery vehicle determination unit C232 increments the counter i by 1. Processing returns to step 1802.

(Step 1807) The delivery vehicle determination unit C232 determines the shortest distance of the distances accumulated in the buffer (not shown) in step 1805. Thereafter, the delivery vehicle determination unit C232 acquires the delivery vehicle identifier paired with the shortest distance, from the buffer (not shown). Processing returns to higher level processing.

Note that, in the flowchart shown in FIG. 18, the customer information that contains the customer identifier accepted by the customer identifier acceptance unit C221 is to be registered in a list as a delivery destination before the one or more remaining delivery destinations. That is to say, in the flowchart shown in FIG. 18, location information is information that specifies the first position in the remaining route information, and the delivery vehicle determination unit C232 temporarily stores the location information in a buffer (not shown). Remaining route information is a set that includes part or the entirety of the delivery list and with which the order of the pieces of customer position information of the customers for which delivery has not been completed can be determined. Remaining route information is, for example, a delivery list and route information that are used to deliver the remaining cylinders. Route information is information regarding the road on which the vehicle travels. Note that location information is information that specifies a location in the delivery list.

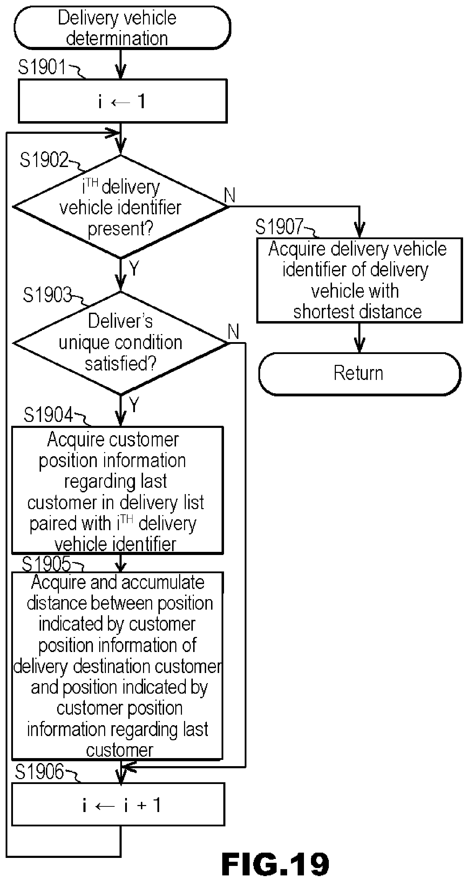

Next, a second example of the delivery vehicle determination processing in step 1712 will be described with reference to the flowchart shown in FIG. 19.

(Step 1901) The delivery vehicle determination unit C232 substitutes 1 for the counter i.

(Step 1902) The delivery vehicle determination unit C232 determines whether or not the i^{th} delivery vehicle identifier is present in the delivery vehicle identifiers (the delivery vehicle identifiers that satisfy the cylinder condition) temporarily accumulated in the buffer in step 1210. If the i^{th} delivery vehicle identifier is present, processing proceeds to step 1903, and if the i^{th} delivery vehicle identifier is not present, processing proceeds to step 1907.

(Step 1903) The delivery vehicle determination unit C232 acquires unique information regarding the deliverer paired with the i^{th} delivery vehicle identifier. Thereafter, the delivery vehicle determination unit C232 determines whether or not the unique information satisfies the condition. If the condition is satisfied, processing proceeds to step 1904, and if the condition is not satisfied, processing proceeds to step 1906.

(Step 1904) The delivery vehicle determination unit C232 acquires customer position information regarding the last customer in the delivery list paired with the i^{th} delivery vehicle identifier. Note that the last customer is the last customer for which a cylinder is scheduled to be delivered on the same day.

(Step 1905) The delivery vehicle determination unit C232 acquires the distance between the position specified by the customer position information and the position specified by the customer position information regarding the last customer acquired in step 1904, and accumulates the distance in a buffer (not shown) in pair with the i^{th} delivery vehicle identifier.

Note that such a distance may be a physical distance (spatial distance), a linear distance, or a time (temporal distance) when the vehicle moves. The physical distance is a moving distance.

(Step 1906) The delivery vehicle determination unit C232 increments the counter i by 1. Processing returns to step 1902.

(Step 1907) The delivery vehicle determination unit C232 determines the shortest distance of the distances accumulated in the buffer (not shown) in step 1905. Thereafter, the delivery vehicle determination unit C232 acquires the delivery vehicle identifier paired with the shortest distance. Processing returns to higher level processing.

Note that, in the flowchart shown in FIG. 19, the customer information that contains the customer identifier accepted by the customer identifier acceptance unit C221 is to be registered in a list as the final delivery destination. That is to say, in the flowchart shown in FIG. 19, location information is information that specifies the last position in the remaining route information, and the delivery vehicle determination unit C232 temporarily stores the location information in a buffer (not shown).

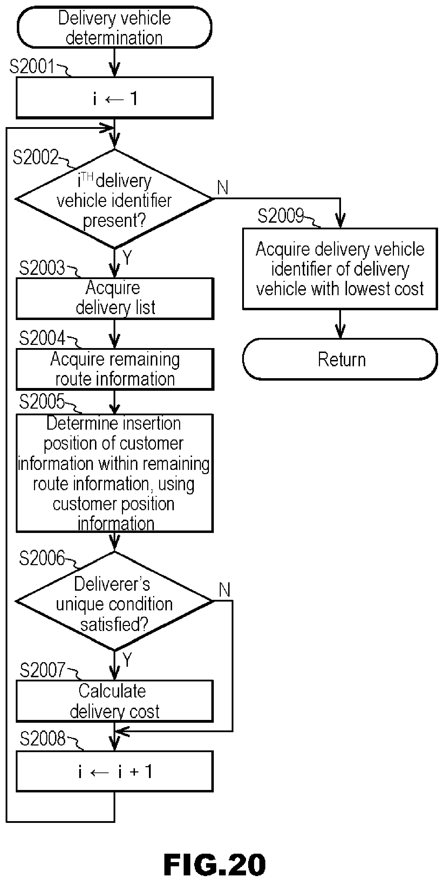

Next, a third example of the delivery vehicle determination processing in step 1712 will be described with reference to the flowchart shown in FIG. 20.

(Step 2001) The delivery vehicle determination unit C232 substitutes 1 for the counter i.

(Step 2002) The delivery vehicle determination unit C232 determines whether or not the i^{th} delivery vehicle identifier is present in the delivery vehicle identifiers temporarily accumulated in the buffer in step 1210. If the i^{th} delivery vehicle identifier is present, processing proceeds to step 2003, and if the i^{th} delivery vehicle identifier is not present, processing proceeds to step 2009.

(Step 2003) The delivery vehicle determination unit C232 acquires a delivery list that is paired with the i^{th} delivery vehicle identifier.

(Step 2004) The delivery vehicle determination unit C232 acquires remaining route information that is a set with which the order of the pieces of customer position information of the customers for which delivery has not been completed can be determined, from the delivery list acquired in step 2003.

(Step 2005) The delivery vehicle determination unit C232 determines the position at which the customer information that satisfies a predetermined condition is inserted, in the remaining route information, using the customer position information. Note that the delivery vehicle determination unit C232 inserts the customer information in all cases where the customer information can be inserted in the remaining route information, and acquires the delivery cost in each case. Note that the delivery cost is, for example, a distance or a travel time. Also, the delivery vehicle determination unit C232 calculates, for example, a distance loss "(the distance when moving from the first customer position information to the second customer position information via the customer position information acquired in step 1202) - (the distance when moving from the first customer position information to the second customer position information)) when the customer position information acquired in step 1202 is inserted between two consecutive pieces of customer position information (the first customer position information and the second customer position information) in the remaining route information, and determines a position between the two consecutive pieces of customer position information with the smallest distance loss as an insertion position where the customer information acquired in step 1202 is to be inserted. Note that the technique for acquiring a distance or a travel time when moving through a plurality of points in order is a well-known technique. It is preferable that the travel time is the time obtained by adding the driving time for which the delivery vehicle is moving and the working time at each customer. Also note that the working time is, for example, a fixed time (for example, ten minutes).

(Step 2006) The delivery vehicle determination unit C232 acquires unique information regarding the deliverer paired with the i^{th} delivery vehicle identifier, from the storage unit C21. Thereafter, the delivery vehicle determination unit C232 determines whether or not the unique information satisfies the condition. If the condition is satisfied, processing proceeds to step 2007, and if the condition is not satisfied, processing proceeds to step 2008.

(Step 2007) The delivery vehicle determination unit C232 calculates the delivery cost in the case where the customer information is inserted in the insertion position determined in step 2005 in the remaining route information, and temporarily accumulates the delivery cost in pair with the i^{th} delivery vehicle identifier in a buffer (not shown). Note that, if the delivery cost has been calculated, the delivery vehicle determination unit C232 acquires the lowest cost here.

(Step 2008) The delivery vehicle determination unit C232 increments the counter i by 1. Processing returns to step 2002.

(Step 2009) The delivery vehicle determination unit C232 acquires the delivery vehicle identifier paired with the lowest delivery cost of the delivery costs acquired in step 2007, from a buffer (not shown). Processing returns to higher level processing.

Note that, in the flowchart shown in FIG. 20, the customer information that contains the customer identifier accepted by the customer identifier acceptance unit C221 is to be registered in a list so that the loss is the smallest. That is to say, in the flowchart shown in FIG. 19, location information is information that specifies a position between the first customer position information and the second customer position information in the remaining route information, and the delivery vehicle determination unit C232 temporarily stores the location information in a buffer (not shown).

Next, the delivery list update processing in step 1713 will be described with reference to the flowchart shown in FIG. 21.

(Step 2101) The delivery list update unit C233 acquires a delivery list that is paired with the acquired delivery vehicle identifier.

(Step 2102) The delivery list update unit C233 acquires customer information that is paired with the customer identifier accepted in step 1201 and is to be added to the delivery list, from the customer information storage unit A211. Note that information to be added to the delivery list has been determined in advance.

(Step 2103) The delivery list update unit C233 acquires location information that is information regarding the location to which the customer information is to be added.

(Step 2104) The delivery list update unit C233 adds the customer information acquired in step 2102, to the location according to the location information in the delivery list acquired in step 2101.

(Step 2105) The delivery list update unit C233 acquires unique information regarding the deliverer paired with the deliverer identifier paired with the acquired delivery vehicle identifier. Note that examples of unique information regarding a deliverer include "information that specifies whether or not to permit overtime", "the final time available for work", and "information that specifies whether or not to permit a change in the delivery route on a short notice".

(Step 2106) The delivery list update unit C233 determines whether or not to delete the customer information regarding the delivery destination customer from the delivery list acquired in step 2104, using the unique information regarding the deliverer acquired in step 2105. If the customer information is to be deleted, processing proceeds to step 2107, and if the customer information is not to be deleted, processing proceeds to step 2108. Note that the delivery list update unit C233 determines to delete the customer information regarding a delivery destination customer in the delivery list when the acquired unique information regarding the deliverer is "information that indicates that overtime is not permitted", "a change in the delivery route on a short notice is not permitted", or when the work completion time acquired using the travel times of all future routes obtained using the remaining route information before deletion and the customer position information regarding the additional customer is later than the "final time available for work".

Note that the delivery list update unit C233 performs the following determination processing to determine whether or not the "final time available for work" is exceeded. The delivery list update unit C233 acquires delivery vehicle position information and a plurality of pieces of customer position information of the future delivery destinations (including urgent customers) from the delivery list. Then, the delivery list update unit C233 acquires the travel time when the vehicle travels through the positions indicated by the plurality of customer position information in order from the position indicated by the delivery vehicle position information. Also, the delivery list update unit C233 acquires the cumulative time of the respective working times at the customers. Thereafter, the delivery list update unit C233 acquires the current time. Next, the delivery list update unit C233 acquires the work completion time, using the current time, the travel time, and the cumulative working time. Next, the delivery list update unit C233 determines whether or not the work completion time is later than the "final time available for work". Note that the method for obtaining the time for travelling through a plurality of points in order is a known technique. In addition, the cumulative working time is calculated by, for example, multiplying the placement time for one cylinder and the number of delivery destinations. As the cumulative working time, for example, the working time at each customer may be obtained using the number of cylinders. In such a case, the delivery list update unit C233 acquires a longer working time for a larger number of cylinders.

(Step 2107) The delivery list update unit C233 deletes the customer information regarding one delivery destination from the delivery list acquired in step 2104. Note that the customer information to be deleted is, but not limited to, customer information regarding the customer at the last delivery destination, for example. Alternatively, the deletion of customer information may be the addition of information indicating that delivery is not to be performed, for example. That is to say, the deletion of customer information may be may be performed through any processing as long as it can be discerned that there is no need to deliver a cylinder to the customer.

(Step 2108) The customer information transmission unit C241 acquires contact information that is paired with the deliverer identifier paired with the delivery vehicle identifier of the determined delivery vehicle.

(Step 2109) The customer information transmission unit C241 transmits the updated delivery list to the deliverer specified by the acquired contact information. Processing returns to higher level processing. Note that the transmission of the updated delivery list can be regarded as transmission of customer information.

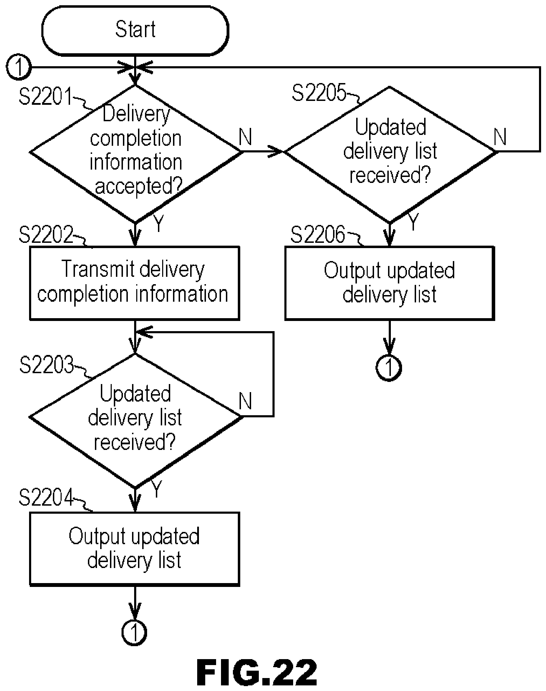

Next, examples of operations that are performed by each deliverer terminal C3 will be described with reference to the flowchart shown in FIG. 22.

(Step 2201) The deliverer acceptance unit C32 determines whether or not delivery completion information has been accepted. If delivery completion information has been accepted, processing proceeds to step 2202, and if delivery completion information has not been accepted, processing proceeds to step 2205. Note that delivery completion information contains the customer identifier of a customer to which delivery is complete.

(Step 2202) The deliverer processing unit C33 converts the delivery completion information accepted in step 2201 into delivery completion information that has a structure to be transmitted. Thereafter, the deliverer transmission unit C34 transmits the delivery completion information to the information processing apparatus C2.

(Step 2203) The deliverer reception unit C35 determines whether or not a delivery list that indicates that a cylinder has been delivered to the customer identified by the customer identifier, from the information processing apparatus C2, in response to the transmission of the delivery completion information. If the delivery list has been received, processing proceeds to step 2204, and if the delivery list has not been received, processing returns to step 2203.

(Step 2204) The deliverer processing unit C33 converts the delivery list received in step 2203, into information that has a structure to be output. The deliverer output unit C36 outputs the delivery list. Processing returns to step 2201.

(Step 2205) The deliverer reception unit C35 determines whether or not an urgently updated delivery list has been received from the information processing apparatus C2. If the delivery list has been received, processing proceeds to step 2206, and if the delivery list has not been received, processing returns to step 2201.

(Step 2206) The deliverer processing unit C33 converts the delivery list received in step 2205, into information that has a structure to be output. The deliverer output unit C36 outputs the delivery list. Processing returns to step 2201.

The following describes specific examples of operations that are performed by the information system C according to the present embodiment. Note that the conceptual diagram for the information system C is FIG. 14.

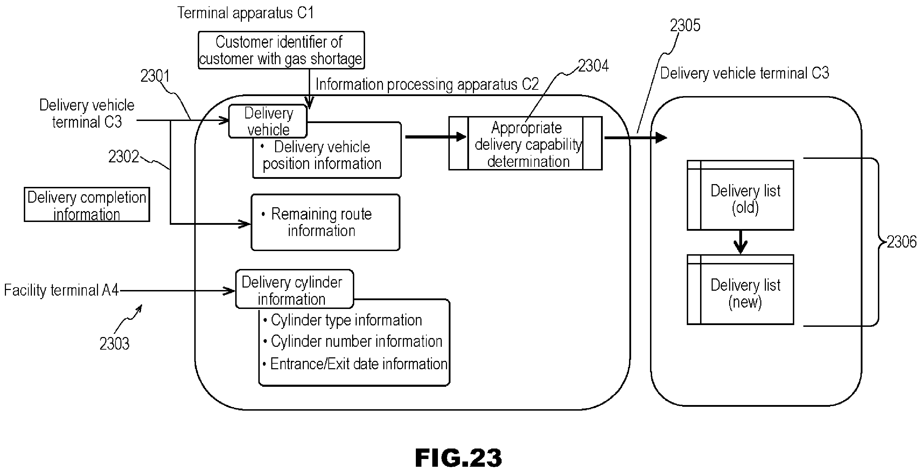

Also, the concept of processing through which the information processing apparatus C2 included in the information system C determines a delivery vehicle is shown in FIG. 23.

Delivery vehicle position information is transmitted from the deliverer terminals C3 to the information processing apparatus C2, and is accumulated in the information processing apparatus C2 (see 2301). Also, delivery completion information is transmitted from the deliverer terminals C3 to the information processing apparatus C2, and remaining route information is updated in the information processing apparatus C2 and is accumulated (see 2302). Also, delivery cylinder information is transmitted from the facility terminals A4 to the information processing apparatus C2, and is accumulated in the information processing apparatus C2 (see 2303). Note that updating the remaining route information may have the same meaning as updating the delivery list.

In such a situation, it is assumed that the customer identifier of a customer who has run out of gas is transmitted from a terminal apparatus C1 to the information processing apparatus C2, for example.

In such a case, the information processing apparatus C2 performs one or more determinations of: cylinder condition determination, position condition determination, and determination using unique information (appropriate delivery capacity determination 2304) to determine the delivery vehicle that is to deliver a cylinder to the customer identified by the customer identifier, using the customer position information paired with the customer identifier, the delivery vehicle position information regarding the delivery vehicle, remaining route information regarding each delivery vehicle, and unique information regarding each deliverer (for example, whether or not overtime is permitted) as described above. Note that the appropriate delivery capacity determination 2304 performed using unique information regarding the deliverer may be performed to add one delivery destination or delay the scheduled date for the delivery destination in the old delivery list to the next day, for example.

Thereafter, the information processing apparatus C2 updates the delivery list corresponding to the determined delivery vehicle, and transmits the delivery list to a deliverer terminal C3 (see 2305).

Next, the deliverer terminals C3 receives and outputs the updated delivery list. As a result, the deliverer terminal C3 switches from the old delivery list to the new delivery list, and outputs the new delivery list (see 2306).

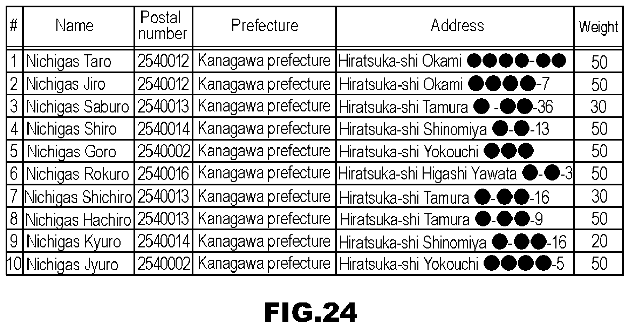

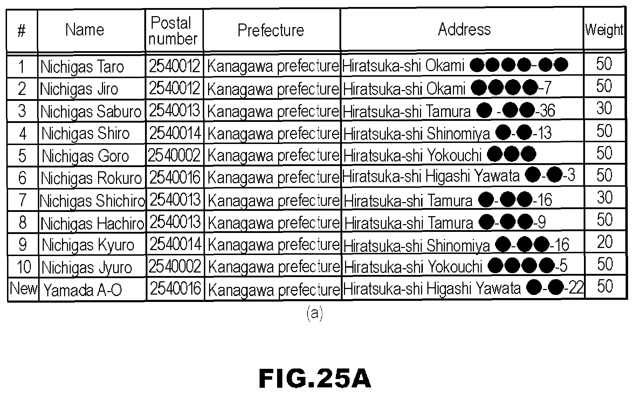

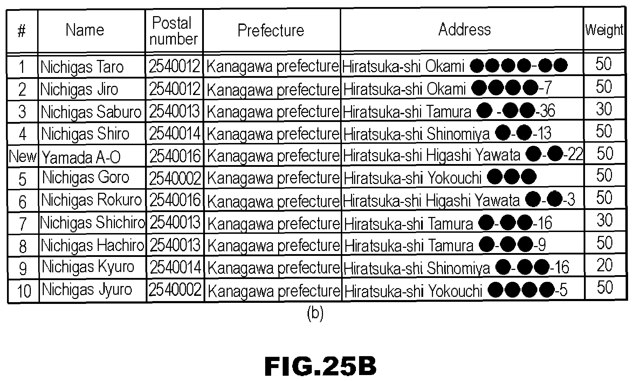

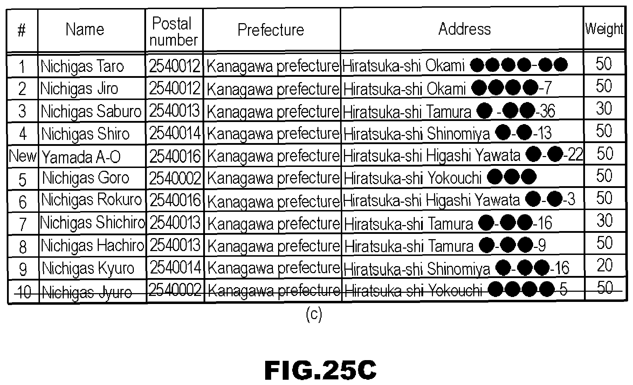

Note that an example of the old delivery list is shown in FIG. 24. In FIG. 24, the customer information included in the delivery list contains a name, location information (zip code, prefecture, address), and cylinder type information (weight in this example). An example of the new delivery list updated by the delivery list update unit C233 is shown in FIG. 25. FIG. 25A is a new delivery list formed by adding customer information regarding an additional delivery destination to the end of the old delivery list. FIG. 25B is a new delivery list formed by inserting customer information regarding an additional delivery destination in the middle of the old delivery list without deleting customer information regarding another delivery destination. FIG. 25C is a new delivery list formed by inserting customer information regarding an additional delivery destination in the middle of the old delivery list and deleting customer information regarding another delivery destination (the last delivery destination in this example). Although many people in FIGS. 24 and 25 have the same family name, they typically are from different households.

As described above, according to the present embodiment, it is possible to efficiently deliver gas cylinders to a customer in the case of gas shortage or the like.

Also, according to the present embodiment, the updated delivery list can be sent to the delivery vehicles.

Also, according to the present embodiment, by flexibly updating the delivery list, it is possible to respond to a request from an urgent customer, who has run out of gas, for example, and to control the delivery of cylinders according to the needs or abilities of the deliverers. That is to say, for example, it is possible to request that deliverers who wish to perform delivery to increase their salary even by working overtime perform urgent delivery, and if there are no deliverers who wish to perform delivery to increase salary even by working overtime perform urgent delivery, it is possible delay delivery to non-urgent customers to the next day, and delivery cylinders to an urgent customer, who has run out of gas, for example.

Note that the processing in the present embodiment may be realized using software. This software may be distributed through software downloading or the like. Also, this software may be recorded on a recording medium such as a CD-ROM and distributed. Note that the same applies to the other embodiments in the present description. The software that realizes the information processing apparatus C2 in the present embodiment is the program described below. That is to say, this program is a program that enables a computer that can access: a customer information storage unit that stores one or more pieces of customer information each containing a customer identifier and customer position information that specifies a position of a customer identified by the customer identifier; a delivery cylinder information storage unit that stores, in association with a delivery vehicle identifier that identifies a delivery vehicle, one or more pieces of delivery cylinder information each being information regarding a delivery-target cylinder that is to be delivered by the delivery vehicle; and a delivery vehicle position information storage unit that stores, in association with a delivery vehicle identifier, a delivery vehicle position information that specifies a delivery vehicle, to function as: a customer identifier acceptance unit that accepts a customer identifier that identifies a customer whose remaining amount of gas is small enough to satisfy a predetermined condition; a customer information position information acquisition unit that acquires customer position information that is paired with a customer identifier accepted by the customer identifier acceptance unit, from the customer information storage unit; a delivery vehicle determination unit that determines a delivery vehicle that is to deliver a cylinder, using the customer position information acquired by the customer information position information acquisition unit, and a set of pieces of information composed of delivery vehicle position information and delivery cylinder information paired with the same delivery vehicle identifier; and a customer information transmission unit that transmits customer information that is paired with the customer identifier, to a deliverer terminal of the delivery vehicle determined by the delivery vehicle determination unit.

### Embodiment 4

The present embodiment describes an information system that includes an information processing apparatus that determines the price of LPG, using gas use information and climate information.

The present embodiment also describes an information system that includes an information processing apparatus that determines the price of LPG, using one or more pieces of related information of: gas price information regarding a gas price; exchange information regarding an exchange rate; and operation status information regarding an operation status of a gas tanker.

In addition, the present embodiment describes an information system that includes a server apparatus that supports futures trading.

Furthermore, the present embodiment describes an information system that includes a server apparatus that changes the price according to the result of futures trading.

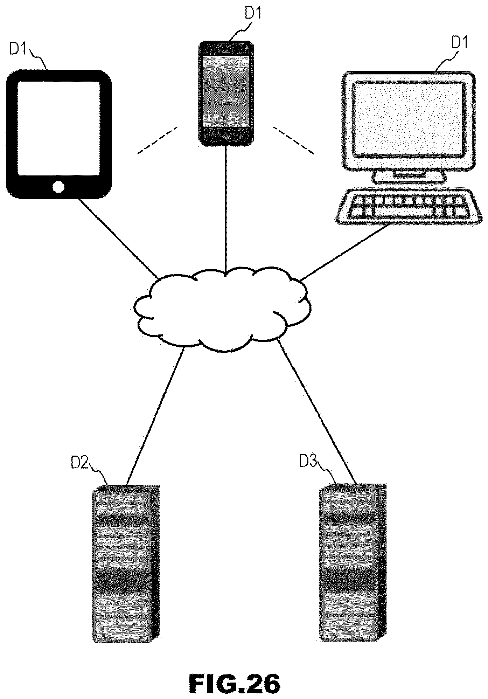

FIG. 26 is a conceptual diagram for an information system D according to the present embodiment. The information system D includes one or more terminal apparatuses D1, an information processing apparatus D2, and a server apparatus D3.

The terminal apparatuses D1 are, for example, terminals that instruct the information processing apparatus D2 to start operating. The terminal apparatuses D1 are, for example, terminals that transmit a purchase instruction for futures trading of LPG to the server apparatus D3. The terminal apparatuses D1 are, for example, smartphones, tablet terminals, so-called personal computers, or the like, but there is no limitation on the type thereof.

The information processing apparatus D2 is an apparatus that determines the future price of LPG. It is preferable that the price is a variable price.

The information processing apparatus D2 can be realized using a so-called cloud server or an ASP server, but there is no limitation on the type thereof. Note that the information processing apparatus D2 may have some or all of the functions of the information processing apparatus A2. That is to say, the information processing apparatus D2 may be an information processing apparatus A2 that performs futures trading processing. It can be said that futures trading processing is processing through which the future price of LPG is determined.

The server apparatus D3 is an apparatus that supports futures trading. The server apparatus D3 can be realized using a so-called cloud server or an ASP server, but there is no limitation on the type thereof.

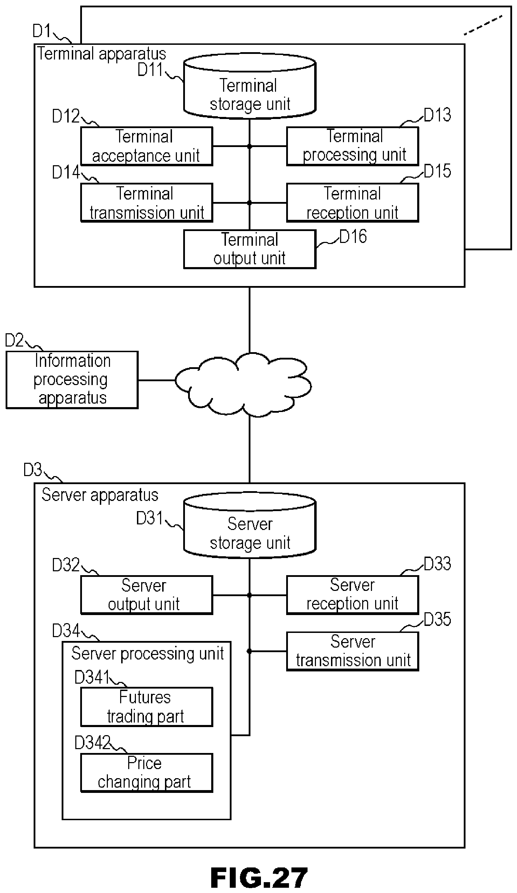

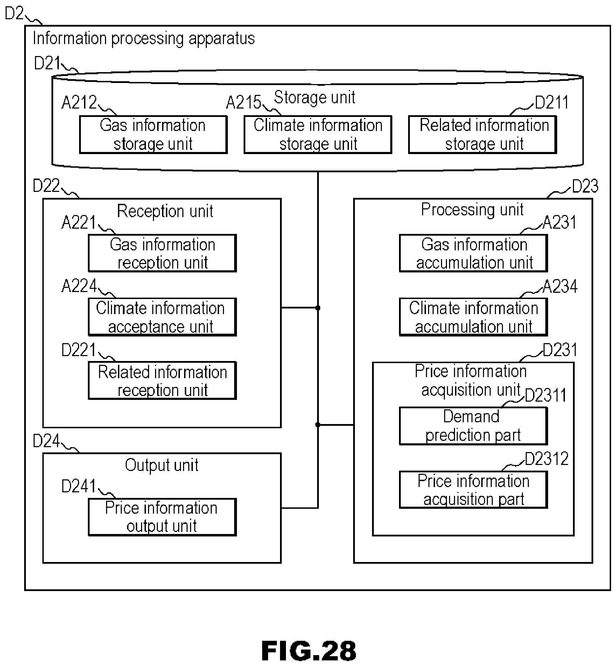

FIG. 27 is a block diagram for the information system D according to the present embodiment. FIG. 28 is a block diagram for the information processing apparatus D2.

The terminal apparatuses D1 included in the information system D each include a terminal storage unit D 11, a terminal acceptance unit D12, a terminal processing unit D13, a terminal transmission unit D14, a terminal reception unit D15, and a terminal output unit D16.

The information processing apparatus D2 includes a storage unit D21, a reception unit D22, a processing unit D23, and an output unit D24.

The storage unit D21 includes the gas information storage unit A212, the climate information storage unit A215, and a related information storage unit D211.

The reception unit D22 includes the gas information reception unit A221, the climate information acceptance unit A224, and a related information reception unit D221.

The processing unit D23 includes the gas information accumulation unit A231, the climate information accumulation unit A234, and a price information acquisition unit D231.

The price information acquisition unit D231 includes a demand prediction part D2311 and a price information acquisition part D2312.

The output unit D24 includes a price information output unit D241.

The server apparatus D3 includes a server storage unit D31, a server output unit D32, a server reception unit D33, a server processing unit D34, and a server transmission unit D35.

The server processing unit D34 includes a futures trading part D341 and a price changing part D342.

The terminal storage unit D11 included in each terminal apparatus D1 stores various kinds of information. Examples of the various kinds of information include a user identifier and a terminal identifier that identifies the terminal apparatus D1. Note that this user identifier is identification information regarding a user who inputs a purchase instruction, which will be described below. The user identifier is, for example, an ID, a mail address, a telephone number, or the like.

The terminal acceptance unit D12 accepts various kinds of information, instructions, and so on. Examples of the various kinds of information, instructions, and so on include a purchase instruction and an operation start instruction, which will be described later. Note that an operation start instruction is an instruction that instructs the information processing apparatus D2 to start operating. It is preferable that a terminal apparatus D1 that accepts a purchase instruction and a terminal apparatus D1 that accepts an operation start instruction are different from each other. The terminal apparatus D1 that accepts a purchase instruction is a terminal of a user who carries out futures trading. The terminal apparatus D1 that accepts an operation start instruction is, for example, a terminal of an operator of the information processing apparatus D2.

Any input means may be employed to input various kinds of information, instructions, and so on, such as a touch panel, a keyboard, a mouse, a menu screen, or the like. The terminal acceptance unit D12 can be realized using a device driver for the input means such as a touch panel or a keyboard, or control software or the like for controlling the menu screen.

The terminal processing unit D13 performs various kinds of processing. Examples of the various kinds of processing include processing that is performed by the terminal acceptance unit D12 to convert the various kinds of information, instructions, and so on accepted thereby into a data structure that contains the various kinds of information, instructions, and so on to be transmitted. Examples of the various kinds of processing also include processing that is performed to convert the information received by the terminal reception unit D15 so as to have a data structure that is to be output.

The terminal transmission unit D14 transmits various kinds of information to the information processing apparatus D2 or the server apparatus D3. Examples of the various kinds of information include a purchase instruction and an operation start instruction, , which will be described later.

The terminal reception unit D15 receives various kinds of information. Examples of the various kinds of information include the result of futures trading processing, screen information regarding a web page for futures trading, an operation completion notification, and price information. Note that an operation completion notification is information that indicates that price information acquisition processing is complete, in response to an operation start instruction being transmitted, in the information processing apparatus D2.

The terminal output unit D16 outputs various kinds of information. Examples of the various kinds of information include information formed by the terminal processing unit D13. Examples of the various kinds of information include a web page for futures trading and price information.

Here, "output" is a concept that includes means displaying on a display device, projection with a projector, printing with a printer, sound output, transmission to an external apparatus, accumulation on a recording medium, delivery of processing results to another processing apparatus or another program, and so on.

The storage unit D21 included in the information processing apparatus D2 stores various kinds of information. Examples of the various kinds of information include gas information, climate information, related information, price information, one or more calculation formulas (may also be referred to as functions), and a learner, which will be described later.

The gas information storage unit A212 stores two or more pieces of gas information that include gas use information regarding two or more households.

The climate information storage unit A215 stores climate information that is associated with date information. It is preferable that the climate information storage unit A215 stores, for example, climate information up to three months ahead. It is preferable that the climate information here is a predicted weather and a predicted temperature.

The related information storage unit D211 stores one or more pieces of related information. Related information is information that may affect LPG pricing. Examples of related information include gas price information, exchange information, and operation status information.

Gas price information is information regarding the price of gas. Gas price information is, for example, one or more pieces of information of: Middle Eastern gas price information that specifies the Middle East gas price; and MB gas price information that specifies the MB (Mont Belvieu) gas price. Note that the Middle Eastern gas price is the price of gas in oil-producing countries in the Middle East. The MB gas price is the propane trading price at the LPG terminal in Mont Belvieu, Texas.

Exchange information is information regarding exchange. Exchange information indicates, for example, the dollar-yen rate.

Operation status information is information regarding the operation status of a gas tanker. Operation status information is, for example, information indicating the occurrence of a problem, information indicating the absence of a trouble, information indicating that a problem occurred within a threshold period (for example, the last one month), information indicating that a problem has not occurred within a threshold period (for example, the last one month), or information indicating the content or type of the trouble.

The reception unit D22 receives various kinds of information. Examples of the various kinds of information include gas information, climate information, related information, and an operation start instruction.

The gas information reception unit A221 receives gas information from a gas information transmission apparatus A1.

The climate information acceptance unit A224 receives climate information that is associated with time information that specifies the time. Here, "acceptance" typically means, for example, reception of information transmitted from a server apparatus (not shown) via a wired or wireless communication line, but may be regarded as a concept that includes acceptance of information input from an input device such as a keyboard, a mouse, or a touch panel, or acceptance of information read from a recording medium such as an optical disk, a magnetic disk, or a semiconductor memory.

The related information reception unit D221 receives related information. The related information reception unit D221 receives one or more pieces of related information from a server (not shown).

The processing unit D23 performs various kinds of processing. Examples of the various kinds of processing include processing that is performed by the gas information accumulation unit A231, processing that is performed by the climate information accumulation unit A234, and processing that is performed by the price information acquisition unit D231.

The price information acquisition unit D231 acquires price information that specifies the price of LPG per unit amount at the time specified by time information, using gas use information regarding two or more households and climate information. The time specified by time information typically is a date that is specified by date information. However, the time specified by time information may be a period that is longer than one day.

It is preferable that the price information acquisition unit D231 acquires price information regarding one or more days that are ahead by the predetermined period, using gas use information regarding two or more households, climate information, and one or more pieces of related information.

The price information acquisition unit D231 acquires price information that indicates a higher price as the amount of gas used indicated by the gas use information regarding two or more households increases. The price information acquisition unit D231 acquires, for example, a higher price as the predicted demand amount described later increases.

The price information acquisition unit D231 typically acquires price information that indicates a higher price as the temperature specified by climate information decreases.

The price information acquisition unit D231 typically acquires price information that indicates a higher price as the weather specified by climate information is worse (for example, when it often rains, compared to when it is sunny).

The price information acquisition unit D231 typically acquires price information that indicates a higher price as the price specified by gas price information increases.

The price information acquisition unit D231 typically acquires price information that indicates a higher price as exchange information indicates a lower yen.

The following describes the details of an example of processing that is performed by the price information acquisition unit D231. Here, processing that is performed when price information is to be acquired by the demand prediction part D2311 and the price information acquisition part D2312 will be described.

### (1) Demand Prediction by Demand Prediction part D2311

The demand prediction part D2311 acquires a predicted demand amount that is the amount of future demand for LPG, using gas use information regarding two or more households. Note that the predicted demand amount is the amount of future demand for LPG and is the total annual use, for example, but there is no limitation on the period.

The following three methods can be used to acquire the predicted demand amount, for example.

### (1-1) Calculation Method

The demand prediction part D2311 acquires gas use information in the past regarding two or more households from the gas information storage unit A212, for example. Thereafter, the demand prediction part D2311 acquires the total use amount of gas of two or more households from the gas use information regarding the two or more households. Next, the demand prediction part D2311 acquires a predicted demand amount, using an increasing function that has the total amount as a parameter, for example.

### (1-2) Correspondence Table Method

The demand prediction part D2311 acquires the total use amount of gas of two or more households from the gas use information regarding the two or more households, and acquires a predicted demand amount corresponding to the total amount, from a correspondence table, for example. Note that such a correspondence table is a table that contains two or more pieces of correspondence information that each contain information regarding the range of the total amount of gas used (the total amount of use in the past) and a predicted demand amount.

The demand prediction part D2311 acquires the predicted demand amount through machine learning, for example. The following describes an example of an algorithm for acquiring a predicted demand amount, using machine learning.

### (1-3) Machine Learning Method

The following describes processing that is performed to form a learner, and processing that is performed to acquire a predicted demand amount.

### (1-3-1) Processing that is Performed to Form Leaner

The demand prediction part D2311 acquires gas use information in the past regarding two or more households from the gas information storage unit A212, for example. Note that the past gas use information in the past is, for example, gas use information in January of each of two or more years (for example, 2010, 2011, ..., and 2018).

Also, the demand prediction part D2311 totals the use amounts indicated by the gas use information in the past regarding two or more households in each of two or more years, to calculate the total amount of gas used in a year.

Next, the demand prediction part D2311 acquires a learner, to which gas use information for a short period (for example, January, January-March, and January-June) is input and that outputs the total amount of gas used in a year, using a machine learning algorithm. It is preferable that the short period is included in the year for which the total amount of gas used is to be acquired, but may be a period that is not included in the year for which the total amount of gas used is to be acquired.

That is to say, the demand prediction part D2311 acquires, for each year, a set of short-period gas use information and the total amount of gas used in the year, and forms learning source information that contains a plurality of sets. Next, the demand prediction part D2311 provides the learning source information to a module for forming a learner for machine learning, executes the module to form a learner, and accumulates the learner in the storage unit D21. Note that there is no limitation on the machine learning algorithm, which may be, for example, deep learning, random forest, SVR, or the like. In addition, the machine learning module may be any module, such as a TensorFlow module, fastText, TinySvm, any kind of RandomForest function, or the like. The learner may be referred to as a classifier.

Furthermore, in the above, to form a learner, the demand prediction part D2311 may use gas use information regarding one month, or gas use information regarding two or more months, or gas use information regarding a predetermined period (for example, one month, three months, six months, twelve months, or the like) in the previous year, for example.

### (1-3-2) Processing that is Performed to Acquire Predicted Demand Amount

The demand prediction part D2311 acquires gas use information regarding a period that is equivalent to the period of gas use information used to form the learner (for example, January to February in the last year) and that corresponds to the amount of demand to be predicted (for example, January to February in this year), from the gas information storage unit A212, for example.

Next, the demand prediction part D2311 acquires the annual predicted demand amount, using a machine learning algorithm, and using the acquired gas use information and the learner in the storage unit D21. That is to say, the demand prediction part D2311 forms, for example, a vector that has each use amount in the acquired gas use information as an element, provides the vector and the learner in the storage unit D21 to the module that performs machine learning prediction, and acquires the annual predicted demand amount, using a machine learning algorithm, for example. Note that there is no limitation on the machine learning algorithm in the case of such prediction as well, which may be, for example, deep learning, random forest, SVR, or the like. In addition, the machine learning module for prediction may be any module, such as a TensorFlow module, fastText, TinySvm, any kind of RandomForest function, or the like. Note that the "prediction" here means processing through which the annual predicted demand amount is acquired.

### (2) Price Information Determination Processing by Price Information Acquisition part D2312

The price information acquisition part D2312 acquires price information regarding LPG on each of one or more days, using the predicted demand amount acquired by the demand prediction part D2311 and climate information.

The following three methods can be used as a method for acquiring price information, using the predicted demand amount, for example.

### (2-1) Calculation Method

The price information acquisition part D2312 acquires one or more pieces of related information from the related information storage unit D211, for example. Thereafter, for example, the price information acquisition part D2312 substitutes the predicted demand amount and one or more pieces of related information as parameters into the calculation formula, executes the calculation formula, and obtains reference price information.

Next, for example, the price information acquisition part D2312 corrects the reference price information to obtain corrected price information, using one or more pieces of information of: temperature information that is contained in weather information regarding each of the days for which the price is to be determined; and weather information.

Note that, for example, when the temperature information indicates a temperature that is high enough to satisfy a predetermined first condition, price information acquisition part D2312 reduces the price information by a predetermined amount or according to temperature information. Also, when the temperature information indicates a temperature that is low enough to satisfy a predetermined second condition, the price information acquisition part D2312 increases the price information by a predetermined amount or according to temperature information. Note that the first condition is, for example, that the temperature is "higher than the average temperature of the day stored in the storage unit D21 by an amount that is no less than a threshold value" or is "higher than the average temperature of the day stored in the storage unit D21 by an amount that is greater than a threshold value". The second condition is, for example, that the temperature is "lower than the average temperature of the day stored in the storage unit D21 by an amount that is no less than a threshold value" or is "lower than the average temperature of the day stored in the storage unit D21 by an amount that is greater than a threshold value".

Also, the price information acquisition part D2312 corrects the reference price information according to the weather information, and acquires the corrected price information, for example. When weather information is information indicating "rainy", for example, the price information acquisition part D2312 raises the price information by a predetermined amount. When weather information is information indicating "sunny", for example, the price information acquisition part D2312 lowers the price information by a predetermined amount.

### (2-2) Correspondence Table Method

It is assumed that the storage unit D21 stores a correspondence table consisting of two or more pieces of correspondence information that contains "a condition regarding predicted demand amount" or "a condition regarding predicted demand amount and one or more pieces of related information", and "price information". Note that the "condition regarding the predicted demand amount" is, for example, that the range of the predicted demand amount (for example, y1 <= predicted demand amount < y2). The "condition regarding predicted demand amount and one or more pieces of related information" is, for example, a condition that includes the range of the predicted demand amount (for example, "y1 <= predicted demand amount < y2" and the range of exchange (for example, "z1 <= yen/1 dollar < z2").

Thereafter, the price information acquisition part D2312 acquires one or more pieces of related information from the related information storage unit D211, for example. Thereafter, the price information acquisition part D2312, for example, acquires price information corresponding to the predicted demand amount and one or more pieces of related information, from the correspondence table, and obtains reference price information.

Next, as in (2-1), the price information acquisition part D2312 corrects the reference price information to obtain corrected price information, using one or more pieces of information of: temperature information that is contained in weather information regarding each of the days for which the price is to be determined; and weather information.

### (2-3) Machine Learning Method

### (2-3-1) Processing that is Performed to Form Leaner

The price information acquisition part D2312 acquires a learner, using a machine learning algorithm, and using a plurality of sets of: the predicted demand amount in the past; one or more pieces of related information in the past; climate information in the past; and price information in the past, as learning source information, for example. This learner is a learner to which a predicted demand amount, one or more pieces of related information, and climate information are input, and that outputs price information.

More specifically, the price information acquisition part D2312 provides the above learning source information to a module for forming a learner for machine learning, executes the module to form a learner, and accumulates the learner in the storage unit D21. Note that there is no limitation on the machine learning algorithm, which may be, for example, deep learning, random forest, SVR, or the like. In addition, the machine learning module may be any module, such as a TensorFlow module, fastText, TinySvm, any kind of RandomForest function, or the like. The learner may be referred to as a classifier.

### (2-3-2) Processing that is Performed to Acquire Price Information

The price information acquisition part D2312 acquires one or more pieces of related information from the related information storage unit D211, for example. Also, the price information acquisition part D2312 acquires climate information regarding the target day for which price information is to be acquired, from the climate information storage unit A215, for example. Thereafter, the price information acquisition part D2312 acquires price information, using a machine learning algorithm, and using a predicted demand amount, one or more pieces of related information, climate information, and the learner in the storage unit D21. That is to say, the price information acquisition part D2312 forms a vector, using the acquired predicted demand amount, one or more pieces of related information, and climate information, provides the vector and the learner in the storage unit D21 to a module for performing prediction in machine learning, and acquires price information, using a machine learning algorithm. Note that there is no limitation on the machine learning algorithm in the case of such prediction as well, which may be, for example, deep learning, random forest, SVR, or the like. In addition, the machine learning module for prediction may be any module, such as a TensorFlow module, fastText, TinySvm, any kind of RandomForest function, or the like. Note that the "prediction" here means processing through which price information is acquired.

The output unit D24 outputs various kinds of information. Examples of the various kinds of information include price information.

The price information output unit D241 outputs the price information acquired by the price information acquisition unit D231. It is preferable that the price information output unit D241 outputs the price information acquired by the price information acquisition unit D231, in association with date information that specifies the target day for which price information is to be acquired.

In addition, "output" here means accumulation in the storage unit D21, for example. In addition, "output" means transmission to the server apparatus D3, for example. In addition, "output" means display, for example. When "output" means display, the output unit D24 may be regarded as including or not including an output device such as a display or a speaker. The output unit D24 can be realized using the driver software of the output device, the driver software of the output device and the output device, or the like.

The server storage unit D31 included in the server apparatus D3 stores various kinds of information. Examples of the various kinds of information include one or more pieces of price information output by the information processing apparatus D2. Note that one or more pieces of price information typically are associated with date information.

The server output unit D32 outputs the price information stored in the server storage unit D31. The server output unit D32 outputs price information upon receiving a user instruction, for example. "Output" here typically means transmission to a user terminal (not shown), but may include a concept such as display.

The server output unit D32 outputs the price information changed by the price changing part D342. "Output" here typically means transmission to a user terminal (not shown), but may include a concept such as display.

The server reception unit D33 receives a purchase instruction. The purchase instruction is a purchase instruction corresponding to the price information output by the server output unit D32. The purchase instruction contains, for example, a user identifier, amount information that specifies an amount, and date information.

The server processing unit D34 performs futures trading processing, which will be described later, in response to the purchase instruction. In addition, the server processing unit D34 performs price changing processing, which will be described later.

The futures trading part D341 performs futures trading processing. Futures trading processing is processing through which a purchase reservation for the amount of LPG specified by amount information is made at the price specified by price information. Note that a purchase instruction contains, for example, date information, amount information, and price information. In addition, a purchase instruction is associated with a user identifier, for example.

Futures trading processing may be any processing as long as it is processing for purchase reservation for LPG. Futures trading processing is, for example, processing that is performed to form futures trading information that contains a user identifier that identifies a purchaser, price information, amount information, and date information, and accumulates the futures trading information in the server storage unit D31. In addition, futures trading processing is processing that is performed to transmit futures trading information to a terminal that has transmitted the purchase instruction, for example.

The price changing part D342 performs price changing processing. Upon a purchase instruction being accepted, the price changing part D342 acquires price information obtained by changing the price information stored in the server storage unit D31, and accumulates the price information in the server storage unit D31.

The price changing part D342 raises the price specified by the price information paired with the date information included in the purchase instruction, in response to the purchase instruction, acquires the updated price information, and accumulates the updated price information in pair with the date information, for example.

It is preferable that the price changing part D342 changes price information according to the trading volume, for example. The price changing part D342 obtains information regarding the increasing price, using, for example, an increasing function that uses the trading volume on the corresponding day as a parameter, adds the price information to the current price information, and obtains price information that is to be used for update. The price changing part D342 adds a fixed amount to the current price information in response to the purchase instruction being accepted, and obtains price information that is to be used for update, for example. Also, when trading is not performed or the trading amount is below a threshold value for a predetermined period, the price changing part D342 subtracts a fixed amount from the current price information, and obtains price information that is to be used for update, for example.

The server transmission unit D35 transmits various kinds of information. Examples of the various kinds of information include futures trading information, futures trading processing completion notification, and so on. A futures trading processing completion notification is information indicating that futures trading processing is complete. The server transmission unit D35 transmits various kinds of information to the terminal apparatuses D1, for example.

It is preferable that the terminal storage unit D11, the storage unit D21, the gas information storage unit A212, the climate information storage unit A215, the related information storage unit D211, and the server storage unit D31 are realized using a non-volatile recording medium, but they may be realized using a volatile recording medium.

There is no limitation on the process in which information is stored in the terminal storage unit D11 and so on. For example, information may be stored in the terminal storage unit D11 or the like via a recording medium, or information transmitted via a communication line or the like may be stored in the terminal storage unit D11 or the like, or information input via an input device may be stored in the terminal storage unit D11 or the like.

The terminal processing unit D13, the processing unit D23, the gas information accumulation unit A231, the climate information accumulation unit A234, the price information acquisition unit D231, the demand prediction part D2311, the price information acquisition part D2312, the server processing unit D34, the futures trading part D341, and the price changing part D342 can typically be realized using an MPU, a memory, or the like. The processing procedures performed by the terminal processing unit D13 and so on typically are realized using software, and the software is recorded on a recording medium such as a ROM. However, such processing procedures may be realized using hardware (a dedicated circuit).

The terminal transmission unit D14, the output unit D24, the price information output unit D241, and the server transmission unit D35 are realized using a wireless or wired communication means, but may be realized using a broadcast means.

The terminal reception unit D15, the reception unit D22, and the related information reception unit D221 typically are realized using a wireless or wired communication means, but may be realized using a means for receiving broadcast.

The terminal output unit D16 may be regarded as including or not including an output device such as a display or a speaker. The terminal output unit D16 can be realized using the driver software of the output device, the driver software of the output device and the output device, or the like.

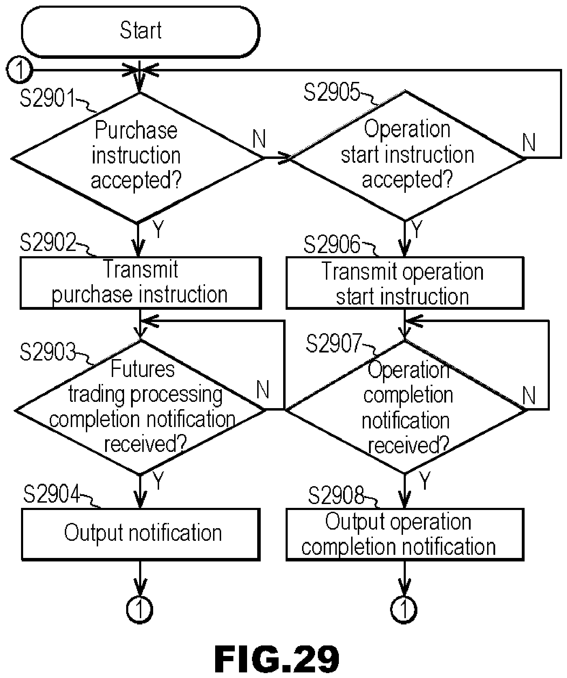

Next, operations that are performed by the information system D will be described. First, examples of operations that are performed by the terminal apparatuses D1 will be described with reference to the flowchart shown in FIG. 29.

(Step S2901) The terminal acceptance unit D12 determines whether or not a purchase instruction has been accepted. If a purchase instruction has been accepted, processing proceeds to step S2902, and if a purchase instruction has not been accepted, processing proceeds to step S2905.

(Step S2902) The terminal processing unit D13 converts the purchase instruction accepted in step S2901, so as to have a structure of a purchase instruction that is to be transmitted. Next, the terminal transmission unit D 14 transmits the purchase instruction to the server apparatus D3.

(Step S2903) The terminal reception unit D15 determines whether or not a futures trading processing completion notification has been received. If a futures trading processing completion notification has been received, processing proceeds to step S2904, and if a futures trading processing completion notification has not been received, processing returns to step S2903.

(Step S2904) The terminal processing unit D13 converts the futures trading processing completion notification received in step S2903, so as to have an information structure that is to be output. The terminal output unit D16 outputs the futures trading processing completion notification. Processing returns to step S2901.

(Step S2905) The terminal acceptance unit D12 determines whether or not an operation start instruction has been accepted. If an operation start instruction has been accepted, processing proceeds to step S2906, and if an operation start instruction has not been accepted, processing returns to step S2901.

(Step S2906) The terminal processing unit D13 converts the operation start instruction accepted in step S2905, so as to have a structure of an operation start instruction that is to be transmitted. Next, the terminal transmission unit D14 transmits the operation start instruction to the information processing apparatus D2.

(Step S2907) The terminal reception unit D15 determines whether or not an operation completion notification has been received from the information processing apparatus D2. If an operation completion notification has been received, processing proceeds to step S2908, and if an operation completion notification has not been received, processing returns to step S2907.

(Step S2908) The terminal processing unit D13 converts the operation completion notification received in step S2907, so as to have a structure of an operation completion notification that is to be output. The terminal output unit D16 outputs the operation completion notification. Processing returns to step S2901.

In the flowchart shown in FIG. 29, processing is terminated when power is turned off or an interruption is made to terminate the processing.

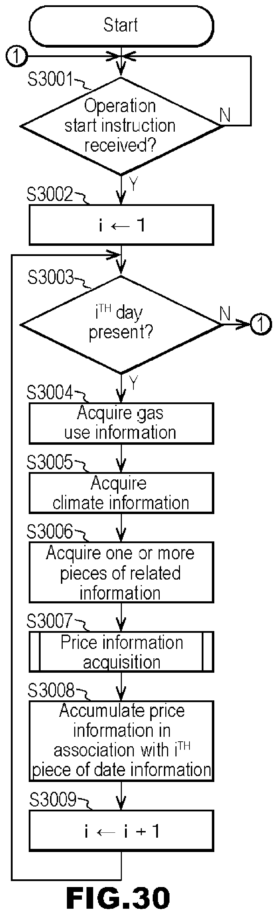

Next, an example of processing that is performed by the information processing apparatus D2 to determine price information will be described with reference to the flowchart shown in FIG. 30.

(Step S3001) The reception unit D22 determines whether or not an operation start instruction has been received. If an operation start instruction has been accepted, processing proceeds to step S3002, and if an operation start instruction has not been accepted, processing returns to step S3001.

(Step S3002) The price information acquisition unit D231 substitutes 1 for the counter i.

(Step S3003) The price information acquisition unit D231 determines whether or not the i^{th} day for which price information is to be determined is present. If the i^{th} day is present, processing proceeds to step S3004, and if the i^{th} day is not present, processing returns to step S3001. Note that the i^{th} day is, for example, the day specified by the i^{th} piece of date information of the pieces of date information contained in the operation start instruction, or a day within a predetermined period (for example, the one-month period of the month three months after today).

(Step S3004) The price information acquisition unit D231 acquires the gas use information to be used to determine price information, from the gas information storage unit A212.

(Step S3005) The price information acquisition unit D231 acquires climate information corresponding to the date information regarding the i^{th} day, from the climate information storage unit A215. Note that the climate information corresponding to the date information regarding the i^{th} day is weather forecast information.

(Step S3006) The price information acquisition unit D231 acquires one or more pieces of related information from the related information storage unit D211.

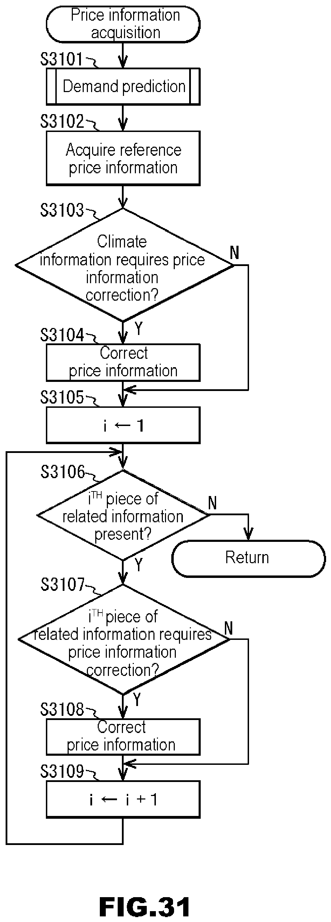

(Step S3007) The price information acquisition unit D231 performs price information acquisition processing. Next, an example of price information acquisition processing will be described with reference to the flowchart shown in FIG. 31.

(Step S3008) The price information acquisition unit D231 accumulates the price information acquired in step S3007 in the storage unit D21 in association with the date information regarding the i^{th} day. Processing returns to step S3001. Note that the price information output unit D241 may transmit the price information acquired in step S3007 to the server apparatus D3 in association with the date information regarding the i^{th} day.

(Step S3009) The price information acquisition unit D231 increments the counter i by 1. Processing returns to step S3004.

In the flowchart shown in FIG. 30, processing is terminated when power is turned off or an interruption is made to terminate the processing.

Next, an example of the price information acquisition processing in step S3007 will be described with reference to the flowchart shown in FIG. 31.

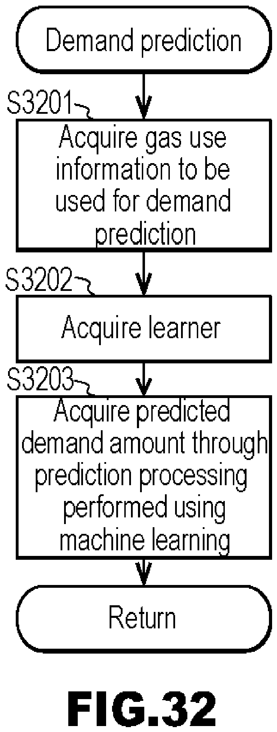

(Step S3101) The demand prediction part D2311 performs demand prediction processing. Demand prediction processing will be described with reference to the flowchart shown in FIG. 32.

(Step S3102) The price information acquisition part D2312 acquires reference price information, using a predicted demand amount, which is the result of the demand prediction processing in step S3101. Note that the price information acquisition part D2312 acquire price information by substituting the predicted demand amount into an increasing function that uses the predicted demand amount as a parameter, and executing the function. Also, the price information acquisition part D2312 acquires the price information paired with the predicted demand amount, from a correspondence table, for example. In such a case, the correspondence table contains two or more pieces of correspondence information that contains the range of the predicted demand amount and price information.

(Step S3103) The price information acquisition part D2312 determines whether or not the acquired climate information is information in which price information needs to be corrected. If the climate information is such information (for example, if the temperature is above a standard temperature by a value no less than a threshold value, or if the temperature is below a standard temperature by a value no less than a threshold value), processing proceeds to step S3104, and if the climate information is not such information, processing proceeds to step S3105.

(Step S3104) The price information acquisition part D2312 corrects the price information. It is preferable that the price information acquisition part D2312 corrects the price information to a different value depending on the climate information.

(Step S3105) The price information acquisition part D2312 substitutes 1 for the counter i.

(Step S3106) The price information acquisition part D2312 determines whether or not the i^{th} related information is present in the acquired related information. If the i^{th} related information is present, processing proceeds to step S3107, and if the i^{th} related information is not present, processing returns to higher level processing.

(Step S3107) The price information acquisition part D2312 acquires the i^{th} related information, and determines whether or not the i^{th} related information is information whose price information needs to be corrected. If the i^{th} related information is information whose price information needs to be corrected, processing proceeds to step S3108, and if the i^{th} related information is information whose price information does not need to be corrected, processing proceeds to step S3109.

(Step S3108) The price information acquisition part D2312 corrects the price information. It is preferable that the price information acquisition part D2312 corrects the price information to a different value depending on the related information.

(Step S3109) The price information acquisition part D2312 increments the counter i by 1. Processing returns to step S3106.

Next, the demand prediction processing in step S3101 will be described with reference to the flowchart shown in FIG. 32.

(Step S3201) The demand prediction part D2311 acquires one or more pieces of gas use information that are to be used to perform demand prediction.

(Step S3202) The demand prediction part D2311 acquires the stored learner from the storage unit D21.

(Step S3203) The demand prediction part D2311 acquires a predicted demand amount, using the gas use information acquired in step S3201 and the learner acquired in step S3202, and a machine learning algorithm. Processing returns to higher level processing.

Although a machine learning algorithm is used in the flowchart in FIG. 32, it is possible to acquire the predicted demand amount instead of using the machine learning algorithm as described above.

The processing performed to form a learner in the flowchart shown in FIG. 32 has been described above, and therefore the description is omitted here.

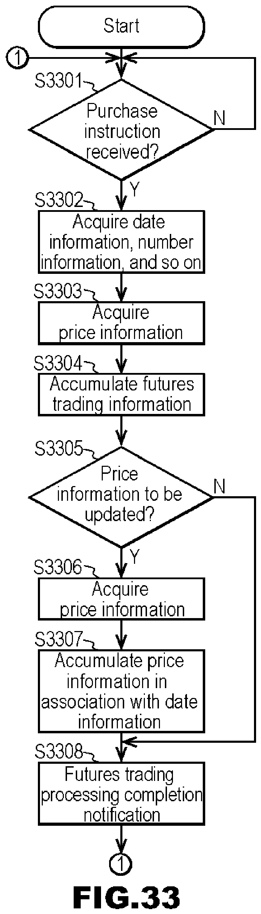

Next, examples of operations that are performed by the server apparatus D3 will be described with reference to the flowchart shown in FIG. 33.

(Step S3301) The server reception unit D33 determines whether or not a purchase instruction has been received from a terminal apparatus D1. If a purchase instruction has been received, processing proceeds to step S3302, and if a purchase instruction has not been received, processing returns to step S3301.

(Step S3302) The futures trading part D341 acquires the date information, the amount information, and so on included in the purchase instruction. Examples of the date information, amount information, and so on include date information, amount information, and a user identifier.

(Step S3303) The futures trading part D341 acquires the price information paired with the date information acquired in step S3302, from the server storage unit D31.

(Step S3304) The futures trading part D341 forms futures trading information that contains a user identifier, price information, amount information, and date information. Thereafter, the server processing unit D34 accumulates the futures trading information in the server storage unit D31. Note that, for example, processing for trading is performed on a later date, using the accumulated futures trading information.

(Step S3305) The price changing part D342 determines whether or not the price information stored in the server storage unit D31 is to be changed. If it is determined that the price information is to be changed, processing proceeds to step S3306, and if it is determined that the price information is not to be changed, processing proceeds to step S3308.

Note that the price changing part D342 acquires, for example, the trading volume on the corresponding day, using one or more pieces of amount information paired with the date information regarding the day, and upon determining that the trading volume is no less than a threshold value or greater than the threshold value, the price changing part D342 determines that the price information is to be changed. Note that the price changing part D342 determines that the price information is to be changed every time the price changing part D342 receives a purchase instruction, for example. Note that the price changing part D342 determines that the price information is to be changed on a day if no trading has been carried out for a period that is no less than a threshold value, for example. It is preferable that the price changing part D342 use one or more pieces of: information regarding the trading volume; and information regarding the frequency of trading, to determine whether or not to change price information, using one or more pieces.

(Step S3306) The price changing part D342 acquires the price information to be changed. It is preferable that the price changing part D342 changes the price information such that the higher the trading volume on the corresponding day is, the higher the price is.

(Step S3307) The price changing part D342 accumulates the updated price information in association with date information.

(Step S3308) The server transmission unit D35 transmits a completion notification regarding the futures trading processing, to the terminal apparatus D1. Processing returns to step S3301.

In the flowchart shown in FIG. 33, processing is terminated when power is turned off or an interruption is made to terminate the processing.

As described above, according to the present embodiment, the price of LPG can be determined using gas use information and climate information.

In addition, according to the present embodiment, the price of LPG can be determined with high accuracy using related information as well.

Furthermore, according to the present embodiment, futures trading of gas can be carried out using gas use information and climate information.

Note that the processing in the present embodiment may be realized using software. This software may be distributed through software downloading or the like. Also, this software may be recorded on a recording medium such as a CD-ROM and distributed. Note that the same applies to the other embodiments in the present description. The software that realizes the information processing apparatus D2 in the present embodiment is the program described below. That is to say, this program is a program that enables a computer that can access a gas information storage unit that stores two or more pieces of gas information that contains gas use information regarding two or more households to function as: a climate information acceptance unit that receives climate information that is associated with time information that specifies time; a price information acquisition unit that acquires price information that specifies a price of LPG per unit amount at the time specified by the time information, using the gas use information regarding two or more households and the weather information; and a price information output unit that outputs the price information acquired by the price information acquisition unit.

### Embodiment 5

The present embodiment describes an information system that includes an information processing apparatus that outputs information regarding the presence in a residence, using gas use information. It is preferable that information regarding the presence in a residence includes presence-in-residence information regarding the degree of presence in a residence. Also, it is preferable that the information processing apparatus outputs presence-in-residence information for each day of the week and each time zone. Information regarding the presence in a residence typically is information regarding the presence of any inhabitant in a residence, in a household.

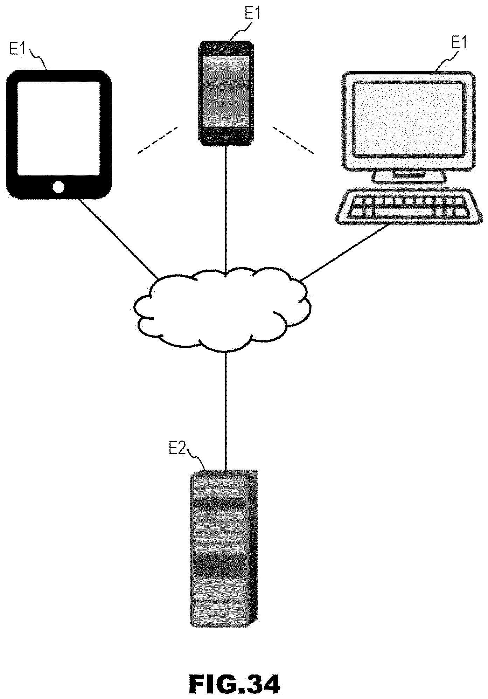

FIG. 34 is a conceptual diagram for an information system E according to the present embodiment. The information system E includes one or more terminal apparatuses E1 and an information processing apparatus E2.

Terminal apparatuses E1 are, for example, terminals that are used by administrators of the information system E, delivery companies, or the like. The terminal apparatuses E1 are, for example, smartphones, tablet terminals, so-called personal computers, or the like, but there is no limitation on the type thereof.

The information processing apparatus E2 is a server apparatus that performs residence stay processing. That is to say, the information processing apparatus E2 is an apparatus that outputs information regarding whether or not an inhabitant is present in a residence. Residence stay processing is processing that is performed to acquire information regarding the presence of any inhabitant in a residence, in a household.

The information processing apparatus E2 can be realized using a so-called cloud server or an ASP server, but there is no limitation on the type thereof. Note that the information processing apparatus E2 may have some or all of the functions of the information processing apparatus A2. That is to say, the information processing apparatus E2 may be an information processing apparatus A2 that performs residence stay processing.

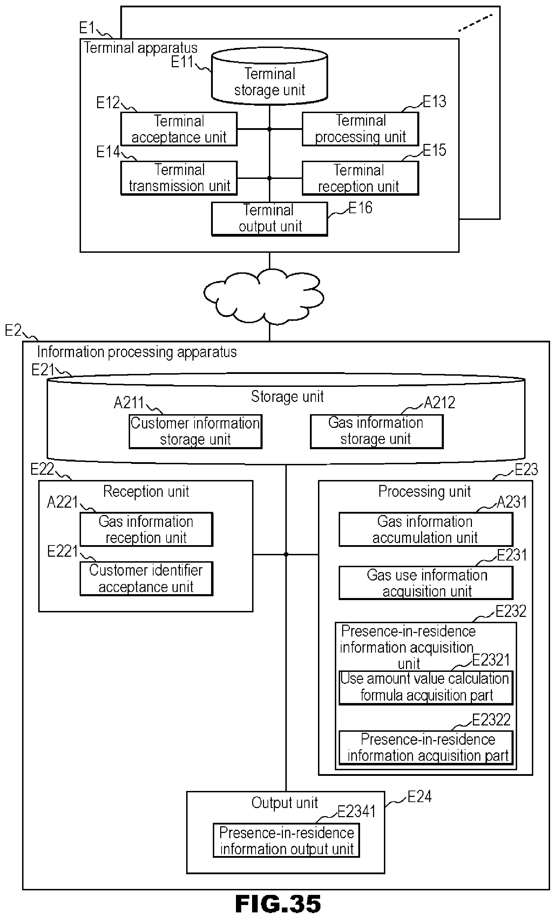

FIG. 35 is a block diagram for the information system E according to the present embodiment.

The terminal apparatuses E1 included in the information system E each include a terminal storage unit E11, a terminal acceptance unit E12, a terminal processing unit E13, a terminal transmission unit E14, a terminal reception unit E15, and a terminal output unit E16.

The information processing apparatus E2 includes a storage unit E21, a reception unit E22, a processing unit E23, and an output unit E24. The storage unit E21 includes the customer information storage unit A211 and the gas information storage unit A212. The reception unit E22 includes the gas information reception unit A221 and a customer identifier acceptance unit E221. The processing unit E23 includes the gas information accumulation unit A231, a gas use information acquisition unit E231, and a presence-in-residence information acquisition unit E232. The presence-in-residence information acquisition unit E232 includes, for example, a use amount value calculation formula acquisition part E2321 and a presence-in-residence information acquisition part E2322. The output unit E24 includes a presence-in-residence information output unit E2341.

The terminal storage unit E11 included in each terminal apparatus E1 stores various kinds of information. Examples of the various kinds of information include a customer identifier and a terminal identifier that identifiers the terminal apparatus E1. Note that the customer identifier is the identifier of a target customer from which presence-in-residence information, which will be described later, is to be acquired.

The terminal acceptance unit E12 accepts various kinds of information, instructions, and so on. Examples of the various kinds of information, instructions, and so on include a customer identifier and a presence-in-residence information output instruction. A presence-in-residence information output instruction is an instruction to output presence-in-residence information. The presence-in-residence information output instruction may or may not contain a customer identifier. A presence-in-residence information output instruction that contains a customer identifier is an instruction to output presence-in-residence information regarding the household of the customer that is identified by the customer identifier. A presence-in-residence information output instruction that does not contain a customer identifier is an instruction to output presence-in-residence information regarding the households of customers that are identified by one or more customer identifiers that are under control.

Any input means may be employed to input various kinds of information, instructions, and so on, such as a touch panel, a keyboard, a mouse, a menu screen, or the like. The terminal acceptance unit E12 can be realized using a device driver for the input means such as a touch panel or a keyboard, or control software or the like for controlling the menu screen.

The terminal processing unit E13 performs various kinds of processing. Examples of the various kinds of processing include processing that is performed by the terminal acceptance unit E12 to convert the various kinds of information, instructions, and so on accepted thereby into a data structure that contains the various kinds of information, instructions, and so on to be transmitted. Examples of the various kinds of processing also include processing that is performed to convert the information received by the terminal reception unit E15 so as to have a data structure that is to be output.

The terminal transmission unit E14 transmits various kinds of information to the information processing apparatus E2. Examples of the various kinds of information include a customer identifier and a presence-in-residence information output instruction.

The terminal reception unit E15 receives various kinds of information. Examples of the various kinds of information include presence-in-residence information.

The terminal output unit E16 outputs various kinds of information. Examples of the various kinds of information include information formed by the terminal processing unit E13. Examples of the various kinds of information include presence-in-residence information.

Here, "output" typically means displaying on a display device, but it is preferable that "output" is regarded as a concept that includes projection with a projector, printing with a printer, sound output, transmission to an external apparatus, accumulation on a recording medium, delivery of processing results to another processing apparatus or another program, and so on.

The storage unit E21 included in the information processing apparatus E2 stores various kinds of information. Examples of the various kinds of information include customer information, gas information, and presence-in-residence information.

The gas information storage unit A212 stores two or more pieces of gas information. Gas information is associated with a customer identifier. The gas information here includes gas use information for two or more days. Also, the gas information here is associated with time information that specifies time. Time information is, for example, time point information that specifies a point in time, time zone information that specifies a time zone, day-of-week information that specifies the day of the week, and date information that specifies a date.

Time information contains time zone information and day-of-week information, for example. That is to say, it is preferable that the gas information storage unit A212 stores two or more pieces of gas information that contain gas use information for each day of the week and each time zone, for two or more weeks. It is preferable that the above time zone is 1 hour (for example, "1 o'clock to 2 o'clock", "2 o'clock to 3 o'clock", etc.), but may be 2 hours, 3 hours, 4 hours, or the like.

The reception unit E22 receives various kinds of information. Examples of the various kinds of information include a customer identifier and a presence-in-residence information output instruction. The reception unit E22 receives a customer identifier or a presence-in-residence information output instruction from a terminal apparatus E1, for example.

The gas information reception unit A221 typically receives gas information from a gas information transmission apparatus A1. However, the gas information reception unit A221 may receive gas information from a server (not shown).

The customer identifier acceptance unit E221 accepts a customer identifier. The customer identifier acceptance unit E221 may accept a presence-in-residence information output instruction that includes a customer identifier.

Here, "acceptance" typically means reception from a terminal apparatus E1, but may be regarded as a concept that includes acceptance of information input from an input device such as a keyboard, a mouse, or a touch panel, or acceptance of information read from a recording medium such as an optical disk, a magnetic disk, or a semiconductor memory.

Acceptance of a customer identifier by the customer identifier acceptance unit E221 may be acquisition of a customer identifier. That is to say, acceptance of a customer identifier by the customer identifier acceptance unit E221 may be reading out of a customer identifier from the customer information storage unit A211.

The terminal processing unit E23 performs various kinds of processing. Examples of the various kinds of processing include processing that is performed by the gas information accumulation unit A231, processing that is performed by the gas use information acquisition unit E231, and processing that is performed by the presence-in-residence information acquisition unit E232.

The gas use information acquisition unit E231 acquires pieces of gas use information as of two or more points in time, paired with one or more customer identifiers, from the gas information storage unit A212. Note that the one or more customer identifiers are, for example, customer identifier accepted by the customer identifier acceptance unit E221.

The gas use information acquisition unit E231 acquires the target gas use information from the gas information storage unit A212, for example. Target gas use information is gas use information that is paired with one or more customer identifiers. Target gas use information is gas use information for each target period. The target period is a day of the week, or a time zone, or a day of the week and a time zone, and is a period corresponding to the presence-in-residence information to be output. Note that the one or more customer identifiers are, for example, customer identifier accepted by the customer identifier acceptance unit E221.

The presence-in-residence information acquisition unit E232 acquires pieces of presence-in-residence information of households that are identified by one or more customer identifiers, using the pieces of gas use information as of two or more points in time acquired by the gas use information acquisition unit E231. Note that the one or more customer identifiers are, for example, customer identifier accepted by the customer identifier acceptance unit E221. In addition, when the amount of use indicated by the gas use information is large, compared to when the amount is small, the presence-in-residence information acquisition unit E232 typically acquires presence-in-residence information that indicates the presence in a residence (for example, a high presence-in-residence score, a high presence-in-residence probability, or prediction information indicating the presence in the residence).

Presence-in-residence information is information regarding whether or not a person belonging to a household is present in their residence. Presence-in-residence information is, for example, information that specifies a presence-in-residence score, or information indicating whether or not the inhabitant is in their residence. A presence-in-residence score is information regarding the degree of presence in a residence. A presence-in-residence score is, for example, a presence-in-residence probability. A presence-in-residence score is, for example, any of the five levels from "1" to "5", any of "A", "B", and "C", a probability from "0%" to "100%", or the like. When the presence-in-residence score is any of the five levels, for example, it is preferable that "5" indicates that the inhabitant is most likely to be present in the residence, and "1" indicates that the inhabitant is least likely to be present in the residence, or vice versa. When the presence-in-residence score is any of "A", "B", and "C", for example, it is preferable that "A" indicates that the inhabitant is most likely to be present in the residence, and "C" indicates that the inhabitant is least likely to be present in the residence, or vice versa. Note that presence-in-residence information may be, for example, information indicating whether or not the residence is vacant.

The presence-in-residence information acquisition unit E232 acquires presence-in-residence information according to the amount of gas used indicated by gas use information per unit time for two or more days, using the pieces of gas use information as of two or more points in time acquired by the gas use information acquisition unit E231, for example.

The presence-in-residence information acquisition unit E232 acquires presence-in-residence information that indicates a stay probability of the inhabitant for each target period, using the target gas use information acquired by the gas use information acquisition unit E231, for example.

Using the pieces of gas use information as of two or more points in time acquired by the gas use information acquisition unit E231, the presence-in-residence information acquisition unit E232 determines that the inhabitant is present in the residence in a time zone in which the amount of gas used indicated by the pieces of gas use information regarding each of the two or more days is large enough to satisfy a predetermined condition, determines that the inhabitant is not present in the residence in a time zone in which the amount of gas used indicated by the pieces of gas use information regarding each of the two or more days is small enough to satisfy a predetermined condition, and acquires presence-in-residence information that is a stay determination result that is the result of determination.

It is preferable that the presence-in-residence information acquisition unit E232 acquires presence-in-residence information for each day of the week and each time zone by using the gas use information for each day of the week and each time zone.

More specifically, the presence-in-residence information acquisition unit E232 acquires presence-in-residence information, using one of the following two algorithms. The first case is when machine learning is not used. The second case is when machine learning is used.

### (1) When Machine Learning is Not Used

### (1-1) When Calculation Formula is Used

The presence-in-residence information acquisition unit E232 acquires the average value of the gas use amount for each day of the week and each time zone, using, for example, two or more pieces of gas use information for each day of the week and each time zone.

Next, the presence-in-residence information acquisition unit E232 calculates presence-in-residence information, which is the probability of the presence in the residence, using, for example, an increasing function that employs the average value of the amount of gas used, as a parameter.

### (1-2) When Correspondence Table is Used

First, it is assumed that the storage unit E21 stores a correspondence table that contains two or more pieces of correspondence information indicating the correspondence between "information regarding the range of the amount of gas used" and "information indicating the probability of the presence in the residence".

Note that correspondence information is information included in the correspondence table, and indicates, for example, "0 <= the amount of use per unit time <x1| 30%", "x1 <= the amount of use per unit time <x2 | 40%", "x2 <= the amount of use per unit time <x3 | 50%", ..., "x4 <= the amount of use per unit time <x5 | 70%", ..., and so on.

In such a situation, the presence-in-residence information acquisition unit E232 acquires the average value of the gas use amount for each day of the week and each time zone, using, for example, two or more pieces of gas use information for each day of the week and each time zone.

Next, the presence-in-residence information acquisition unit E232 determines, for example, "information regarding the range of the amount of gas used" corresponding to the average of the amount of gas used, and acquires, for each day of the week and each time zone, "information indicating the probability of the presence in the residence" that is paired with the "information regarding the range of the amount of gas used".

### (1-3) When Use Amount Value Calculation Formula is Used

When a use amount value calculation formula is used is when the use amount value calculation formula acquisition part E2321 and the presence-in-residence information acquisition part E2322 are used.

First, the presence-in-residence information acquisition unit E232 acquires the average value of the gas use amount for each day of the week and each time zone, using, for example, two or more pieces of gas use information for each day of the week and each time zone.

Thereafter, the use amount value calculation formula acquisition part E2321 acquires a use amount value calculation formula that is a use amount value calculation formula that is a calculation formula for calculating information regarding the amount of gas used, using the acquired pieces of gas use information as of two or more points in time. Here, information regarding the amount of gas used may be the amount of gas used per unit time, or a cumulative amount of gas used. The use amount value calculation formula may include two or more calculation formulas. The use amount value calculation formula includes, for example, two or more calculation formulas for specific time zones. Examples of the use amount value calculation formulas include a linear unit-time calculation formula associated with an identifier that identifies the time.

The use amount value calculation formula acquisition part E2321 acquires a use amount value calculation formula for each customer identifier, for example. The use amount value calculation formula acquisition part E2321 acquires, from the gas information storage unit A212, gas use amount information that is the amount of gas used per unit time, contained in the gas use information paired with a customer identifier, and that is gas use amount information regarding a processing-target period (for example, the month of interest in the last year (for example, March 2018)), for example. Next, the use amount value calculation formula acquisition part E2321 calculates the average value of gas use amount information for each time zone in the processing-target period (average amount of gas used in each time zone), using a plurality of pieces of gas use amount information per unit time for each time zone (for example, 0:00 to 1:00, ..., 6:00 to 7:00, 7:00 to 8:00, ..., 12:00 to 13:00, ..., 17:00 to 18:00, 18:00 to 19:00, ..., 23:00 to 24:00), for example.

Thereafter, the use amount value calculation formula acquisition part E2321 acquires a calculation formula that expresses a graph that has the time zone as the horizontal axis and the average value of gas use information as the vertical axis, and is composed of a set of linear expressions with the average value of each time zone as the passing coordinates. Note that the use amount value calculation formula in such a case is a calculation formula that expresses a so-called bathtub curve.

Note that the use amount value calculation formula acquisition part E2321 may acquire, for example, one approximate calculation formula that passes through the average value, using the average value in each time zone.

Also, the usage value calculation formula acquisition part E2321 may calculate, for example, the cumulative value in each time zone of the average value in each time zone, and acquires a calculation formula that expresses a graph that has the time zone as the horizontal axis and the cumulative value as the vertical axis. That is to say, the use amount value calculation formula acquisition part E2321 need only acquire a calculation formula for calculating the amount of gas to be used in the future, using the gas use amount information in the past.

It is preferable that the use amount value calculation formula acquisition part E2321 acquire a calculation formula for each customer identifier, each day, each week, each month, and each year.

Next, the presence-in-residence information acquisition part E2322 acquires presence-in-residence information, using a use amount value calculation formula that is a use amount value calculation formula acquired by the use amount value calculation formula acquisition part E2321 and is a use amount value calculation formula for the target time zone for which presence-in-residence information is to be acquired.

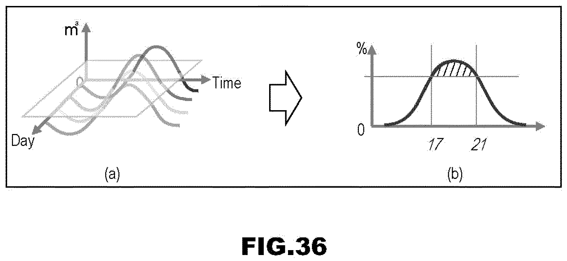

That is to say, the presence-in-residence information acquisition part E2322 acquires presence-in-residence information regarding a time zone (here, from 17:00 to 21:00) at a rate that is no less than a threshold value including the time of the maximum use amount (here, for example, 70%) is acquired as, for example, "the presence-in-residence probability 70%" or "a high possibility of the presence in the residence", using, for example, a graph showing the amount of gas used for each time zone (for example, FIG. 36(b)), which can be acquired from the use value calculation formula acquired by the use amount value calculation formula acquisition part E2321. Note that FIG. 36(a) is a graph showing gas use information for each time zone of two or more days.

### (2) When Machine Learning is Used.

### (2-1) Processing performed to form a leaner

For example, the reception unit E22 receives a customer identifier and a presence-in-residence flag from a terminal (not shown) or a server (not shown) of a delivery company. Thereafter, the processing unit E23 accumulates source information in which a customer identifier, a presence-in-residence flag, and time information are associated with each other, in the storage unit E21. Note that a presence-in-residence flag is information indicating whether or not the inhabitant is present in the residence. Time information may be acquired from a terminal or a server of a delivery company or may be acquired by the processing unit E23 from a clock (not shown). In addition, time information may be time point information or time zone information. Furthermore, it is preferable that pieces of source information contain both a piece of source information (positive example) in which a customer identifier and a presence-in-residence flag that indicates the presence in a residence are associated with each other, and a piece of source information (negative example) in which a customer identifier and a presence-in-residence flag that indicates the absence in the residence are associated with each other. However, only a positive example may be contained. In the case where only a positive example is contained, source information need not contain a presence-in-residence flag.

Next, the processing unit E23 acquires the gas use information corresponding to the customer identifier and time information contained in the source information, from the gas information storage unit A212. Thereafter, the processing unit E23 acquires a plurality of sets each consisting of a piece of gas use information and a presence-in-residence flag contained in the source information, and provides the plurality of sets to the module for forming a learner for machine learning to form a learner, and accumulates it in the storage unit E21, for example. Note that there is no limitation on the machine learning algorithm, which may be, for example, deep learning, random forest, SVR, or the like. In addition, the machine learning module may be any module, such as a TensorFlow module, fastText, TinySvm, any kind of RandomForest function, or the like. The learner may be referred to as a classifier. Such a learner is a learner to which gas use information is input and that outputs a presence-in-residence flag.

### (2-2) Presence-in-residence Information Acquisition Processing

The presence-in-residence information acquisition unit E232 acquires presence-in-residence information, using the pieces of gas use information as of two or more points in time acquired by the gas use information acquisition unit E231, and the learner in the storage unit E21, according to a machine learning algorithm. That is to say, for example, the presence-in-residence information acquisition unit E232 forms a vector that has gas use information as of two or more points, acquired by the gas use information acquisition unit E231, as an element, provides the vector and the learner in the storage unit E21 to the module that performs machine learning prediction, and acquires presence-in-residence information, using a machine learning algorithm. Note that there is no limitation on the machine learning algorithm in the case of such prediction as well, which may be, for example, deep learning, random forest, SVM, or the like. In addition, the machine learning module for prediction may be any module, such as a TensorFlow module, fastText, TinySvm, any kind of RandomForest function, or the like. Note that the "prediction" here means processing through which presence-in-residence information is acquired. Note that, when the machine learning module for prediction outputs a score as well, the score can be a presence-in-residence score. Furthermore, it may be considered that, if the score is normalized to a numerical value from 0 to 1, for example, the probability of the presence in a residence can be obtained.

The presence-in-residence information acquisition unit E232 may acquire presence-in-residence information that indicates whether or not the residence of the household identified by a customer identifier is vacant, using pieces of gas use information as of two or more points in time, for example. That is to say, for example, when the amount of gas used indicated by the pieces of gas use information as of two or more points in time is 0 or no greater than a threshold value or less than the threshold value for no shorter than a predetermined period or longer than the predetermined period, the presence-in-residence information acquisition unit E232 may determine that the household is vacant (the inhabitant is absent for a long period), and acquire presence-in-residence information that indicates whether or not the household is vacant.

The output unit E24 outputs various kinds of information. Examples of the various kinds of information include presence-in-residence information. In addition, here, "output" means transmission to the terminal apparatuses E1, for example. Also, "output" may be, for example, display on a display device or the like, accumulation on a recording medium, or the like.

The presence-in-residence information output unit E2341 outputs the presence-in-residence information acquired by the presence-in-residence information acquisition unit E232. Here, "output" means transmission to the terminal apparatuses E1, for example.

It is preferable that the presence-in-residence information output unit E2341 outputs presence-in-residence information for each day of the week and each time zone.

It is preferable that the terminal storage unit E11, the storage unit E21, the customer information storage unit A211, and the gas information storage unit A212 are realized using a non-volatile recording medium, but they may be realized using a volatile recording medium.

There is no limitation on the process in which information is stored in the terminal storage unit E11 and so on. For example, information may be stored in the terminal storage unit E11 or the like via a recording medium, or information transmitted via a communication line or the like may be stored in the terminal storage unit E11 or the like, or information input via an input device may be stored in the terminal storage unit E11 or the like.

The terminal processing unit E13, the processing unit E23, the gas information accumulation unit A231, the gas use information acquisition unit E231, the presence-in-residence information acquisition unit E232, the use amount value calculation formula acquisition part E2321, and the presence-in-residence information acquisition part E2322 can typically be realized using an MPU, a memory, or the like. The processing procedures performed by the terminal processing unit E13 and so on typically are realized using software, and the software is recorded on a recording medium such as a ROM. However, such processing procedures may be realized using hardware (a dedicated circuit).

The terminal transmission unit E14, the output unit E24, and the presence-in-residence information output unit E2341 typically are realized using a wireless or wired communication means, but may be realized using a broadcast means.

The terminal reception unit E15, the reception unit E22, the gas information reception unit A221, and the customer identifier acceptance unit E221 typically are realized using a wireless or wired communication means, but may be realized using a means for receiving broadcast.

The terminal output unit E16 may be regarded as including or not including an output device such as a display or a speaker. The terminal output unit E16 can be realized using the driver software of the output device, the driver software of the output device and the output device, or the like.

Next, operations that are performed by the information system E will be described. First, operations performed by the terminal apparatuses E1 will be described.

The terminal acceptance unit E12 of each terminal apparatus E1 accepts a presence-in-residence information output instruction, for example. Next, the terminal processing unit E13 forms a presence-in-residence information instruction that is to be transmitted. Next, the terminal transmission unit E14 transmits the formed presence-in-residence information output instruction to the information processing apparatus E2. Next, the terminal reception unit E15 receives presence-in-residence information, in response to the transmission of the presence-in-residence information output instruction, for example. Thereafter, the terminal processing unit E13 forms presence-in-residence information that is to be output, using the received presence-in-residence information. Next, the terminal output unit E16 outputs presence-in-residence information.

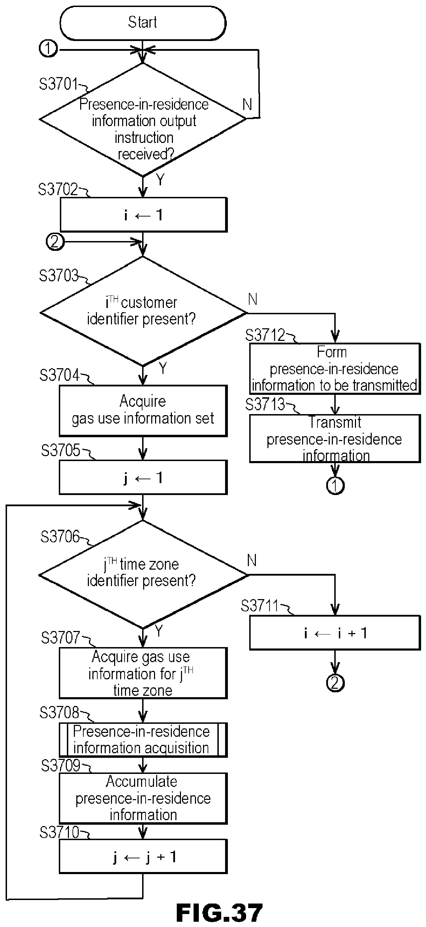

Next, an example of presence-in-residence information acquisition processing that is performed by the information processing apparatus E2 will be described with reference to the flowchart shown in FIG. 37. Note that presence-in-residence information acquisition processing may also be referred to as residence stay processing.

(Step S3701) The customer identifier acceptance unit E221 determines whether or not a presence-in-residence information output instruction has been received from a terminal apparatus E1. If a presence-in-residence information output instruction has been received, processing proceeds to step S3702, and if a presence-in-residence information output instruction has not been received, processing returns to step S3701.

(Step S3702) The presence-in-residence information acquisition unit E232 substitutes 1 for the counter i.

(Step S3703) The presence-in-residence information acquisition unit E232 determines whether or not the i^{th} customer identifier of the target from which presence-in-residence information is to be acquired is present. If the i^{th} customer identifier is present, processing proceeds to step S3704, and if the i^{th} customer identifier is not present, processing proceeds to step S3712. Note that the i^{th} customer identifier of the target from which presence-in-residence information is to be acquired is the i^{th} customer included in a presence-in-residence information output instruction, or the i^{th} customer in the customer information storage unit A211, for example.

(Step S3704) The presence-in-residence information acquisition unit E232 acquires a set of pieces of gas use information paired with the i^{th} customer identifier from the gas information storage unit A212.

(Step S3705) The presence-in-residence information acquisition unit E232 substitutes 1 for a counter j.

(Step S3706) The presence-in-residence information acquisition unit E232 determines whether or not the j^{th} customer identifier of the target from which presence-in-residence information is to be acquired is present. If the j^{th} customer identifier is present, processing proceeds to step S3707, and if the j^{th} customer identifier is not present, processing proceeds to step S3711.

(Step S3707) The presence-in-residence information acquisition unit E232 references the time identifiers paired with the pieces of gas use information, of the set of pieces of gas use information acquired in step S3704, and acquires one or more pieces of gas use information regarding the time zone identified by the j^{th} time zone identifier.

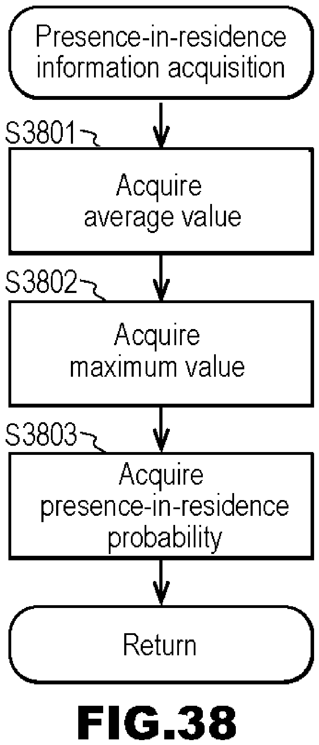

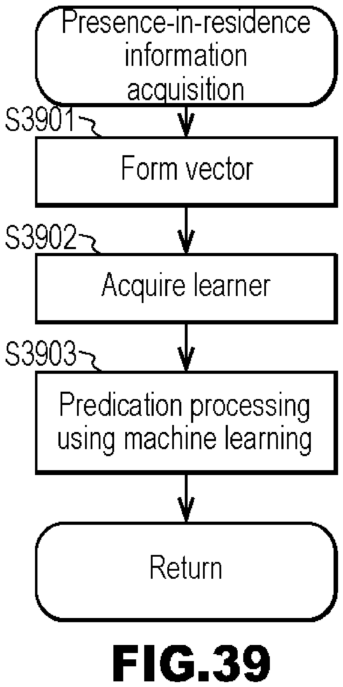

(Step S3708) The presence-in-residence information acquisition unit E232 acquires presence-in-residence information, using the one or more pieces of gas use information acquired in step S3707. An example of presence-in-residence information acquisition processing will be described with reference to the flowcharts shown in FIGS. 38 and 39.

(Step S3709) The presence-in-residence information acquisition unit E232 at least temporarily accumulates the presence-in-residence information acquired in step S3708, in association with the i^{th} customer identifier and the j^{th} time zone identifier.

(Step S3710) The presence-in-residence information acquisition unit E232 increments the counter j by 1. Processing returns to step 3706.

(Step S3711) The presence-in-residence information acquisition unit E232 increments the counter i by 1. Processing returns to step 3703.

(Step S3712) The presence-in-residence information acquisition unit E232 forms presence-in-residence information that is to be transmitted, using the presence-in-residence information accumulated in step S3709. The presence-in-residence information to be transmitted contain, for example, one or more sets each consisting of a customer name paired with a customer identifier, a time zone, and presence-in-residence information (for example, a presence-in-residence probability).

(Step S3713) The presence-in-residence information output unit E2341 transmits the presence-in-residence information formed in step S3712 to the terminal apparatuses E1. Processing returns to step S3701.

In the flowchart shown in FIG. 37, processing is terminated when power is turned off or an interruption is made to terminate the processing.

Next, a first example of the presence-in-residence information acquisition processing in step S3708 will be described with reference to the flowchart shown in FIG. 38.

(Step S3801) The presence-in-residence information acquisition unit E232 calculates the average value of the amount of gas used indicated by two or more pieces of gas use information for the time zone identified by the j^{th} time zone identifier.

(Step S3802) The presence-in-residence information acquisition unit E232 acquires gas use information that indicates the maximum amount of use per unit time (for example, one hour) of the pieces of gas use information paired with the target customer identifier. Note that unit time is the same time as the time zone identified by the time zone identifier.

(Step S3803) The presence-in-residence information acquisition unit E232 acquires a presence-in-residence probability, using the average value of the amounts of gas used acquired in step S3801, and gas use information indicating the maximum amount of use acquired in step S3802. Processing returns to higher level processing.

Note that the presence-in-residence information acquisition unit E232 acquires a higher presence-in-residence probability as the average value of the amounts of gas used acquired in step S3801 is higher. It is preferable that the presence-in-residence information acquisition unit E232 acquires a lower presence-in-residence probability as the gas use information indicating the maximum amount of use is higher. The presence-in-residence information acquisition unit E232 may use, for example, a function that employs the average value of the amounts of use and gas use information that indicates the maximum amount of use as parameters, to calculate a presence-in-residence probability. In addition, the presence-in-residence information acquisition unit E232 may acquire, for example, the presence-in-residence probability corresponding to the average value of the amounts of use and gas use information that indicates the maximum amount of use, from a correspondence table.

Next, a second example of the presence-in-residence information acquisition processing in step S3708 will be described with reference to the flowchart shown in FIG. 39. The second example is when machine learning is used.

(Step S3901) The presence-in-residence information acquisition unit E232 forms a vector that has, as an element, the amount of gas used indicated by two or more pieces of gas use information for the time zone identified by the j^{th} time zone identifier.

(Step S3902) The presence-in-residence information acquisition unit E232 acquires the prestored learner from the storage unit E21.

(Step S3903) The presence-in-residence information acquisition unit E232 provides the vector formed in step S3901 and the learner acquired in step S3902 to the module that performs machine learning prediction processing, and acquires the result. Note that the result of prediction may be a presence-in-residence score, or information that indicate whether or not the inhabitant is present in the residence ("0" or "1").

As described above, according to the present embodiment, it is possible to acquire presence-in-residence information regarding the presence in the residence of an inhabitant, based on LPG use status.

Furthermore, according to the present embodiment, it is possible to acquire a presence-in-residence score, which is a score regarding the presence in the residence of an inhabitant, and a stay probability, which is a presence-in-residence probability, based on the LPG use status, and therefore it is possible to accurately and precisely grasp the inhabitant's stay status based on the LPG use status.

Note that the processing in the present embodiment may be realized using software. This software may be distributed through software downloading or the like. Also, this software may be recorded on a recording medium such as a CD-ROM and distributed. Note that the same applies to the other embodiments in the present description. The software that realizes the information processing apparatus E2 in the present embodiment is the program described below. That is to say, this program is a program that enables a computer that can access a gas information terminal storage unit that stores two or more pieces of gas information that include gas use information that is gas use information for two or more days and is associated with time information that specifies a time, in association with a customer identifier that identifies a customer, to function as: a customer identifier acceptance unit that accepts a customer identifier; a gas use information acquisition unit that acquires pieces of gas use information as of two or more points in time, paired with the customer identifier accepted by the customer identifier acceptance unit, from the gas information storage unit; a presence-in-residence information acquisition unit that acquires presence-in-residence information regarding whether or not an inhabitant in a household that is identified by the customer identifier accepted by the customer identifier acceptance unit is present in the residence, using the pieces of gas use information as of two or more points in time acquired by the gas use information acquisition unit; and a presence-in-residence information output unit that outputs the presence-in-residence information acquired by the presence-in-residence information acquisition unit.

### Embodiment 6

The present embodiment describes an information system that includes an information processing apparatus that proposes an energy consumption plan, using gas use information and electricity use information.

The present embodiment also describes an information system that includes an information processing apparatus that proposes an energy consumption plan, using gas use information, electricity use information, and climate information.

In addition, the present embodiment describes an information system that includes an information processing apparatus that performs control to switch between energy appliances and so on based on an energy consumption plan.

Furthermore, the present embodiment describes an information system that includes information processing apparatus that, for example, proposes an energy consumption plan for each time zone, or performs control to switch between energy appliances and so on for each time zone.

Note that the proposal of an energy consumption plan is, for example, a proposal of selection of a medium that is the type of energy that is to be used, a proposal of selection of an appliance related to energy that is to be used, and a proposal of selection of an energy company that is to be used.

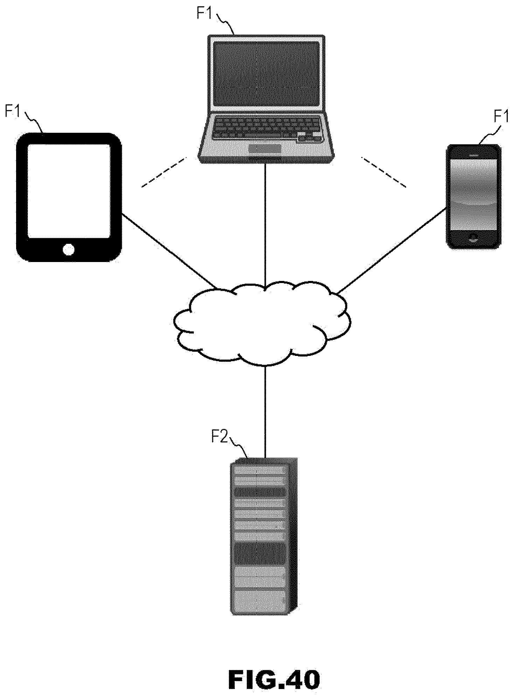

FIG. 40 is a conceptual diagram for an information system F according to the present embodiment. The information system F includes one or more terminal apparatuses F1 and an information processing apparatus F2.

The terminal apparatuses F1 are terminals that output an energy consumption plan. The terminal apparatuses F1 are, for example, smartphones, tablet terminals, so-called personal computers, or the like, but there is no limitation on the type thereof.

The information processing apparatus F2 is an apparatus that acquires an energy consumption plan. The information processing apparatus F2 can be realized using a so-called cloud server or an ASP server, but there is no limitation on the type thereof.

The information processing apparatus F2 may have some or all of the functions of the information processing apparatus A2. That is to say, the information processing apparatus F2 may be an information processing apparatus A2 that performs energy optimum plan presentation processing. Note that energy optimum plan presentation processing does not have to guarantee the optimum plan, and it suffices if the apparatus proposes a plan that the apparatus determines as appropriate. Therefore, optimum plan presentation processing may also be preferred to energy plan presentation processing when appropriate.

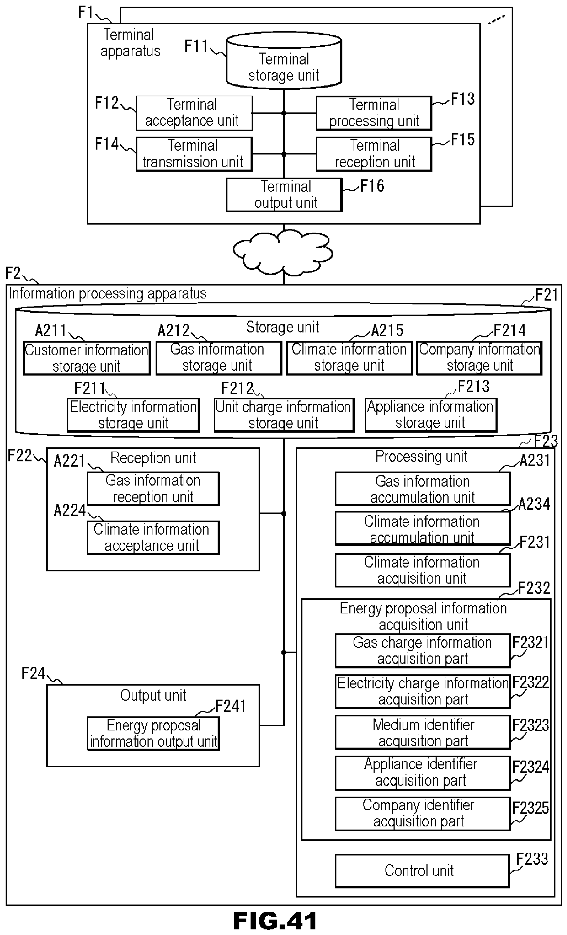

FIG. 41 is a block diagram for the information system F according to the present embodiment.

The terminal apparatuses F1 included in the information system F each include a terminal storage unit F11, a terminal acceptance unit F12, a terminal processing unit F13, a terminal transmission unit F14, a terminal reception unit F15, and a terminal output unit F16.

The information processing apparatus F2 includes a storage unit F21, a reception unit F22, a processing unit F23, and an output unit F24. The storage unit F21 includes the customer information storage unit A211, the gas information storage unit A212, the climate information storage unit A215, an electricity information storage unit F211, a unit charge information storage unit F212, an appliance information storage unit F213, and a company information storage unit F214. The reception unit F22 includes the gas information reception unit A221 and the climate information acceptance unit A224. The processing unit F23 includes the gas information accumulation unit A231, the climate information accumulation unit A234, a climate information acquisition unit F231, an energy proposal information acquisition unit F232, and a control unit F233. The energy proposal information acquisition unit F232 includes a gas charge information acquisition part F2321, an electricity charge information acquisition part F2322, a medium identifier acquisition part F2323, an appliance identifier acquisition part F2324, and a company identifier acquisition part F2325. The output unit F24 includes an energy proposal information output unit F241.

The terminal storage unit F11 included in each terminal apparatus F1 stores various kinds of information. Examples of the various kinds of information include a customer identifier. Note that a customer identifier typically is a household identifier that identifies a household. Here, a customer identifier is information that specifies the head of a household, for example.

The terminal acceptance unit F12 accepts instructions, information, and so on. Examples of instructions, information, and so on include a customer identifier and an energy plan presentation instruction. An energy plan presentation instruction is an instruction to perform energy proposal processing. An energy plan presentation instruction is an instruction that prompts to output energy proposal in formation, which will be described later. The energy plan presentation instruction may contain a customer identifier that specifies a household for which energy proposal information is to be acquired, or may contain no customer identifier. If an energy plan presentation instruction does not contain a customer identifier, the energy plan presentation instruction is an instruction to acquire energy proposal information regarding the households identified by all of the customer identifiers that are under control, for example. Note that any input means may be employed to input an instruction, information, and so on, such as a touch panel, a keyboard, a mouse, a menu screen, or the like.

The terminal processing unit F13 performs various kinds of processing. Examples of the various kinds of information include processing that is performed to convert the instruction, information, and so on accepted by the terminal acceptance unit F12 to an instruction, information, and so on that have a data structure that is to be transmitted. Examples of the various kinds of processing include processing that is performed to convert the information received by the terminal reception unit F15 so as to have a data structure that is to be output.

The terminal transmission unit F14 transmits various kinds of instructions, information, and so on to the information processing apparatus F2. Examples of instructions, information, and so on include a customer identifier and an energy plan presentation instruction.

The terminal reception unit F15 receives various kinds of information, and so on from the information processing apparatus F2. Examples of the various kinds of information and so on include a customer identifier and energy proposal information. Energy proposal information is information regarding a proposal regarding energy. Energy proposal information is information that indicates a proposal regarding energy that is to be used. Examples of energy proposal information include a medium identifier, an appliance identifier, and a company identifier. Examples of energy proposal information include a medium identifier for each time zone, an appliance identifier for each time zone, and a company identifier for each time zone.

Note that a medium identifier is information that identifiers an energy medium (may also be referred to as a "type"). A medium identifier is, for example, "gas", "LPG", "electricity", or the like, but any identifier such as an ID may be used as long as the medium can be identified.

An appliance identifier is information that identifies an energy appliance. An appliance identifier is, for example, "gas fan heater", "gas floor heating", "electric stove", "oil heater" or the like, but any identifier such as an ID may be used as long as the appliance can be identified. Note that an appliance identifier typically is associated with a medium identifier.

A company identifier is information that identifies an energy supplier company. A company identifier is, for example, "company A", "company X", or the like, but any identifier such as an ID may be used as long as it can identify the company.

The terminal output unit F16 outputs various kinds of information and so on. Examples of the various kinds of information and so on include an information set consisting of a customer identifier and energy proposal information. Here, "output" typically means displaying on a display device, but may be regarded as a concept that includes projection with a projector, printing with a printer, sound output, transmission to an external apparatus, accumulation on a recording medium, delivery of processing results to another processing apparatus or another program, and so on.

The storage unit F21 included in the information processing apparatus F2 stores various kinds of information. Examples of the various kinds of information include customer information described later, gas information, climate information, electricity information described later, unit charge information described later, appliance information described later, and company information described later. Examples of various kinds of information include gas conversion information and electricity conversion information.

Gas conversion information is, for example, information that is used to convert the amount of gas used into the amount of electricity used with the same energy. Gas conversion information is, for example, information that is used to convert the amount of gas used (the unit thereof is, for example, "m³") into an amount in a common energy unit (the unit thereof is, for example, "Joule"). Gas conversion information is, for example, a constant that is used to convert the amount of gas used (the unit thereof is, for example, "m³") to raise the temperature of a space of one size (for example, 1 m³, 8 tatami mats) by one degree, to the amount of use in a common energy unit (the unit is, for example, "Joule") to raise the temperature of the space of one size by one degree. Gas conversion information is, for example, a constant that is used to convert the amount of gas used (the unit thereof is, for example, "m³") to raise the temperature of a space of one size (for example, 1 m³, 8 tatami mats) by one degree, to the amount of electricity used (the unit thereof is, for example, "kw") to raise the temperature of the space of one size by one degree.

Electricity conversion information is, for example, information that is used to convert the amount of electricity used into the amount of gas used with the same energy. Electricity conversion information is, for example, information that is used to convert the amount of gas used (the unit thereof is, for example, "kw") into an amount in a common energy unit (the unit is, for example, "Joule"). Electricity conversion information is, for example, a constant that is used to convert the amount of electricity (the unit thereof is, for example, "kw") required to raise a space of one size (for example, 1 m³, 8 tatami mats) by one degree, to the amount of use in a common energy unit (the unit is, for example, "Joule"). Electricity conversion information is, for example, a constant that is used to convert the amount of electricity used (the unit thereof is, for example, "kw") to raise the temperature of a space of one size (for example, 1 m³, 8 tatami mats) by one degree, to the amount of gas used (the unit thereof is, for example, "m³") to raise the temperature of the space of one size by one degree.

Note that, when electricity conversion information or gas conversion information can be calculated from gas conversion information or electricity conversion information (for example, when gas conversion information is the inverse of electricity conversion information), only one of gas conversion information and electricity conversion information may be stored.

The customer information storage unit A211 stores one or more pieces of customer information each in association with a customer identifier. Note that customer information is information regarding a customer, and is information paired with a customer identifier. Customer information contains, for example, one or more medium identifiers that identify the medium used by the customer (for example, "LPG" and "electricity"), one or more appliance identifiers of energy appliances owned by the customer (for example, "gas appliance A", "electric appliance B", and "appliance C"), and one or more company identifiers that identify the energy companies with which the customer has a contract (for example, "company A").

The gas information storage unit A212 stores two or more pieces of gas information that include gas use information. The two or more pieces of gas information are each associated with a customer identifier. Gas use information is information regarding the use of gas. Gas information includes, for example, information regarding the amount of gas used.

The climate information storage unit A215 stores one or more pieces of climate information that is associated with time information (typically, date information).

The electricity information storage unit F211 stores two or more pieces of electricity information that include time-series electricity use information regarding electricity used by a customer. The related information storage unit F211 stores one or more pieces of related information. Electricity use information is information regarding the use of electricity. Electricity use information is information from which the amount of electricity used can be known. The customer identifier associated with gas information and the customer identifier associated with electricity information typically are the same, but may be different identifiers. When the customer identifier associated with gas information and the customer identifier associated with electricity information are different identifiers, the customer identifier associated with gas information and the customer identifier associated with electricity information are associated with each other using information that associates the two identifiers with each other (for example, a common identifier, link information, personal information such as address, or My Number).

The unit charge information storage unit F212 stores two or more pieces of unit charge information. Unit charge information is information that specifies the charge per unit amount of energy. Unit charge information is, for example, unit gas charge information that specifies a gas charge per unit amount, and unit electricity charge information that specifies an electricity charge per unit amount. It is preferable that unit charge information is associated with a company identifier, for example. In addition, unit charge information is associated with a medium identifier, for example. Note that the unit amount of gas is, for example, "m³" or "Joule". The unit amount of electricity is, for example, "kw" or "Joule".

It is preferable that the unit charge information storage unit F212 stores one or more pieces of unit charge information for each time zone from which a unit charge for each time zone can be obtained. Unit charge information per time zone typically is associated with a time zone identifier that specifies a time zone.

It is preferable that the unit charge information storage unit F212 stores two or more pieces of unit charge information that specify the charge per unit amount of the energy provided by two or more companies, in association with the medium identifier that specifies the type of the energy. In such a case, unit charge information typically is associated with a medium identifier and a company identifier.

It is preferable that the unit charge information storage unit F212 stores unit charge information for each time zone from which a unit charge for each time zone can be obtained, for two or more companies. In such a case, unit charge information for each time zone is, for example, associated with a time zone identifier and a company identifier.

The unit charge information storage unit F212 may store unit charge information for each time zone from which a unit charge for each medium and for each time zone can be obtained, for two or more companies. In such a case, unit charge information for each time zone is, for example, associated with a time zone identifier, a medium identifier, and a company identifier.

It is preferable that the unit charge information storage unit F212 stores unit charge information for each time zone, for two or more kinds of energy that at least include gas and electricity. In such a case, unit charge information for each time zone is, for example, associated with a time zone identifier and a medium identifier.

The appliance information storage unit F213 stores one or more pieces of appliance information. Appliance information is information regarding an energy appliance. Examples of energy appliances include a gas fan heater, an electric fan heater, a gas stove, an electric stove, a gas floor heating, an electric floor heating, an air conditioner, and the so on, and there is no limitation on the type thereof. Appliance information contains an appliance identifier and performance information. An appliance identifier is information that identifies an appliance. Performance information is information that specifies the performance of an energy appliance. Performance information indicates, for example, the amount of energy that is required to raise or lower the temperature per certain area (for example, 1 square meter) by a certain degree (for example, one degree), but another indicator may be used. Appliance information typically is associated with a medium identifier. Note that being associated with information may mean including the information.

The company information storage unit F214 stores one or more pieces of company information. Company information is information regarding a company that supplies energy. Company information contains a company identifier that identifies a company that supplies energy. It is preferable that company information is associated with a medium identifier that specifies the type of energy supplied by the company.

The reception unit F22 receives various kinds of information. Examples of the various kinds of information include a customer identifier, an energy plan presentation instruction, gas information, and electricity information.

The processing unit F23 performs various kinds of processing. Examples of the various kinds of processing include processing that is performed by the gas information accumulation unit A231, processing that is performed by the climate information accumulation unit A234, processing that is performed by the climate information acquisition unit F231, processing that is performed by the energy proposal information acquisition unit F232, and processing that is performed by the control unit F233.

The climate information acquisition unit F231 acquires climate information regarding climate. The climate information acquisition unit F231 acquires, from the climate information storage unit A215, climate information that is paired with the time information (for example, date information or time point information) that specifies the time (for example a day, a time point, or a time zone) for which an energy proposal is to be provided.

The energy proposal information acquisition unit F232 acquires energy proposal information that indicates a proposal regarding energy that is to be used, using time-series gas use information and time-series electricity use information. Note that time-series gas use information is two or more pieces of gas use information corresponding to different pieces of time information. Note that time-series electricity use information is two or more pieces of electricity use information corresponding to different pieces of time information.

The energy proposal information acquisition unit F232 acquires the medium identifier that specifies the cheapest energy of two or more kinds of energy, using time-series gas use information and time-series electricity use information, for example.

The energy proposal information acquisition unit F232 acquires, for each time zone, the medium identifier that specifies the cheapest energy of two or more kinds of energy, using gas use information for each time zone, electricity use information for each time zone, and unit charge information for each time zone, for example.

The energy proposal information acquisition unit F232 acquires a gas use representative value (for example, the unit thereof is "m³") from time-series gas use information, for example. A gas use representative value is, for example, the cumulative value, average value, maximum value, or the like of two or more pieces of gas use information. Also, the energy proposal information acquisition unit F232 acquires an electricity use representative value (for example, the unit thereof is "kw") from time-series electricity use information, for example. An electricity use representative value is, for example, the cumulative value, average value, maximum value, or the like of two or more pieces of electricity use information. The energy proposal information acquisition unit F232 acquires gas charge information that indicates the charge corresponding to the gas use representative value, using the gas use representative value and the unit charge information corresponding to the medium identifier "gas" in the unit charge information storage unit F212, for example. Also, the energy proposal information acquisition unit F232 acquires electricity charge information that indicates the charge corresponding to the electricity use representative value, using the electricity use representative value and the unit charge information corresponding to the medium identifier "electricity" in the unit charge information storage unit F212, for example.

Also, the energy proposal information acquisition unit F232 converts the gas use representative value into the amount of electricity used, using gas conversion information, and acquires the electricity charge information corresponding to the amount of electricity used, using the unit charge information corresponding to the medium identifier "electricity". Thereafter, if "electricity charge information < gas charge information" is satisfied, the energy proposal information acquisition unit F232 acquires energy proposal information that proposes to change the use of "gas" to the use of "electricity".

The energy proposal information acquisition unit F232 converts the electricity use representative value into the amount of gas used, using electricity conversion information, and acquires the gas charge information corresponding to the amount of gas used, using the unit charge information corresponding to the medium identifier "gas". Thereafter, if "gas charge information < electricity charge information" is satisfied, the energy proposal information acquisition unit F232 acquires energy proposal information that proposes to change the use of "electricity" to the use of "gas".

Also, the energy proposal information acquisition unit F232 converts the gas use representative value into an amount in a common energy unit (for example, "Joule"), using gas conversion information, and acquires the electricity charge information corresponding to the amount in the common unit, using the unit charge information corresponding to the medium identifier "electricity". Thereafter, if "electricity charge information < gas charge information" is satisfied, the energy proposal information acquisition unit F232 acquires energy proposal information that proposes to change the use of "gas" to the use of "electricity".

Also, the energy proposal information acquisition unit F232 converts the gas use representative value into an amount in a common unit (for example, "Joule"), using electricity conversion information, and acquires the gas charge information corresponding to the amount in the common unit, using the unit charge information corresponding to the medium identifier "gas". Thereafter, if "gas charge information < electricity charge information" is satisfied, the energy proposal information acquisition unit F232 acquires energy proposal information that proposes to change the use of "electricity" to the use of "gas".

The energy proposal information acquisition unit F232 acquires energy proposal information, using the climate information acquired by the climate information acquisition unit F231, time-series gas use information, and time-series electricity use information, for example.

For example, upon determining that the climate information acquired by the climate information acquisition unit F231 is low enough to satisfy a predetermined condition (for example, "the temperature at the time of the target is no higher than a threshold value" or "the predicted temperature of the target day or month is no higher than a threshold value"), the energy proposal information acquisition unit F232 makes a correction to increase the gas use representative value that can be acquired using time-series gas use information and the electricity use representative value that can be acquired using time-series electricity use information, acquires gas charge information and electricity charge information according to the above-described algorithm, using the corrected gas use representative value and the corrected electricity use representative value, and if "gas charge information < electricity charge information", for example, the energy proposal information acquisition unit F232 acquires energy proposal information that proposes to change the use of "electricity" to the use of "gas".

The energy proposal information acquisition unit F232 acquires the appliance identifier corresponding to the cheapest energy, using time-series gas use information, time-series electricity use information, and performance information that is contained in appliance information.

The energy proposal information acquisition unit F232 acquires the appliance identifier corresponding to the cheapest energy for each time zone, using gas use information for each time zone, electricity use information for each time zone, unit charge information for each time zone, and performance information that is contained in appliance information.

The energy proposal information acquisition unit F232 acquires the company identifier of the company that supplies the cheapest energy of the companies that supply energy, using time-series gas use information, time-series electricity use information, company information, and unit charge information, for example.

The energy proposal information acquisition unit F232 acquires the company identifier corresponding to the company that supplies the cheapest energy, using gas use information for each time zone, electricity use information for each time zone, and unit charge information for each time zone, for example.

The gas charge information acquisition part F2321 acquires gas charge information that specifies the charge for the use of gas, using time-series gas use information and unit gas charge information, for example. It is preferable that the gas charge information acquisition part F2321 uses gas use information for each time zone and unit gas charge information for each time zone to acquire gas charge information for each time zone, for example.

The gas charge information acquisition part F2321 acquires gas charge information for each of one or more companies, using time-series gas use information, and unit charge information associated with the gas medium identifier and the company identifier, for example.

The gas charge information acquisition part F2321 acquires a gas use representative value, using time-series gas use information, for example. Thereafter, the gas charge information acquisition part F2321 acquires, for example, the unit charge information associated with the medium identifier "gas" and the company identifier of each company, from the unit charge information storage unit F212, and acquires the gas charge information of each company, corresponding to the gas use representative value, using the unit charge information. If unit charge information includes information sets each consisting of gas use range information and gas unit amount change information, the gas charge information acquisition part F2321 specifies the gas use range information corresponding to the gas use representative value, acquires a piece of gas unit amount charge information that is paired with the gas use range information, and multiplies the gas unit amount charge information and the gas use representative value with each other to calculate gas charge information.

Gas charge information acquisition part F2321 may acquire gas charge information for each time zone for each of one or more companies, using gas use information for each time zone and unit charge information for each time zone associated with the gas medium identifier and the company identifier, for example. In such a case, unit charge information is the gas charge per unit amount.

The gas charge information acquisition part F2321 acquires a gas use representative value, using time-series gas use information, for example. Thereafter, the gas charge information acquisition part F2321 acquires, for example, unit charge information that is paired with the medium identifier "gas", the company identifier, and time zone identifier for each time zone, from the unit charge information storage unit F212. Thereafter, the gas charge information acquisition part F2321 multiplies the gas use representative value with the unit charge information, to calculate the gas charge information for each time zone and for each company.

The electricity charge information acquisition part F2322 acquires electricity charge information that specifies the charge for the use of electricity, using time-series electricity use information and unit electricity charge information.

The electricity charge information acquisition part F2322 acquires an electricity use representative value, using time-series electricity use information, for example. Thereafter, the electricity charge information acquisition part F2322 acquires electricity charge information, using the electricity use representative value and unit electricity charge information, for example. Note that the electricity charge information acquisition part F2322 acquires electricity charge information by multiplying the electricity use representative value and unit electricity charge information with each other, for example. Note that the processing performed by the electricity charge information acquisition part F2322 may be the same as the processing performed by the gas charge information acquisition part F2321.

The electricity charge information acquisition part F2322 may use electricity use information for each time zone and unit electricity charge information for each time zone to acquire electricity charge information for each time zone.

The electricity charge information acquisition part F2322 acquires electricity charge information for each company, using time-series electricity use information, and unit charge information associated with the electricity medium identifier and one or more company identifiers, for example.

The electricity charge information acquisition part F2322 may acquire electricity charge information for each time zone for each of one or more companies, using electricity use information for each time zone, and unit charge information for each time zone associated with electricity medium identifier and one or more company identifiers.

The medium identifier acquisition part F2323 acquires the medium identifier that specifies the cheapest energy of two or more kinds of energy, using time-series gas use information and time-series electricity use information.

The medium identifier acquisition part F2323 acquires the medium identifier that specifies the cheapest energy of two or more kinds of energy, using gas use information and electricity use information, for example. Note that such a medium identifier is included in energy proposal information.

The medium identifier acquisition part F2323 acquires, for each time zone, the medium identifier that specifies the cheapest energy of two or more kinds of energy, using gas use information for each time zone, electricity use information for each time zone, and unit charge information for each time zone, for example.

The medium identifier acquisition part F2323 may acquire, for each time zone, the medium identifier that specifies the cheapest energy of two or more kinds of energy, using gas charge information for the corresponding time zone, and electricity charge information for the corresponding time zone. The medium identifier acquisition part F2323 compares, for each time zone, gas charge information for the corresponding time zone and electricity charge information for the corresponding time zone, and acquires the medium identifier of the energy corresponding to the smaller information.

The appliance identifier acquisition part F2324 acquires the appliance identifier corresponding to the cheapest energy, using time-series gas use information, time-series electricity use information, and performance information that is contained in appliance information.

The appliance identifier acquisition part F2324 acquires the appliance identifier that specifies the appliance corresponding to the cheapest energy of two or more kinds of energy, using gas use information and electricity use information.

The appliance identifier acquisition part F2324 acquires the appliance identifier corresponding to the cheapest energy for each time zone, using gas use information for each time zone, electricity use information for each time zone, unit charge information for each time zone, and performance information that is contained in appliance information, for example.

The appliance identifier acquisition part F2324 acquires the appliance identifier that is the appliance identifier paired with the medium identifier acquired by the medium identifier acquisition part F2323 and that is the appliance identifier paired with the customer identifier of the target customer of the proposal. The appliance identifier acquisition part F2324 acquires the appliance identifier that is paired with the medium identifier of one or more appliance identifiers paired with the customer identifiers with reference to the appliance information stored in the storage unit F21.

When there are two or more appliance identifiers that are each the appliance identifier paired with the medium identifier acquired by the medium identifier acquisition part F2323 and that are each the appliance identifier paired with the customer identifier of the target customer of the proposal, the appliance identifier acquisition part F2324 acquires the appliance identifier that is paired with higher performance information of the two or more appliance identifiers.

It is preferable that the appliance identifier acquisition part F2324 acquires, for each time zone, the appliance identifier that specifies the cheapest energy of two or more kinds of energy, using gas charge information for the corresponding time zone, and electricity charge information for the corresponding time zone.

For example, the medium identifier acquisition part F2323 acquires the medium identifier of the cheaper medium for the same energy (for example, the same Joule) for each time zone, using gas charge information for the corresponding time zone and electricity charge information for the corresponding time zone, for each time zone. Thereafter, the appliance identifier acquisition part F2324 acquires the appliance identifier that is paired with the customer identifier of the target customer of the proposal, for each time zone, for example. Note that, even in such a case, if there are two or more appliance identifiers of cheaper media, paired with the customer identifier of the target customer of the proposal, the appliance identifier acquisition part F2324 acquire the appliance identifier paired with higher performance information of the two or more appliance identifiers.

The company identifier acquisition part F2325 acquires the company identifier of the company that supplies the cheapest energy of the companies that supply energy, using time-series gas use information, time-series electricity use information, company information, and unit charge information, for example.

The company identifier acquisition part F2325 acquires the company identifier that specifies the cheapest energy of two or more kinds of energy, using gas use information and electricity use information. The company identifier acquisition part F2325 acquires the company identifier that specifies the cheapest energy of two or more kinds of energy, typically using unit charge information, gas use information and electricity use information paired with the two or more company identifiers.

The company identifier acquisition part F2325 acquires the company identifier corresponding to the company that supplies the cheapest energy, using gas use information for each time zone, electricity use information for each time zone, and unit charge information for each time zone, for example.

For example, the medium identifier acquisition part F2323 acquires the medium identifier of the cheaper medium for the same energy (for example, the same Joule), using gas charge information and electricity charge information. Thereafter, the company identifier acquisition part F2325 acquires the company identifier corresponding to the cheapest unit charge information with reference to the unit charge information corresponding to the company identifier paired with the acquired medium identifier.

It is preferable that the company identifier acquisition part F2325 acquires, for each time zone, the company identifier that specifies the cheapest energy of two or more kinds of energy, using gas charge information for the corresponding time zone, and electricity charge information for the corresponding time zone.

For example, the medium identifier acquisition part F2323 acquires the medium identifier of the cheaper medium for the same energy (for example, the same Joule) for each time zone, using gas charge information for the corresponding time zone and electricity charge information for the corresponding time zone, for each time zone. Thereafter, the company identifier acquisition part F2325 acquires the company identifier corresponding to the cheapest unit charge information with reference to the time zone unit charge information corresponding to the company identifier paired with the acquired medium identifier.

The control unit F233 performs processing to use the energy corresponding to the energy proposal information output by the energy proposal information output unit F241.

The control unit F233 acquires the current time from a clock (not shown), for example. Next, the control unit F233 acquires one or more identifiers (the current identifiers) of the appliance identifier of the energy appliance that is currently operating, the medium identifier, and the company identifier. Next, the control unit F233 acquires one or more preferable identifiers that are paired with the time zone corresponding to the current time (preferable appliance identifier, medium identifier, or company identifier). Thereafter, the control unit F233 determines whether or not the current identifier is different from the preferable identifier, and if different, the control unit F233 performs control to use the energy indicated by the appliance, medium, or company identified by the preferable identifier. Note that such control is, for example, transmission of an instruction to switch between appliances, transmission of an instruction to switch between companies, output of information to switch between appliances, and output of information to switch between companies.

The control unit F233 performs processing to use the energy corresponding to the accepted medium identifier, of two or more kinds of energy that include gas and electricity, for example. The control unit F233 performs processing to use the energy corresponding to the medium identifier accepted from the energy proposal information output unit F241, for example.

The control unit F233 performs processing to use the energy appliance corresponding to the accepted appliance identifier, for example. The control unit F233 performs processing to use the appliance identifier accepted from the energy proposal information output unit F241, for example.

The control unit F233 performs processing to use the energy corresponding to the accepted company identifier, for example. The control unit F233 performs processing to use the energy corresponding to the company identifier accepted from the energy proposal information output unit F241, for example.

Note that processing that is performed to switch between appliances is, for example, processing that is performed to transmit a stop instruction to the appliance before the switching and processing that is performed to transmit an operation start instruction to the appliance after the switching.

The output unit F24 outputs various kinds of information and instructions. Examples of the various kinds of information and instructions include energy proposal information. Here, "output" means, for example, transmission to an external apparatus such as the terminal apparatuses F1, delivery of processing results to another processing apparatus or another program, and so on, but may be regarded as a concept that includes displaying on a display device, projection with a projector, printing with a printer, sound output, accumulation on a recording medium, and so on.

The energy proposal information output unit F241 outputs the energy proposal information acquired by the energy proposal information acquisition unit F232.

The energy proposal information output unit F241 outputs the medium identifier acquired by the medium identifier acquisition part F2323, for example. The energy proposal information output unit F241 outputs the medium identifier for each time zone, acquired by the medium identifier acquisition part F2323, for example.

For example, when the medium identifier for one time zone acquired by the medium identifier acquisition part F2323 is different from the medium identifier for the previous time zone, the energy proposal information output unit F241 passes the medium identifier for one time zone to the control unit F233 upon the one time zone being reached.

The energy proposal information output unit F241 outputs the appliance identifier acquired by the appliance identifier acquisition part F2324, for example. The energy proposal information output unit F241 outputs the appliance identifier for each time zone, acquired by the appliance identifier acquisition part F2324, for example.

For example, when the appliance identifier for one time zone acquired by the appliance identifier acquisition part F2324 is different from the appliance identifier for the previous time zone, the energy proposal information output unit F241 passes the appliance identifier for one time zone to the control unit F233 when one time zone is reached.

The energy proposal information output unit F241 outputs the company identifier acquired by the company identifier acquisition part F2325, for example. The energy proposal information output unit F241 outputs the company identifier for each time zone, acquired by the company identifier acquisition part F2325, for example.

For example, when the company identifier for one time zone acquired by the company identifier acquisition part F2325 is different from the company identifier for the previous time zone, the energy proposal information output unit F241 passes the company identifier for one time zone to the control unit F233 when one time zone is reached.

Here, "output" means, for example, transmission to an external apparatus such as the terminal apparatuses F1, delivery of processing results to another processing apparatus or another program, and so on, but may be regarded as a concept that includes displaying on a display device, projection with a projector, printing with a printer, sound output, accumulation on a recording medium, and so on.

It is preferable that the terminal storage unit F11, the storage unit F21, the customer information storage unit A211, the gas information storage unit A212, the climate information storage unit A215, the electricity information storage unit F211, the unit charge information storage unit F212, the appliance information storage unit F213, and the company information storage unit F214 are realized using a non-volatile recording medium, but they may be realized using a volatile recording medium.

There is no limitation on the process in which information is stored in the terminal storage unit F11 and so on. For example, information may be stored in the terminal storage unit F11 or the like via a recording medium, or information transmitted via a communication line or the like may be stored in the terminal storage unit F11 or the like, or information input via an input device may be stored in the terminal storage unit F11 or the like.

The terminal acceptance unit F12 can be realized using a device driver for the input means such as a touch panel or a keyboard, or control software or the like for controlling the menu screen.

The terminal processing unit F13, the processing unit F23, the gas information accumulation unit A231, the climate information accumulation unit A234, the climate information acquisition unit F231, the energy proposal information acquisition unit F232, the control unit F233, the gas charge information acquisition part F2321, the electricity charge information acquisition part F2322, the medium identifier acquisition part F2323, the appliance identifier acquisition part F2324, and the company identifier acquisition part F2325 can typically be realized using an MPU, a memory, or the like. The processing procedures performed by the terminal processing unit F13 and so on typically are realized using software, and the software is recorded on a recording medium such as a ROM. However, such processing procedures may be realized using hardware (a dedicated circuit).

The terminal transmission unit F14, the output unit F24, and the energy proposal information output unit F241 typically are realized using a wireless or wired communication means, but may be realized using a broadcast means.

The terminal reception unit F15, the reception unit F22, the gas information reception unit A221, and the climate information acceptance unit A224 typically are realized using a wireless or wired communication means, but may be realized using a means for receiving broadcast.

The terminal output unit F16 may be regarded as including or not including an output device such as a display or a speaker. The terminal output unit F16 can be realized using the driver software of the output device, the driver software of the output device and the output device, or the like.

Next, operations that are performed by the information system F will be described. First, operations that are performed by the terminal apparatuses F1 will be described. The terminal acceptance unit F12 of each of the terminal apparatuses F1 accepts an energy plan presentation instruction. Next, the terminal processing unit F13 converts the energy plan presentation instruction accepted by the terminal acceptance unit F12, into an energy plan presentation instruction that has a data structure that is to be transmitted. Next, the terminal transmission unit F14 transmits the energy plan presentation instruction to the information processing apparatus F2. Thereafter, the terminal reception unit F15 receives from energy proposal information. Next, the terminal processing unit F13 converts the energy proposal information received by the terminal reception unit F15 so as to have a data structure that is to be output. Next, the terminal output unit F16 outputs energy proposal information.

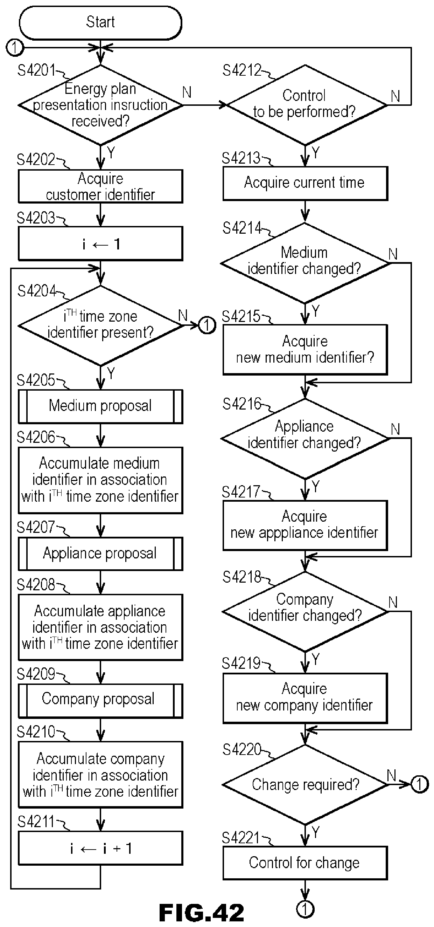

Next, examples of operations that are performed by the information processing apparatus F2 will be described with reference to the flowchart shown in FIG. 42.

(Step S4201) The reception unit F22 determines whether or not an energy plan presentation instruction has been received from a terminal apparatus F1. If an energy plan presentation instruction has been received, processing proceeds to step S4202, and if an energy plan presentation instruction has not been received, processing returns to step S4212.

(Step S4202) The energy proposal information acquisition unit F232 acquires a customer identifier from the energy plan presentation instruction received in step S4201.

(Step S4203) The energy proposal information acquisition unit F232 substitutes 1 for the counter i.

(Step S4204) The energy proposal information acquisition unit F232 determines whether or not the i^{th} time zone identifier for which energy proposal is to be performed is present. If the i^{th} time zone identifier is present, processing proceeds to step S4205, and if the i^{th} time zone identifier is not present, processing returns to step S4201. Note that the time zone identifier for which energy proposal is to be performed has been determined in advance, for example.

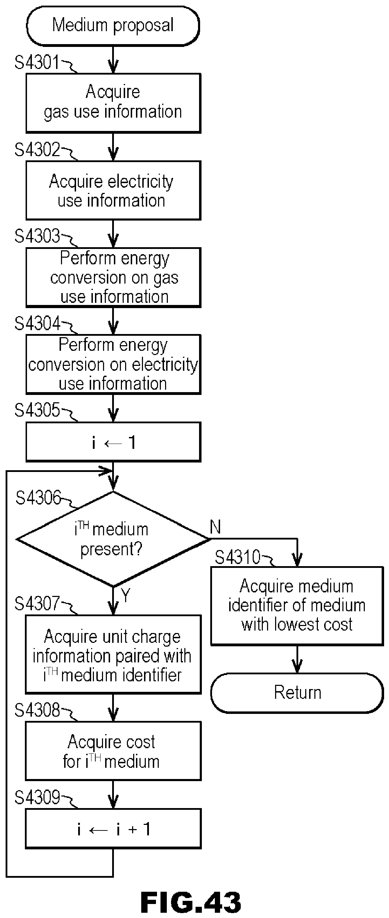

(Step S4205) The energy proposal information acquisition unit F232 performs medium proposal processing. An example of such medium proposal processing will be described with reference to the flowchart shown in FIG. 43.

(Step S4206) The energy proposal information acquisition unit F232 accumulates the medium identifier acquired in step S4205, in association with the i^{th} time zone identifier.

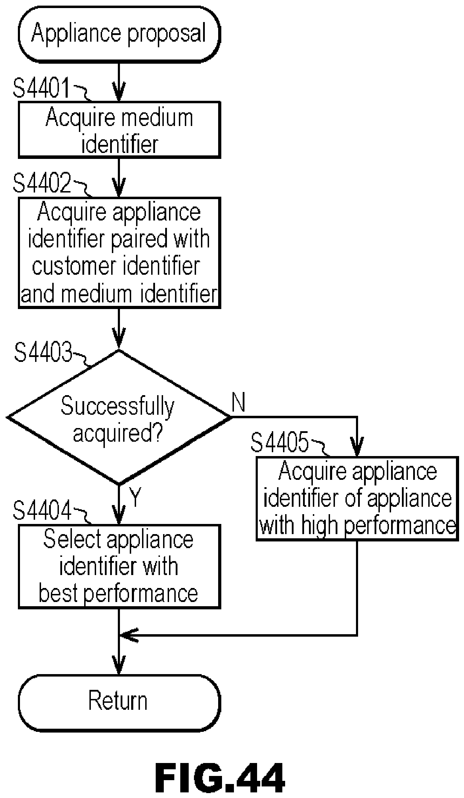

(Step S4207) The energy proposal information acquisition unit F232 performs appliance proposal processing. An example of such appliance proposal processing will be described with reference to the flowchart shown in FIG. 44.

(Step S4208) The energy proposal information acquisition unit F232 accumulates the appliance identifier acquired in step S4207, in association with the i^{th} time zone identifier.

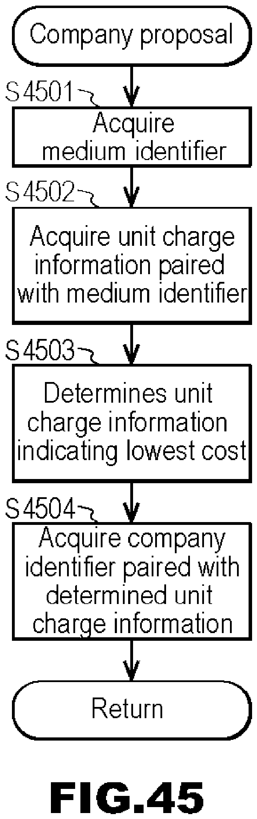

(Step S4209) The energy proposal information acquisition unit F232 performs company proposal processing. An example of such company proposal processing will be described with reference to the flowchart shown in FIG. 45.

(Step S4210) The energy proposal information acquisition unit F232 accumulates the company identifier acquired in step S4209, in association with the i^{th} time zone identifier.

(Step S4211) The energy proposal information acquisition unit F232 increments the counter i by 1. Processing returns to step S4204.

(Step S4212) The control unit F233 determines whether or not it is the time to perform control. If it is the time to perform control, processing proceeds to step S4213, and if it is not the time to perform control, processing returns to step S4201. Note that there is no limitation on the time to perform control.

(Step S4213) The control unit F233 acquires the current time from a clock (not shown).

(Step S4214) The control unit F233 acquires the medium identifier of the medium that is currently being used. Thereafter, the control unit F233 acquires a preferable medium identifier corresponding to the customer identifier and the current time, from the storage unit F21. Note that the storage unit F21 stores a preferable medium identifier for each time zone, in association with a customer identifier. Thereafter, the control unit F233 determines whether or not the medium identifier of the medium that is currently being used and the preferable medium identifier are different from each other. If they are different, processing proceeds to step S4215 to change the medium identifier, and if they are not different, processing proceeds to step S4216 because the medium identifier is not to be changed. Note that the technique for acquiring the medium identifier of the medium that is currently being used is a known technique. Any method may be used to acquire the medium identifier of the medium that is currently being used. For example, the medium identifier of the medium that is currently being used may be input by a user and stored in the storage unit F21.

(Step S4215) The control unit F233 acquires a preferable medium identifier as a new medium identifier for change, and accumulates it in the storage unit F21.

(Step S4216) The control unit F233 acquires the appliance identifier of the appliance that is currently being used. Thereafter, the control unit F233 acquires a preferable appliance identifier corresponding to the customer identifier and the current time, from the storage unit F21. Note that the storage unit F21 stores a preferable appliance identifier for each time zone, in association with a customer identifier. Thereafter, the control unit F233 determines whether or not the appliance identifier of the appliance that is currently being used and the preferable appliance identifier are different from each other. If they are different, processing proceeds to step S4217 to change the appliance identifier, and if they are not different, processing proceeds to step S4218 because the appliance identifier is not to be changed. Note that the technique for acquiring the appliance identifier of the appliance that is currently being used is a known technique. Any method may be used to acquire the appliance identifier of the appliance that is currently being used. For example, the appliance identifier of the appliance that is currently being used may be input by a user and stored in the storage unit F21.

(Step S4217) The control unit F233 acquires a preferable appliance identifier as a new appliance identifier for change, and accumulates it in the storage unit F21.

(Step S4218) The control unit F233 acquires the company identifier of the energy supplier company that is currently being used. Thereafter, the control unit F233 acquires a preferable company identifier corresponding to the customer identifier and the current time, from the storage unit F21. Note that the storage unit F21 stores a preferable company identifier for each time zone, in association with a customer identifier. Thereafter, the control unit F233 determines whether or not the company identifier of the company that is currently being used and the preferable company identifier are different from each other. If they are different, processing proceeds to step S4219 to change the company identifier, and if they are not different, processing proceeds to step S4220 because the company identifier is not to be changed. Note that there is no limitation on the method for acquiring the company identifier of the energy supplier company that is currently being used. For example, the company identifier of the energy supplier company that is currently being used may be input by a user and stored in the storage unit F21.

(Step S4219) The control unit F233 acquires a preferable company identifier as a new company identifier for change, and accumulates it in the storage unit F21.

(Step S4220) The control unit F233 determines whether or not any new identifier for change has been acquired. If any new identifier has been acquired, processing proceeds to step S4221, and if a new identifier has not been acquired, processing returns to step S4201. Note that any of the identifiers are one or more of the medium identifier, the appliance identifier, and the company identifier.

(Step S4221) The control unit F233 performs control to change to the new identifier for change. Processing returns to step S4201.

In the flowchart shown in FIG. 42, processing is terminated when power is turned off or an interruption is made to terminate the processing.

Next, an example of the medium proposal processing in step S4205 will be described with reference to the flowchart shown in FIG. 43.

(Step S4301) The energy proposal information acquisition unit F232 acquires gas use information for the corresponding time zone, from the gas information storage unit A212.

(Step S4302) The energy proposal information acquisition unit F232 acquires electricity use information for the corresponding time zone, from the electricity information storage unit F211.

(Step S4303) The energy proposal information acquisition unit F232 acquires the total amount of gas used, using the gas use information acquired in step S4301. Thereafter, the energy proposal information acquisition unit F232 converts the total amount of gas used, into an amount in a common energy unit (for example, "Joule"), using gas conversion information.

(Step S4304) The energy proposal information acquisition unit F232 acquires the total amount of electricity used, using the electricity use information acquired in step S4302. Thereafter, the energy proposal information acquisition unit F232 converts the total amount of electricity used, into an amount in a common energy unit (for example, "Joule"), using electricity conversion information.

(Step S4305) The medium identifier acquisition part F2323 substitutes 1 for the counter i.

(Step S4306) The medium identifier acquisition part F2323 determines whether or not the i^{th} medium is present. If the i^{th} medium is present, processing proceeds to step S4307, and if the i^{th} medium is not present, processing proceeds to step S4310. Note that whether or not the i^{th} medium is present may be determined based on whether or not the piece of unit charge information corresponding to the i^{th} medium identifier is present in the unit charge information storage unit F212, for example.

(Step S4307) The medium identifier acquisition part F2323 acquires the pieces of unit charge information corresponding to the time zone of interest and corresponding to the i^{th} medium identifier, from the unit charge information storage unit F212.

(Step S4308) The medium identifier acquisition part F2323 references the unit charge information acquired in step S4307, and calculates the cost in the sum of the amounts in the common energy unit, acquired in steps S4303 and S4304. Note that this cost is the cost for the i^{th} medium.

(Step S4309) The medium identifier acquisition part F2323 increments the counter i by 1. Processing returns to step S4306.

(Step S4310) The medium identifier acquisition part F2323 acquires the medium identifier corresponding to the minimum cost of the costs calculated in step S4308. Processing returns to higher level processing.

Next, an example of the appliance proposal processing in step S4207 will be described with reference to the flowchart shown in FIG. 44.

(Step S4401) The appliance identifier acquisition part F2324 acquires the medium identifier acquired by the medium identifier acquisition part F2323.

(Step S4402) The appliance identifier acquisition part F2324 acquires the appliance identifier that is the appliance identifier paired with the customer identifier and that is paired with the medium identifier acquired in step S4401.

(Step S4403) The appliance identifier acquisition part F2324 determines whether or not the appliance identifier has been acquired in step S4402. If it has been acquired, processing proceeds to step S4404, and if it has not been acquired, processing proceeds to step S4405.

(Step S4404) If two or more appliance identifiers have been acquired in step S4402, the appliance identifier acquisition part F2324 acquires the performance information paired with the two or more appliance identifiers from the appliance information storage unit F213, and acquires the appliance identifier paired with the highest performance information. Note that if one appliance identifier has been acquired in step S4402, the appliance identifier acquisition part F2324 acquires the appliance identifier. Processing returns to higher level processing. Note that the appliance identifier acquired here is the appliance identifier of the appliance that is recommended to be used.

(Step S4405) The appliance identifier acquisition part F2324 acquires the appliance identifier paired with the highest performance information of the pieces of performance information paired with the medium identifiers acquired in step S4401, from the appliance information storage unit F213. Processing returns to higher level processing. Note that the appliance identifier acquired here is the appliance identifier of the appliance that is recommended to be purchased.

Next, an example of the company proposal processing in step S4209 will be described with reference to the flowchart shown in FIG. 45.

(Step S4501) The company identifier acquisition part F2325 acquires the medium identifier acquired by the medium identifier acquisition part F2323.

(Step S4502) The company identifier acquisition part F2325 acquires one or more pieces of unit charge information corresponding to the time zone of interest and corresponding to the medium identifier acquired in step S4501, from the unit charge information storage unit F212.

(Step S4503) The company identifier acquisition part F2325 acquires the unit charge information that indicates the lowest cost of the one or more pieces of unit charge information acquired in step S4502.

(Step S4504) The company identifier acquisition part F2325 acquires the company identifier paired with the unit charge information acquired in step S4503, from the unit charge information storage unit F212. Processing returns to higher level processing.

As described above, according to the present embodiment, it is possible to propose an energy consumption plan, using the use status of gas such as LPG and the use status of electricity.

Also, according to the present embodiment, it is possible to propose an energy consumption plan, using the use status of gas such as LPG, the use status of electricity, and climate information.

Also, according to the present embodiment, it is possible to propose energy medium selection, appliance selection, and company selection, using the use status of gas such as LPG.

Also, according to the present embodiment, it is possible to propose energy medium selection, appliance selection, and company selection for each time zone, using the use status of gas such as LPG.

Furthermore, according to the present embodiment, it is possible to perform energy medium selection control, appliance selection control, and company selection control for each time zone, using the use status of gas such as LPG.

Note that the processing in the present embodiment may be realized using software. This software may be distributed through software downloading or the like. Also, this software may be recorded on a recording medium such as a CD-ROM and distributed. Note that the same applies to the other embodiments in the present description. The software that realizes the information processing apparatus F2 in the present embodiment is the program described below. That is to say, this program is a program that enables a computer that can access a gas information storage unit that stores two or more pieces of gas information that include time-series gas use information regarding use of gas, and an electricity information storage unit that stores two or more pieces of electricity information that include time-series electricity use information regarding use of electricity, to function as: an energy proposal information acquisition unit that acquires energy proposal information that indicates a proposal regarding energy that is to be used, using the time-series gas use information and the time-series electricity use information; and an energy proposal information output unit that outputs the energy proposal information acquired by the energy proposal information acquisition unit.

### Embodiment 7

The present embodiment describes an information system that includes an information processing apparatus that acquires and outputs credit rating information regarding household credit rating, using gas information that contains gas use information regarding the use of gas. In the present embodiment, gas information includes, for example, one or more pieces of information of: a gas supply category; a payment category; a housing category; and a gas use fee category. Gas use fee category is one example information of the above-described gas use information. Furthermore, in the present embodiment, gas information may also be referred to as gas customer information.

The present embodiment also describes an information system that includes an information processing apparatus that acquires and outputs credit rating information, using electricity customer information regarding the use of electricity. Note that electricity customer information includes one or more pieces of information of: an electricity supply category; a payment category; a housing category; and an electricity use fee category.

The present embodiment also describes an information system that includes an information processing apparatus that acquires and outputs credit rating information, using water service customer information regarding the use of water service. Note that water service customer information includes one or more pieces of information of: a water service supply category; a payment category; a housing category; and a water service use fee category.

The present embodiment also describes an information system that includes an information processing apparatus that acquires and outputs credit rating information, using bank customer information regarding a bank account. It is preferable that bank customer information that is used to calculate credit rating information is bank customer information regarding two or more families that belong to one household. In addition, bank customer information includes, for example, one or more pieces of information of: the amount of bank account activity; a deposit balance; a housing category; the presence or absence of a credit card; and the presence or absence of a safe deposit box.

The present embodiment also describes an information system that includes an information processing apparatus that acquires and outputs credit rating information, using mobile customer information regarding the use of a mobile. It is preferable that mobile customer information that is used to calculate credit rating information is mobile customer information regarding two or more families that belong to one household. Mobile customer information employs, for example, one or more pieces of information of: a payment history; and a use status.

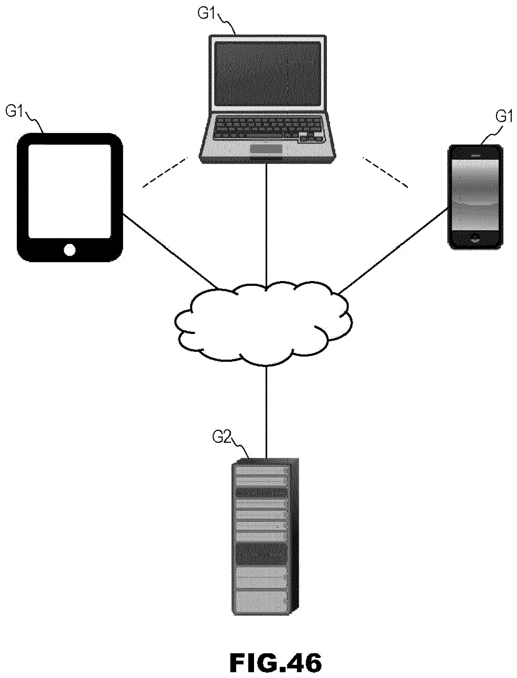

FIG. 46 is a conceptual diagram for an information system G according to the present embodiment. The information system G includes one or more terminal apparatuses G1 and an information processing apparatus G2. The terminal apparatuses G1 are terminals that output credit rating information. The terminal apparatuses G1 are, for example, smartphones, tablet terminals, so-called personal computers, or the like, but there is no limitation on the type thereof. The information processing apparatus G2 is an apparatus for acquiring credit rating information. The information processing apparatus G2 can be realized using a so-called cloud server or an ASP server, but there is no limitation on the type thereof.

The information processing apparatus G2 may have some or all of the functions of the information processing apparatus A2. That is to say, the information processing apparatus G2 is an information processing apparatus A2 that performs household credit rating acquisition processing.

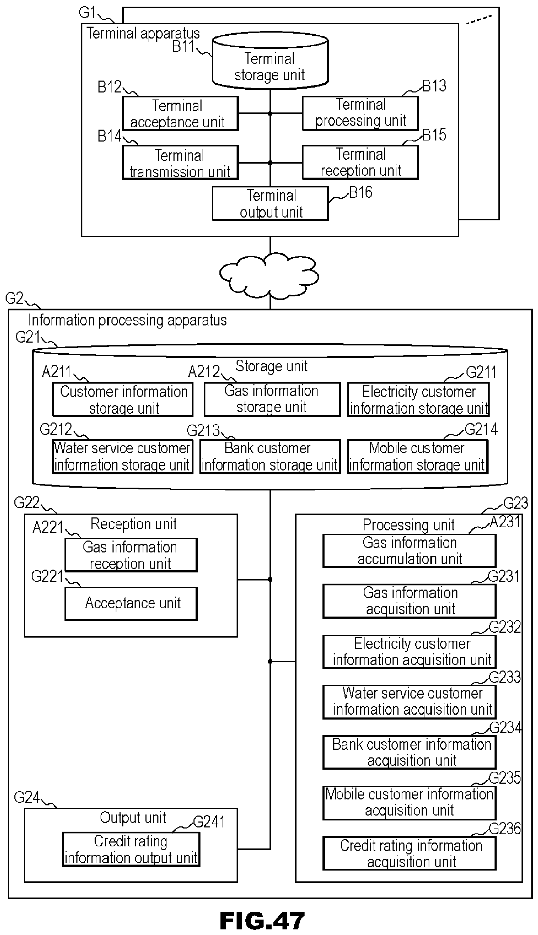

FIG. 47 is a block diagram for the information system G according to the present embodiment.

The terminal apparatuses G1 included in the information system G each include a terminal storage unit G11, a terminal acceptance unit G12, a terminal processing unit G13, a terminal transmission unit G14, a terminal reception unit G15, and a terminal output unit G16.

The information processing apparatus G2 includes a storage unit G21, a reception unit G22, a processing unit G23, and an output unit G24. The storage unit G21 includes the customer information storage unit A211, the gas information storage unit A212, an electricity customer information storage unit G211, a water service customer information storage unit G212, a bank customer information storage unit G213, and a mobile customer information storage unit G214. The reception unit G22 includes the gas information reception unit A221 and an acceptance unit G221. The processing unit G23 includes the gas information accumulation unit A231, a gas information acquisition unit G231, an electricity customer information acquisition unit G232, a water service customer information acquisition unit G233, a bank customer information acquisition unit G234, a mobile customer information acquisition unit G235, and a credit rating information acquisition unit G236. The output unit G24 includes a credit rating information output unit G241.

The terminal storage unit G11 included in each terminal apparatus G1 stores various kinds of information. Examples of the various kinds of information include a customer identifier. Note that a customer identifier typically is a household identifier that identifies a household. Here, a customer identifier is information that specifies the head of a household, for example.

The terminal acceptance unit G12 accepts instructions, information, and so on. Examples of instructions, information, and so on include a customer identifier and a credit rating acquisition instruction. A credit rating acquisition instruction is an instruction to perform household credit rating output processing. A credit rating acquisition instruction is an instruction to prompt to output a household credit rating. The credit rating acquisition instruction may contain a customer identifier that specifies a household for which a household credit rating is to be acquired, or may contain no customer identifier. If a credit rating acquisition instruction does not contain a customer identifier, the credit rating acquisition instruction is an instruction to acquire a credit rating information regarding the households identified by all of the customer identifiers that are under control, for example. Note that any input means may be employed to input an instruction, information, and so on, such as a touch panel, a keyboard, a mouse, a menu screen, or the like.

The terminal processing unit G13 performs various kinds of processing. Examples of the various kinds of information include processing that is performed to convert the instruction, information, and so on accepted by the terminal acceptance unit G12 to an instruction, information, and so on that have a data structure that is to be transmitted. Examples of the various kinds of processing also include processing that is performed to convert the information received by the terminal transmission unit G14 so as to have a data structure that is to be output.

The terminal transmission unit G14 transmits various kinds of instructions, information, and so on to the information processing apparatus G2. Examples of instructions, information, and so on include a customer identifier and a credit rating acquisition instruction.

The terminal reception unit G15 receives various kinds of information, and so on from the information processing apparatus G2. Examples of the various kinds of information and so on include a customer identifier and credit rating information. Credit rating information is information that specifies a credit rating of a household. credit rating information may be a numerical value or an English character. Credit rating information may be any information that indicates a rank.

The terminal output unit G16 outputs various kinds of information and so on. Examples of the various kinds of information and so on include a set of pieces of information composed of a customer identifier and credit rating information. Here, "output" typically means displaying on a display device, but may be regarded as a concept that includes projection with a projector, printing with a printer, sound output, transmission to an external device, accumulation on a recording medium, delivery of processing results to another processing apparatus or another program, and so on.

The storage unit G21 included in the information processing apparatus G2 stores various kinds of information. Examples of the various kinds of information include customer information described below and gas information.

The customer information storage unit A211 stores one or more pieces of customer information each in association with a customer identifier. Note that customer information is information regarding a customer, and is information paired with a customer identifier. For example, customer information contains one or more pieces of information of: LPG cylinder information that contains cylinder capacity information regarding the capacity of the LPG cylinder of the customer; cylinder type information that specifies the type of a gas cylinder that is used by the customer; number information that specifies the number of gas cylinders that are used by the customer; date information paired with the cylinder replacement information (information that specifies the day on which a cylinder was replaced); use amount value calculation formula described later; a name; customer position information (an address or position information (latitude,longitude); and contact information. Note that LPG cylinder information may be cylinder type information. Contact information is information that specifies a point of contact, and is, for example, an e-mail address or a telephone number.

The gas information storage unit A212 stores two or more pieces of gas information that include gas use information. The two or more pieces of gas information are each associated with a customer identifier.

Gas use information is information regarding the use of gas. Gas information includes, for example, information regarding the amount of gas used. Information regarding the amount of gas used includes, for example, gas use fee category information that specifies how high the gas use fee is. Gas information contains, in addition to gas use fee category information, one or more pieces of information of: gas supply category information that specifies the type of gas that is supplied; gas payment category information that specifies a means for payment of the gas fee; and housing category information that specifies the type of the housing of the customer. Note that housing category information may be contained in customer information.

Gas use fee category information is information that specifies, for example, one of "low", "standard", "high", and so on. "Low" is information indicating, for example, when compared to a reference amount of use [X] (for example, the average of all households), that "X × n > the amount of use" or "X × n > = the amount of use" (n is a number less than 1) is satisfied. "Standard" is information indicating that the difference from the reference amount of use is a difference within a threshold percentage. "High" is information indicating, for example, when compared to the reference amount of use [X], that "X × (1 + m) < the amount of use" or "X × (1 + m) > = the amount of use" (m is a number less than 1) is satisfied. Needless to say, gas use fee category information may be classified into four or more categories or two categories instead of three categories. Note that gas use fee category information is information acquired by the processing unit G23 using the amount of gas used specified by the gas use information paired with the customer identifier and the reference amount of use [X]. For example, "low" corresponds to "1", "standard" corresponds to "2", and "high" corresponds to "3".

Gas supply category information is information that specifies any one of "liquid petroleum", "simple gas", "city gas", and so on, for example. "Liquid petroleum" is information indicating that the type of gas is liquid petroleum. "Simple gas" is information indicating that the type of gas is simple gas. "City gas" is information indicating that the type of gas is city gas. For example, "liquid petroleum" corresponds to a value "1", "simple gas" corresponds to a value "2", and "city gas" corresponds to a value "3".

Gas payment category information is information that specifies any one of "credit", "Japan Post Bank", "bank", "collection", "transfer", and so on. Note that "credit" is information indicating that payment is made by credit card, "Japan Post Bank" is information indicating that payment is made from postal savings (usually, withdrawal from the postal savings account), "bank" is information indicating that payment is made from a bank deposit (usually withdrawal from a bank account), "collection" is information indicating that payment is made by collection, and "transfer" is information indicating that payment is made by transfer. For example, "credit" corresponds to a value "1", "Japan Post Bank" corresponds to a value "2", "bank" corresponds to a value "3", "collection" corresponds to a value "4", "transfer" corresponds to a value "5", and so on.

Housing category information is information that specifies any one of "apartment", "public / municipal / prefectural housing", "owned apartment", "owned house", "company housing / apartment", "rental house", and so on. "Apartment" is information indicating that housing is a rental apartment, "public / municipal / prefectural housing" is information indicating that housing is public / municipal / prefectural housing, "owned apartment" is information indicating that housing is owned apartment, "owned house" is information indicating that housing is owned house, "company housing / apartment" is information indicating that housing is company housing / apartment, and "rental house" is information indicating that housing is a rental house. For example, "apartment" corresponds to a value "1", "public / municipal / prefectural housing" corresponds to a value "2", "owned apartment" corresponds to a value "3", "owned house" corresponds to a value "4", "company housing / apartment" corresponds to a value "5", "rental house" corresponds to a value "6", and so on.

The electricity customer information storage unit G211 stores two or more pieces of electricity customer information. The two or more pieces of electricity customer information are each associated with a customer identifier. Note that the two or more pieces of electricity customer information are pieces of information acquired from an external server apparatus (not shown) (for example, an electricity company server), for example.

Electricity customer information is information regarding electricity for a customer. Electricity customer information includes electricity use information regarding the use of electricity by a customer. Electricity use information is, for example, electricity use fee category information described later.

It is preferable that electricity customer information contains one or more pieces of information of: electricity supply category information that specifies the type of electricity supplied; electricity payment category information that specifies a means for payment of an electricity fee; housing category information that specifies the type of housing of a customer; and electricity use fee category information that specifies how high the electricity use fee is.

Electricity supply category information is information that specifies any one of, for example, "general electricity company", "wholesale electricity company", "specific scale electricity company", and so on. "General electricity company" is information indicating that the electricity supplier company is a general electricity company. "Wholesale electricity company" is information indicating that the electricity supplier company is a wholesale electricity company. "Specific scale electricity company" is information indicating that the electricity supplier company is a specific scale electricity company. For example, "general electricity company" corresponds to a value "1", "wholesale electricity company" corresponds to a value "2", "specific scale electricity company" corresponds to a value "3", and so on.

Electricity payment category information is information that specifies any one of "credit", "Japan Post Bank", "bank", "collection", "transfer", and so on.

Housing category information is information that specifies any one of "apartment", "public / municipal / prefectural housing", "owned apartment", "owned house", "company housing / apartment", "rental house", and so on.

Electricity use fee category information is information that specifies, for example, one of "low", "standard", "high", and so on. "Low" is information indicating, for example, when compared to a reference amount of use [X] (for example, the average of all households), that "X × n > the amount of use" or "X × n > = the amount of use" (n is a number less than 1) is satisfied. "Standard" is information indicating that the difference from the reference amount of use is a difference within a threshold percentage. "High" is information indicating, for example, when compared to the reference amount of use [X], that "X × (1 + m) < the amount of use" or "X × (1 + m) > = the amount of use" (m is a number less than 1) is satisfied. Needless to say, electricity use fee category information may be classified into four or more categories or two categories instead of three categories. Electricity use fee category information is stored in association with a customer identifier. Note that electricity use fee category information is information acquired by the processing unit G23 using the amount of electricity used specified by the electricity use information paired with the customer identifier and the reference amount of use [X]. For example, "low" corresponds to "1", "standard" corresponds to "2", and "high" corresponds to "3".

The water service customer information storage unit G212 stores two or more pieces of water service customer information. The two or more pieces of water service customer information are each associated with a customer identifier. Note that the two or more pieces of water service customer information are pieces of information acquired from an external server apparatus (not shown) (for example, a water service company server), for example.

Water service customer information is information regarding water service for a customer. Water service customer information includes water service use information regarding the use of water service by a customer. Water service use information is, for example, water service use fee category information described later.

It is preferable that water service customer information contains one or more pieces of information of: water service supply category information that specifies the type of water service supplied; water service payment category information that specifies a means for payment of water service fee; housing category information that specifies the type of housing of a customer; and water service use fee category information that specifies how high the water service use fee is.

Water service supply category information is, for example, information that specifies any one of "water supply", "simple water supply", "dedicated water supply", and so on. "Water supply" is information indicating a water supply business. "Simple water supply" is information indicating a simple water supply business. "Dedicated water supply" is information indicating dedicated water supply. For example, "water supply" corresponds to a value "1", "simple water supply" corresponds to a value "2", and "dedicated water supply" corresponds to a value "3".

Water service payment category information is information that specifies any one of "credit", "Japan Post Bank", "bank", "collection", "transfer", and so on.

Housing category information is information that specifies any one of "apartment", "public / municipal / prefectural housing", "owned apartment", "owned house", "company housing / apartment", "rental house", and so on.

Water service use fee category information is information that specifies, for example, one of "low", "standard", "high", and so on. "Low" is information indicating, for example, when compared to a reference amount of use [X] (for example, the average of all households), that "X × n > the amount of use" or "X × n > = the amount of use" (n is a number less than 1) is satisfied. "Standard" is information indicating that the difference from the reference amount of use is a difference within a threshold percentage. "High" is information indicating, for example, when compared to the reference amount of use [X], that "X × (1 + m) < the amount of use" or "X × (1 + m) > = the amount of use" (m is a number less than 1) is satisfied. Needless to say, water service use fee category information may be classified into four or more categories or two categories instead of three categories. Water service use fee category information is stored in association with a customer identifier. Note that water service use fee category information is information acquired by the processing unit G23 using the amount of water used specified by the water service use information paired with the customer identifier and the reference amount of use [X]. For example, "low" corresponds to "1", "standard" corresponds to "2", and "high" corresponds to "3".

The bank customer information storage unit G213 stores two or more pieces of bank customer information. The two or more pieces of bank customer information are each associated with a customer identifier. Note that the two or more pieces of bank customer information are pieces of information acquired from an external server apparatus (not shown) (for example, a bank server), for example.

Bank customer information is information regarding a bank account of a customer. Bank customer information contains, for example, one or more pieces of information of: the amount of bank account activity; a deposit balance; a housing category; the presence or absence of a credit card; and the presence or absence of a safe deposit box.

The bank customer information storage unit G213 may store one or more pieces of bank customer information that are associated with a personal identifier that is paired with the same customer identifier. For example, the customer identifier is the identifier of the head of the household, and the personal identifier is the identifier of the family member of the household identified by the customer identifier. Also, for example, the correspondence between the customer identifier and one or more personal identifiers is stored in the storage unit A21.

The mobile customer information storage unit G214 stores two or more pieces of mobile customer information. The two or more pieces of mobile customer information are each associated with a customer identifier. Note that the two or more pieces of mobile customer information are pieces of information acquired from an external server apparatus (not shown) (for example, a mobile company server), for example.

Mobile customer information contains one or more pieces of information of: mobile payment history information regarding mobile bill payment history; and mobile use status information regarding mobile use status. Mobile payment history information is, for example, one or more pieces of information of: total payment information indicating the total amount of payment; maximum amount information indicating the maximum amount of monthly payment; unit period total payment information indicating the total amount of payment for a unit period; overdue count information indicating the number of times mobile payment have been overdue; an overdue flag indicating whether or not mobile payment has been overdue, and so on. Mobile use status information is, for example, one or more pieces of information of: use period information indicating the mobile use period; data amount information indicating the monthly data amount of the mobile; and so on.

The mobile customer information storage unit G214 may store one or more pieces of mobile customer information that are associated with a personal identifier that is paired with the same customer identifier.

Note that a different customer identifier may be paired with gas information, electricity customer information, water service customer information, bank customer information, and mobile customer information. However, even if the customer identifiers are different, it is preferable that the customer identifiers are associated. Association with a customer identifier means, for example, association with a common identifier, establishment of a link between customer identifiers, and so on.

The reception unit G22 receives various kinds of information. Examples of the various kinds of information includes a customer identifier, a credit rating acquisition instruction, gas information, electricity customer information, water service customer information, bank customer information, and mobile customer information.

The acceptance unit G221 accepts various instructions and various kinds of information. Examples of the various instructions and various kinds of information include a customer identifier and a credit rating acquisition instruction. Here, acceptance typically is reception, but may be acceptance of an input from a user.

The acceptance of a customer identifier by the acceptance unit G221 may be acquisition of a customer identifier. For example, the acceptance unit G221 may receive a credit rating acquisition instruction, and acquire one or more customer identifiers corresponding to the credit rating acquisition instruction, to accept one or more customer identifiers. One or more customer identifiers corresponding to the credit rating acquisition instruction is one or more customer identifier included in the credit rating acquisition instruction, or, when no customer identifier is included in the credit rating acquisition instruction, one or more predetermined customer identifiers (for example, all of the customer identifiers that are under control).

The processing unit G23 performs various kinds of processing. Examples of the various kinds of processing include processing that is performed by the gas information accumulation unit A231, processing that is performed by the gas information acquisition unit G231, processing that is performed by the electricity customer information acquisition unit G232, processing that is performed by the water service customer information acquisition unit G233, processing that is performed by the bank customer information acquisition unit G234, processing that is performed by the mobile customer information acquisition unit G235, and processing that is performed by the credit rating information acquisition unit G236.

The gas information acquisition unit G231 acquires one or more pieces of gas information associated with the same customer identifier as the customer identifier accepted by the acceptance unit G221. Note that the gas information acquisition unit G231 typically acquires one or more pieces of gas information from the gas information storage unit A212. However, the gas information acquisition unit G231 may acquire one or more pieces of gas information from an external server (not shown). Note that acquisition of gas information may be acquisition of only part of the information included in gas information. Acquisition of gas information may be acquisition of gas use information, for example.

The electricity customer information acquisition unit G232 acquires electricity customer information associated with the same customer identifier as the customer identifier accepted by the acceptance unit G221. Note that the electricity customer information acquisition unit G232 acquires one or more pieces of electricity customer information from the electricity customer information storage unit G211. However, the electricity customer information acquisition unit G232 may acquire one or more pieces of electricity customer information from an external server (not shown). Note that acquisition of electricity customer information may be acquisition of only part of the information included in electricity customer information. Acquisition of electricity customer information may be acquisition of electricity use information, for example.

The water service customer information acquisition unit G233 acquires water service customer information associated with the same customer identifier as the customer identifier accepted by the acceptance unit G221. Note that the water service customer information acquisition unit G233 typically acquires one or more pieces of water service customer information from the water service customer information storage unit G212. However, the water service information acquisition unit G233 may acquire one or more pieces of water service customer information from an external server (not shown). Note that acquisition of water service customer information may be acquisition of only part of the information included in water service customer information. Acquisition of water service customer information may be acquisition of water service use information, for example.

The bank customer information acquisition unit G234 acquires bank customer information associated with the same customer identifier as the customer identifier accepted by the acceptance unit G221. Note that the bank service customer information acquisition unit G234 typically acquires one or more pieces of bank customer information from the bank customer information storage unit G213. However, the bank customer information acquisition unit G234 may acquire one or more pieces of bank customer information from an external server (not shown). Also, acquisition of bank customer information may be acquisition of only part of the information included in bank customer information.

It is preferable that the bank customer information acquisition unit G234 acquires two or more pieces of bank customer information that are associated with two or more personal identifiers that are paired with the same customer identifier as the customer identifier accepted by the acceptance unit G221.

The bank customer information acquisition unit G235 acquires mobile customer information that is associated with a personal identifier that is paired with the same customer identifier as the customer identifier accepted by the acceptance unit G221. Note that the mobile customer information acquisition unit G235 typically acquires one or more pieces of mobile customer information from the mobile customer information storage unit G214. However, the mobile customer information acquisition unit G235 may acquire one or more pieces of bank customer information from an external server (not shown). Also, acquisition of mobile customer information may be acquisition of only part of the information included in mobile customer information.

It is preferable that the mobile customer information acquisition unit G235 acquires two or more pieces of mobile customer information associated with two or more personal identifiers paired with the same customer identifier as the customer identifier accepted by the acceptance unit G221.

The credit rating information acquisition unit G236 acquires credit rating information that specifies the credit rating of the household identified by the customer identifier accepted by the acceptance unit G221, using one or more kinds of information of: the gas information acquired by the gas information acquisition unit G231; the electricity customer information acquired by the electricity customer information acquisition unit G232; the water service customer information acquired by the water service customer information acquisition unit G233; the bank customer information acquired by the bank customer information acquisition unit G234; and the mobile customer information acquired by the mobile customer information acquisition unit G235.

It is preferable that the credit rating information acquisition unit G236 acquires credit rating information that specifies the credit rating regarding the household identified by the customer identifier accepted by the acceptance unit G221, using the gas information acquired by the gas information acquisition unit G231.

The credit rating information acquisition unit G236 may acquire the credit rating information regarding the household, using one or more pieces of credit rating information of: credit rating information regarding gas described later; credit rating information regarding electricity described later; credit rating information regarding water service described later; credit rating information regarding bank described later; and credit rating information regarding a mobile described later. In such a case, machine learning algorithm may or may not be used to acquire one or more pieces of credit rating information regarding gas and so on. Also, in such a case, machine learning algorithm may or may not be used to acquire total credit rating information regarding a household. Note that credit rating information regarding gas may be referred to as a gas score, credit rating information regarding electricity may be referred to as an electricity charge score, credit rating information regarding water service may be referred to as a water service fee score, credit rating information regarding a bank may be referred to as a bank score, and credit rating information regarding a mobile may be referred to as a mobile score.

The credit rating information acquisition unit G236 may acquire the credit rating information regarding the household, using an increasing function (for example, a sum, a weighted average, or the like) that employs, as parameters, one or more pieces of credit rating information of: credit rating information regarding gas described later; credit rating information regarding electricity described later; credit rating information regarding water service described later; credit rating information regarding bank described later; and credit rating information regarding a mobile described later. In such a case, machine learning algorithm may or may not be used to acquire one or more pieces of credit rating information for gas and so on.

The following describes an example of processing in which the credit rating information acquisition unit G236 acquires credit rating information without using machine learning, and an example of processing in which the credit rating information acquisition unit G236 acquires credit rating information, using machine learning. Note that there is no limitation on the algorithm that the credit rating information acquisition unit G236 uses to acquire credit rating information. The credit rating information acquisition unit G236 may use one or more kinds of information of: gas information; electricity customer information; water service customer information; bank customer information; and mobile customer information to acquire credit rating information.

### (1) When Machine Learning is Not Used to Acquire Credit Rating Information

The credit rating information acquisition unit G236 acquires credit rating information, using the gas use information acquired by the gas information acquisition unit G231. The credit rating information acquisition unit G236 acquires credit rating information such that the credit rating typically increases as the amount of use indicated by the gas use information increases. The credit rating information acquisition unit G236 acquires credit rating information, using an increasing function that employs gas use information as a parameter, for example. Note that information regarding such a function (information regarding a calculation formula) is stored in the storage unit G21.

It is preferable that the credit rating information acquisition unit G236 acquires credit rating information, using one or more pieces of information of: gas use information; gas supply category information; gas payment category information; and housing category information, for example. It is even more preferable that the credit rating information acquisition unit G236 acquires credit rating information, using, in addition to gas use information, one or more pieces of information of: gas supply category information; gas payment category information; and housing category information, for example.

The credit rating information acquisition unit G236 may acquire one or more partial scores of: a partial score corresponding to gas use information; a partial score corresponding to gas supply category information; a partial score corresponding to gas payment category information; and a partial score corresponding to housing category information, and acquire credit rating information regarding gas, using the one or more partial scores.

The credit rating information acquisition unit G236 may acquire credit rating information regarding gas, using a calculation formula (for example, a "sum" or an "average") that employs two or more partial scores of: a partial score corresponding to gas use information; a partial score corresponding to gas supply category information; a partial score corresponding to gas payment category information; and a partial score corresponding to housing category information.

For example, the partial scores corresponding to the values of gas supply category information (for example, "liquid petroleum", "simple gas", and "city gas") are stored in the storage unit G21, and the credit rating information acquisition unit G236 may determine the partial score corresponding to the gas supply category information with reference to such a correspondence table (a correspondence table of values and partial scores). Note that partial scores are scores based on which credit rating information is acquired.

Also, the credit rating information acquisition unit G236 acquires credit rating information, using a calculation formula that employs gas use information as a parameter, for example. In such a case, numeric values corresponding to the values of gas supply category information are stored in the storage unit G21.

It is preferable that the credit rating information acquisition unit G236 acquires partial scores that satisfy ("simple gas" < "liquid petroleum" < "city gas") as partial scores corresponding to gas supply category information, for example.

For example, the partial scores corresponding to the values of gas payment category information (for example, "credit", "Japan Post Bank", "bank", "collection", and "transfer") are stored in the storage unit G21, and the credit rating information acquisition unit G236 may determine the partial score corresponding to the gas payment category information with reference to such a correspondence table (a correspondence table of values and partial scores).

Also, the credit rating information acquisition unit G236 acquires credit rating information, using a calculation formula that employs gas payment category information as a parameter, for example. In such a case, numeric values corresponding to the values of gas payment category information are stored in the storage unit G21.

It is preferable that the credit rating information acquisition unit G236 acquires partial scores that satisfy ("collection" < "transfer" < "bank" < "Japan Post Bank" < "credit") as partial scores corresponding to gas payment category information, for example.

Also, for example, partial scores corresponding to the values of housing category information (for example, "apartment", "public / municipal / prefectural housing", "owned apartment", "owned house", "company housing / apartment", and "rental house") are stored in the storage unit G21, and the credit rating information acquisition unit G236 may determine the partial score corresponding to the housing category information with reference to such a correspondence table (a correspondence table of values and partial scores).

Also, the credit rating information acquisition unit G236 acquires credit rating information, using a calculation formula that employs housing category information as a parameter, for example. In such a case, numeric values corresponding to the values of housing category information are stored in the storage unit G21.

It is preferable that the credit rating information acquisition unit G236 acquires partial scores that satisfy ("company housing / apartment" < "owned apartment" < "public / municipal / prefectural housing" < "rental house" < "apartment" < "owned house") as partial scores corresponding to housing category information, for example.

It is preferable that the credit rating information acquisition unit G236 acquires credit rating information, using the electricity customer information acquired by the electricity customer information acquisition unit G232.

The credit rating information acquisition unit G236 acquires credit rating information such that the credit rating typically increases as the amount of electricity used specified by the information included in electricity customer information increases. The credit rating information acquisition unit G236 acquire, for example, credit rating information that indicates a higher credit rating as the electricity fee indicated by electricity use fee category information increases.

It is preferable that the credit rating information acquisition unit G236 acquires credit rating information, using one or more pieces of information of: electricity use fee category information; electricity supply category information; electricity payment category information; and housing category information, for example.

The credit rating information acquisition unit G236 may acquire one or more partial scores of: a partial score corresponding to electricity use fee category information; a partial score corresponding to electricity supply category information; a partial score corresponding to electricity payment category information; and a partial score corresponding to housing category information, and acquire credit rating information regarding electricity, using the one or more partial scores.

For example, partial scores corresponding to the values of electricity supply category information are stored in the storage unit G21, and the credit rating information acquisition unit G236 may determine the partial score corresponding to the electricity supply category information with reference to such a correspondence table (a correspondence table of values and partial scores).

Also, the credit rating information acquisition unit G236 acquires credit rating information, using a calculation formula that employs electricity supply category information as a parameter, for example. In such a case, numeric values corresponding to the values of electricity supply category information are stored in the storage unit G21.

It is preferable that the credit rating information acquisition unit G236 acquires partial scores that satisfy ("general electricity company" < "wholesale electricity company" < "specific scale electricity company") as partial scores corresponding to electricity supply category information, for example.

Also, for example, the partial scores corresponding to the values of electricity payment category information (for example, "credit", "Japan Post Bank", "bank", "collection", and "transfer") are stored in the storage unit G21, and the credit rating information acquisition unit G236 may determine the partial score corresponding to the electricity payment category information with reference to such a correspondence table (a correspondence table of values and partial scores).

Also, the credit rating information acquisition unit G236 acquires credit rating information, using a calculation formula that employs electricity payment category information as a parameter, for example. In such a case, numeric values corresponding to the values of electricity payment category information are stored in the storage unit G21.

It is preferable that the credit rating information acquisition unit G236 acquires partial scores that satisfy ("collection" < "transfer" < "bank" < "Japan Post Bank" < "credit") as partial scores corresponding to electricity payment category information, for example.

Also, for example, partial scores corresponding to the values of housing category information (for example, "apartment", "public / municipal / prefectural housing", "owned apartment", "owned house", "company housing / apartment", and "rental house") are stored in the storage unit G21, and the credit rating information acquisition unit G236 may determine the partial score regarding electricity corresponding to the housing category information with reference to such a correspondence table (a correspondence table of values and partial scores).

Also, the credit rating information acquisition unit G236 acquires credit rating information, using a calculation formula that employs housing category information as a parameter, for example. In such a case, numeric values corresponding to the values of housing category information are stored in the storage unit G21.

It is preferable that the credit rating information acquisition unit G236 acquires partial scores regarding electricity that satisfy ("company housing / apartment" < "owned apartment" < "public / municipal / prefectural housing" < "rental house" < "apartment" < "owned house") as partial scores corresponding to housing category information, for example.

It is preferable that the credit rating information acquisition unit G236 acquires credit rating information, using the water service customer information acquired by the water service customer information acquisition unit G233.

The credit rating information acquisition unit G236 acquires credit rating information such that the credit rating typically increases as the amount of water used specified by the information included in water service customer information increases. The credit rating information acquisition unit G236 acquire, for example, credit rating information that indicates a higher credit rating as the water service fee indicated by water service use fee category information increases.

It is preferable that the credit rating information acquisition unit G236 acquires credit rating information, using one or more pieces of information of: water service use fee category information; water service supply category information; water service payment category information; and housing category information, for example.

The credit rating information acquisition unit G236 may acquire one or more partial scores of: a partial score corresponding to water service use fee category information; a partial score corresponding to water service supply category information; a partial score corresponding to water service payment category information; and a partial score corresponding to housing category information, and acquire credit rating information regarding water service, using the one or more partial scores.

For example, partial scores corresponding to the values of water service supply category information are stored in the storage unit G21, and the credit rating information acquisition unit G236 may determine the partial score corresponding to the water service supply category information with reference to such a correspondence table (a correspondence table of values and partial scores).

Also, the credit rating information acquisition unit G236 acquires credit rating information, using a calculation formula that employs water service supply category information as a parameter, for example. In such a case, numeric values corresponding to the values of water service supply category information are stored in the storage unit G21.

It is preferable that the credit rating information acquisition unit G236 acquires partial scores that satisfy ("dedicated water supply" < "simple water supply" < "water supply") as partial scores corresponding to water service supply category information, for example.

Also, for example, the partial scores corresponding to the values of water service payment category (for example, "credit", "Japan Post Bank", "bank", "collection", and "transfer") are stored in the storage unit G21, and the credit rating information acquisition unit G236 may determine the partial score corresponding to the water service payment category information with reference to such a correspondence table (a correspondence table of values and partial scores).

Also, the credit rating information acquisition unit G236 acquires credit rating information, using a calculation formula that employs water service payment category information as a parameter, for example. In such a case, numeric values corresponding to the values of water service payment category information are stored in the storage unit G21.

It is preferable that the credit rating information acquisition unit G236 acquires partial scores that satisfy ("collection" < "transfer" < "bank" < "Japan Post Bank" < "credit") as partial scores corresponding to water service payment category information, for example.

Also, for example, partial scores corresponding to the values of housing category information (for example, "apartment", "public / municipal / prefectural housing", "owned apartment", "owned house", "company housing / apartment", and "rental house") are stored in the storage unit G21, and the credit rating information acquisition unit G236 may determine the partial score regarding water service corresponding to the housing category information with reference to such a correspondence table (a correspondence table of values and partial scores).

Also, the credit rating information acquisition unit G236 acquires credit rating information, using a calculation formula that employs housing category information as a parameter, for example. In such a case, numeric values corresponding to the values of housing category information are stored in the storage unit G21.

It is preferable that the credit rating information acquisition unit G236 acquires partial scores that satisfy ("company housing / apartment" < "owned apartment" < "public / municipal / prefectural housing" < "rental house" < "apartment" < "owned house") as partial scores for water service corresponding to housing category information, for example.

It is preferable that the credit rating information acquisition unit G236 acquires credit rating information, using the bank customer information acquired by the bank customer information acquisition unit G234.

The credit rating information acquisition unit G236 acquires credit rating information such that the credit rating typically increases as "the amount of bank account activity" or "the deposit balance" specified by the information included in bank customer information increases. The credit rating information acquisition unit G236 acquires credit rating information, using an increasing function that employs "the amount of bank account activity" or "the deposit balance" as a parameter, for example.

It is preferable that the credit rating information acquisition unit G236 acquires credit rating information, using one or more pieces of information of: the amount of bank account activity; the deposit balance; housing category information that specifies the type of housing of the customer; the presence or absence of a credit card; and the presence or absence of a safe deposit box, for example.

The credit rating information acquisition unit G236 acquires credit rating information such that the credit rating typically is higher when the information included in the bank customer information is "the presence of a credit card" than when the information is "the absence of a credit card".

The credit rating information acquisition unit G236 acquires credit rating information such that the credit rating typically is higher when the information included in the bank customer information is "the presence of a safe deposit box" than when the information is "the absence of a safe deposit box".

The credit rating information acquisition unit G236 may acquire one or more partial scores of: a partial score corresponding to the amount of bank account activity; a partial score corresponding to the deposit balance; a partial score corresponding to housing category information; a partial score corresponding to the presence or absence of a credit card; and a partial score corresponding to the presence or absence of a safe deposit box, and acquire credit rating information regarding the bank, using the one or more partial scores.

Also, for example, partial scores corresponding to the values of housing category information (for example, "apartment", "public / municipal / prefectural housing", "owned apartment", "owned house", "company housing / apartment", and "rental house") are stored in the storage unit G21, and the credit rating information acquisition unit G236 may determine the partial score regarding the bank corresponding to housing category information with reference to such a correspondence table (a correspondence table of values and partial scores).

Also, the credit rating information acquisition unit G236 acquires credit rating information, using a calculation formula that employs housing category information as a parameter, for example. In such a case, numeric values corresponding to the values of housing category information are stored in the storage unit G21.

It is preferable that the credit rating information acquisition unit G236 acquires partial scores that satisfy ("company housing / apartment" < "owned apartment" < "public / municipal / prefectural housing" < "rental house" < "apartment" < "owned house") as partial scores regarding a bank corresponding to housing category information, for example.

It is preferable that the credit rating information acquisition unit G236 acquires credit rating information, using two or more pieces of bank customer information acquired by the bank customer information acquisition unit G234. The two or more pieces of bank customer information are bank customer information paired with a customer identifier or a bank customer information paired with a personal identifier paired with a customer identifier.

The credit rating information acquisition unit G236 may acquire credit rating information corresponding to the two or more pieces of bank customer information acquired by the bank customer information acquisition unit G234, and acquire the credit rating information for the household, using an increasing function that employs the two or more pieces of credit rating information as parameters. Such credit rating information may be credit rating information regarding a bank. Examples of operations performed using the increasing function include a sum operation, an average value calculation operation, an operation for acquiring the maximum value, an operation for acquiring the minimum value, and so on.

It is preferable that the credit rating information acquisition unit G236 acquires credit rating information, using mobile customer information acquired by the mobile customer information acquisition unit G235.

The credit rating information acquisition unit G236 acquires credit rating information that typically indicates a higher credit rating as the payment specified by mobile payment history information increases. If mobile payment history information is information that indicates that the payment was not overdue, the credit rating information acquisition unit G236 typically acquires credit rating information that indicates a higher credit rating compared to when mobile payment history information is information that indicates the payment was overdue.

The credit rating information acquisition unit G236 acquires credit rating information that typically indicates a higher credit rating as the amount of use indicated by mobile use status information increases as (the period increases, as the data amount increases, or the like).

It is preferable that the credit rating information acquisition unit G236 acquires credit rating information, using two or more pieces of mobile customer information acquired by the mobile customer information acquisition unit G235. The two or more pieces of mobile customer information are bank customer information paired with a customer identifier or a mobile customer information paired with a personal identifier paired with a customer identifier.

The credit rating information acquisition unit G236 may acquire credit rating information corresponding to the two or more pieces of mobile customer information acquired by the mobile customer information acquisition unit G235, and acquire the credit rating information for the household, using an increasing function that employs the two or more pieces of credit rating information as parameters. Such credit rating information may be credit rating information regarding a mobile.

### (2) When Machine Learning is Used to Acquire Credit Rating Information

### (2-1) Processing that is Performed to Form Learner

It is assumed that two or more pieces of learning source information are stored in the storage unit G21. Learning source information is information used to create a learner. Learning source information contains, in addition to credit rating information that is associated with a customer identifier, one or more kinds of information of: gas information that is associated with a customer identifier; water service customer information that is associated with a customer identifier; bank customer information that is associated with a customer identifier; and mobile customer information that is associated with a customer identifier. Learning source information may also be referred to as teacher data.

The processing unit G23 acquires, from two or more pieces of learning source information, information that is to be input and credit rating information that is information that is to be output. Information that is to be input is one or more kinds of information of: information that is contained in gas information; information that is contained in water service customer information; information that is contained in bank customer information; and information that is contained in mobile customer information, and is information to be learned. Information that is to be input is one or more pieces of information of, for example: gas use information; gas supply category information; gas payment category information; housing category information; electricity supply category information; electricity payment category information; electricity use fee category information; water service supply category information; water service payment category information; water service use fee category information; the amount of bank account activity; the deposit balance; information that specifies the presence or absence of a credit card; information that specifies the presence or absence of a safe deposit box; mobile payment history information; and mobile use status information.

Next, the processing unit G23 acquires a plurality of sets consisting of information that is to be input and credit rating information that is information that is to be output, from the learning source information in the storage unit G21, provides the plurality of sets of pieces of information to a module for forming a learner for machine learning to form a learner, and accumulates it in the storage unit G21. Note that there is no limitation on the machine learning algorithm, which may be, for example, deep learning, random forest, SVR, or the like. In addition, the machine learning module may be any module, such as a TensorFlow module, fastText, TinySvm, any kind of RandomForest function, or the like. The learner may be referred to as a classifier.

### (2-1) Credit Rating Information Acquisition Processing

Next, the credit rating information acquisition unit G236 acquires one or more kinds of information of: gas information; electricity customer information; water service customer information; bank customer information; and mobile customer information paired with the customer identifier of the household for which credit rating information is to be acquired. It is preferable that the kind of information that is acquired here is the same as the kind of information that is used to form a learner.

Next, the credit rating information acquisition unit G236 acquires credit rating information according to a machine learning algorithm, using the acquired information and the accumulated learner. That is to say, for example, the credit rating information acquisition unit G236 forms a vector from the acquired information, provides the vector and the learner in the storage unit G21 to a module for performing prediction in machine learning, and acquires credit rating information, using a machine learning algorithm. Note that there is no limitation on the machine learning algorithm in the case of such prediction, which may be, for example, deep learning, random forest, SVR, or the like. In addition, the machine learning prediction module may be any module, such as a TensorFlow module, fastText, TinySvm, any kind of RandomForest function, or the like. Note that prediction here is processing that is performed to acquire credit rating information.

The output unit G24 outputs various kinds of information. Examples of the various kinds of information include credit rating information. In addition, "output" here means accumulation in the customer information storage unit A211, for example. In addition, "output" means display or transmission, for example. When "output" means display, the output unit G24 may be regarded as including or not including an output device such as a display or a speaker. The output unit G24 can be realized using the driver software of the output device, the driver software of the output device and the output device, or the like.

The credit rating information output unit G241 outputs the credit rating information acquired by the credit rating information acquisition unit G236. It is preferable that the credit rating information output unit G241 outputs credit rating information in association with a customer identifier.

It is preferable that the terminal storage unit G11, the storage unit G21, the electricity customer information storage unit G211, the water service customer information storage unit G212, the bank customer information storage unit G213, and the mobile customer information storage unit G214 are realized using a non-volatile recording medium, but they may be realized using a volatile recording medium.

There is no limitation on the process in which information is stored in the terminal storage unit G11 and so on. For example, information may be stored in the terminal storage unit G11 or the like via a recording medium, or information transmitted via a communication line or the like may be stored in the terminal storage unit G11 or the like, or information input via an input device may be stored in the terminal storage unit G11 or the like.

The terminal acceptance unit G12 can be realized using a device driver for the input means such as a touch panel or a keyboard, or control software or the like for controlling the menu screen.

The terminal processing unit G13, the processing unit G23, the gas information acquisition unit G231, the electricity customer information acquisition unit G232, the water service customer information acquisition unit G233, the bank customer information acquisition unit G234, the mobile customer information acquisition unit G235 and the credit rating information acquisition unit G236 can typically be realized using an MPU, a memory, or the like. The processing procedures performed by the terminal processing unit G13 and so on typically are realized using software, and the software is recorded on a recording medium such as a ROM. However, such processing procedures may be realized using hardware (a dedicated circuit).

The terminal transmission unit G14, the output unit G24, and the credit rating information output unit G241 typically are realized using a wireless or wired communication means, but may be realized using a broadcast means.

The terminal reception unit G15, the reception unit G22, and the acceptance unit G221 typically are realized using a wireless or wired communication means, but may be realized using a means for receiving broadcast.

The terminal output unit G16 may be regarded as including or not including an output device such as a display or a speaker. The terminal output unit G16 can be realized using the driver software of the output device, the driver software of the output device and the output device, or the like.

Next, operations that are performed by the information system G will be described. First, operations that are performed by the terminal apparatuses G1 will be described.

The terminal acceptance unit G12 of each of the terminal apparatuses G1 accepts a credit rating acquisition instruction. Next, the terminal processing unit G13 forms a credit rating acquisition instruction that is to be transmitted. Next, the terminal transmission unit G14 transmits the formed credit rating acquisition instruction to the information processing apparatus G2. Next, the terminal reception unit G15 receives credit rating information for each customer corresponding to the credit rating acquisition instruction. Thereafter, the terminal processing unit G13 forms information that is to be output, using the credit rating information for each customer thus received. Next, the terminal output unit G16 outputs credit rating information for each customer.

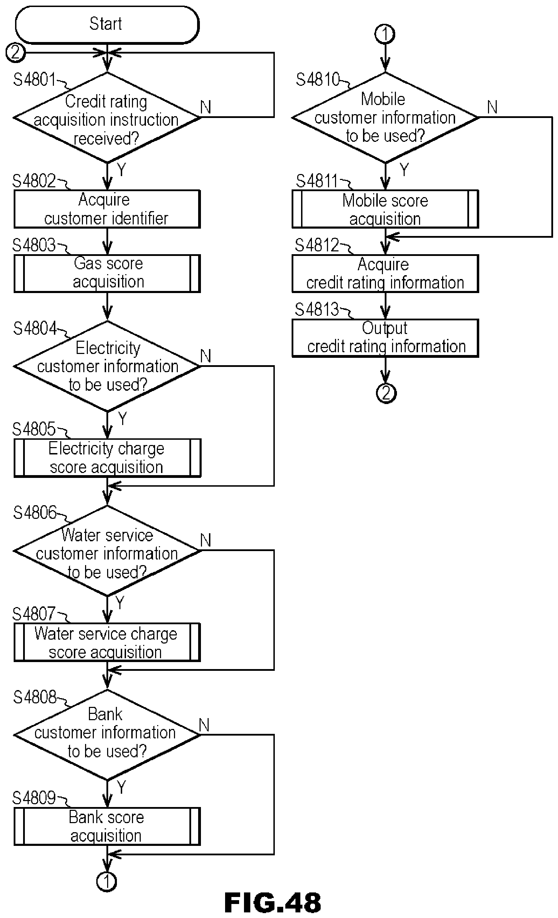

Next, an example of household credit rating acquisition processing that is performed by the information processing apparatus G2 will be described with reference to the flowchart shown in FIG. 48.

(Step S4801) The acceptance unit G221 determines whether or not a credit rating acquisition instruction has been received from a terminal apparatus G1. If a credit rating acquisition instruction has been received, processing proceeds to step S4802, and if a credit rating acquisition instruction has not been received, processing returns to step S4801.

(Step S4802) The processing unit G23 acquires a customer identifier that is contained in the credit rating acquisition instruction received in step S4801.

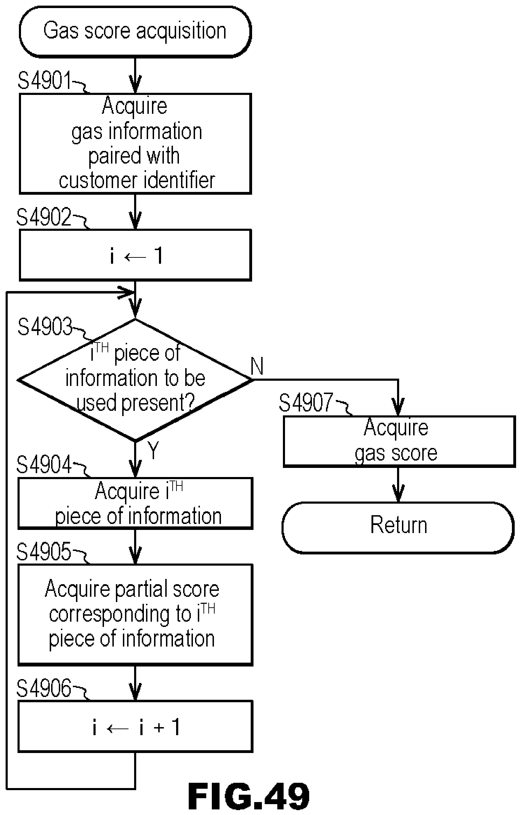

(Step S4803) The credit rating information acquisition unit G236 acquires a gas score. Gas score acquisition processing will be described with reference to the flowchart shown in FIG. 49.

(Step S4804) When acquiring credit rating information, the credit rating information acquisition unit G236 determines whether or not to use electricity customer information. When electricity customer information is to be used, processing proceeds to step S4805, and when electricity customer information is not to be used, processing proceeds to step S4806. Note that, for example, whether or not electricity customer information is to be used has been determined in advance or is determined by a user instruction or the like.

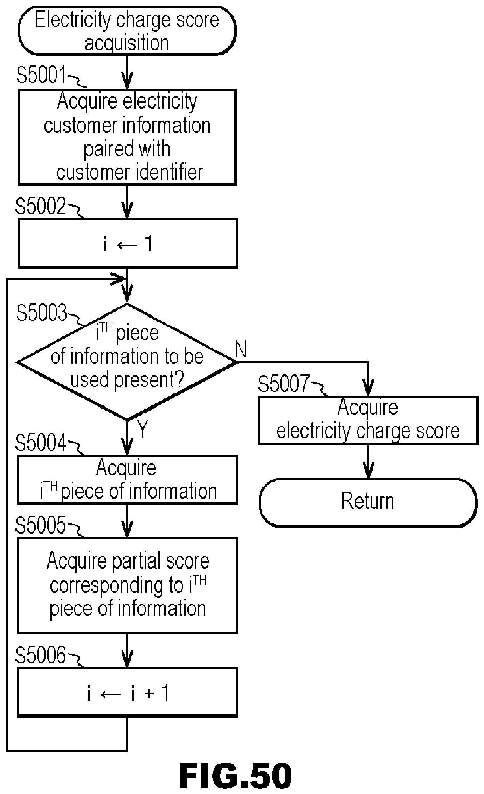

(Step S4805) The credit rating information acquisition unit G236 acquires an electricity score. Electricity charge score acquisition processing will be described with reference to the flowchart shown in FIG. 50.

(Step S4806) When acquiring credit rating information, the credit rating information acquisition unit G236 determines whether or not to use water service customer information. When water service customer information is to be used, processing proceeds to step S4807, and when water service customer information is not to be used, processing proceeds to step S4808. Note that, for example, whether or not water service customer information is to be used has been determined in advance or is determined by a user instruction or the like.

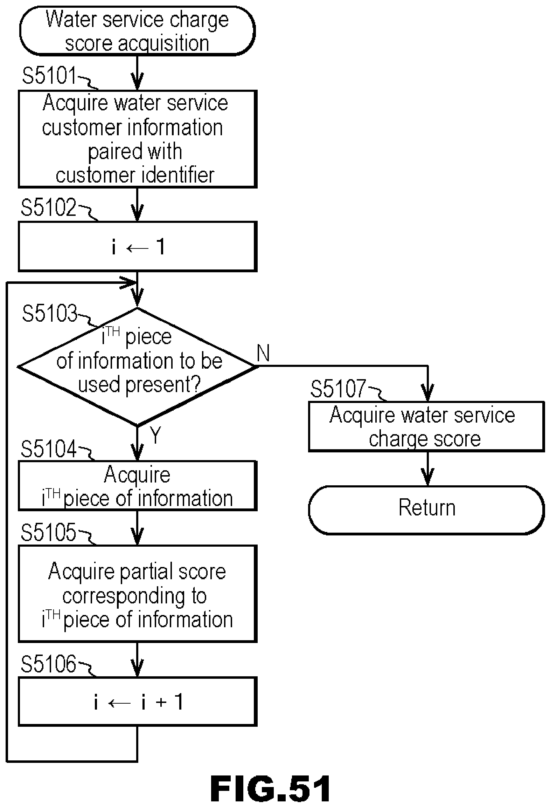

(Step S4807) The credit rating information acquisition unit G236 acquires a water service charge score. Water service charge score acquisition processing will be described with reference to the flowchart shown in FIG. 51.

(Step S4808) When acquiring credit rating information, the credit rating information acquisition unit G236 determines whether or not to use bank customer information. When bank customer information is to be used, processing proceeds to step S4809, and when bank customer information is not to be used, processing proceeds to step S4810. Note that, for example, whether or not bank customer information is to be used has been determined in advance or is determined by a user instruction or the like.

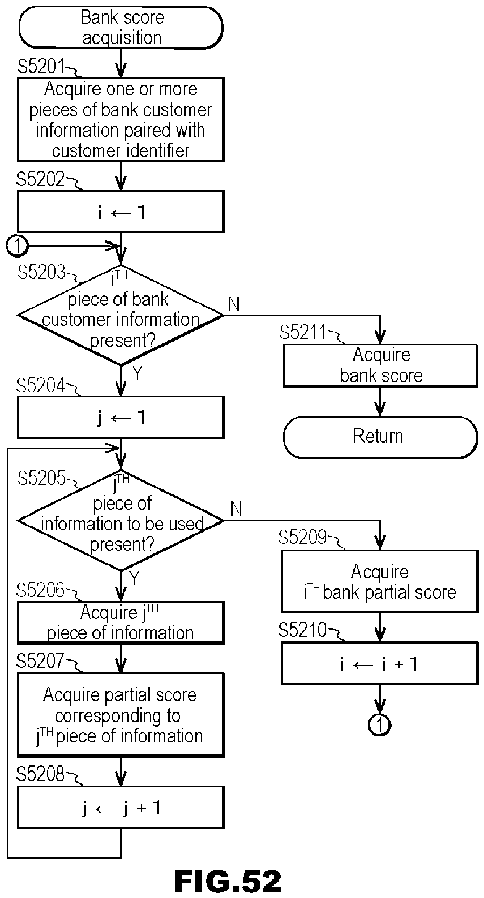

(Step S4809) The credit rating information acquisition unit G236 acquires a bank score. Bank score acquisition processing will be described with reference to the flowchart shown in FIG. 52.

(Step S4810) When acquiring credit rating information, the credit rating information acquisition unit G236 determines whether or not to use mobile customer information. When mobile customer information is to be used, processing proceeds to step S4811, and when mobile customer information is not to be used, processing proceeds to step S4812. Note that, for example, whether or not mobile customer information is to be used has been determined in advance or is determined by a user instruction or the like.

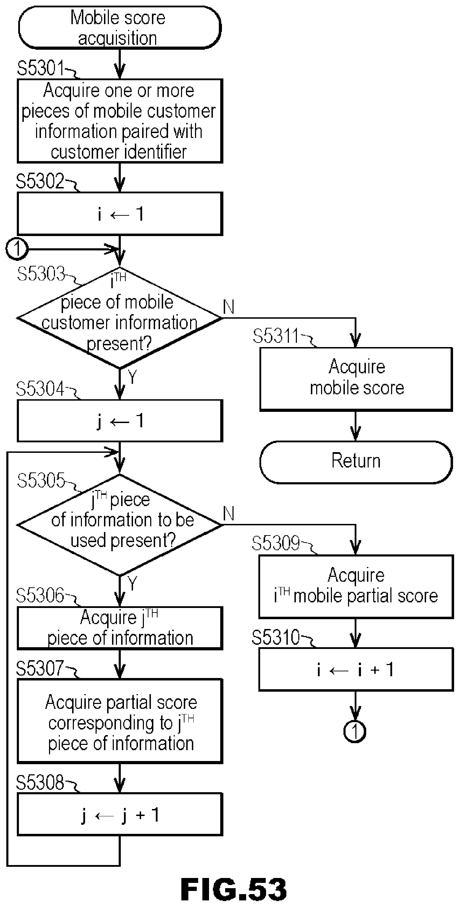

(Step S4811) The credit rating information acquisition unit G236 acquires a mobile score. Mobile score acquisition processing will be described with reference to the flowchart shown in FIG. 53.

(Step S4812) The credit rating information acquisition unit G236 acquires credit rating information, using the one or more scores thus acquired. The credit rating information acquisition unit G236 acquires credit rating information that typically indicates a higher credit rating as each of the one or more scores increases. If only one score has been acquired, this step may be omitted and the one score may be used as credit rating information.

(Step S4813) The credit rating information output unit G241 transmits the credit rating information acquired in step S4812 to the terminal apparatus G1. Processing returns to step S4801.

In the flowchart shown in FIG. 48, credit rating information may be acquired using other one or more scores without acquiring a gas score.

In the flowchart shown in FIG. 48, when credit rating information that corresponds to each of two or more customer identifiers, steps S4802 to S4813 are repeated for each customer identifier, for example.

In the flowchart shown in FIG. 48, processing is terminated when power is turned off or an interruption is made to terminate the processing.

Next, the gas score acquisition processing in step S4803 will be described with reference to the flowchart shown in FIG. 49.

(Step S4901) The credit rating information acquisition unit G236 acquires gas information that is paired with the customer identifier acquired in step S4802, from the gas information storage unit A212.

(Step S4902) The credit rating information acquisition unit G236 substitutes 1 for the counter i.

(Step S4903) The credit rating information acquisition unit G236 determines whether or not the i^{th} piece of information that is to be used to acquire a gas score is present in the pieces of gas information acquired in step S4901. If the i^{th} piece of information is present, processing proceeds to step S4904, and if the i^{th} piece of information is not present, processing proceeds to step S4907.

(Step S4904) The credit rating information acquisition unit G236 acquires the i^{th} information of the pieces of gas information acquired in step S4901.

(Step S4905) The credit rating information acquisition unit G236 acquires a partial score corresponding to the i^{th} piece of information acquired in step S4904. Note that the credit rating information acquisition unit G236 acquires a partial score from a correspondence table in which two or more pieces of correspondence information that each contain information and a partial score in pair are stored, for example. Also, the credit rating information acquisition unit G236 provides the i^{th} piece of information to a calculation formula as a parameter, executes the calculation formula, and acquires a partial score, for example.

(Step S4906) The credit rating information acquisition unit G236 increments the counter i by 1. Processing returns to step S4903.

(Step S4907) The credit rating information acquisition unit G236 acquires a gas score, using the one or more partial scores acquired in step S4905, and at least temporarily accumulates it in the storage unit G21. Processing returns to higher level processing.

Note that the credit rating information acquisition unit G236 acquires a higher gas score as each of the one or more partial scores acquired in step S4905 increases. The credit rating information acquisition unit G236 calculates a gas score, using an increasing function that employs the one or more partial scores acquired in step S4905 as parameters.

Next, the electricity charge score acquisition processing in step S4805 will be described with reference to the flowchart shown in FIG. 50.

(Step S5001) The credit rating information acquisition unit G236 acquires electricity customer information that is paired with the customer identifier acquired in step S4802, from the electricity customer information storage unit G211.

(Step S5002) The credit rating information acquisition unit G236 substitutes 1 for the counter i.

(Step S5003) The credit rating information acquisition unit G236 determines whether or not the i^{th} piece of information that is to be used to acquire an electricity charge score is present in the pieces of electricity customer information acquired in step S5001. If the i^{th} piece of information is present, processing proceeds to step S5004, and if the i^{th} piece of information is not present, processing proceeds to step S5007.

(Step S5004) The credit rating information acquisition unit G236 acquires the i^{th} information of the pieces of electricity customer information acquired in step S5001.

(Step S5005) The credit rating information acquisition unit G236 acquires a partial score corresponding to the i^{th} piece of information acquired in step S5004. Note that the credit rating information acquisition unit G236 acquires a partial score from a correspondence table in which two or more pieces of correspondence information that each contain information and a partial score in pair are stored, for example. Also, the credit rating information acquisition unit G236 provides the i^{th} piece of information to a calculation formula as a parameter, executes the calculation formula, and acquires a partial score, for example.

(Step S5006) The credit rating information acquisition unit G236 increments the counter i by 1. Processing returns to step S5003.

(Step S5007) The credit rating information acquisition unit G236 acquires an electricity charge score, using the one or more partial scores acquired in step S5005, and at least temporarily accumulates it in the storage unit G21. Processing returns to higher level processing.

Note that the credit rating information acquisition unit G236 acquires a higher electricity charge score as each of the one or more partial scores acquired in step S5005 increases. The credit rating information acquisition unit G236 calculates an electricity charge score, using an increasing function that employs the one or more partial scores acquired in step S5005 as parameters.

Next, the water service charge score acquisition processing in step S4807 will be described with reference to the flowchart shown in FIG. 51.

(Step S5101) The credit rating information acquisition unit G236 acquires water service customer information that is paired with the customer identifier acquired in step S4802, from the water service customer information storage unit G212.

(Step S5102) The credit rating information acquisition unit G236 substitutes 1 for the counter i.

(Step S5103) The credit rating information acquisition unit G236 determines whether or not the i^{th} piece of information that is to be used to acquire a water service charge score is present in the pieces of water service customer information acquired in step S5101. If the i^{th} piece of information is present, processing proceeds to step S5104, and if the i^{th} piece of information is not present, processing proceeds to step S5107.

(Step S5104) The credit rating information acquisition unit G236 acquires the i^{th} information of the pieces of water service customer information acquired in step S5101.

(Step S5105) The credit rating information acquisition unit G236 acquires a partial score corresponding to the i^{th} piece of information acquired in step S5104. Note that the credit rating information acquisition unit G236 acquires a partial score from a correspondence table in which two or more pieces of correspondence information that each contain information and a partial score in pair are stored, for example. Also, the credit rating information acquisition unit G236 provides the i^{th} piece of information to a calculation formula as a parameter, executes the calculation formula, and acquires a partial score, for example.

(Step S5106) The credit rating information acquisition unit G236 increments the counter i by 1. Processing returns to step S5103.

(Step S5107) The credit rating information acquisition unit G236 acquires a water service charge score, using the one or more partial scores acquired in step S5105, and at least temporarily accumulates it in the storage unit G21. Processing returns to higher level processing.

Note that the credit rating information acquisition unit G236 acquires a higher water service charge score as each of the one or more partial scores acquired in step S5105 increases. The credit rating information acquisition unit G236 calculates a water service score, using an increasing function that employs the one or more partial scores acquired in step S5105 as parameters.

Next, the bank score acquisition processing in step S4809 will be described with reference to the flowchart shown in FIG. 52.

(Step S5201) The credit rating information acquisition unit G236 acquires bank customer information that is paired with the customer identifier acquired in step S4802, from the bank customer information storage unit G213.

(Step S5202) The credit rating information acquisition unit G236 substitutes 1 for the counter i.

(Step S5203) The credit rating information acquisition unit G236 determines whether or not the i^{th} piece of bank customer information is present in the pieces of bank customer information acquired in step S5201. If the i^{th} piece of bank customer information is present, processing proceeds to step S5204, and if the i^{th} piece of bank customer information is not present, processing proceeds to step S5211.

(Step S5204) The credit rating information acquisition unit G236 substitutes 1 for the counter j.

(Step S5205) The credit rating information acquisition unit G236 determines whether or not the j^{th} piece of information that is to be used to acquire a bank score is present in the i^{th} piece of bank customer information acquired in step S5201. If the j^{th} piece of information is present, processing proceeds to step S5206, and if the j^{th} piece of information is not present, processing proceeds to step S5209.

(Step S5206) The credit rating information acquisition unit G236 acquires the j^{th} piece of information of the i^{th} piece of bank customer information acquired in step S5201.

(Step S5207) The credit rating information acquisition unit G236 acquires a partial score corresponding to the j^{th} piece of information acquired in step S5206. Note that the credit rating information acquisition unit G236 acquires a partial score from a correspondence table in which two or more pieces of correspondence information that each contain information and a partial score in pair are stored, for example. Also, the credit rating information acquisition unit G236 provides the j^{th} piece of information to a calculation formula as a parameter, executes the calculation formula, and acquires a partial score, for example.

(Step S5208) The credit rating information acquisition unit G236 increments the counter j by 1. Processing returns to step S5205.

(Step S5209) The credit rating information acquisition unit G236 acquires the i^{th} bank partial score, using the one or more partial scores acquired in step S5207.

(Step S5210) The counter i is incremented by 1. Processing returns to step S5203.

(Step S5211) The credit rating information acquisition unit G236 acquires a bank score, using the one or more bank partial scores acquired in step S5209, and at least temporarily accumulates it in the storage unit G21. Processing returns to higher level processing.

Note that, in step S5209, the credit rating information acquisition unit G236 acquires a higher bank score as each of the one or more partial scores acquired in step S5207 increases. The credit rating information acquisition unit G236 calculates a bank partial score in step S5209, using an increasing function that employs the one or more partial scores acquired in step S5207 as parameters.

Note that the credit rating information acquisition unit G236 acquires a higher bank score as each of the one or more partial bank scores acquired in step S5209 increases. The credit rating information acquisition unit G236 calculates a bank partial score, using an increasing function that employs the one or more partial bank scores acquired in step S5209 as parameters.

Next, the mobile score acquisition processing in step S4811 will be described with reference to the flowchart shown in FIG. 53.

(Step S5301) The credit rating information acquisition unit G236 acquires mobile customer information that is paired with the customer identifier acquired in step S4802, from the mobile customer information storage unit G212.

(Step S5302) The credit rating information acquisition unit G236 substitutes 1 for the counter i.

(Step S5303) The credit rating information acquisition unit G236 determines whether or not the i^{th} piece of mobile customer information is present in the pieces of mobile customer information acquired in step S5301. If the i^{th} piece of mobile customer information is present, processing proceeds to step S5304, and if the i^{th} piece of mobile customer information is not present, processing proceeds to step S5311.

(Step S5304) The credit rating information acquisition unit G236 substitutes 1 for the counter j.

(Step S5305) The credit rating information acquisition unit G236 determines whether or not the j^{th} piece of information that is to be used to acquire a mobile score is present in the i^{th} piece of mobile customer information acquired in step S5301. If the j^{th} piece of information is present, processing proceeds to step S5306, and if the j^{th} piece of information is not present, processing proceeds to step S5309.

(Step S5306) The credit rating information acquisition unit G236 acquires the j^{th} piece of information of the i^{th} piece of mobile customer information acquired in step S5301.

(Step S5307) The credit rating information acquisition unit G236 acquires a partial score corresponding to the j^{th} piece of information acquired in step S5306. Note that the credit rating information acquisition unit G236 acquires a partial score from a correspondence table in which two or more pieces of correspondence information that each contain information and a partial score in pair are stored, for example. Also, the credit rating information acquisition unit G236 provides the j^{th} piece of information to a calculation formula as a parameter, executes the calculation formula, and acquires a partial score, for example.

(Step S5308) The credit rating information acquisition unit G236 increments the counter j by 1. Processing returns to step S5305.

(Step S5309) The credit rating information acquisition unit G236 acquires the i^{th} mobile partial score, using the one or more partial scores acquired in step S5307.

(Step S5310) The counter i is incremented by 1. Processing returns to step S5303.

(Step S5311) The credit rating information acquisition unit G236 acquires a mobile score, using the one or more mobile partial scores acquired in step S5309, and at least temporarily accumulates it in the storage unit G21. Processing returns to higher level processing. Note that, when one mobile partial score has been acquired, the mobile partial score typically is a mobile score.

Note that, in step S5309, the credit rating information acquisition unit G236 acquires a higher partial mobile score as each of the one or more partial scores acquired in step S5307 increases. The credit rating information acquisition unit G236 calculates a mobile partial score in step S5309, using an increasing function that employs the one or more partial scores acquired in step S5307 as parameters.

Note that the credit rating information acquisition unit G236 acquires a higher mobile score as each of the one or more partial mobile scores acquired in step S5309 increases. The credit rating information acquisition unit G236 calculates a mobile score, using an increasing function that employs the one or more partial mobile partial scores acquired in step S5309 as parameters.

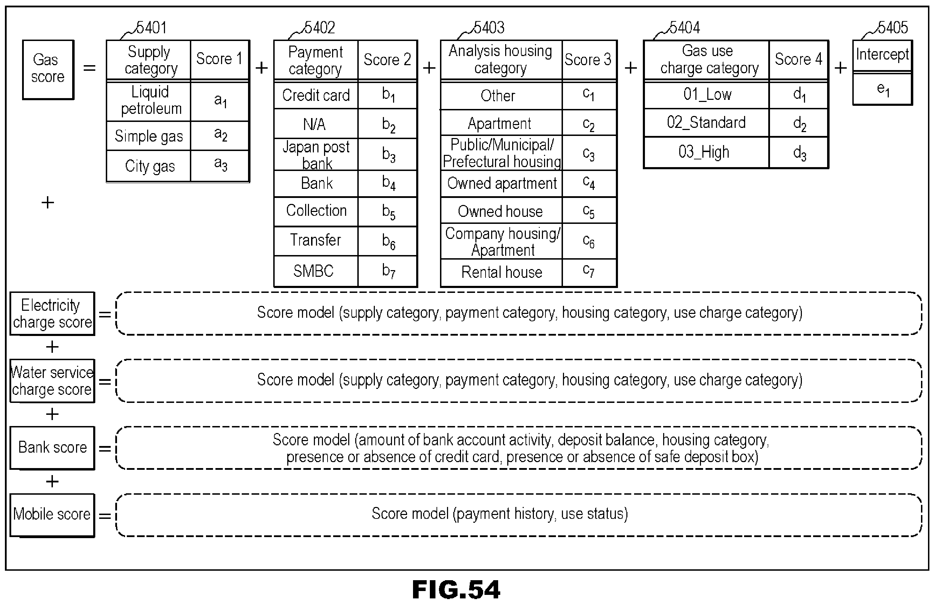

The following describes specific operations that are performed by the information system G according to the present embodiment. The conceptual diagram that shows the concept of processing that is performed by the information system G is FIG. 54.

Now, the storage unit G21 of the information processing apparatus G2 stores a score model for calculating a gas score. The storage unit G21 also stores a score model for calculating an electricity charge score. The storage unit G21 also stores a score model for calculating a water service charge score. The storage unit G21 also stores a score model for calculating a bank score. Furthermore, the storage unit G21 stores a score model for calculating a mobile score.

A score model is information that is used to acquire a score. In this example, correspondence tables that are used to acquire one or more partial scores is stored. The correspondence tables include a gas supply category correspondence table 5401, a gas payment category correspondence table 5402, a housing category information correspondence table 5403, and a gas use fee category correspondence table 5404. The score model also includes an intercept 5405.

The gas supply category correspondence table 5401 is a table that shows the correspondence between "supply category" and "score 1". "Supply category" is gas supply category information. In the gas supply category correspondence table 5401, the partial score when gas supply category information is "liquid petroleum" is "a₁". Note that, in FIG. 54, all partial scores are represented by signs (a₁, ..., d₃, e₁), but they are specific numerical values when used.

The gas payment category correspondence table 5402 is a table that shows the correspondence between "payment category" and "score 2". "Payment category" is gas payment category information.

The housing category information correspondence table 5403 is a table that shows the correspondence between "analysis housing category" and "score 3". "Analysis housing category" is housing category information.

The gas use fee category correspondence table 5404 is a table that shows the correspondence between "gas use fee category" and "score 4". "Gas use fee category" is gas use fee category information.

The intercept 5405 is a correction value.

In addition, although not specifically illustrated, as with the score model for the gas score, a score model for the electricity charge, a score model for the water service charge score, a score model for the bank score, and a score model for the mobile score have one or more correspondence tables for determining a partial score in correspondence with a value that has been determined.

The score model for the electricity charge score has an electricity supply category correspondence table that shows the correspondence between "electricity supply category information" and "score", an electricity payment category correspondence table that shows the correspondence between "electricity payment category information" and "score", a housing category information correspondence table that shows the correspondence between "housing category information" and "score", and electricity use fee category correspondence table that shows the correspondence between "electricity use fee category information" and "score".

The score model for the water service charge score has a water service supply category correspondence table that shows the correspondence between "water service supply category information" and "score", a water service payment category correspondence table that shows the correspondence between "water service payment category information" and "score", a housing category information correspondence table that shows the correspondence between "housing category information" and "score", and water service use fee category correspondence table that shows the correspondence between "water service use fee category information" and "score".

The score model for the bank score has a deposit and withdrawal category correspondence table that shows the correspondence between "range of the amount of bank account activity" and "score", a bank balance category correspondence table that shows the correspondence between "range of bank deposit" and "score", a housing category information correspondence table that shows the correspondence between "housing category information" and "score", a credit card correspondence table that is a correspondence table regarding the score that is based on the presence or absence of a credit card, and a safe deposit box correspondence table that is a correspondence table regarding the score that is based on the presence or absence of a safe deposit box.

The score model for the mobile score has a payment history correspondence table that determines the score corresponding to payment history information, and a use status correspondence table that determines the score corresponding to use status information.

In such a situation, it is assumed that a terminal apparatus G1 accepts a credit rating acquisition instruction that contains "customer identifier = C01". Next, the terminal processing unit G13 forms a credit rating acquisition instruction that is to be transmitted. Next, the terminal transmission unit G14 transmits the formed credit rating acquisition instruction (for example, "credit rating acquisition (C01)" to the information processing apparatus G2.

Next, the acceptance unit G221 of the information processing apparatus G2 receives a credit rating acquisition instruction (for example, "credit rating acquisition (C01)" from the terminal apparatus G1.

Next, the processing unit G23 acquires the customer identifier "C01" contained in the received credit rating acquisition instruction.

Next, the gas information acquisition unit G231 acquires gas information that is paired with the customer identifier "C01" from the gas information storage unit A212.

Also, the electricity customer information acquisition unit G232 acquires electricity customer information that is paired with the customer identifier "C01" from the electricity customer information storage unit G211.

The water service customer information acquisition unit G233 acquires water service customer information that is paired with the customer identifier "C01" from the water service customer information storage unit G212.

Also, the bank customer information acquisition unit G234 acquires one or more pieces of bank customer information that are paired with the customer identifier "C01" from the bank customer information storage unit G213.

Furthermore, the mobile customer information acquisition unit G235 acquires one or more pieces of mobile customer information that are paired with the customer identifier "C01" from the mobile customer information storage unit G214.

Thereafter, the credit rating information acquisition unit G236 references the correspondence tables 5401 to 5404 to acquire partial scores corresponding to the information contained in the gas information acquired by the gas information acquisition unit G231. Thereafter, the credit rating information acquisition unit G236 obtains a gas score by calculating the sum of the four partial scores thus acquired and the intercept "-2.93", for example.

Similarly, the credit rating information acquisition unit G236 references the correspondence tables contained in the score model for the electricity charge to acquire four partial scores that are paired with the pieces of information contained in the electricity customer information acquired by the electricity customer information acquisition unit G232. Thereafter, the credit rating information acquisition unit G236 obtains an electricity charge score by calculating the sum of the four partial scores.

Next, the credit rating information acquisition unit G236 references the correspondence tables contained in the score model for the water service charge score to acquire four partial scores that are paired with the pieces of information contained in the water service customer information acquired by the water service customer information acquisition unit G233. Thereafter, the credit rating information acquisition unit G236 obtains a water service charge score by calculating the sum of the four partial scores.

Next, the credit rating information acquisition unit G236 references the correspondence tables contained in the score model for the bank score to acquire five partial scores that are paired with the pieces of information contained in the bank customer information acquired by the bank customer information acquisition unit G234. Thereafter, the credit rating information acquisition unit G236 obtains a bank score for one family by calculating the sum of the five partial scores. Thereafter, the credit rating information acquisition unit G236 acquires bank scores for the family members of the household by performing the same processing on the family members of the household. Thereafter, the credit rating information acquisition unit G236 obtains a bank score of the household, using the bank scores of the family members.

Next, the credit rating information acquisition unit G236 references the correspondence tables contained in the score model for the mobile score to acquire five partial scores that are paired with the pieces of information contained in the mobile customer information acquired by the mobile customer information acquisition unit G235. Thereafter, the credit rating information acquisition unit G236 obtains a mobile score for one family by calculating the sum of the two partial scores. Thereafter, the credit rating information acquisition unit G236 acquires mobile scores of the family members of the household by performing the same processing on the family members of the household. Thereafter, the credit rating information acquisition unit G236 obtains a mobile score of the household, using the mobile scores of the family members.

Next, the credit rating information acquisition unit G236 substitutes the acquired gas score, electricity charge score, water service charge score, bank score, and mobile score into the calculation formula as parameters, and executes the calculation (executes a sum operation here) to acquire credit rating information.

Next, the credit rating information output unit G241 transmits the acquired credit rating information to the terminal apparatus G1 in association with the customer identifier "C01".

Next, the terminal reception unit G15 of the terminal apparatus G1 receives credit rating information corresponding to the credit rating acquisition instruction. Thereafter, the terminal processing unit G13 forms information that is to be output, using the credit rating information thus received. Next, the terminal output unit G16 outputs credit rating information regarding the household indicated by the customer identifier "C01".

As described above, according to the present embodiment, it is possible to acquire a credit rating of the household, using information regarding the use of gas.

In addition, according to the present embodiment, it is possible to acquire a credit rating of the household, using one or more pieces of information of: information regarding the use of gas; information regarding the use of electricity; information regarding the use of water service; information regarding a bank account; and information regarding the use of a mobile.

Note that the processing in the present embodiment may be realized using software. This software may be distributed through software downloading or the like. Also, this software may be recorded on a recording medium such as a CD-ROM and distributed. Note that the same applies to the other embodiments in the present description. The software that realizes the information processing apparatus G2 in the present embodiment is the program described below. That is to say, this program is a program that enables a computer to function as: an acceptance unit that accepts a customer identifier that identifies a customer; a gas information acquisition unit that acquires gas information that contains gas use information regarding use of gas, and that is associated with the same customer identifier as the customer identifier accepted by the acceptance unit; a credit rating information acquisition unit that acquires credit rating information that specifies a credit rating of a household that is identified by the customer identifier accepted by the acceptance unit, using the gas information acquired by the gas information acquisition unit; and a credit rating information output unit that outputs the credit rating information acquired by the credit rating information acquisition unit.

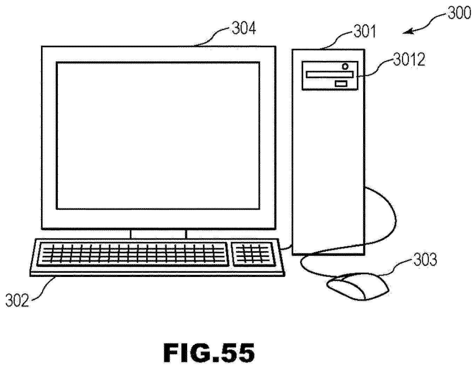

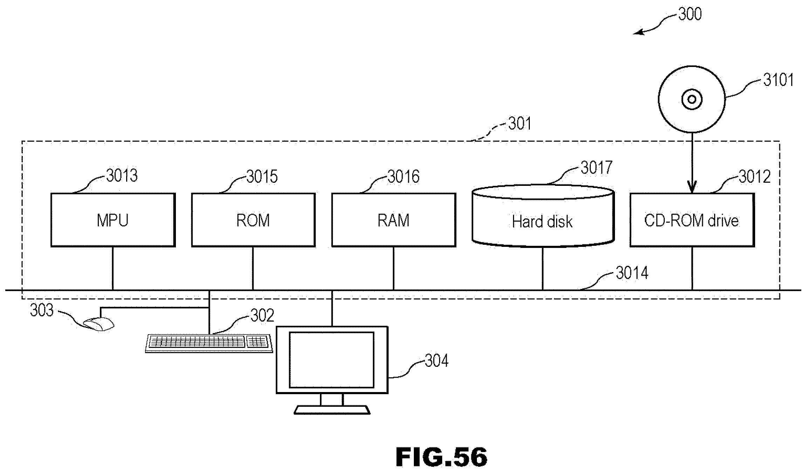

FIG. 55 shows an external appearance of a computer that realizes the information processing apparatus B2 and so on according to the various embodiments described above by executing the programs described in the present description. The above-described embodiments can be realized using computer hardware and a computer program that is executed thereon. FIG. 55 is an overview diagram for this computer system 300, and FIG. 56 is a block diagram for the system 300.

In FIG. 55, the computer system 300 includes a computer 301 that includes a CD-ROM drive, a keyboard 302, a mouse 303, and a monitor 304.

In FIG. 56, the computer 301 includes, in addition to a CD-ROM drive 3012, an MPU 3013, a bus 3014 that is connected to the CD-ROM drive 3012 and so on, a ROM 3015 for storing programs such as a bootup program, a RAM 3016 that is connected to the MPU 3013 to temporarily store an instruction from an application program, and provide a temporary memory space, and a hard disk 3017 for storing an application program, a system program, and data. Although not illustrated here, the computer 301 may further include a network card that provides connection to a LAN.

The program that causes the computer system 300 to execute the functions of the information processing apparatus B2 and so on according to the above-described embodiments may be stored in a CD-ROM 3101, inserted into the CD-ROM drive 3012, and further transferred to the hard disk 3017. Instead, the program may be transmitted to the computer 301 via a network (not shown), and stored in the hard disk 3017. The program is loaded to the RAM 3016 when it is to be executed. The program may be loaded directly from the CD-ROM 3101 or a network.

The program does not necessarily include an operating system (OS) that causes the computer 301 to execute functions such as the information processing apparatus B2 according to the above-described embodiments, a third-party program, or the like. The program need only include an instruction part that calls an appropriate function (module) in a controlled manner to obtain the desired result. It is well known how the computer system 300 works, and therefore detailed description thereof will be omitted.

A single computer or a plurality of computers may execute the above-described program. That is to say, centralized processing or distributed processing may be performed.

Also, as a matter of course, in each of the above-described embodiments, the two or more communication means that exist in one apparatus may be physically realized using one medium.

Furthermore, in each of the above-described embodiments, each kind of processing may be realized through centralized processing that is performed by a single apparatus, or may be realized through distributed processing that is performed by a plurality of apparatuses.

The present invention is not limited to the above-described embodiments, and various modifications can be made. Such modifications are also included in the scope of the present invention as a matter of course.

### Industrial Applicability

As described above, the information system according to the present invention achieves the effect of collecting and using gas information that includes gas use information regarding the use of

LPG cylinders, and is useful as an information system or the like.

## Claims

1. An information system that includes one or more gas information transmission apparatuses and an information processing apparatus,
each of the gas information transmission apparatuses comprising:
a terminal acquisition unit that acquires gas information that is information that includes gas use information regarding use of gas in an LPG cylinder and corresponds to a customer identifier that identifies a customer; and
a terminal transmission unit that transmits the gas information acquired by the terminal acquisition unit to the information processing apparatus in association with the customer identifier,
the information processing apparatus comprising:
a gas information storage unit that stores two or more pieces of gas information each in association with time information that specifies time, and with a customer identifier;
a gas information reception unit that receives gas information that is associated with a customer identifier, from the gas information transmission apparatus;
a gas information accumulation unit that accumulates the gas information received by the gas information reception unit, in the gas information storage unit, in association with time information, and with a customer identifier; and
a processing unit that performs predetermined processing, using the two or more pieces of gas information stored in the gas information storage unit.

2. The information system according to claim 1,
wherein each of the gas information transmission apparatuses further comprises:
a terminal storage unit that stores pieces of gas information as of two or more points in time; and
a terminal accumulation unit that accumulates the gas information acquired by the terminal acquisition unit, in the terminal storage unit, and
when a predetermined condition is satisfied, the terminal transmission unit transmits pieces of gas information as of two or more points in time in the terminal storage unit, to the information processing apparatus, in association with a customer identifier.

3. The information system according to claim 2,
wherein the terminal acquisition unit acquires gas information every unit time, n times a day (n is no less than 2), and
the terminal transmission unit transmits two or more pieces of gas information in the terminal storage unit to the information processing apparatus a number of times less than n times a day.

4. The information system according to claim 3,
wherein the terminal acquisition unit acquires gas information every one hour, and
the terminal transmission unit transmits gas information to the information processing apparatus at different frequencies when a predetermined condition is satisfied and when the predetermined condition is not satisfied.

5. The information system according to any one of claims 1 to 4,
wherein the gas information is information that is associated with a customer identifier that identifies a customer, and date information that indicates a date, and contains gas use information that specifies an amount of gas used per unit time.

6. The information system according to any one of claims 1 to 5, further comprising:
a delivery cylinder information storage unit that stores one or more pieces of delivery cylinder information that is information regarding a cylinder that is to be delivered, and corresponds to a customer identifier;
a delivery cylinder information reception unit that receives delivery cylinder information in association with a customer identifier; and
a delivery cylinder information accumulation unit that accumulates the delivery cylinder information received by the delivery cylinder information reception unit, in the delivery cylinder information storage unit, in association with the customer identifier,
wherein the processing unit performs predetermined processing, using the delivery cylinder information stored in the delivery cylinder information storage unit as well.

7. The information system according to claim 6,
wherein the delivery cylinder information contains cylinder type information that specifies a type of a cylinder.

8. The information system according to any one of claims 1 to 7, further comprising:
a delivery vehicle position information storage unit that stores, in association with a delivery vehicle identifier that identifies a delivery vehicle for a cylinder, delivery vehicle position information that specifies a position of the delivery vehicle;
a delivery vehicle position information reception unit that receives delivery vehicle position information from a delivery vehicle terminal that is a terminal of a delivery vehicle, in association with a delivery vehicle identifier that identifies the delivery vehicle; and
a delivery vehicle position information accumulation unit that accumulates the delivery vehicle position information received by the delivery vehicle position information reception unit, in the delivery vehicle position information storage unit, in association with the delivery vehicle identifier,
wherein the processing unit performs predetermined processing, using the delivery vehicle position information stored in the delivery vehicle position information storage unit.

9. The information system according to any one of claims 1 to 8, further comprising:
a climate information storage unit that stores climate information regarding a climate, in association with date information;
a climate information acceptance unit that accepts climate information; and
a climate information accumulation unit that accumulates the climate information in the climate information storage unit, in association with date information,
wherein the processing unit performs predetermined processing, using the climate information stored in the climate information storage unit.

10. The information system according to any one of claims 1 to 9,
wherein the gas information in the gas information storage unit is associated with a customer identifier and contains gas remaining amount information regarding an amount of gas remaining, and
the information system further comprises:
a cylinder replacement information reception unit that receives cylinder replacement information that is information indicating that a cylinder has been replaced, and is paired with a customer identifier; and
a cylinder replacement information accumulation unit that, when the cylinder replacement information reception unit receives cylinder replacement information, updates the gas remaining amount information contained in the gas information paired with the customer identifier, to information that specifies that the amount of gas remaining is full.

11. An information processing apparatus comprising:
a gas information storage unit that stores two or more pieces of gas information in association with time information that specifies time, and with a customer identifier;
a gas information reception unit that receives gas information that is associated with a customer identifier, from a gas information transmission apparatus that includes: a terminal acquisition unit that acquires gas information that is information that contains gas use information regarding use of gas in an LPG gas cylinder, and is information that corresponds to a customer identifier; and a terminal transmission unit that transmits the gas information acquired by the terminal acquisition unit, to the information processing apparatus;
a gas information accumulation unit that accumulates the gas information received by the gas information reception unit, in the gas information storage unit, in association with time information and a customer identifier; and
a processing unit that performs predetermined processing, using the two or more pieces of gas information stored in the gas information storage unit.

12. An information processing method that is realized by: a gas information storage unit that stores two or more pieces of gas information in association with time information that specifies time, and with a customer identifier; a gas information reception unit; a gas information accumulation unit; and a processing unit, the information processing method comprising:
a gas information reception step in which the gas information reception unit receives gas information that is associated with a customer identifier, from a gas information transmission apparatus that includes: a terminal acquisition unit that acquires gas information that is information that contains gas use information regarding use of gas in an LPG gas cylinder, and is information that corresponds to a customer identifier; and a terminal transmission unit that transmits the gas information acquired by the terminal acquisition unit, to an information processing apparatus;
a gas information accumulation step in which the gas information accumulation unit accumulates the gas information received in the gas information reception step, in the gas information storage unit, in association with time information and a customer identifier; and
a processing step in which the processing unit performs predetermined processing, using the two or more pieces of gas information stored in the gas information storage unit.

13. A program that enables a computer that can access a gas information storage unit that stores two or more pieces of gas information in association with time information that specifies time, and with a customer identifier, to function as:
a gas information reception unit that receives gas information that is associated with a customer identifier, from a gas information transmission apparatus that includes a terminal acquisition unit that acquires gas information that is information that contains gas use information regarding use of gas in an LPG gas cylinder, and is information that corresponds to a customer identifier, and a terminal transmission unit that transmits the gas information acquired by the terminal acquisition unit, to the information processing apparatus;
a gas information accumulation unit that accumulates the gas information received by the gas information reception unit, in the gas information storage unit, in association with time information and a customer identifier; and
a processing unit that performs predetermined processing, using the two or more pieces of gas information stored in the gas information storage unit.
